(19) **Europäisches Patentamt / European Patent Office / Office européen des brevets**

(11) **EP 3 832 284 B1**

(12) # EUROPEAN PATENT SPECIFICATION

(45) Date of publication and mention of the grant of the patent:
**25.06.2025 Bulletin 2025/26**

(21) Application number: **19844075.2**

(22) Date of filing: **29.07.2019**

(51) International Patent Classification (IPC):
**B61L 15/00** (2006.01)  **B61L 23/04** (2006.01)
**G01M 17/10** (2006.01)

(52) Cooperative Patent Classification (CPC):
**G01M 17/10; B61L 15/0081; B61L 23/042**

(86) International application number:
**PCT/JP2019/029640**

(87) International publication number:
**WO 2020/027045 (06.02.2020 Gazette 2020/06)**

(54) **INSPECTION SYSTEM, INSPECTING METHOD, AND PROGRAM**

INSPEKTIONSSYSTEM, INSPEKTIONSVERFAHREN UND PROGRAMM

SYSTÈME D'INSPECTION, PROCÉDÉ D'INSPECTION ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.07.2018 JP 2018143841**
**30.08.2018 JP 2018161488**
**25.10.2018 JP 2018200742**

(43) Date of publication of application:
**09.06.2021 Bulletin 2021/23**

(73) Proprietor: **NIPPON STEEL CORPORATION**
**Chiyoda-ku**
**Tokyo 100-8071 (JP)**

(72) Inventors:
• **NAKAGAWA, Junichi**
**Tokyo 100-8071 (JP)**
• **SHIMOKAWA, Yoshiyuki**
**Tokyo 100-8071 (JP)**
• **SHINAGAWA, Daisuke**
**Tokyo 100-8071 (JP)**
• **ITO, Shota**
**Tokyo 100-8071 (JP)**
• **MINAMI, Hideki**
**Tokyo 100-8071 (JP)**

(74) Representative: **Zimmermann & Partner Patentanwälte mbB**
**Postfach 330 920**
**80069 München (DE)**

(56) References cited:
EP-A1- 3 434 552     WO-A1-2006/062056
WO-A1-2017/164133    CN-A- 106 096 096
JP-A- 2005 067 276    JP-A- 2006 188 208
JP-A- 2011 227 015    US-A1- 2017 176 287

## Description

TECHNICAL FIELD

The present invention relates to a railway vehicle comprising an inspection system, an inspection method, and a program. The present application is based upon and claims the benefit of priority of the prior Japanese Patent Application No. 2018-143841, filed in Japan on July 31, 2018, the prior Japanese Patent Application No. 2018-161488, filed in Japan on August 30, 2018, and the prior Japanese Patent Application No. 2018-200742, filed in Japan on October 25, 2018.

BACKGROUND ART

A railway vehicle is demanded to have high safety. Accordingly, it is required to inspect whether or not the railway vehicle is normal. As a technique of this kind, there are techniques described in Patent Literatures 1, 2.

Patent Literature 1 describes that a peak frequency of lateral vibration acceleration on a vehicle body floor at a center of bogie of a railway vehicle and a magnitude of amplitude of the frequency are input in a two-class classification discriminator to perform learning, thereby detecting a problem of the railway vehicle. Patent Literature 2 describes that a problem of a railway vehicle is detected based on acceleration measured by one acceleration sensor disposed in each bogie of the railway vehicle.

Patent Literature 3 discloses a wheel measuring device including a light source that irradiates a range including a tread and a flange of a wheel with a fine light ray, a photographing unit that photographs an image of the range irradiated by the light ray, and a calculating unit that performs calculation based on an output of the photographing unit. Patent Literature 4 discloses a wheel shape measuring device including an outer distance sensor that measures, in a contactless manner, a distance from an outer flange surface of a wheel, an inner distance sensor that measures, in a contactless manner, a distance from an inner back surface of the wheel, a velocity detector that measures a traveling velocity of a vehicle, a vertical distance sensor that measures a distance in a vertical direction from a rail, and a calculating unit. The calculating unit calculates a settlement amount of rail when a vehicle travels, based on a measurement result obtained by the vertical distance sensor. The calculating unit calculates a shape of the wheel based on measurement results obtained by the outer distance sensor, the inner distance sensor, and the velocity detector, data of distance related to disposition of the outer distance sensor and the inner distance sensor, and the settlement amount of rail.

Patent Literature 5 discloses that an alignment irregularity amount is derived by using a measured value of a forward-and-backward direction force. The forward-and-backward-direction force is a force in a forward and backward direction that occurs in a member disposed between a wheel set and a bogie on which the wheel set is provided.

Patent Literature 6 discloses that a friction control device (0) has a means (9) for detecting vertical force (P) acting on a wheel (2) positioned behind, relative to a railway vehicle advance direction, a truck (1) of the railway vehicle; a means (8) for detecting forward-backward force (T) acting on the wheel (2); a calculation means (7a) for calculating a friction coefficient μ between the wheel (2) and a curved rail (3) from both the detected vertical force (P) and forward-backward force (T); and an application control means (7b) for comparing, based on curve information, the calculated friction coefficient μ with a preset critical value, determining whether emission of an friction adjustment agent is needed, and issuing a command to a device (13) for emitting friction adjustment agent. A state of friction between the wheel (2) and the curved rail (3) can be grasped in real time, which enables appropriate control on the friction state.

CITATION LIST

PATENT LITERATURE

Patent Literature 1: Japanese Laid-open Patent Publication No. 2012-58207
Patent Literature 2: Japanese Laid-open Patent Publication No. 2012-58208
Patent Literature 3: Japanese Laid-open Patent Publication No. 2001-227924
Patent Literature 4: Japanese Laid-open Patent Publication No. 2008-51571
Patent Literature 5: International Publication Pamphlet No. WO 2017/164133
Patent Literature 6: WO 2006/062056 A1

SUMMARY OF INVENTION

TECHNICAL PROBLEM

However, in the techniques described in Patent Literatures 1, 2, since the accelerations of the vehicle body floor and the bogie are measured, the measured data includes a lot of noise components. Accordingly, it is not easy to extract, from the measured data, data that contributes to determine whether or not the railway vehicle is normal.

In the techniques described in Patent Literatures 3, 4, the imaging unit and the sensors have to be disposed on the ground. Accordingly, a scale of the equipment becomes large. For this reason, the equipment investment and the cost for maintenance are increased. Further, the state of the wheel can be inspected only at a place where the imaging unit and the sensors are disposed.

The technique described in Patent Literature 5 is a technique for inspecting the state of track, and is not a technique for inspecting the railway vehicle.

As described above, the conventional techniques have a problem that it is not easy to correctly determine whether or not the railway vehicle is normal.

The present invention has been made in view of the problems as described above, and an object thereof is to enable correct determination whether or not a railway vehicle is normal.

SOLUTION TO PROBLEM

The present invention is as described in the appended claims.

BRIEF DESCRIPTION OF DRAWINGS

[Fig. 1A] Fig. 1A is a view illustrating one example of an outline of a railway vehicle.

[Fig. 1B] Fig. 1B is a view illustrating one example of a bogie frame and axle boxes.

[Fig. 1C] Fig. 1C is a view illustrating one example of a configuration of a lower part of a vehicle body of the railway vehicle.

[Fig. 2] Fig. 2 is a view conceptually illustrating directions of main motions of components (a wheel set, a bogie, a vehicle body) of the railway vehicle.

[Fig. 3] Fig. 3 is a view illustrating a first example of a functional configuration of an inspection apparatus.

[Fig. 4] Fig. 4 is a view illustrating one example of a hardware configuration of the inspection apparatus.

[Fig. 5] Fig. 5 is a view illustrating a first example of a curvature of rails in an inspection zone.

[Fig. 6] Fig. 6 is a view illustrating one example of a result of simulation regarding measured values of forward-and-backward direction forces in the inspection zone when the railway vehicle is assumed to be normal.

[Fig. 7] Fig. 7 is a view illustrating one example of a result of simulation regarding measured values of forward-and-backward direction forces in the inspection zone when a lateral movement damper of a front-side bogie is assumed to be broken down.

[Fig. 8] Fig. 8 is a view illustrating one example of a result of simulation regarding measured values of forward-and-backward direction forces in the inspection zone when a lateral movement damper of a rear-side bogie is assumed to be broken down.

[Fig. 9] Fig. 9 is a view illustrating one example of a result of simulation regarding measured values of forward-and-backward direction forces in the inspection zone when a left-side yaw damper of the front-side bogie is assumed to be broken down.

[Fig. 10] Fig. 10 is a view illustrating one example of a result of simulation regarding measured values of forward-and-backward direction forces in the inspection zone when a left-side yaw damper of the rear-side bogie is assumed to be broken down.

[Fig. 11] Fig. 11 is a view illustrating a difference between the result of simulation regarding the measured values of the forward-and-backward direction forces in the inspection zone when the lateral movement damper of the front-side bogie is assumed to be broken down, and the result of simulation regarding the measured values of the forward-and-backward direction forces in the inspection zone when the railway vehicle is assumed to be normal.

[Fig. 12] Fig. 12 is a view illustrating a difference between the result of simulation regarding the measured values of the forward-and-backward direction forces in the inspection zone when the left-side yaw damper of the front-side bogie is assumed to be broken down, and the result of simulation regarding the measured values of the forward-and-backward direction forces in the inspection zone when the railway vehicle is assumed to be normal.

[Fig. 13] Fig. 13 is a flowchart explaining a first example of processing in the inspection apparatus.

[Fig. 14] Fig. 14 is a view illustrating a second example of the functional configuration of the inspection apparatus.

[Fig. 15] Fig. 15 is a flowchart explaining a second example of the processing in the inspection apparatus.

[Fig. 16] Fig. 16 is a view illustrating a third example of the functional configuration of the inspection apparatus.

[Fig. 17A] Fig. 17A is a view illustrating a first example of the number of employed eigenvalues when a lateral movement damper is assumed to be broken down.

[Fig. 17B] Fig. 17B is a view illustrating a second example of the number of employed eigenvalues when the lateral movement damper is assumed to be broken down.

[Fig. 18] Fig. 18 is a view illustrating frequency characteristics of a corrected AR model when the railway vehicle is assumed to be normal.

[Fig. 19] Fig. 19 is a view illustrating frequency characteristics of the corrected AR model when the lateral movement damper of the front-side bogie is assumed to be broken down.

[Fig. 20] Fig. 20 is a view illustrating frequency characteristics of the corrected AR model when the lateral movement damper of the rear-side bogie is assumed to be broken down.

[Fig. 21] Fig. 21 is a flowchart explaining a third example of the processing in the inspection apparatus.

[Fig. 22] Fig. 22 is a view illustrating a fourth example of the functional configuration of the inspection apparatus.

[Fig. 23] Fig. 23 is a view illustrating one example of a result of simulation regarding measured values of forward-and-backward direction forces.

[Fig. 24] Fig. 24 is a view illustrating one example of a result of simulation regarding an alignment irregularity amount.

[Fig. 25] Fig. 25 is a view illustrating one example of a result of simulation regarding angular displacement differences.

[Fig. 26] Fig. 26 is a view illustrating one example of a result of simulation regarding angular velocity differences.

[Fig. 27] Fig. 27 is a flowchart explaining a fourth example of the processing in the inspection apparatus.

[Fig. 28] Fig. 28 is a view illustrating a second example of the curvature of rails in the inspection zone.

[Fig. 29] Fig. 29 is a view illustrating one example of a result of simulation regarding measured values of forward-and-backward direction forces in each of a case where the railway vehicle is assumed to be normal, and a case where stiffness of an axle box suspension in a forward and backward direction is assumed to deteriorate.

[Fig. 30] Fig. 30 is a view illustrating a fifth example of the functional configuration of the inspection apparatus.

[Fig. 31] Fig. 31 is a view illustrating one example of spring constants at respective positions in the inspection zone.

[Fig. 32] Fig. 32 is a view illustrating a first example of a distribution of eigenvalues of an autocorrelation matrix.

[Fig. 33] Fig. 33 is a view illustrating a first example of corrected spring constants at the respective positions in the inspection zone when the railway vehicle is assumed to be normal.

[Fig. 34] Fig. 34 is a view illustrating a first example of corrected spring constants at the respective positions in the inspection zone when the stiffness of the axle box suspension in the forward and backward direction is assumed to deteriorate.

[Fig. 35] Fig. 35 is a view illustrating a second example of corrected spring constants at the respective positions in the inspection zone when the stiffness of the axle box suspension in the forward and backward direction is assumed to deteriorate.

[Fig. 36] Fig. 36 is a view illustrating a second example of corrected spring constants at the respective positions in the inspection zone when the railway vehicle is assumed to be normal.

[Fig. 37A] Fig. 37A is a view illustrating, in a form of table, a first example of a result of simulation of corrected spring constants of the axle box suspension in the forward and backward direction.

[Fig. 37B] Fig. 37B is a view illustrating, in a form of table, a second example of a result of simulation of corrected spring constants of the axle box suspension in the forward and backward direction.

[Fig. 38] Fig. 38 is a flowchart explaining a fifth example of the processing in the inspection apparatus.

[Fig. 39] Fig. 39 is a view explaining one example of a tread slope.

[Fig. 40A] Fig. 40A is a view illustrating a first example of a relation between a radius of wheel and a relative displacement between the wheel and a rail.

[Fig. 40B] Fig. 40B is a view illustrating a second example of a relation between a radius of wheel and a relative displacement between the wheel and a rail.

[Fig. 41] Fig. 41 is a view illustrating one example of time-series data of measured values of forward-and-backward direction forces when the tread slope has a normal value.

[Fig. 42] Fig. 42 is a view illustrating one example of time-series data of measured values of forward-and-backward direction forces when a value of each tread slope is twice the normal value.

[Fig. 43] Fig. 43 is a view illustrating a third example of the curvature of rails in the inspection zone.

[Fig. 44] Fig. 44 is a view illustrating frequency characteristics of a corrected AR model when the tread slope has a normal value.

[Fig. 45] Fig. 45 is a view illustrating one example of frequency characteristics of the corrected AR model when a value of each tread slope is twice the normal value.

[Fig. 46] Fig. 46 is a view illustrating a sixth example of the functional configuration of the inspection apparatus.

[Fig. 47] Fig. 47 is a view illustrating a second example of a distribution of eigenvalues of the autocorrelation matrix.

[Fig. 48] Fig. 48 is a flowchart explaining a sixth example of the processing in the inspection apparatus.

[Fig. 49] Fig. 49 is a view illustrating a seventh example of the functional configuration of the inspection apparatus.

[Fig. 50A] Fig. 50A is a view illustrating a first example of time-series data of a tread slope before correction.

[Fig. 50B] Fig. 50B is a view illustrating a second example of time-series data of the tread slope before correction.

[Fig. 51] Fig. 51 is a view illustrating a third example of a distribution of eigenvalues of the autocorrelation matrix.

[Fig. 52A] Fig. 52A is a view illustrating a first example of time-series data of a corrected tread slope.

[Fig. 52B] Fig. 52B is a view illustrating a second example of time-series data of the corrected tread slope.

[Fig. 53] Fig. 53 is a view illustrating one example of tread slope correction information.

[Fig. 54] Fig. 54 is a flowchart explaining a seventh example of the processing in the inspection apparatus.

[Fig. 55] Fig. 55 is a view illustrating one example of a configuration of an inspection system.

## DESCRIPTION OF EMBODIMENTS

Hereinafter, reference examples and embodiments of the present invention will be described while referring to the drawings.

<<Railway vehicle>>

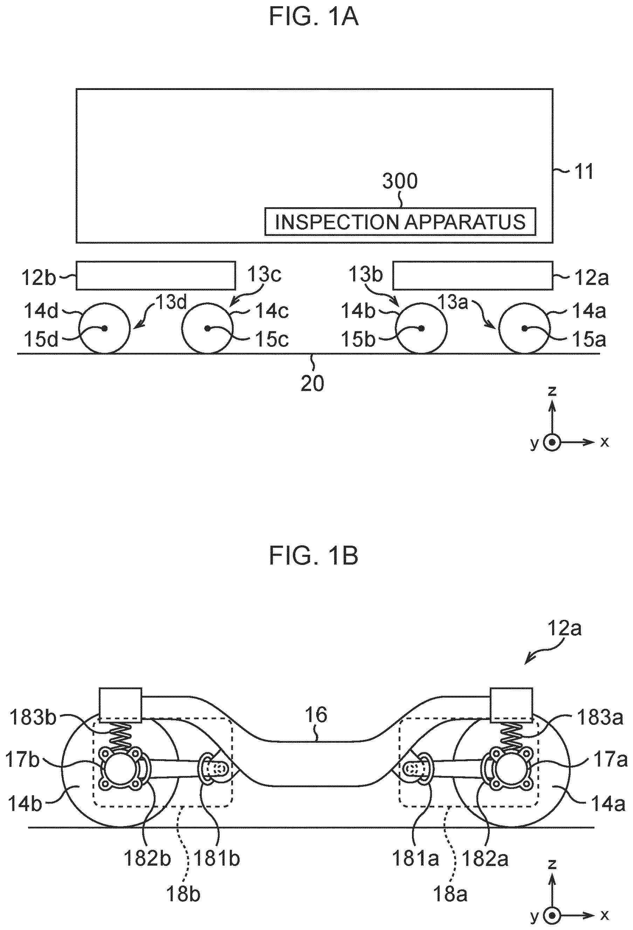

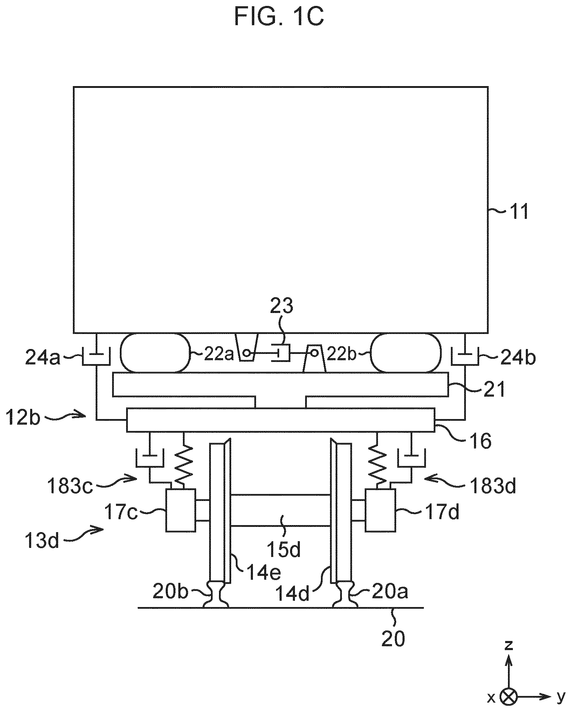

First, a railway vehicle to be exemplified in the reference examples and each embodiment will be described. Fig. 1A is a view illustrating one example of an outline of a railway vehicle. Fig. 1B is a view illustrating one example of a bogie frame and axle boxes. Fig. 1C is a view illustrating one example of a configuration of a lower part of a vehicle body of the railway vehicle. Note that in Fig. 1A, Fig. 1B, and Fig. 1C, the railway vehicle is set to proceed in the positive direction of the x axis (the x axis is an axis along a traveling direction of the railway vehicle). Further, the z axis is set to a direction vertical to a track 20 (the ground) (a height direction of the railway vehicle). The y axis is set to a horizontal direction vertical to the traveling direction of the railway vehicle (a direction vertical to both the traveling direction and the height direction of the railway vehicle). Further, the railway vehicle is set to a commercial vehicle. Note that in the respective drawings, the mark of ● added inside ○ indicates the direction from the far side of the sheet toward the near side, and the mark of × added inside ○ indicates the direction from the near side of the sheet toward the far side.

As illustrated in Fig. 1A and Fig. 1B, in the present embodiment, the railway vehicle includes a vehicle body 11, bogies 12a, 12b, and wheel sets 13a to 13d. As above, in the present embodiment, the railway vehicle including the single vehicle body 11 provided with the two bogies 12a, 12b and four sets of the wheel sets 13a to 13d will be explained as an example. The wheel sets 13a to 13d have axles 15a to 15d, and wheels 14a to 14d provided on both ends of the axles 15a to 15d respectively. In the present embodiment, a case where each of the bogies 12a, 12b is a bolsterless bogie will be explained as an example. Note that in Fig. 1A and Fig. 1B, for convenience of illustration, only the wheels 14a to 14d on one side of the wheel sets 13a to 13d are illustrated, but, wheels are also provided on the other side of the wheel sets 13a to 13d. Fig. 1C illustrates that the wheel 14d is provided on one side of the wheel set 13d, and a wheel 14e is provided on the other side of the wheel set 13d. As above, in the example illustrated in Fig. 1A to Fig. 1C, there are eight wheels in total. Fig. 1B illustrates only a bogie frame 16 and axle boxes 17a, 17b in the bogie 12a. A bogie frame and axle boxes in the bogie 12b are also realized by components same as those illustrated in Fig. 1B.

On both sides of the respective wheel sets 13a to 13d in a direction along the y axis, the axle boxes 17a, 17b are disposed. The bogie frame 16 and the axle boxes 17a, 17b are mutually coupled by axle box suspensions 18a, 18b. In the example illustrated in Fig. 1B, the axle box suspensions 18a, 18b have connection bodies 181a, 181b, 182a, 182b, 183a, 183b. The connection bodies 181a, 181b, 182a, 182b, 183a, 183b are elastic bodies and dampers, for example. The elastic body is, for example, a spring (a coil spring or the like) or rubber. The axle box suspensions 18a, 18b are devices (suspensions) to be disposed between the axle boxes 17a, 17b, and the bogie frame 16. The axle box suspensions 18a, 18b absorb vibration to be transmitted to the railway vehicle from the track 20. Further, the axle box suspensions 18a, 18b support the axle boxes 17a, 17b in a state where the positions of the axle boxes 17a, 17b relative to the bogie frame 16 are restricted, so as to prevent the axle boxes 17a, 17b from moving in a direction along the x axis and a direction along the y axis relative to the bogie frame 16. The axle box suspensions 18a, 18b are disposed on both sides of the respective wheel sets 13a to 13d in the direction along the y axis.

As illustrated in Fig. 1C, a bolster 21 is disposed above the bogie frame 16. At a position between the bolster 21 and the vehicle body 11, air springs (bolster springs) 22a, 22b, and a lateral movement damper 23 are disposed. At a position between the bogie frame 16 and the vehicle body 11, yaw dampers 24a, 24b are disposed. In the example illustrated in Fig. 1C, an axle spring and an axle damper are illustrated as the connection bodies 183c, 183d. The connection bodies 183c, 183d are disposed between the axle boxes 17c, 17d, and the bogie frame 16.

Fig. 1C illustrates only components with respect to the wheel set 13d of the bogie 12b. Components with respect to the other wheel sets 13a to 13c are also realized by components same as those illustrated in Fig. 1C.

The railway vehicle has components other than the components illustrated in Fig. 1A to Fig. 1C, but, for the convenience of illustration, the illustration of the components will be omitted in Fig. 1A to Fig. 1C. The components other than the components illustrated in Fig. 1A to Fig. 1C are components and so on to be explained in motion equations to be described later.

Note that the railway vehicle itself can be fabricated by a publicly-known technique, and thus its detailed explanation will be omitted here.

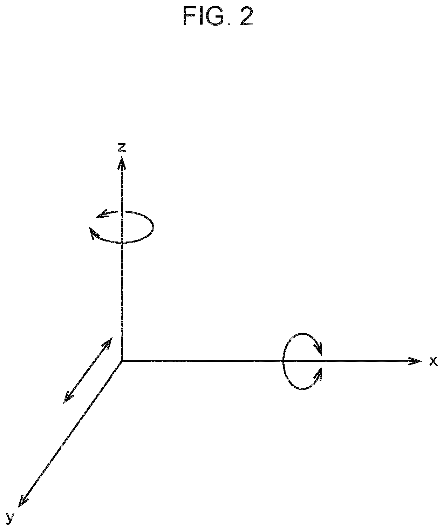

When the railway vehicle travels on the track 20, acting force (creep force) between the wheels 14a to 14d and the track 20 becomes a vibration source, and the vibration sequentially propagates to the wheel sets 13a to 13d, the bogies 12a, 12b, and the vehicle body 11. Fig. 2 is a view conceptually illustrating directions of the main motions of the components (the wheel sets 13a to 13d, the bogies 12a, 12b, and the vehicle body 11) of the railway vehicle. The x axis, the y axis, and the z axis illustrated in Fig. 2 correspond to the x axis, the y axis, and the z axis illustrated in Figs. 1, respectively.

As illustrated in Fig. 2, in the present embodiment, there will be explained, as an example, a case where the wheel sets 13a to 13d, the bogies 12a, 12b, and the vehicle body 11 perform pivoting motion about the x axis as a pivot axis, pivoting motion about the z axis as a pivot axis, and motion in the direction along the y axis. In the following explanation, the pivoting motion about the x axis as a pivot axis is referred to as rolling as necessary, the pivoting direction about the x axis as a pivot axis is referred to as a rolling direction as necessary, and the direction along the x axis is referred to as the forward and backward direction as necessary. Note that the forward and backward direction is the traveling direction of the railway vehicle. In the present embodiment, the direction along the x axis is set to the traveling direction of the railway vehicle. Further, the pivoting motion about the z axis as a pivot axis is referred to as yawing as necessary, the pivoting direction about the z axis as a pivot axis is referred to as a yawing direction as necessary, and the direction along the z axis is referred to as the up and down direction as necessary. Note that the up and down direction is a direction vertical to the track 20. Further, the motion in the direction along the y axis is referred to as a transversal vibration as necessary, and the direction along the y axis is referred to as the right and left direction as necessary. Note that the right and left direction is a direction vertical to both the forward and backward direction (the traveling direction of the railway vehicle) and the up and down direction (the direction vertical to the track 20). Further, the railway vehicle performs motions other than the above, but, in the reference examples and each of the embodiments, these motions are not considered in order to simplify the explanation. However, these motions may also be considered.

<<Forward-and-backward direction force>>

In the following reference examples and respective embodiments, a measured value of a forward-and-backward direction force is used. Accordingly, the forward-and-backward direction force will be described. The forward-and-backward direction force is a force in the forward and backward direction that occurs in a member configuring the axle box suspensions 18a, 18b. The axle box suspensions 18a, 18b are disposed between the wheel sets 13a, 13b (13c, 13d) and the bogie 12a (12b) to which the wheel sets 13a, 13b (13c, 13d) are provided. The member configuring the axle box suspensions 18a, 18b is a member for supporting the axle boxes 17a, 17b.

In-phase components of a longitudinal creep force in one wheel of right and left wheels in one wheel set and a longitudinal creep force in the other wheel are components corresponding to a braking force and a driving force. Therefore, the forward-and-backward-direction force is preferably determined so as to correspond to an opposite-phase component of the longitudinal creep force. The opposite-phase component of the longitudinal creep force is a component to be opposite in phase to each other between the longitudinal creep force in one wheel of the right and left wheels in one wheel set and the longitudinal creep force in the other wheel. That is, the opposite-phase component of the longitudinal creep force is a component, of the longitudinal creep force, in the direction in which the axle is twisted. In this case, the forward-and-backward-direction force becomes a component opposite in phase to each other out of forward-and-backward-direction components of forces that occur in the aforementioned two members attached to both the right and left sides of one wheel set.

Hereinafter, there will be explained concrete examples of the forward-and-backward-direction force in the case where the forward-and-backward-direction force is determined so as to correspond to the opposite-phase component of the longitudinal creep force.

When the axle box suspension is a mono-link type axle box suspension, the axle box suspension includes a link, and the axle box and the bogie frame are coupled by the link. A rubber bush is attached to both ends of the link. In this case, the forward-and-backward-direction force becomes, out of forward-and-backward-direction components of loads that two links, which are attached to right and left ends of one wheel set one by one, receive, the component to be opposite in phase to each other. Further, due to arrangement and configuration of the links, the link mainly receives, out of loads in the forward and backward direction, the right and left direction, and the up and down direction, the load in the forward and backward direction. Accordingly, one strain gauge only needs to be attached to each link, for example. By using a measured value of the strain gauge, the forward-and-backward-direction component of the load that this link receives is derived, to thereby obtain a measured value of the forward-and-backward-direction force. Further, in place of applying such a design, a forward-and-backward-direction displacement of the rubber bush attached to the link may be measured by a displacement meter. In this case, the product of a measured displacement and a spring constant of this rubber bush is set as the measured value of the forward-and-backward-direction force. When the axle box suspension is the mono-link type axle box suspension, the previously-described member for supporting the axle box is the link or the rubber bush.

Note that in the load measured by the strain gauge attached to the link, not only the component in the forward and backward direction, but also at least one component of a component in the right and left direction and a component in the up and down direction is sometimes contained. However, even in such a case, due to the structure of the axle box suspension, the load of the component in the right and left direction and the load of the component in the up and down direction that the link receives are sufficiently smaller than the load of the component in the forward and backward direction. Accordingly, only attaching one strain gauge to each link makes it possible to obtain a measured value of the forward-and-backward-direction force, which has accuracy to be required practically. In this manner, the components other than the component in the forward and backward direction are sometimes included in the measured value of the forward-and-backward-direction force. Thus, three or more strain gauges may be attached to each link so as to cancel the strains in the up and down direction and the right and left direction. This makes it possible to improve the accuracy of the measured value of the forward-and-backward-direction force.

When the axle box suspension is an axle beam type axle box suspension, the axle box suspension includes an axle beam, and the axle box and the bogie frame are coupled by the axle beam. The axle beam may be formed integrally with the axle box. A rubber bush is attached to a bogie frame-side end of the axle beam. In this case, the forward-and-backward-direction force becomes, out of forward-and-backward-direction components of loads that two axle beams, which are attached to right and left ends of one wheel set one by one, receive, the component to be opposite in phase to each other. Further, due to arrangement and configuration of the axle beams, the axle beam is likely to receive, out of loads in the forward and backward direction, the right and left direction, and the up and down direction, the load in the right and left direction, in addition to the load in the forward and backward direction. Accordingly, two or more strain gauges are attached to each axle beam so as to cancel the strain in the right and left direction, for example. By using measured values of these strain gauges, the forward-and-backward-direction component of the load that the axle beam receives is derived, to thereby obtain a measured value of the forward-and-backward-direction force. Further, in place of applying such a design, a forward-and-backward-direction displacement of the rubber bush attached to the axle beam may be measured by a displacement meter. In this case, the product of a measured displacement and a spring constant of this rubber bush is set as the measured value of the forward-and-backward-direction force. When the axle box suspension is the axle beam type axle box suspension, the previously-described member for supporting the axle box is the axle beam or the rubber bush.

Note that in the load measured by the strain gauge attached to the axle beam, not only the components in the forward and backward direction and the right and left direction, but also the component in the up and down direction is sometimes included. However, even in such a case, due to the structure of the axle box suspension, the load of the component in the up and down direction that the axle beam receives is sufficiently smaller than the load of the component in the forward and backward direction and the load of the component in the right and left direction. Accordingly, even if the strain gauge is not attached so as to cancel the load of the component in the up and down direction that the axle beam receives, a measured value of the forward-and-backward-direction force, which has accuracy to be required practically, can be obtained. In this manner, the components other than the component in the forward and backward direction are sometimes included in the measured forward-and-backward-direction force, and thus three or more strain gauges may be attached to each axle beam so as to cancel not only the strain in the right and left direction but also the strain in the up and down direction. This makes it possible to improve the accuracy of the measured value of the forward-and-backward-direction force.

When the axle box suspension is a leaf spring type axle box suspension, the axle box suspension includes a leaf spring, and the axle box and the bogie frame are coupled by the leaf spring. A rubber bush is attached to ends of the leaf spring. In this case, the forward-and-backward-direction force becomes, out of forward-and-backward-direction components of loads that two leaf springs, which are attached to right and left ends of one wheel set one by one, receive, the component to be opposite in phase to each other. Further, due to arrangement and configuration of the leaf springs, the leaf spring is likely to receive, out of loads in the forward and backward direction, the right and left direction, and the up and down direction, the load in the right and left direction and the load in the up and down direction, in addition to the load in the forward and backward direction. Accordingly, three or more strain gauges are attached to each leaf spring so as to cancel the strains in the right and left direction and the up and down direction, for example. By using measured values of these strain gauges, the forward-and-backward-direction component of the load that the leaf spring receives is derived, to thereby obtain a measured value of the forward-and-backward-direction force. Further, in place of applying such a design, a forward-and-backward-direction displacement of the rubber bush attached to the leaf spring may be measured by a displacement meter. In this case, the product of a measured displacement and a spring constant of this rubber bush is set as the measured value of the forward-and-backward-direction force. When the axle box suspension is the leaf spring type axle box suspension, the previously-described member for supporting the axle box is the leaf spring or the rubber bush.

Note that as the aforementioned displacement meter, a publicly-known laser displacement meter or eddy current displacement meter can be used.

Further, the forward-and-backward-direction force was explained here by taking the case where the system of the axle box suspension is the mono-link type, the axle beam type, and the leaf spring type as an example. However, the system of the axle box suspension is not limited to the mono-link type, the axle beam type, and the leaf spring type. In conformity with the system of the axle box suspension, the forward-and-backward-direction force can be determined similarly to the mono-link type, the axle beam type, and the leaf spring type.

Further, a case where a measured value of a single forward-and-backward-direction force can be obtained in one wheel set will be explained as an example, in order to simplify the explanation below. That is, the railway vehicle illustrated in Figs. 1 has the four wheel sets 13a to 13d. Accordingly, it is possible to obtain measured values of four forward-and-backward-direction forces $T_1$ to $T_4$.

<<First reference example>>

Next, a first reference example, which is useful for understanding the present invention, will be described.

(Findings)

The present inventors found out that by using measured values of forward-and-backward direction forces, it is possible to correctly inspect whether or not a member disposed between the bogie frame 16 and the wheel sets 13a to 13d or the vehicle body 11 is normal. The member is either (a) or (b) below.

(a) The member is a component which is connected to at least either the bogie frame 16 or the wheel sets 13a to 13d directly or via another member, at a position between the bogie frame 16 and the wheel sets 13a to 13d or the vehicle body 11.
(b) The member is a member which is connected to at least either the bogie frame 16 or the vehicle body 11 directly or via another component, at a position between the bogie frame 16 and the wheel sets 13a to 13d or the vehicle body 11.

Further, the member is disposed for the purpose of transmitting the force received from a first member connected to the member to a second member connected to the member. In the first reference example and second to fifth embodiments, a member disposed between the bogie frame 16 and the wheel sets 13a to 13d or the vehicle body 11 is referred to as an inspection target member as necessary.

The reason why it is possible to inspect whether or not the inspection target member is normal by using the measured values of the forward-and-backward direction forces $T_1$ to $T_4$, will be described.

The present inventors found out that when a motion equation describing the motion of the railway vehicle during traveling is expressed by using the forward-and-backward direction forces $T_1$ to $T_4$, changes in characteristic and motion of the inspection target member are reflected on the forward-and-backward direction forces $T_1$ to $T_4$ in a motion equation describing the motions of the bogies 12a, 12b.

Hereinafter, there will be described motion equations describing motions of the bogies 12a, 12b, and the wheel sets 13a to 13d during traveling of the railway vehicle in the case where the railway vehicle has 21 degrees of freedom. Specifically, it is set that the wheel sets 13a to 13d perform the motion in the right and left direction (transversal vibration) and the motion in the yawing direction (yawing) ($2 \times 4$ sets = eight degrees of freedom). Further, it is set that the bogies 12a, 12b perform the motion in the right and left direction (transversal vibration), the motion in the yawing direction (yawing), and the motion in the rolling direction (rolling) ($3 \times 2$ sets = six degrees of freedom). Further, it is set that the vehicle body 11 performs the motion in the right and left direction (transversal vibration), the motion in the yawing direction (yawing), and the motion in the rolling direction (rolling) ($3 \times 1$ sets = three degrees of freedom). Further, it is set that the air springs 22a, 22b each provided on the bogies 12a, 12b perform the motion in the rolling direction (rolling) ($1 \times 2$ sets = two degrees of freedom). Further, it is set that yaw dampers each provided on the bogies 12a, 12b perform the motion in the yawing direction (yawing) ($1 \times 2$ sets = two degrees of freedom).

In each of the following equations, a subscript w indicates the wheel sets 13a to 13d. Variables to which (only) the subscript w is added indicate that they are common to the wheel sets 13a to 13d. A subscript i is a symbol for distinguishing the wheel sets 13a, 13b, 13c, 13d. Therefore, the motion equation to which the subscript i is added exists for each of the wheel sets 13a, 13b, 13c, 13d (expressed by four motion equations).

A Subscript t indicates the bogies 12a, 12b. Variables to which (only) the subscript t is added indicate that they are common to the bogies 12a, 12b. A subscript j is a symbol for distinguishing the bogies 12a, 12b. Therefore, the motion equation to which the subscript j is added exists for each of the bogies 12a, 12b (expressed by two motion equations).

A Subscript b indicates the vehicle body 11.

A subscript x indicates the forward and backward direction or the rolling direction, a subscript y indicates the right and left direction, and a subscript z indicates the up and down direction or the yawing direction.

Further, " $\cdot\cdot$ " and " $\cdot$ " each added above a variable indicate a second-order time differential and a first-order time differential, respectively.

Note that when the following motion equations are explained, explanations of the already-explained variables will be omitted as necessary. Further, the motion equation describing the motion of the vehicle body 11 does not include a part where the change in the inspection target member is reflected on the forward-and-backward direction forces $T_1$ to $T_4$. Accordingly, the explanation of the motion equation describing the motion of the vehicle body 11 will be omitted here.

[Transversal vibration of bogie]

The motion equation describing the transversal vibrations (motion in the right and left direction) of the bogies 12a, 12b is expressed by (1) Equation below.

[Mathematical equation 1]

$$
\begin{aligned}
m_t \ddot{y}_{tj} = & -c'_2 [\{\dot{y}_{tj} - h_4 \dot{\phi}_{tj}\} - \{\dot{y}_b \pm (L \mp dx_b) \dot{\psi}_b + h_5 \dot{\phi}_b\}] \\
& - 2C_{wy}\{\dot{y}_{tj} + h_1 \dot{\phi}_{tj}\} + C_{wy}\{\dot{y}_{wi} + \dot{y}_{wi+1}\} \\
& - 2k'_2 [\{y_{tj} - h_2 \phi_{tj}\} - \{y_b \pm (L \mp dx_b) \psi_b + h_3 \phi_{tj}\}] \\
& - 2K_{wy}\{y_{tj} + h_1 \phi_{tj}\} + K_{wy}\{y_{wi} + y_{wi+1}\} \\
& - saC_{wy}(\dot{\psi}_{wi} - \dot{\psi}_{wi+1}) - C_{wy}\left\{\frac{a(a-2sa)}{2}\left(\frac{\dot{i}}{R_i} + \frac{\dot{i}}{R_{i+1}}\right)\right\} \\
& - saK_{wy}(\psi_{wi} - \psi_{wi+1}) - K_{wy}\left\{\frac{a(a-2sa)}{2}\left(\frac{1}{R_i} + \frac{1}{R_{i+1}}\right)\right\} \\
& + m_t v^2 (R_i^{-1}\cos\phi_{raili} + R_{i+1}^{-1}\cos\phi_{raili+1})/2 \\
& - m_t g(\sin\phi_{raili} + \sin\phi_{raili+1})/2 \qquad \cdots (1)
\end{aligned}
$$

$m_t$ is the mass of the bogie 12a or 12b. $y_{tj} \bullet\bullet$ is acceleration of the bogie 12a or 12b in the right and left direction (in the equation, $\bullet\bullet$ is added above $y_{tj}$ (the same applies to the other variables below)). $c'_2$ is a damping coefficient of a lateral movement damper. $y_{tj} \bullet$ is a velocity of the bogie 12a or 12b in the right and left direction. $h_4$ is a distance between the center of gravity of the bogie 12a or 12b and the lateral movement damper in the up and down direction. $\phi_{tj} \bullet$ is an angular velocity of the bogie 12a or 12b in the rolling direction (in the equation, $\bullet$ is added above $\phi_{tj}$ (the same applies to the other variables below)). $y_b \bullet$ is a velocity of the vehicle body 11 in the right and left direction. A symbol of + under which - is added indicates that + is employed for the motion equation with respect to the bogie 12a, and - is employed for the motion equation with respect to the bogie 12b.

L represents 1/2 of the interval between the center of the bogie 12a and the center of the bogie 12b in the forward and backward direction (the interval between the center of the bogie 12a and the center of the bogie 12b in the forward and backward direction becomes 2L). A symbol of - under which + is added indicates that - is employed for the motion equation with respect to the bogie 12a, and + is employed for the motion equation with respect to the bogie 12b. $dx_b$ is an amount of deflection of the center of gravity of the vehicle body 11 in the forward and backward direction. $\phi_b \bullet$ is an angular velocity of the vehicle body 11 in the yawing direction. $h_5$ is a distance between the lateral movement damper and the center of gravity of the vehicle body 11 in the up and down direction. $\phi_b \bullet$ is an angular velocity of the vehicle body 11 in the rolling direction.

$C_{wy}$ is a damping coefficient of the axle box suspensions 18a, 18b in the right and left direction. $h_1$ is a distance between the middle of the axle and the center of gravity of the bogie 12a in the up and down direction. $y_{wi} \bullet$ is a velocity of the wheel set 13a or 13c in the right and left direction (the wheel set 13a is applied to the motion equation with respect to the bogie 12a, and the wheel set 13c is applied to the motion equation with respect to the bogie 12b. The same applies to the other explanation). $y_{wi+1}\bullet$ is a velocity of the wheel set 13b or 13d in the right and left direction (the wheel set 13b is applied to the motion equation with respect to the bogie 12a, and the wheel set 13d is applied to the motion equation with respect to the bogie 12b. The same applies to the other explanation).

$k'_2$ is a spring constant of the air springs 22a, 22b in the right and left direction. $y_{tj}$ is a displacement of the bogie 12a or 12b in the right and left direction. $h_2$ is a distance between the center of gravity of the bogie 12a or 12b and the middle of the air springs 22a, 22b in the up and down direction. $\phi_{tj}$ is a pivot amount (angular displacement) of the bogie 12a or 12b in the rolling direction. $y_b$ is a displacement of the vehicle body 11 in the right and left direction. $\phi_b$ is a pivot amount (angular displacement) of the vehicle body 11 in the yawing direction. $h_3$ is a distance between the middle of the air springs 22a, 22b and the center of gravity of the vehicle body 11 in the up and down direction. $\phi_b$ is a pivot amount (angular displacement) of the vehicle body 11 in the rolling direction. $K_{wy}$ is a spring constant of the axle box suspensions 18a, 18b in the right and left direction. $h_1$ is a distance between the middle of the axle and the center of gravity of the bogie 12a in the up and down direction. $y_{wi}$ is a displacement of the wheel set 13a or 13c in the right and left direction. $y_{wi+1}$ is a displacement of the wheel set 13b or 13d in the right and left direction.

sa is an offset from the middle of the axles 15a to 15d to an axle box suspension spring in the forward and backward direction. $\phi_{wi}\bullet$ is an angular velocity of the wheel set 13a or 13c in the yawing direction. $\phi_{wi+1}\bullet$ is an angular velocity of the wheel set 13b or 13d in the yawing direction. a represents 1/2 of each distance between the wheel sets 13a and 13b and between the wheel sets 13c and 13d in the forward and backward direction, which are provided on the bogies 12a, 12b (the distance between the wheel sets 13a and 13b and the distance between the wheel sets 13c and 13d, which are provided on the bogies 12a, 12b, each become 2a). $1/R_i\bullet$ indicates a time differential value of a curvature of rails 20a, 20b at a position of the wheel set 13a or 13c. $1/R_{i+1}\bullet$ indicates a time differential value of the curvature of the rails 20a, 20b at a position of the wheel set 13b or 13d.

$\phi_{wi}$ is a pivot amount (angular displacement) of the wheel set 13a or 13c in the yawing direction. $\phi_{wi+1}$ is a pivot amount (angular displacement) of the wheel set 13b or 13d in the yawing direction. $1/R_i$ indicates the curvature of the rails 20a, 20b at the position of the wheel set 13a or 13c. $1/R_{i+1}$ indicates the curvature of the rails 20a, 20b at the position of the wheel set 13b or 13d.

v is a traveling velocity of the railway vehicle. $R_i$ is a radius of curvature of the rails 20a, 20b at the position of the wheel set 13a or 13c. $R_{i+1}$ is a radius of curvature of the rails 20a, 20b at the position of the wheel set 13b or 13d. $\phi_{raili}$ indicates a cant angle of the rails 20a, 20b at the position of the wheel set 13a or 13c. $\phi_{raili+1}$ indicates a cant angle of the rails 20a, 20b at the position of the wheel set 13b or 13d. g indicates gravitational acceleration.

• Yawing of bogie

The motion equation describing the yawings of the bogies 12a, 12b is expressed by (2) Equation below.
[Mathematical equation 2]

$$I_{Tz}\ddot{\psi}_{tj} = C_{wx}b_1^2\{\dot{\psi}_{wi}-\dot{\psi}_{tj}\}+K_{wx}b_1^2\{\psi_{wi}-\psi_{tj}\}\mp K_{wx}b_1^2a\frac{1}{R_i}$$

$$+ C_{wx}b_1^2\{\dot{\psi}_{wi+1}-\dot{\psi}_{tj}\}+K_{wx}b_1^2\{\psi_{wi+1}-\psi_{tj}\}\mp C_{wx}b_1^2a\frac{\dot{1}}{R_i}$$

$$+ C_{wy}a(\dot{y}_{wi}-\dot{y}_{wi+1})-C_{wy}sa(\dot{y}_{wi}-\dot{y}_{wi+1})$$

$$- 2C_{wy}(a^2-2asa+sa^2)\dot{\psi}_{tj}-C_{wy}sa(a-sa)(\dot{\psi}_{wi}+\dot{\psi}_{wi+1})$$

$$+ K_{wy}a(y_{wi}-y_{wi+1})-K_{wy}sa(y_{wi}-y_{wi+1})$$

$$- 2K_{wy}(a^2-2asa+sa^2)\psi_{tj}-K_{wy}sa(a-sa)(\psi_{wi}-\psi_{wi+1})$$

$$- C_{wy}(a-sa)\left\{\frac{a(a-2sa)}{2}\left(\frac{1}{R_i}-\frac{1}{R_{i+1}}\right)\right\}-K_{wy}(a-sa)\left\{\frac{a(a-2sa)}{2}\left(\frac{1}{R_i}-\frac{1}{R_{i+1}}\right)\right\}$$

$$- 2k'_0(b'_0)^2\{\psi_{tj}-\psi_{yj}\}-2k_0b_0^2\{\psi_{tj}-\psi_b\}-2k''_2b_2^2(\psi_{tj}-\psi_b)\pm\frac{4Lk''_2b_2^2}{(R_i-R_{i+1})}$$

$$+ am_tv^2(R_i^{-1}\cos\phi_{raili}-R_{i+1}^{-1}\cos\phi_{raili+1})/2$$

$$- am_tg(\sin\phi_{raili}-\sin\phi_{raili+1})/2 \qquad\qquad \cdots(2)$$

$I_{Tz}$ is a moment of inertia of the bogie 12a or 12b in the yawing direction. $\phi_{tj}\cdot\cdot$ is angular acceleration of the bogie 12a or 12b in the yawing direction.

$C_{wx}$ is a damping coefficient of the axle box suspensions 18a, 18b in the forward and backward direction. $b_1$ represents a length of 1/2 of the interval between the axle box suspensions 18a and 18b in the right and left direction (the interval of the two axle box suspensions 18a, 18b, which are provided on the right and left sides of the single wheel set, in the right and left direction becomes $2b_1$). $\phi_{wi}\cdot$ is an angular velocity of the wheel set 13a or 13c in the yawing direction. $\phi_{tj}\cdot$ is an angular velocity of the bogie 12a or 12b in the yawing direction. $K_{wx}$ is a spring constant of the axle box suspensions 18a, 18b in the forward and backward direction. $\phi_{tj}$ is a pivot amount (angular displacement) of the bogie 12a or 12b in the yawing direction.

$\phi_{wi+1}\cdot$ is an angular velocity of the wheel set 13b or 13d in the yawing direction.

$K'_0$ is stiffness of a rubber bush of the yaw damper. $b'_0$ represents 1/2 of the interval between the two yaw dampers, which are disposed on the right and left sides of each of the bogies 12a, 12b, in the right and left direction (the interval between the two yaw dampers, which are disposed on the right and left sides of each of the bogies 12a, 12b, in the right and left direction becomes $2b'_0$). $\phi_{yj}$ is a pivot amount (angular displacement) of the yaw damper disposed on the right and left sides of each of the bogies 12a, 12b, in the yawing direction. $k_0$ is stiffness of a bolster anchor support. $b_0$ represents 1/2 of an interval between centers of bolster anchors. $K''_2$ is a spring constant of the air springs 22a, 22b in the forward and backward direction. $b_2$ represents 1/2 of the interval between the two air springs 22a, 22b, which are disposed on the right and left sides of each of the bogies 12a, 12b, in the right and left direction (the interval between the two air springs 22a, 22b, which are disposed on the right and left sides of each of the bogies 12a, 12b, in the right and left direction becomes $2b_2$).

• Rolling of bogie

The motion equation describing the rollings of the bogies 12a, 12b is expressed by (3) Equation below.
[Mathematical equation 3]

$$I_{Tx} \ddot{\psi}_{tj} = -2c_1 (b'_1)^2 \dot{\phi}_{tj} - 2c_2 b_2^2 \{ \dot{\phi}_{tj} - \dot{\phi}_{aj} \} - C_{wy} h_1 [ 2 \{ \dot{y}_{tj} + h_1 \dot{\phi}_{tj} \} - \{ \dot{y}_{wi} + \dot{y}_{wi+1} \} ]$$

$$+ c'_2 h_4 [ \{ \dot{y}_{tj} - h_4 \dot{\phi}_{tj} \} - \{ \dot{y}_b \pm (L \mp dx_b) \dot{\psi}_b + h_5 \dot{\phi}_b \} ]$$

$$- 2k_1 b_1^2 \phi_{tj} - 2\lambda k_2 b_2^2 \{ \phi_{tj} - \phi_{aj} \} - K_{wy} h_1 [ 2 \{ y_{tj} + h_1 \phi_{tj} \} - \{ y_{wi} + y_{wi+1} \} ]$$

$$+ 2k'_2 h_2 [ \{ y_{tj} - h_2 \phi_{tj} \} - \{ y_b \pm (L \mp dx_b) \psi_b + h_3 \phi_b \} ] - 2k_3 b_2^2 \{ \phi_{tj} - \phi_b \}$$

$$- saC_{wy} h_1 ( \dot{\psi}_{wi} - \dot{\psi}_{wi+1} ) - C_{wy} h_1 \left\{ \frac{a(a-2sa)}{2} \left( \frac{i}{R_i} - \frac{i}{R_{i+1}} \right) \right\}$$

$$- saK_{wy} h_1 ( \psi_{wi} - \psi_{wi+1} ) - K_{wy} h_1 \left\{ \frac{a(a-2sa)}{2} \left( \frac{1}{R_i} - \frac{1}{R_{i+1}} \right) \right\} \quad \cdots \quad (3)$$

$I_{TX}$ is a moment of inertia of the bogie 12a or 12b in the rolling direction. $\phi_{tj} \cdot \cdot$ is angular acceleration of the bogie 12a or 12b in the rolling direction.

$c_1$ is a damping coefficient of an axle damper in the up and down direction. $b'_1$ represents 1/2 of the interval between the two axle dampers, which are disposed on the right and left sides of each of the bogies 12a, 12b, in the right and left direction (the interval between the two axle dampers, which are disposed on the right and left sides of each of the bogies 12a, 12b, in the right and left direction becomes $2b'_1$). $c_2$ is a damping coefficient of the air springs 22a, 22b in the up and down direction. $\phi_{aj} \cdot$ is an angular velocity of the air springs 22a, 22b disposed on the bogie 12a or 12b in the rolling direction.

$k_1$ is a spring constant of an axle spring in the up and down direction. $\lambda$ is a value obtained by dividing the volume of main bodies of the air springs 22a, 22b by the volume of an auxiliary air chamber. $k_2$ is a spring constant of the air springs 22a, 22b in the up and down direction. $\phi_{a1}$ is a pivot amount (angular displacement) of the air springs 22a, 22b disposed on the bogie 12a in the rolling direction. $\phi_{aj}$ is a pivot amount (angular displacement) of the air springs 22a, 22b disposed on the bogie 12a or 12b in the rolling direction.

$k_3$ is equivalent stiffness by a change in effective pressure receiving area of the air springs 22a, 22b.

The above is the explanation regarding the motion equation describing the motion of the bogies 12a, 12b.

• Transversal vibration of wheel set

The motion equation describing the transversal vibrations of the wheel sets 13a to 13d is expressed by (4) Equation below.
[Mathematical equation 4]

$$m_w \ddot{y}_{tj} = C_{wy}\left[-\dot{y}_{wi} + \{\dot{y}_{tj} \pm a\dot{\psi}_{tj} + h_1\dot{\phi}_{tj}\}\right] \pm C_{wy}\left[-sa\dot{\psi}_{tj} + sa\dot{\psi}_{wi}\right] + C_{wy}\left\{\frac{a}{2}\frac{1}{R_i}(a-2sa)\right\}$$

$$+ K_{wy}\left[-y_{wi} + \{y_{tj} \pm a\psi_{tj} + h_1\phi_{tj}\}\right] \pm K_{wy}\left[-sa\psi_{tj} + sa\psi_{wi}\right] + K_{wy}\left\{\frac{a}{2R_i}(a-2sa)\right\}$$

$$- \left\{\frac{\dot{y}_{wi}}{v} - \psi_{wi}\right\}f_{2\_i} - \frac{\dot{\psi}_{wi}}{v}f_{3\_i}$$

$$+ \frac{1}{r}\left\{\varepsilon^L_i K^L_{3\_i}\left(\frac{N^L_i}{N^L_{st}}\right)^{2/3} \sin\alpha^L_i \cos\alpha^L_i - \varepsilon^R_i K^R_{3\_i}\left(\frac{N^R_i}{N^R_{st}}\right)^{2/3} \sin\alpha^R_i \cos\alpha^R_i\right\}$$

$$- N^L_i \sin\alpha^L_i + N^R_i \sin\alpha^R_i + m_w v^2 R^{-1}_i \cos\phi_{raili} - m_w g \sin\phi_{raili} \qquad \cdots \quad (4)$$

$m_w$ is the mass of the wheel set 13a, 13b, 13c, or 13d. $y_{wi}\cdot\cdot$ is acceleration of each of the wheel sets 13a to 13d in the right and left direction. $\phi_{wi}\cdot$ is an angular velocity of each of the wheel sets 13a to 13d in the yawing direction. $y_{wi}$ is a displacement of each of the wheel sets 13a to 13d in the right and left direction. $\phi_{wi}$ is a pivot amount (angular displacement) of each of the wheel sets 13a to 13d in the yawing direction. $y_{wi}\cdot$ is a velocity of each of the wheel sets 13a to 13d in the right and left direction. $f_{2\_i}$ is a lateral creep coefficient in each of the wheel sets 13a to 13d. $f_{3\_1}$ is a spin creep coefficient in each of the wheel sets 13a to 13d. $K^L_{3\_i}$ is a Kalker's coefficient at the left side (left-side wheel) of each of the wheel sets 13a to 13d. The Kalker's coefficient is a creep coefficient derived by a Kalker's linear theory. $N^L_i$ is a normal load at the left side (left-side wheel) of each of the wheel sets 13a to 13d. $\varepsilon^L_i$ is a physical quantity defined by $\{1+(F_{re}/(\mu N^L_i))^n\}^{-1/n}$ at the left side (left-side wheel) of each of the wheel sets 13a to 13d. $F_{re}$ is a resultant force of a longitudinal creep force and a lateral creep force, and $\mu$ is a friction coefficient. n is a certain constant, and is set to 2.0 in this case. $N^L_{st}$ is a static normal load at the left side (left-side wheel) of each of the wheel sets 13a to 13d. $\alpha^L_i$ is a contact angle at the left side (left-side wheel) of each of the wheel sets 13a to 13d. Note that the contact angle is a smaller angle (acute angle) out of angles made by a tangent plane and a horizontal plane (a plane in the right and left direction (y axis direction)) at a contact position between the wheel and the rail. $K^R_{3\_i}$ is a creep coefficient derived by the Kalker's linear theory called the Kalker's coefficient at the right side (right-side wheel) of each of the wheel sets 13a to 13d. $N^R_i$ is a normal load at the right side (right-side wheel) of each of the wheel sets 13a to 13d. $\varepsilon^R_i$ is a physical quantity defined by $\{1+(F_{re}/(\mu N^R_i))^n\}^{-1/n}$ at the right side (right-side wheel) of each of the wheel sets 13a to 13d. $N^R_{st}$ is a static normal load at the right side (right-side wheel) of each of the wheel sets 13a to 13d. $\alpha^R_i$ is a contact angle at the right side (right-side wheel) of each of the wheel sets 13a to 13d.

• Yawing of wheel set

The motion equation describing the yawings of the wheel sets 13a to 13d is expressed by (5) Equation below.
[Mathematical equation 5]

$$I_{wz} \ddot{\psi}_{wi} = -f_{1\_i} b \frac{\gamma}{r} \{y_{wi} - y_{Ri}\} + \frac{f_{1\_i} b^2}{R} - f_{1\_i} \frac{b^2 \dot{\psi}_{wi}}{V}$$

$$+ C_{wx} b_1^2 \{\dot{\psi}_{tj} - \dot{\psi}_{wi}\} + K_{wx} b_1^2 \{\psi_{tj} - \psi_{wi}\} \pm C_{wx} b_1^2 a \frac{i}{R_i} \pm K_{wx} b_1^2 a \frac{1}{R_i}$$

$$\pm saC_{wy} [\dot{y}_{wi} - \dot{y}_{tj}] + saC_{wy} [-(a-sa)\dot{\psi}_{tj} \mp h_1 \dot{\phi}_{tj} - sa\dot{\psi}_{wi}] \mp saC_{wy} \left\{ \frac{a}{2} \frac{i}{R_i} (a-2sa) \right\}$$

$$\pm saK_{wy} [y_{wi} - y_{tj}] + saK_{wy} [-(a-sa)\psi_{tj} \mp h_1 \phi_{tj} - sa\psi_{wi}] \mp saK_{wy} \left\{ \frac{a}{2R_i} (a-2sa) \right\}$$

$$\cdots (5)$$

$I_{wz}$ is a moment of inertia of each of the wheel sets 13a to 13d in the yawing direction. $\phi_{wi} \cdot \cdot$ is angular acceleration of each of the wheel sets 13a to 13d in the yawing direction. $f_{1\_i}$ is a longitudinal creep coefficient in each of the wheel sets 13a to 13d. y is a tread slope. r is a radius of each of the wheels 14a to 14d. $y_{Ri}$ is an alignment irregularity amount at the position of each of the wheel sets 13a to 13d.

Next, the forward-and-backward-direction forces $T_1$ to $T_4$ of the wheel sets 13a to 13d are expressed by (6) Equation to (9) Equation below. In this manner, the 303s $T_1$ to $T_4$ are determined according to the differences between the angular displacements $\phi_{w1}$ to $\phi_{w4}$ of the wheel sets in the yawing direction and the angular displacements $\phi_{t1}$ and $\phi_{t2}$ of the bogies on which these wheel sets are provided, in the yawing direction.

[Mathematical equation 6]

$$T_1 = C_{wx} b_1^2 \{\dot{\psi}_{t1} - \dot{\psi}_{w1}\} + K_{wx} b_1^2 \{\psi_{t1} - \psi_{w1}\} \qquad \cdots (6)$$

$$T_2 = C_{wx} b_1^2 \{\dot{\psi}_{t1} - \dot{\psi}_{w2}\} + K_{wx} b_1^2 \{\psi_{t1} - \psi_{w2}\} \qquad \cdots (7)$$

$$T_3 = C_{wx} b_1^2 \{\dot{\psi}_{t2} - \dot{\psi}_{w3}\} + K_{wx} b_1^2 \{\psi_{t2} - \psi_{w3}\} \qquad \cdots (8)$$

$$T_4 = C_{wx} b_1^2 \{\dot{\psi}_{t2} - \dot{\psi}_{w4}\} + K_{wx} b_1^2 \{\psi_{t2} - \psi_{w4}\} \qquad \cdots (9)$$

As in (10) Equation to (13) Equation below, the differences between the angular displacements $\phi_{t1}$ and $\phi_{t2}$ of the bogies 12a, 12b in the yawing direction and the angular displacements $\phi_{w1}$ to $\phi_{w4}$ of the wheel sets 13a to 13d in the yawing direction, are defined as transformation variables $e_1$ to $e_4$.

[Mathematical equation 7]

$$e_1 = \psi_{t1} - \psi_{w1} \qquad \cdots \quad (10)$$

$$e_2 = \psi_{t1} - \psi_{w2} \qquad \cdots \quad (11)$$

$$e_3 = \psi_{t2} - \psi_{w3} \qquad \cdots \quad (12)$$

$$e_4 = \psi_{t2} - \psi_{w4} \qquad \cdots \quad (13)$$

When (6) Equation to (9) Equation are substituted into (10) Equation to (13) Equation, respectively, ordinary differential equations regarding the transformation variables $e_1$ to $e_4$ are obtained as in (14) Equation to (17) Equation below.

[Mathematical equation 8]

$$C_{wx} b_1^2 \dot{e}_1 + K_{wx} b_1^2 e_1 = T_1 \qquad \cdots \quad (14)$$

$$C_{wx} b_1^2 \dot{e}_2 + K_{wx} b_1^2 e_2 = T_2 \qquad \cdots \quad (15)$$

$$C_{wx} b_1^2 \dot{e}_3 + K_{wx} b_1^2 e_3 = T_3 \qquad \cdots \quad (16)$$

$$C_{wx} b_1^2 \dot{e}_4 + K_{wx} b_1^2 e_4 = T_4 \qquad \cdots \quad (17)$$

The solutions of the (14) Equation to (17) Equation ($e_1$ to $e_4$) are derived and substituted into (10) Equation to (13) Equation, to thereby determine the angular displacements $\phi_{w1}$ to $\phi_{w4}$ of the wheel sets 13a to 13d in the yawing direction, as in (18) Equation to (21) Equation below.

[Mathematical equation 9]

$$\psi_{w1} = \psi_{t1} - e_1 \qquad \cdots \quad (18)$$

$$\psi_{w2} = \psi_{t1} - e_2 \qquad \cdots \quad (19)$$

$$\psi_{w3} = \psi_{t2} - e_3 \qquad \cdots \quad (20)$$

$$\psi_{w4} = \psi_{t2} - e_4 \qquad \cdots \quad (21)$$

Further, when (18) Equation to (21) Equation are substituted into (1) Equation, (1) Equation being the motion equation describing the transversal vibrations (motion in the right and left direction) of the bogies 12a, 12b is rewritten into a motion equation including the forward-and-backward direction forces $T_1$ to $T_4$, as in (22) Equation below.
[Mathematical equation 10]

$$m_t \ddot{y}_{tj} = -c'_2[\{\dot{y}_{tj} - h_4 \dot{\phi}_{tj}\} - \{\dot{y}_b \pm (L \mp dx_b)\dot{\psi}_b + h_5 \dot{\phi}_b\}] - 2C_{wy}\{\dot{y}_{tj} + h_1 \dot{\phi}_{tj}\} + C_{wy}\{\dot{y}_{wi} + \dot{y}_{wi+1}\}$$

$$-2k'_2[\{y_{tj} - h_2 \phi_{tj}\} - \{y_b \pm (L \mp dx_b)\psi_b + h_3 \phi_b\}] - 2K_{wy}\{y_{tj} + h_1 \phi_{tj}\} + K_{wy}\{y_{wi} + y_{wi+1}\}$$

$$+ \frac{saK_{wy}}{K_{wx}b_1^2}(T_i - T_{i+1}) - \frac{K_{wy}a^2}{2}\left(\frac{1}{R_i} + \frac{1}{R_{i+1}}\right)$$

$$+ m_t v^2 (R_i^{-1}\cos\phi_{raili} + R_{i+1}^{-1}\cos\phi_{raili+1})/2$$

$$- m_t g(\sin\phi_{raili} + \sin\phi_{raili+1})/2 \qquad \cdots \quad (22)$$

Further, when (18) Equation to (21) Equation are substituted into (2) Equation, (2) Equation being the motion equation describing the yawings of the bogies 12a, 12b is rewritten into a motion equation including the forward-and-backward direction forces $T_1$ to $T_4$, as in (23) Equation below.
[Mathematical equation 11]

$$I_{Tz}\ddot{\psi}_{tj} = C_{wy}a(\dot{y}_{wi} - \dot{y}_{wi+1}) - C_{wy}sa(\dot{y}_{wi} - \dot{y}_{wi+1})$$

$$+ K_{wy}a(y_{wi} - y_{wi+1}) - K_{wy}sa(y_{wi} - y_{wi+1})$$

$$- 2a(a-sa)C_{wy}\dot{\psi}_{tj} - 2a(a-sa)K_{wy}\psi_{tj}$$

$$-2k'_0(b'_0)^2\{\psi_{tj} - \psi_{yi}\} - 2k_0 b_0^2\{\psi_{tj} - \psi_b\} - 2k''_2 b_2^2(\psi_{tj} - \psi_b)$$

$$- (T_i - T_{i+1}) + (a-sa)\frac{saK_{wy}}{K_{wx}b_1^2}(T_i - T_{i+1}) - K_{wy}\frac{(a-sa)a^2}{2}\left(\frac{1}{R_i} - \frac{1}{R_{i+1}}\right)$$

$$\pm \frac{4Lk''_2 b_2^2}{(R_i + R_{i+1})}$$

$$+ am_t v^2 (R_i^{-1}\cos\phi_{raili} - R_{i+1}^{-1}\cos\phi_{raili+1})/2$$

$$- am_t g(\sin\phi_{raili} - \sin\phi_{raili+1})/2 \qquad \cdots \quad (23)$$

Further, when (18) Equation to (21) Equation are substituted into (3) Equation, (3) Equation being the motion equation describing the rollings of the bogies 12a, 12b is rewritten into a motion equation including the forward-and-backward direction forces $T_1$ to $T_4$, as in (24) Equation below.
[Mathematical equation 12]

$$I_{Tx} \ddot{\psi}_{tj} = -2c_1 (b'_1)^2 \dot{\phi}_{tj} - 2c_2 b_2^2 [\dot{\phi}_{tj} - \dot{\phi}_{aj}] - C_{wy} h_1 [2\{\dot{y}_{tj} + h_1 \dot{\phi}_{tj}\} - \{\dot{y}_{wi} + \dot{y}_{wi+1}\}]$$

$$+ c'_2 h_4 [\{\dot{y}_{tj} - h_4 \dot{\phi}_{tj}\} - \{\dot{y}_b \pm (L \mp dx_b) \dot{\psi}_b + h_5 \dot{\phi}_b\}]$$

$$- 2k_1 b_1^2 \phi_{tj} - 2\lambda k_2 b_2^2 [\phi_{tj} - \phi_{aj}] - K_{wy} h_1 [2\{y_{tj} + h_1 \phi_{tj}\} - \{y_{wi} + y_{wi+1}\}]$$

$$+ 2k'_2 h_2 [\{y_{tj} - h_2 \phi_{tj}\} - \{y_b \pm (L \mp dx_b) \psi_b + h_3 \phi_b\}] - 2k_3 b_2^2 [\phi_{tj} - \phi_b]$$

$$+ \frac{sa K_{wy} h_1}{K_{wx} b_1^2} (T_i - T_{i+1}) - \frac{K_{wy} h_1 a^2}{2} \left( \frac{1}{R_i} + \frac{1}{R_{i+1}} \right) \qquad \cdots \quad (24)$$

Further, when (18) Equation to (21) Equation are substituted into (4) Equation, (4) Equation being the motion equation describing the transversal vibrations of the wheel sets 13a to 13d is rewritten into a motion equation including the forward-and-backward direction forces $T_1$ to $T_4$, as in (25) Equation below. However, such a motion equation is described by using a lateral force $Q_i$ in each of the wheel sets 13a to 13d. Note that the lateral force $Q_i$ in each of the wheel sets 13a to 13d can be expressed as a sum of lateral forces $Q^L_i$ and $Q^R_i$ in the right and left wheels 14L, 14R that belong to each of the wheel sets, and thus a relation in (26) Equation below is satisfied. $F_y{}^L_i$ is a lateral creep force at the left side (left-side wheel) of each of the wheel sets 13a to 13d. $F_y{}^R_i$ is a lateral creep force at the right side (right-side wheel) of each of the wheel sets 13a to 13d.

[Mathematical equation 13]

$$m_w \ddot{y}_{wi} = C_{wy} [-\dot{y}_{wi} + \{\dot{y}_{tj} \pm a \dot{\psi}_{tj} + h_1 \dot{\phi}_{tj}\}] + K_{wy} [-y_{wi} + \{y_{tj} \pm a \psi_{tj} + h_1 \phi_{tj}\}]$$

$$\mp \frac{K_{wy} sa}{K_{wx} b_1^2} T_i + \frac{K_{wy} a^2}{2R_1}$$

$$+ Q_i + m_w v^2 R_i^{-1} \cos \phi_{raili} - m_w g \sin \phi_{raili} \qquad \cdots \quad (25)$$

$$Q_i = Q^L_i + Q^R_i$$

$$= -N^L_i \sin \alpha^L_i + N^R_i \sin \alpha^R_i - F_y{}^L_i \cos \alpha^L_i + F_y{}^R_i \cos \alpha^R_i$$

$$\cdots \quad (26)$$

Further, when (18) Equation to (21) Equation are substituted into (5) Equation, (5) Equation being the motion equation describing the yawings of the wheel sets 13a to 13d is rewritten into a motion equation including the forward-and-backward direction forces $T_1$ to $T_4$, as in (27) Equation below.
[Mathematical equation 14]

$$I_{wZ}\ddot{\psi}_{wi} = -f_{1\_i}b\frac{\gamma}{r}\{y_{wi}-y_{Ri}\} + \frac{f_{1\_i}b^2}{R} - f_{1\_i}\frac{b^2\dot{\psi}_{wi}}{v}$$

$$\pm saC_{wy}[\dot{y}_{wi}-\dot{y}_{tj}] + saC_{wy}(-a\dot{\psi}_{tj}\mp h_1\dot{\phi}_{tj})$$

$$\pm saK_{wy}[y_{wi}-y_{tj}] + saK_{wy}(-a\psi_{tj}\mp h_1\phi_{tj})$$

$$+ T_i + \frac{sa^2K_{wy}}{K_{wx}b_1^2}T_i \mp saK_{wy}\frac{a^2}{2R_i} \qquad \cdots \quad (27)$$

A part indicated by a dotted line on the left side of each of (14) Equation, (15) Equation, (16) Equation, and (17) Equation represents the sum of the damping amount in the forward and backward direction and the amount of stiffness of the axle boxes 17a, 17b, and if these change, an influence thereof directly appears on the forward-and-backward direction forces $T_1$ to $T_4$.

A part indicated by a first dotted line on the right side of (22) Equation represents the amount of stiffness of the lateral movement damper 23, and a part indicated by a second dotted line on the right side of the same equation represents the amount of stiffness of the air springs 22a, 22b in the right and left direction. Therefore, if the amount of stiffness of the lateral movement damper 23 and the amount of stiffness of the air springs 22a, 22b in the right and left direction change, an influence thereof appears on the forward-and-backward direction forces $T_1$ to $T_4$. Note that the amount of stiffness corresponds to a spring constant.

Further, a part indicated by a first dotted line on the right side of (23) Equation represents the amount of stiffness of the rubber bush of the yaw dampers 24a, 24b, and a part indicated by a second dotted line on the right side of the same equation represents the amount of stiffness of the air springs 22a, 22b in the forward and backward direction. Therefore, if the amount of stiffness of the rubber bush of the yaw dampers 24a, 24b, and the amount of stiffness of the air springs 22a, 22b in the forward and backward direction change, an influence thereof appears on the forward-and-backward direction forces $T_1$ to $T_4$.

A part indicated by a first dotted line on the right side of (24) Equation represents the damping amount of the air springs 22a, 22b in the up and down direction, a part indicated by a second dotted line on the right side of the same equation represents the damping amount of the lateral movement damper 23, a part indicated by a third dotted line on the right side of the same equation represents the amount of stiffness of the air springs 22a, 22b in the up and down direction, and a part indicated by a fourth dotted line on the right side of the same equation represents the amount of stiffness of the air springs 22a, 22b in the right and left direction. The damping amount corresponds to a damping coefficient.

Therefore, if at least one of the damping amount and the amount of stiffness of the axle boxes 17a, 17b in the forward and backward direction, the damping amount of the air springs 22a, 22b in the up and down direction, the damping amount of the lateral movement damper 23, the amount of stiffness of the air springs 22a, 22b in the up and down direction, and the amount of stiffness of the air springs 22a, 22b in the right and left direction changes, an influence thereof appears on the forward-and-backward direction forces $T_1$ to $T_4$.

A part indicated by a first dotted line on the right side of (25) Equation represents the amount of stiffness of the axle box suspensions 18a, 18b in the right and left direction, and a part indicated by a second dotted line on the right side of the same equation represents the amount of stiffness of the axle box suspensions 18a, 18b in the forward and backward direction. Therefore, if at least one of the amount of stiffness of the axle box suspensions 18a, 18b in the right and left direction and the amount of stiffness of the axle box suspensions 18a, 18b in the forward and backward direction changes, an influence thereof appears on the forward-and-backward direction forces $T_1$ to $T_4$.

A part indicated by a dotted line on the right side of (27) Equation represents the amount of stiffness of the axle box suspensions 18a, 18b in the forward and backward direction and the right and left direction. Therefore, if at least one of the amount of stiffness of the axle box suspensions 18a, 18b in the right and left direction and the amount of stiffness of the axle box suspensions 18a, 18b in the forward and backward direction changes, an influence thereof appears on the forward-and-backward direction forces $T_1$ to $T_4$.

Further, even if the rewriting as described above is performed on the motion equation describing the motion of the vehicle body 11, an influence thereof does not appear on the forward-and-backward direction forces $T_1$ to $T_4$. This means that the state of the vehicle body 11 is not reflected on the forward-and-backward direction forces $T_1$ to $T_4$.

Based on the above, the present inventors found out that it is possible to correctly detect whether or not an inspection target member is abnormal, by using the measured values of the forward-and-backward direction forces $T_1$ to $T_4$. In the example of the motion equation described above, it is possible to correctly detect whether or not at least one of the spring constant and the damping coefficient of the inspection target member is abnormal. In the example of the motion equation described above, the inspection target member is at least any one of the axle boxes 17a, 17b, the lateral movement damper 23, the yaw dampers 24a, 24b, the air springs 22a, 22b, and the axle box suspensions 18a, 18b. The present reference example has been made based on the above-described findings.

(Configuration of inspection apparatus 300)

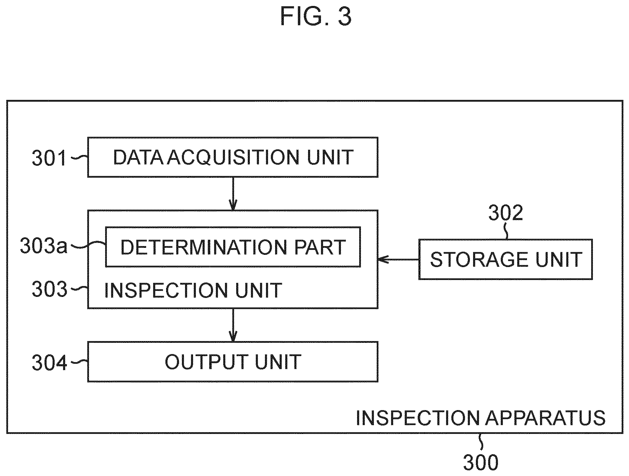

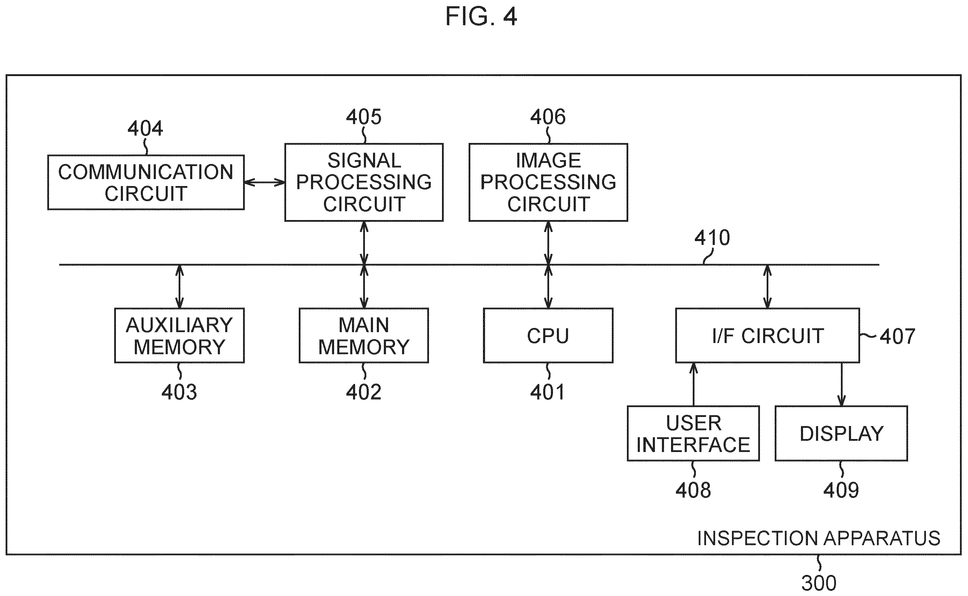

Fig. 3 is a view illustrating one example of a functional configuration of an inspection apparatus 300. Fig. 4 is a view illustrating one example of a hardware configuration of the inspection apparatus 300.

In Fig. 3, the inspection apparatus 300 includes, as its functions, a data acquisition unit 301, a storage unit 302, an inspection unit 303, and an output unit 304.

In Fig. 4, the inspection apparatus 300 includes a CPU 401, a main memory 402, an auxiliary memory 403, a communication circuit 404, a signal processing circuit 405, an image processing circuit 406, an I/F circuit 407, a user interface 408, a display 409, and a bus 410.

The CPU 401 overall controls the entire inspection apparatus 300. The CPU 401 uses the main memory 402 as a work area to execute a program stored in the auxiliary memory 403. The main memory 402 stores data temporarily. The auxiliary memory 403 stores various kinds of data, in addition to programs to be executed by the CPU 401. The storage unit 302 is fabricated by using the CPU 401 and the auxiliary memory 403, for example.

The communication circuit 404 is a circuit intended for performing communication with the outside of the inspection apparatus 300. The communication circuit 404 receives information of the measured value of the forward-and-backward-direction force to be described later, for example. The communication circuit 404 may perform radio communication or wire communication with the outside of the inspection apparatus 300. The communication circuit 404 is connected to an antenna provided on the railway vehicle in the case of performing radio communication.

The signal processing circuit 405 performs various kinds of signal processing on signals received by the communication circuit 404 and signals input according to the control made by the CPU 401. The data acquisition unit 301 is fabricated by using the CPU 401, the communication circuit 404, and the signal processing circuit 405, for example. Further, the inspection unit 303 is fabricated by using the CPU 401 and the signal processing circuit 405, for example.

The image processing circuit 406 performs various kinds of image processing on signals input according to the control made by the CPU 401. The signal after being subjected to the image processing is output to the display 409.

The user interface 408 is a part with which an operator gives an instruction to the inspection apparatus 300. The user interface 408 includes buttons, switches, dials, and so on, for example. Further, the user interface 408 may include a graphical user interface using the display 409.

The display 409 displays an image based on a signal output from the image processing circuit 406. The I/F circuit 407 exchanges data with a device connected to the I/F circuit 407. In Fig. 4, as the device to be connected to the I/F circuit 407, the user interface 408 and the display 409 are illustrated. However, the device to be connected to the I/F circuit 407 is not limited to these. For example, a portable storage medium may be connected to the I/F circuit 407. Further, at least a part of the user interface 408 and the display 409 may be provided outside the inspection apparatus 300.

The output unit 304 is fabricated by using at least any one of a set including the communication circuit 404, and the signal processing circuit 405, and a set including the image processing circuit 406, the I/F circuit 407, and the display 409, for example.

Note that the CPU 401, the main memory 402, the auxiliary memory 403, the signal processing circuit 405, the image processing circuit 406, and the I/F circuit 407 are connected to the bus 410. Communication among these components is performed via the bus 410. Further, the hardware of the inspection apparatus 300 is not limited to the one illustrated in Fig. 4 as long as it can realize later-described functions of the inspection apparatus 300.

[Data acquisition unit 301]

The data acquisition unit 301 acquires input data including the measured values of the forward-and-backward-direction forces $T_1$ to $T_4$ measured in the railway vehicle being the inspection target, at a predetermined sampling period. Accordingly, time-series data of the measured values of the forward-and-backward-direction forces $T_1$ to $T_4$ measured in the railway vehicle being the inspection target is obtained. The method of measuring the forward-and-backward-direction force is as described previously. In the following explanation, the measured values of the forward-and-backward-direction forces $T_1$ to $T_4$ measured in the railway vehicle being the inspection target, are referred to as inspection measured values according to need.

[Storage unit 302]

The storage unit 302 stores information required for determination to be made by the inspection unit 303.

In the present reference example, the storage unit 302 previously stores measured values of forward-and-backward-direction forces $T_1$ to $T_4$ at respective positions in an inspection zone, the measured values being measured beforehand in a normal railway vehicle by making the normal railway vehicle travel in the inspection zone. In the following explanation, the measured values of the forward-and-backward-direction forces $T_1$ to $T_4$ measured beforehand in the normal railway vehicle by making the normal railway vehicle travel in the inspection zone, are referred to as reference measured values according to need. Here, the normal railway vehicle indicates a railway vehicle in which abnormality thereof, including an inspection target member, is not confirmed in an inspection performed in a rail yard and the like, or a new railway vehicle (a railway vehicle before staring commercial operation). When it is confirmed that there is no abnormality in the railway vehicle being the inspection target by the inspection performed in the rail yard and the like, before performing an inspection based on a method of the present reference example to be described later, the railway vehicle may be regarded as a normal railway vehicle, and the reference measured values may be obtained in the railway vehicle.

As will be described later, in the present reference example, the inspection measured value and the reference measured value are compared. The inspection zone indicates a zone, in a traveling zone of the railway vehicle, in which the comparison between the inspection measured value and the reference measured value is performed. Note that the inspection zone may also be set to the entire traveling zone of the railway vehicle. The inspection measured value and the reference measured value are obtained in a manner as described in the term of <<forward-and-backward direction force>>. The respective positions in the inspection zone are obtained from traveling positions of the railway vehicle when measuring the reference measured values. The traveling position of the railway vehicle is obtained by detecting a position of the railway vehicle at each time by using GPS (Global Positioning System), for example. Further, the traveling position of the railway vehicle may also be derived from an integrated value of velocity of the railway vehicle at each time, or the like.

As described above, in the present reference example, the inspection measured value and the reference measured value are compared. For this reason, it is preferable that the reference measured value whose condition when obtaining it is as close as possible to the condition when obtaining the inspection measured value, is compared with the inspection measured value. Accordingly, in the present reference example, the reference measured values at respective positions in the inspection zone are classified for each of a kind, the inspection zone, and an inspection velocity of the railway vehicle, to be stored in the storage unit 302.

The reference measured values are classified for each of vehicle series, formation, the inspection zone, and the inspection velocity, for example, to be stored in the storage unit 302. Note that the vehicle series mentioned here do not include information inherent in the railway vehicle such as a serial number, out of information included in the vehicle series. The vehicle series and formation are examples of the kind of the railway vehicle. The inspection velocity indicates a velocity of the railway vehicle in the inspection zone. For example, the inspection velocity can be set to a traveling velocity of the railway vehicle when the railway vehicle enters the inspection zone. Further, the inspection velocity may also be a velocity limit in the inspection zone.

Note that the classification of the reference measured values as described above can be performed in the inspection apparatus 300 (the storage unit 302). In this case, the inspection apparatus 300 (the storage unit 302) acquires reference measured values before classification. Further, the reference measured values classified in a manner as above may also be acquired and stored by the inspection apparatus 300 (the storage unit 302). In this case, an apparatus, which is different from the inspection apparatus 300, performs acquisition and classification of reference measured values.

Further, there is a case where only the reference measured values at the respective positions in the inspection zone regarding the railway vehicle being the inspection target on which the inspection apparatus 300 is mounted, are stored in the storage unit 302 of the inspection apparatus 300. Further, there is a case where only reference measured values at the respective positions in the inspection zone regarding a railway vehicle whose kind is the same as that of the railway vehicle being the inspection target on which the inspection apparatus 300 is mounted, are stored in the storage unit 302 of the inspection apparatus 300. In these cases, there is no need to classify the reference measured values for each kind to make the storage unit 302 store the values.

Further, as described in Patent Literature 5, the reference measured values at the respective positions in the inspection zone may also be changed by a state of a track in the inspection zone. Therefore, the state of the track when obtaining the inspection measured value and the state of the track when obtaining the reference measured value are preferably as close as possible. Therefore, it is preferable to update the reference measured value at regular intervals. This is because the time at which the reference measured value was obtained, can be approximated to the time at which the inspection measured value was obtained. Further, it is possible that, after confirming that the state of the track in the inspection zone is the same or can be regarded as the same as the state of the track when obtaining the reference measured value, the railway vehicle being the inspection target is made to travel in the inspection zone to perform inspection.

Further, when the reference measured value is updated at regular intervals as described above, the railway vehicle whose abnormality is not confirmed in the inspection performed in the rail yard and the like, or the new railway vehicle (the railway vehicle before starting the commercial operation) do not always exist. Accordingly, the normal railway vehicle may also be determined as follows. First, by using the same kind of railway vehicles being railway vehicles performing the commercial operation, plural measured values of forward-and-backward direction forces in the same inspection zone and at the same inspection velocity are acquired. A railway vehicle having a large number of measured values which are measured values of forward-and-backward direction forces at respective positions in the inspection zone and which are values close to measured values of another railway vehicle, is regarded as a normal railway vehicle. More concretely, for example, the measured values of the forward-and-backward direction forces at the respective positions in the inspection zone are regarded as vectors. The plural vectors (the measured values of the forward-and-backward direction forces) are classified by using a cluster analysis being a statistical method. A railway vehicle in which the vectors (the measured values of the forward-and-backward direction forces) belonging to the cluster composed of the largest number of vectors are acquired, is regarded as a normal railway vehicle. By determining the normal railway vehicle as described above, it is possible to prevent a situation where the inspection unit 303 to be described later cannot select the reference measured values at the respective positions in the inspection zone. Therefore, it is possible to prevent a situation where the inspection cannot be performed.

[Inspection unit 303]

The inspection unit 303 inspects the inspection target member of the railway vehicle being the inspection target. The inspection unit 303 includes, as its function, a determination part 303a.

<Determination part 303a>

In the present reference example, the determination part 303a determines whether or not the inspection target member of the railway vehicle being the inspection target is normal, based on a result of comparison between the inspection measured value and the reference measured value.

A concrete example of processing performed by the determination part 303a will be described.

In the storage unit 302, the reference measured values at the respective positions in the inspection zone are stored by being classified for each of the kind, the inspection zone, and the inspection velocity of the railway vehicle. When the railway vehicle being the inspection target enters the inspection zone, the determination part 303a selects reference measured values stored in the storage unit 302 by being classified based on contents same as the kind, the inspection zone, and the inspection velocity of the railway vehicle being the inspection target on which the inspection apparatus 300 is mounted. It is set that the kind, the inspection zone, and the inspection velocity of the railway vehicle being the inspection target on which the inspection apparatus 300 is mounted are previously set with respect to the inspection apparatus 300.

There is a case where the reference measured values stored in the storage unit 302 by being classified based on the contents same as the kind, the inspection zone, and the inspection velocity of the railway vehicle being the inspection target on which the inspection apparatus 300 is mounted, are not included in the storage unit 302. In this case, the determination part 303a selects reference measured values stored in the storage unit 302 by being classified based on the same kind and the same inspection zone of the railway vehicle being the inspection target on which the inspection apparatus 300 is mounted, and an inspection velocity having a difference with respect to the inspection velocity of the railway vehicle being the inspection target, of a preset threshold value or less.

When the selection of the reference measured values at the respective positions in the inspection zone as described above cannot be performed, the determination part 303a determines that it is not possible to perform the inspection in the inspection zone.

On the other hand, when it was possible to select the reference measured values at the respective positions in the inspection zone, the determination part 303a specifies a traveling position of the railway vehicle at the time of measurement of the inspection measured value. The traveling position of the railway vehicle at the time of measurement of the inspection measured value can be obtained by detecting a position of the railway vehicle at that time by using the GPS (Global Positioning System). Further, the traveling position of the railway vehicle at that time may also be derived from an integrated value of velocity of the railway vehicle at each time, or the like.

Next, the determination part 303a reads, from the reference measured values at the respective positions in the inspection zone selected as described above, a reference measured value corresponding to the traveling position of the railway vehicle specified as described above. Subsequently, the determination part 303a calculates an absolute value of difference between the inspection measured value and the reference measured value at the same position in the inspection zone. Note that in the present reference example, the forward-and-backward direction forces $T_1$ to $T_4$ regarding the four wheel sets 13a to 13d are obtained. Therefore, four reference measured values and four inspection measured values are respectively obtained with respect to these four wheel sets 13a to 13d. Each absolute value of difference between the inspection measured value regarding the wheel set and the reference measured value regarding the same wheel set is derived.

Next, the determination part 303a determines whether or not the absolute value of difference between the inspection measured value and the reference measured value at the same position in the inspection zone is greater than a preset threshold value. When the absolute value of difference between the inspection measured value and the reference measured value at the same position in the inspection zone is greater than the threshold value, the determination part 303a determines that the inspection target member is not normal, and in the other case, the determination part 303a determines that the inspection target member is normal. At this time, the determination part 303a determines that, when the absolute value of difference between the inspection measured value and the reference measured value regarding at least one of the forward-and-backward direction forces $T_1$ and $T_2$ is greater than the threshold value, the inspection target member disposed between the bogie 12a and the vehicle body 11 is not normal. Further, the determination part 303a determines that, when the absolute value of difference between the inspection measured value and the reference measured value regarding at least one of the forward-and-backward direction forces $T_3$ and $T_4$ is greater than the threshold value, the inspection target member disposed between the bogie 12b and the vehicle body 11 is not normal.

The determination part 303a repeatedly performs the calculation of the absolute value of difference between the inspection measured value and the reference measured value and the determination whether or not the absolute value is greater than the threshold value, every time the inspection measured value is obtained, from when the railway vehicle being the inspection target enters the inspection zone to when it leaves the inspection zone.

[Output unit 304]

The output unit 304 outputs information indicating the result determined by the inspection unit 303. Concretely, when the inspection unit 303 determines that the inspection target member is not normal, the output unit 304 outputs information indicating that. At this time, the output unit 304 also outputs information indicating that the inspection target member determined as not normal is a member that belongs to which of the bogies 12a and 12b. Further, when the inspection unit 303 determines that the inspection cannot be performed in the inspection zone, the output unit 304 outputs information indicating that. As a form of output, it is possible to employ at least any one of displaying the information on a computer display, transmitting the information to an external device, and storing the information in an internal or external storage medium, for example.

(Results of simulation)

The present inventors confirmed, through simulations, that when the inspection target member becomes abnormal in the railway vehicle that travels in the inspection zone, the measured values of the forward-and-backward direction forces $T_1$ to $T_4$ change from values in the normal case. Here, explanation will be made by citing, as examples, the lateral movement damper 23 and the yaw dampers 24a, 24b as the inspection target members.

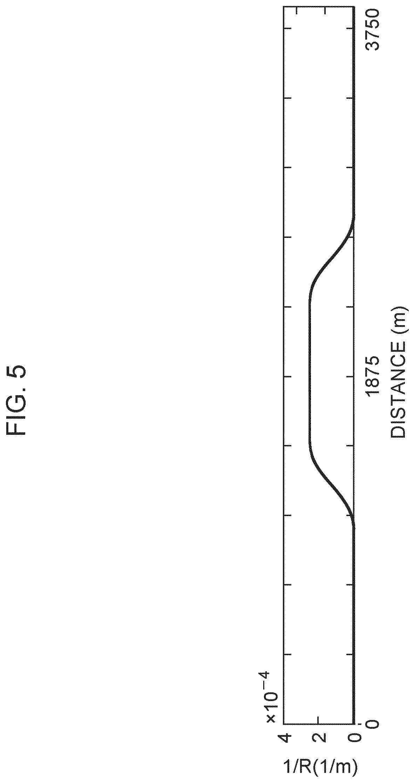

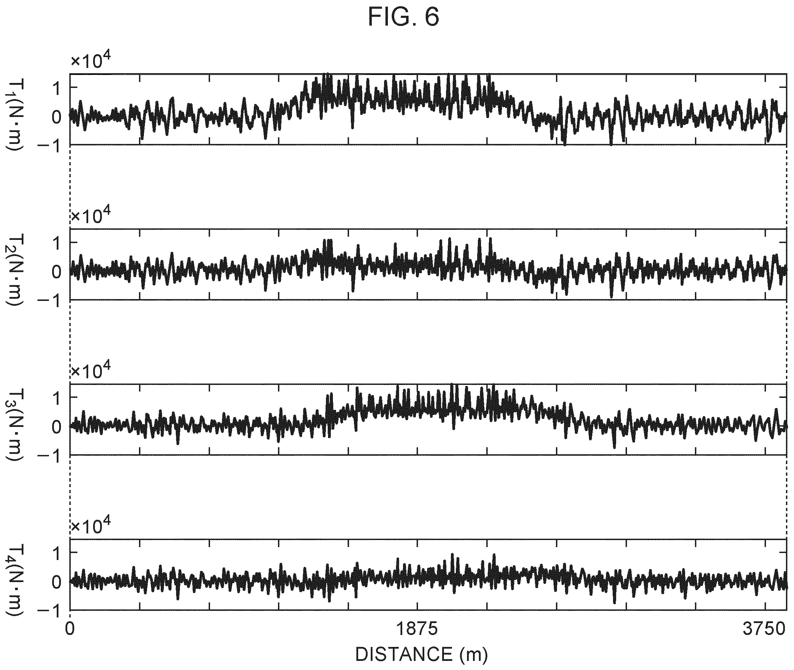

Fig. 5 is a view illustrating one example of a curvature of rails 20a, 20b in the inspection zone. In Fig. 5, a distance 0 indicates a starting point of the inspection zone (the same applies to the other drawings). Each of Fig. 6 to Fig. 12 illustrates one example of a result of simulation in the inspection zone illustrated in Fig. 5.

Fig. 6 is a view illustrating one example of a result of simulation regarding measured values of forward-and-backward direction forces $T_1$ to $T_4$ when the railway vehicle is assumed to be normal (reference measured values). Here, it is set that the railway vehicle travels in the inspection zone at 270 km/h.

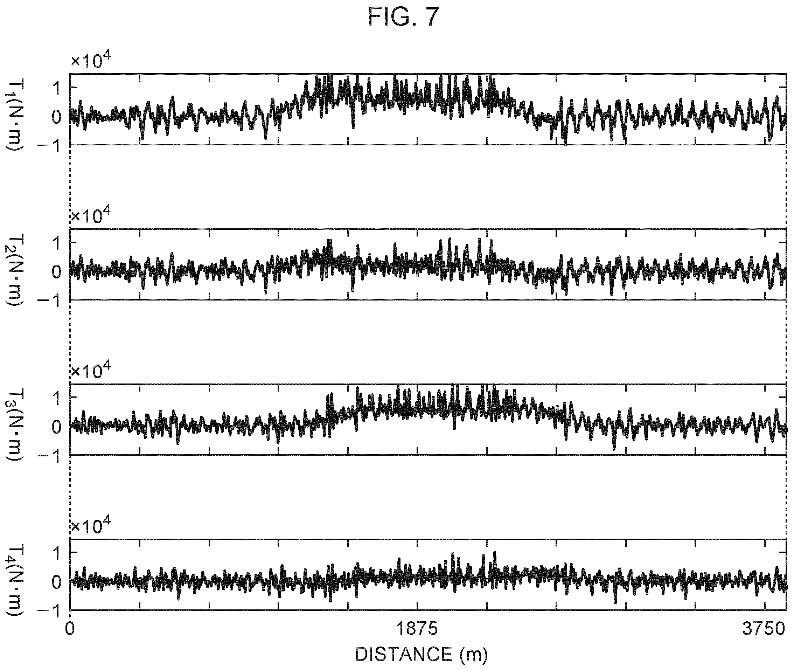

Fig. 7 is a view illustrating one example of a result of simulation regarding measured values of forward-and-backward direction forces $T_1$ to $T_4$ when the lateral movement damper 23 of the front-side bogie 12a is assumed to be broken down. Fig. 7 illustrates the result when performing the simulation in which the damping coefficient of the lateral movement damper 23 of the front-side bogie 12a is set to 0.5 times that at the normal time.

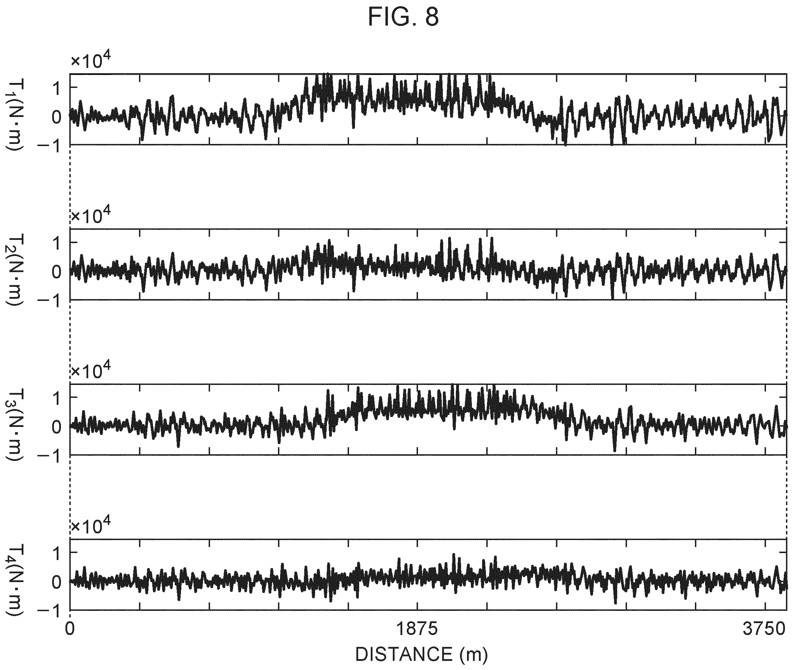

Fig. 8 is a view illustrating one example of a result of simulation regarding measured values of forward-and-backward direction forces $T_1$ to $T_4$ when the lateral movement damper 23 of the rear-side bogie 12b is assumed to be broken down. Fig. 8 illustrates the result when performing the simulation in which the damping coefficient of the lateral movement damper 23 of the rear-side bogie 12b is set to 0.5 times that at the normal time.

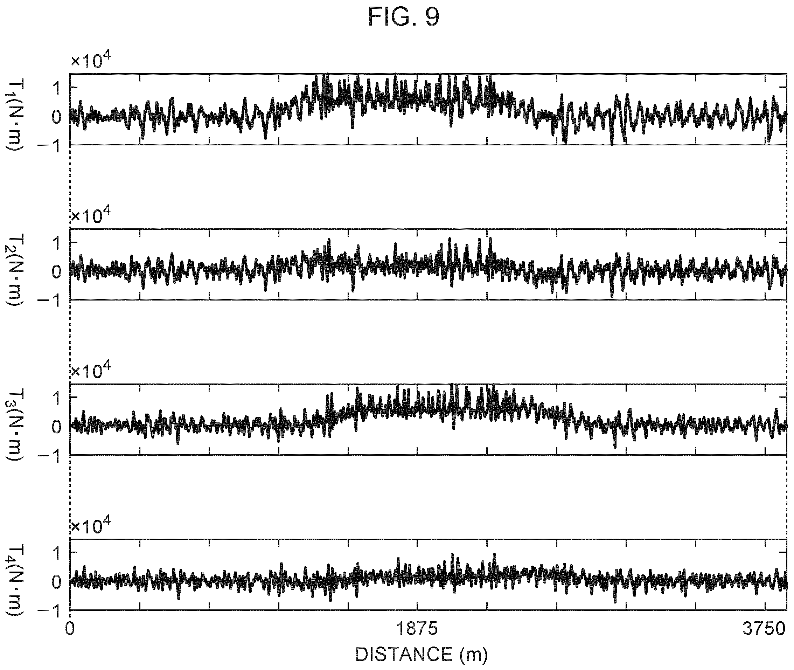

Fig. 9 is a view illustrating one example of a result of simulation regarding measured values of forward-and-backward direction forces $T_1$ to $T_4$ when the left-side yaw damper 24a of the front-side bogie 12a is assumed to be broken down. Fig. 9 illustrates the result when performing the simulation in which the damping coefficient of the left-side yaw damper 24a of the front-side bogie 12a is set to 0.5 times that at the normal time.

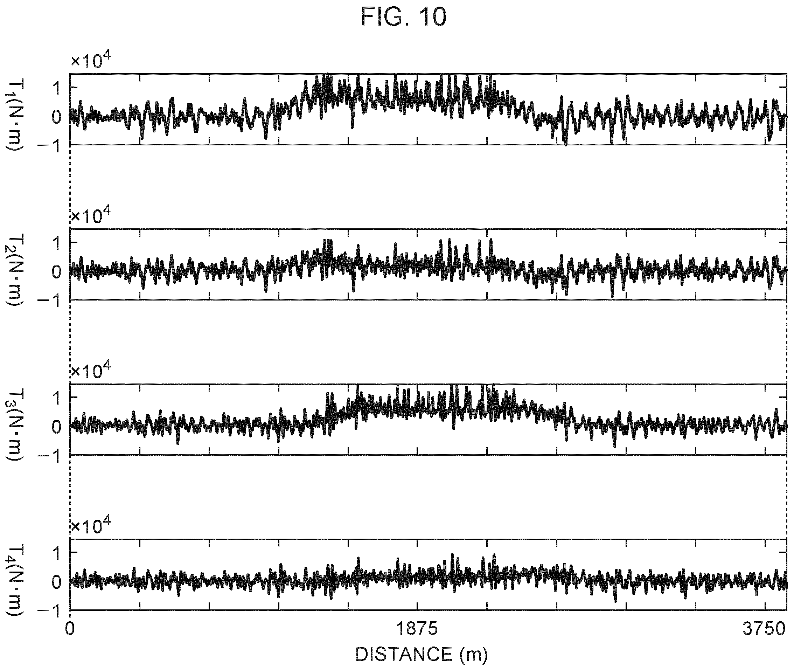

Fig. 10 is a view illustrating one example of a result of simulation regarding measured values of forward-and-backward direction forces $T_1$ to $T_4$ when the left-side yaw damper 24a of the rear-side bogie 12b is assumed to be broken down. Fig. 10 illustrates the result when performing the simulation in which the damping coefficient of the left-side yaw damper 24a of the rear-side bogie 12b is set to 0.5 times that at the normal time.

In Fig. 6 to Fig. 10, $T_1$ indicates the forward-and-backward direction force $T_1$ regarding the front-side wheel set 13a of the front-side bogie 12a. $T_2$ indicates the forward-and-backward direction force $T_2$ regarding the rear-side wheel set 13b of the front-side bogie 12a. $T_3$ indicates the forward-and-backward direction force $T_3$ regarding the front-side wheel set 13c of the rear-side bogie 12b. $T_4$ indicates the forward-and-backward direction force $T_4$ regarding the rear-side wheel set 13d of the rear-side bogie 12b.

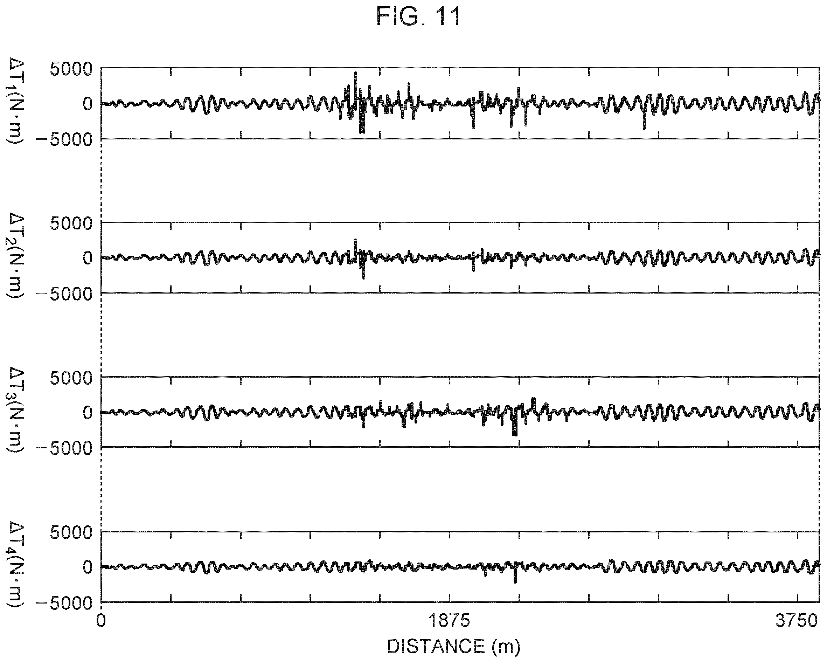

Fig. 11 is a view illustrating a difference between the result of simulation regarding the measured values of the forward-and-backward direction forces $T_1$ to $T_4$ when the lateral movement damper 23 of the front-side bogie 12a is assumed to be broken down (Fig. 7), and the result of simulation regarding the measured values of the forward-and-backward direction forces $T_1$ to $T_4$ when the railway vehicle is assumed to be normal (Fig. 6).

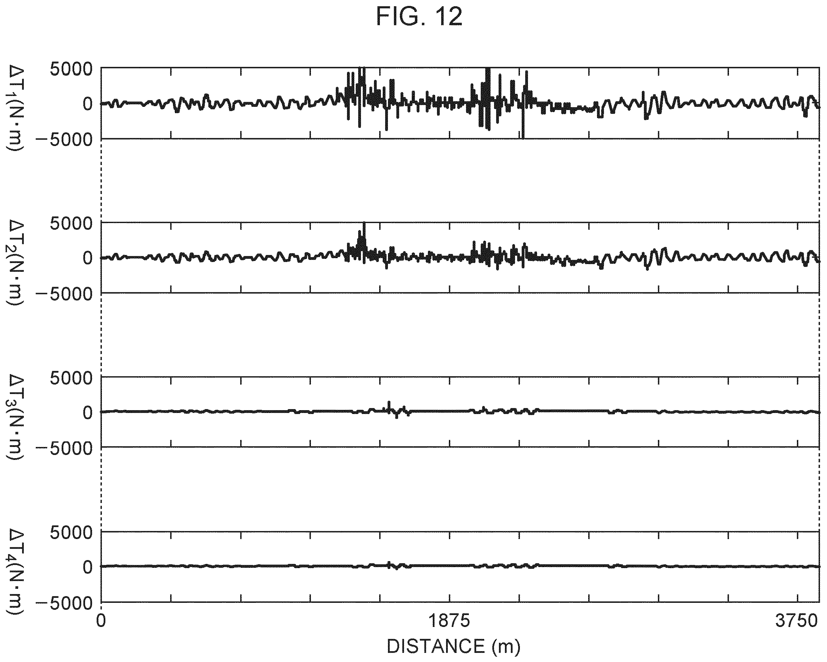

Fig. 12 is a view illustrating a difference between the result of simulation regarding the measured values of the forward-and-backward direction forces $T_1$ to $T_4$ when the left-side yaw damper 24a of the front-side bogie 12a is assumed to be broken down (Fig. 9), and the result of simulation regarding the measured values of the forward-and-backward direction forces $T_1$ to $T_4$ when the railway vehicle is assumed to be normal (Fig. 6).

In Fig. 11 and Fig. 12, $\Delta T_1$ indicates a difference in the forward-and-backward direction forces $T_1$ (at the same position) regarding the front-side wheel set 13a of the front-side bogie 12a. $\Delta T_2$ indicates a difference in the forward-and-backward direction forces $T_2$ (at the same position) regarding the rear-side wheel set 13b of the front-side bogie 12a. $\Delta T_3$ indicates a difference in the forward-and-backward direction forces $T_3$ (at the same position) regarding the front-side wheel set 13c of the rear-side bogie 12b. $\Delta T_4$ indicates a difference in the forward-and-backward direction forces $T_4$ (at the same position) regarding the rear-side wheel set 13d of the rear-side bogie 12b.

As illustrated in Fig. 11 and Fig. 12, it can be understood that if the lateral movement damper 23 and the yaw dampers 24a, 24b of the front-side bogie 12a are broken down, each of the forward-and-backward direction force $T_1$ regarding the front-side wheel set 13a of the front-side bogie 12a, and the forward-and-backward direction force $T_2$ regarding the rear-side wheel set 13b of the front-side bogie 12a, changes from the normal time by about 10% on a linear rail and about 40% on a curved rail.

As described above, the inspection unit 303 determines whether or not the inspection target member is normal, by determining whether or not the absolute value of difference between the inspection measured value and the reference measured value at the same position in the inspection zone is greater than the preset threshold value. This threshold value can be decided based on the results of simulation as described above or past measurement results, for example. For example, a value obtained by multiplying a standard deviation calculated from a variation in the reference measured value in the inspection zone by a constant, is set to the threshold value. Here, the constant may be decided by analyzing and verifying the past measurement results. Further, the threshold value may be set according to a similar method based on simulation results.

Further, the inspection zone may be set to an entire operation zone or a part of the operation zone of the railway vehicle being the inspection target. As illustrated in Fig. 11 and Fig. 12, the difference between the inspection measured value and the reference measured value becomes larger on the curved rail than on the linear rail. Accordingly, it is preferable to set that the inspection zone includes the curved rail. Further, it is preferable that a zone in which the railway vehicle travels at a velocity as constant as possible, is set to the inspection zone.

(Flowchart)

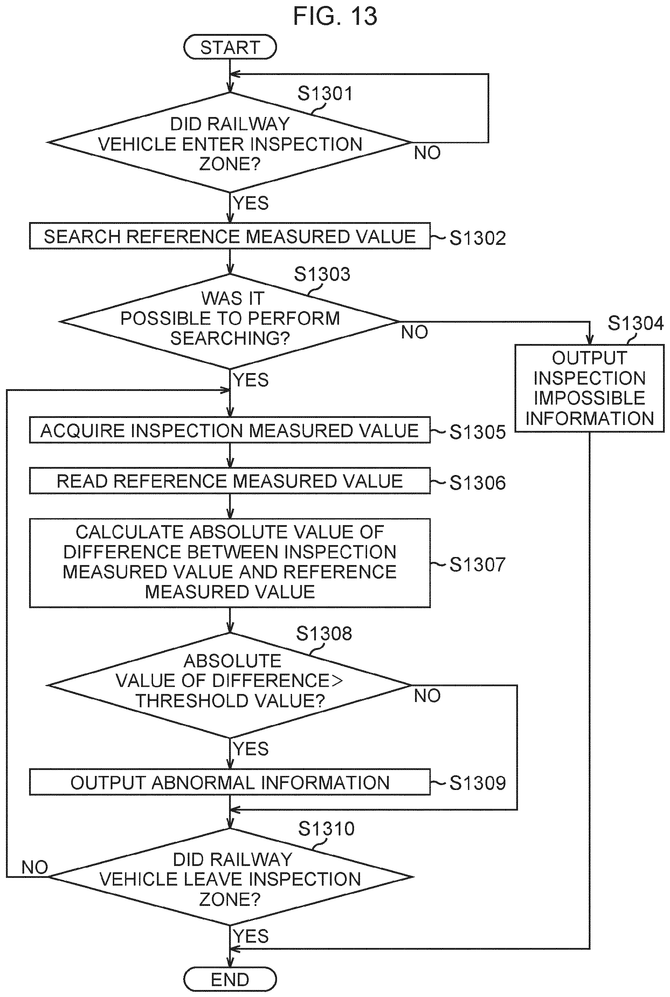

Next, one example of processing performed by the inspection apparatus 300 of the present reference example will be described while referring to a flowchart in Fig. 13.

In step S1301, the inspection apparatus 300 waits until when the railway vehicle being the inspection target enters the inspection zone. When the railway vehicle being the inspection target enters the inspection zone, the processing proceeds to step S1302. When the processing proceeds to step S1302, the determination part 303a searches, among the reference measured values at the respective positions in the inspection zone, reference measured values complying with the kind, the inspection zone, and the inspection velocity of the railway vehicle being the inspection target, from the storage unit 302.

Next, in step S1303, the determination part 303a determines whether or not it was possible to search, among the reference measured values at the respective positions in the inspection zone, the reference measured values complying with the kind, the inspection zone, and the inspection velocity of the railway vehicle being the inspection target, from the storage unit 302.

Among the reference measured values at the respective positions in the inspection zone stored in the storage unit 302, the reference measured values classified based on the same kind, the same inspection zone, and the same inspection velocity as the kind, the inspection zone, and the inspection velocity of the railway vehicle being the inspection target, are selected with first priority as the reference measured values complying with the kind, the inspection zone, and the inspection velocity of the railway vehicle being the inspection target.

When there are no such reference measured values, reference measured values, among the reference measured values at the respective positions in the inspection zone stored in the storage unit 302, which are classified based on the same kind and the same inspection zone of the railway vehicle being the inspection target, and an inspection velocity having a difference with respect to the inspection velocity of the railway vehicle being the inspection target, of a threshold value or less, are selected.

When, as a result of this determination, it is not possible to search the reference measured values complying with the kind, the inspection zone, and the inspection velocity of the railway vehicle being the inspection target, among the reference measured values at the respective positions in the inspection zone, from the storage unit 302, the processing proceeds to step S1304.

When the processing proceeds to step S1304, the output unit 304 outputs inspection impossible information indicating that the inspection cannot be performed in the inspection zone. Further, the processing according to the flowchart in Fig. 13 is terminated.

On the other hand, when, as a result of the determination in step S1303, it was possible to search the reference measured values complying with the kind, the inspection zone, and the inspection velocity of the railway vehicle being the inspection target, among the reference measured values at the respective positions in the inspection zone, from the storage unit 302, the processing proceeds to step S1305. When the processing proceeds to step S1305, the data acquisition unit 301 acquires an inspection measured value.

Next, in step S1306, the determination part 303a specifies a traveling position of the railway vehicle at the time of measurement of the inspection measured value acquired in step S1305. The determination part 303a reads the reference measured value corresponding to the specified traveling position of the railway vehicle, from the reference measured values at the respective positions in the inspection zone searched in step S1302.

Next, in step S1307, the determination part 303a calculates an absolute value of difference between the inspection measured value acquired in step S1305 and the reference measured value read in step S1306.

Next, in step S1308, the determination part 303a determines whether or not the absolute value of difference between the inspection measured value and the reference measured value calculated in step S1307 is greater than the preset threshold value. When, as a result of this determination, the absolute value of difference between the inspection measured value and the reference measured value is greater than the threshold value, the processing proceeds to step S1309. When the processing proceeds to step S1309, the output unit 304 outputs abnormal information indicating that the inspection target member is not normal. Subsequently, the processing proceeds to step S1310 to be described later.

On the other hand, when, as a result of the determination in step S1308, the absolute value of difference between the inspection measured value and the reference measured value is not greater than the threshold value, the processing omits step S1309 and proceeds to step S1310.

When the processing proceeds to step S1310, the inspection apparatus 300 determines whether or not the railway vehicle being the inspection target left the inspection zone. When, as a result of this determination, the railway vehicle being the inspection target has not left the inspection zone, the processing returns to step S1305. Subsequently, the processing from steps S1305 to S1310 is repeatedly executed until when the railway vehicle being the inspection target leaves the inspection zone. Further, when it is determined that the railway vehicle being the inspection target left the inspection zone in step S1310, the processing according to the flowchart in Fig. 13 is terminated.

(Summary)

As described above, in the present reference example, when the measured values of the forward-and-backward direction forces $T_1$ to $T_4$ measured beforehand in the normal railway vehicle (reference measured values) and the measured values of the forward-and-backward direction forces $T_1$ to $T_4$ measured in the railway vehicle being the inspection target (inspection measured values) are deviated, the inspection apparatus 300 determines that the inspection target member in the railway vehicle being the inspection target is not normal. At least one of the spring constant and the damping coefficient of the inspection target member exerts an influence on the forward-and-backward direction forces $T_1$ to $T_4$ in the motion equation describing the motion of the railway vehicle. Therefore, the forward-and-backward direction forces $T_1$ to $T_4$ become indices for evaluating whether or not at least one of the spring constant and the damping coefficient of the inspection target member is abnormal. By using such indices, it is determined whether or not at least one of the spring constant and the damping coefficient of the inspection target member is abnormal. Accordingly, it is possible to correctly determine whether or not the inspection target member is abnormal.

(Modified reference examples) <First modified reference example>

The present reference example has explained the case, as an example, in which an instantaneous value of the reference measured value and an instantaneous value of the inspection measured value are compared. However, it does not always have to design as above. For example, it is also possible to compare a moving average deviation of the reference measured value and a moving average deviation of the inspection measured value.

<Second modified reference example>

The present reference example has explained the case, as an example, in which every time it is determined whether or not the absolute value of difference between the inspection measured value and the reference measured value is greater than the threshold value, the information indicating that the inspection target member of the railway vehicle being the inspection target is not normal is output. However, it does not always have to design as above. For example, it is also possible that when the absolute value of difference between the inspection measured value and the reference measured value continuously exceeds the threshold value a predetermined number of times, the information indicating that the inspection target member of the railway vehicle being the inspection target is not normal is output. Further, it is also possible to determine whether or not an integrated value of the absolute value of difference between the inspection measured value and the reference measured value in the inspection zone is greater than the threshold value. In this case, the information indicating that the inspection target member of the railway vehicle being the inspection target is not normal may be output when the integrated value is greater than the threshold value. When it is designed as above, after the railway vehicle being the inspection target finishes the traveling in the inspection zone, the information indicating that the inspection target member of the railway vehicle being the inspection target is not normal is output. Further, it is also possible to combine the first modified reference example and the second modified reference example. For example, it is also possible that when an absolute value of difference between the moving average deviation of the reference measured value and the moving average deviation of the inspection measured value continuously exceeds the threshold value a predetermined number of times, the information indicating that the inspection target member of the railway vehicle being the inspection target is not normal is output.

<Third modified reference example>

Further, it is also possible to perform inspection only when the state of the track when obtaining the inspection measured value and the state of the track when obtaining the reference measured value are close to each other. For example, when the reference measured value is obtained, the alignment irregularity amount at each position in the inspection zone is calculated in a manner as described in Patent Literature 5. After that, when the inspection measured value is obtained, the alignment irregularity amount at each position in the inspection zone is calculated in a manner as described in Patent Literature 5. Further, when an absolute value of difference between the alignment irregularity amounts at the same position exceeds a preset threshold value, the inspection may be canceled because the state of the track when obtaining the inspection measured value and the state of the track when obtaining the reference measured value are not close to each other. Further, it is also possible to output information indicating that.

<<Second embodiment>>

Next, a second embodiment will be described. In the first reference example, the case where the measured values of the forward-and-backward direction forces $T_1$ to $T_4$ are compared as they are has been explained as an example. An influence of noise or the like with respect to the forward-and-backward direction forces $T_1$ to $T_4$ is smaller than that with respect to the acceleration and the like. However, it is more preferable to extract, from signal components of the measured values of the forward-and-backward direction forces $T_1$ to $T_4$, essential signal components included in the measured values of the forward-and-backward direction forces $T_1$ to $T_4$. Accordingly, in the present embodiment, a method realizing the above will be described. As described above, the present embodiment is different from the first reference example mainly in a point that processing of extracting the essential signal components is performed on the measured values of the forward-and-backward direction forces $T_1$ to $T_4$ and then the comparison is performed. Therefore, in the explanation of the present embodiment, the same reference numerals and symbols as those added to Fig. 1 to Fig. 13 are added to the same parts as those in the first reference example, or the like, and their detailed explanations will be omitted.

(Findings)

The present inventors devised a model in which an AR (Auto-regressive) model is corrected, as a model for extracting the essential signal components. Further, the present inventors came up with an idea to extract the essential signal components from measured values of forward-and-backward-direction forces by using this model. In the following explanation, the model devised by the present inventors is referred to as a corrected AR model. In contrast to this, the publicly-known AR model is simply referred to as an AR model. Hereinafter, there will be explained one example of the corrected AR model.

A value of time-series data y of a physical quantity at a time k ($1 \leq k \leq M$) is set to $y_k$. In the present embodiment, the physical quantity is the forward-and-backward direction force. M is a number indicating, as the time-series data y of the physical quantity, data until when is contained, and is previously set. In the following explanation, the time-series data of the physical quantity will be abbreviated to data y as necessary. The AR model approximating the value $y_k$ of the data y is as in (28) Equation below, for example. The AR model is, as indicated in (28) Equation, an equation expressing a predicted value $\hat{y}_k$ of the physical quantity at the time k ($m+1 \leq k \leq M$) in the data y by using an actual value $y_{k-1}$ of the physical quantity at a time k-1 ($1 \leq l \leq m$) prior to the time k in the data y and a coefficient $\alpha_l$ responsive to the actual value. Note that $\hat{y}_k$ is expressed by adding ^ above $y_k$ in (28) Equation.

[Mathematical equation 15]

$$\hat{y}_k = \sum_{l=1}^{m} \alpha_l \, y_{k-l}, \qquad m+1 \leq k \leq M \qquad\qquad \cdots \; (28)$$

In (28) Equation, $\alpha$ is a coefficient of the AR model. m is a number of the value of the data y to be used for approximating the value $y_k$ of the data y at the time k in the AR model, and is a number among values $y_{k-1}$ to $y_{k-m}$ of the data y at continuous times k-1 to k-m prior to the time k. m is an integer of less than M. As m, for example, 1500 can be used.

Subsequently, there is derived a conditional expression for approximating the predicted value $\hat{y}_k$ of the physical quantity at the time k by the AR model to the value $y_k$ by using a least square method. As the condition for approximating the predicted value $\hat{y}_k$ of the physical quantity at the time k by the AR model to the value $y_k$, it is possible to employ a condition that minimizes a square error between the predicted value $\hat{y}_k$ of the physical quantity at the time k by the AR model and the value $y_k$, for example. That is, the least square method is used in order to approximate the predicted value $\hat{y}_k$ of the physical quantity at the time k by the AR model to the value $y_k$. (29) Equation below is a conditional expression for minimizing the square error between the predicted value $\hat{y}_k$ of the physical quantity at the time k by the AR model and the value $y_k$.

[Mathematical equation 16]

$$\frac{\partial}{\partial \alpha_j} \sum_{k=m+1}^{M} \left| y_k - \sum_{l=1}^{m} \alpha_l \, y_{k-l} \right|^2$$

$$= 2 \sum_{k=m+1}^{M} \left\{ \left( y_k - \sum_{l=1}^{m} \alpha_l \, y_{k-l} \right) y_{k-j} \right\}$$

$$= 2 \left\{ \sum_{k=m+1}^{M} y_k \, y_{k-j} - \sum_{l=1}^{m} \alpha_l \sum_{k=m+1}^{M} y_{k-j} \, y_{k-l} \right\} = 0, \qquad 1 \leq j \leq m$$

$$\cdots \; (29)$$

The relation of (30) Equation below is established by (29) Equation.

[Mathematical equation 17]

$$\sum_{k=m+1}^{M} y_k \, y_{k-j} = \alpha_1 \sum_{k=m+1}^{M} y_{k-j} \, y_{k-1} + \alpha_2 \sum_{k=m+1}^{M} y_{k-j} \, y_{k-2}$$

$$+ \cdots + \alpha_m \sum_{k=m+1}^{M} y_{k-j} \, y_{k-m}, \qquad 1 \leq j \leq m \quad \cdots \; (30)$$

Further, (30) Equation is modified (expressed in matrix notation form), and thereby (31) Equation below is obtained.

[Mathematical equation 18]

$$R_{j0} = (R_{j1} \quad R_{j2} \quad \cdots R_{jm}) \begin{pmatrix} \alpha_1 \\ \alpha_2 \\ \vdots \\ \alpha_m \end{pmatrix}, \qquad 1 \leq j \leq m \qquad \cdots \quad (31)$$

$R_{jl}$ in (31) Equation is called autocorrelation of the data y, and is a value defined by (32) Equation below. |j-l| at this time is referred to as a time lag.
[Mathematical equation 19]

$$R_{jl} = \sum_{k=m+1}^{M} y_{k-j} \, y_{k-l}, \qquad 1 \leq j \leq m, \; 0 \leq l \leq m \qquad \cdots \quad (32)$$

Based on (31) Equation, (33) Equation below is considered. (33) Equation is an equation derived from a condition that minimizes the error between the predicted value $y^\wedge_k$ of the physical quantity at the time k by the AR model and the value $y_k$, of the physical quantity at the time k corresponding to the predicted value $y^\wedge_k$. (33) Equation is called a Yule-Walker equation. Further, (33) Equation is a linear equation in which a vector composed of coefficients of the AR model is set to a variable vector. A constant vector on the left side in (33) Equation is a vector whose component is the autocorrelation of the data y with a time lag of 1 to m. In the following explanation, the constant vector on the left side in (33) Equation is referred to as an autocorrelation vector as necessary. Further, a coefficient matrix on the right side in (33) Equation is a matrix whose component is the autocorrelation of the data y with a time lag of 0 to m-1. In the following explanation, the coefficient matrix on the right side in (33) Equation is referred to as an autocorrelation matrix as necessary.
[Mathematical equation 20]

$$\begin{pmatrix} R_{10} \\ R_{20} \\ \vdots \\ R_{m0} \end{pmatrix} = \begin{pmatrix} R_{11} & R_{12} & \cdots & R_{1m} \\ R_{21} & R_{22} & \cdots & R_{2m} \\ \vdots & \vdots & \ddots & \vdots \\ R_{m1} & R_{m2} & \cdots & R_{mm} \end{pmatrix} \begin{pmatrix} a_1 \\ a_2 \\ \vdots \\ a_m \end{pmatrix} \qquad \cdots \quad (33)$$

Further, the autocorrelation matrix on the right side in (33) Equation (a matrix of m×m composed of $P_{jl}$) is described as an autocorrelation matrix R, as in (34) Equation below.
[Mathematical equation 21]

$$R = \begin{pmatrix} R_{11} & R_{12} & \cdots & R_{1m} \\ R_{21} & R_{22} & \cdots & R_{2m} \\ \vdots & \vdots & & \vdots \\ R_{m1} & R_{m2} & \cdots & R_{mm} \end{pmatrix} \qquad \cdots \quad (34)$$

In general, when deriving the coefficient of the AR model, a method of solving (33) Equation regarding a coefficient $\alpha$ is used. In (33) Equation, the coefficient $\alpha$ is derived so as to make the predicted value $y^\wedge_k$ of the physical quantity at the time k derived by the AR model come close to the value $y_k$ of the physical quantity at the time k as much as possible. Therefore, frequency characteristics of the AR model include a large number of frequency components included in the value $y_k$ of the data y at each time.

Therefore, for example, when a lot of noises are included in the data y, there is a possibility that the difference in signals of the forward-and-backward direction forces $T_1$ to $T_4$ depending on whether or not the inspection target member is normal, cannot be securely extracted. Therefore, the present inventors focused on the autocorrelation matrix R to be multiplied by the coefficient $\alpha$ of the AR model and earnestly examined it. As a result of this, the present inventors found out that it is possible to rewrite the autocorrelation matrix R by using a part of eigenvalues of the autocorrelation matrix R so that the influence of noise included in the data y is reduced and the essential signal components are emphasized (SN ratio is increased).

There will be explained a concrete example of the above below.

The autocorrelation matrix R is subjected to singular value decomposition. Components of the autocorrelation matrix R are symmetric. Therefore, when the autocorrelation matrix R is subjected to singular value decomposition, the result becomes the product of an orthogonal matrix U, a diagonal matrix $\Sigma$, and a transposed matrix of the orthogonal matrix U, as in (35) Equation below.

[Mathematical equation 22]

$$R = U\Sigma U^{\mathsf{T}} \qquad \cdots \quad (35)$$

The diagonal matrix $\Sigma$ in (35) Equation is a matrix whose diagonal component is the eigenvalues of the autocorrelation matrix R as indicated in (36) Equation below. The diagonal component of the diagonal matrix $\Sigma$ is set to $\sigma_{11}, \sigma_{22}, \cdots, \sigma_{mm}$. Further, the orthogonal matrix U is a matrix in which each column component vector is an eigenvector of the autocorrelation matrix R. The column component vector of the orthogonal matrix U is set to $u_1, u_2, \cdots, u_m$. There is a correspondence relation in which the eigenvalue of the autocorrelation matrix R responsive to an eigenvector $u_j$ is $\sigma_{jj}$. The eigenvalue of the autocorrelation matrix R is a variable reflecting the strength of each frequency component included in a time waveform of the predicted value $y^\wedge_k$ of the physical quantity at the time k by the AR model.

[Mathematical equation 23]

$$\Sigma = \begin{pmatrix} \sigma_{11} & 0 & 0 \\ 0 & \ddots & 0 \\ 0 & 0 & \sigma_{mm} \end{pmatrix}, \ U = (u_1 \ u_2 \ \cdots \ u_m) \qquad \cdots \quad (36)$$

The values of $\sigma_{11}, \sigma_{22}, \cdots, \sigma_{mm}$ being the diagonal components of the diagonal matrix $\Sigma$ obtained by the result of the singular value decomposition of the autocorrelation matrix R are set in descending order in order to simplify the illustration of the mathematical equation. A matrix R' is defined as in (37) Equation below by using, out of the eigenvalues of the autocorrelation matrix R illustrated in (36) Equation, s pieces of the eigenvalues. s is a number that is 1 or more and less than m. For example, the matrix R' is a matrix resulting from approximating the autocorrelation matrix R by using s pieces of the eigenvalues out of the eigenvalues of the autocorrelation matrix R. If the eigenvalue with a small value is selected, it becomes difficult to extract the essential signal components of the data y. In the present embodiment, the data y is data of the forward-and-backward direction forces $T_1$ to $T_4$. In the present embodiment, the difference in the forward-and-backward direction forces $T_1$ to $T_4$ that occurs depending on whether or not the inspection target member is normal, is detected, similarly to the first reference example. In this case, the essential signal components are signal components of the forward-and-backward direction forces $T_1$ to $T_4$ that change depending on whether or not the inspection target member is normal. Further, if the number of eigenvalues to be selected is excessively small, the difference in the data y is unlikely to occur. On the contrary, if the number of eigenvalues to be selected is excessively large, this leads to selection of the eigenvalue having a small value, resulting in that the essential signal components of the data y become difficult to be extracted, as described above. Therefore, in the present embodiment, an eigenvalue having a value which is equal to or more than an average value of m pieces of eigenvalues, is selected. When selecting the s pieces of eigenvalues, it is possible to visually select s pieces of large eigenvalues, or the minimum value of the employed eigenvalue may be larger than the maximum value of the discarded eigenvalue by 10 times or more. Therefore, in the present embodiment, s is the number of eigenvalue having a value which is equal to or more than the average value of m pieces of eigenvalues. However, the eigenvalue to be selected is not limited to a value as described above as long as the essential signal components of the data y are set to be easily extracted.

[Mathematical equation 24]

$$R' = U_s \Sigma_s U_s^{\mathsf{T}} \qquad \cdots \quad (37)$$

A matrix $U_s$ in (37) Equation is a matrix of m $\times$ s composed of s pieces of the column component vectors, which are chosen from the left of the orthogonal matrix U of (35) Equation (eigenvectors corresponding to the eigenvalues to be used). That is, the matrix $U_s$ is a submatrix composed of the left components of m $\times$ s cut out from the orthogonal matrix U.

Further, $U_s^T$ in (37) Equation is a transposed matrix of $U_s$. $U_s^T$ is a matrix of s×m composed of s pieces of row component vectors, which are chosen from the top of the matrix $U^T$ in (35) Equation. The matrix $\Sigma_s$ in (37) Equation is a matrix of s×s composed of s pieces of columns, which are chosen from the left, and s pieces of rows, which are chosen from the top, of the diagonal matrix $\Sigma$ in (35) Equation. That is, the matrix $\Sigma_s$ is a submatrix composed of the top and left components of s×s cut out from the diagonal matrix $\Sigma$.

When the matrix $\Sigma_s$ and the matrix $U_s$ are expressed by the matrix elements, (38) Equation below is obtained.
[Mathematical equation 25]

$$\Sigma_s = \begin{pmatrix} \sigma_{11} & 0 & 0 \\ 0 & \ddots & 0 \\ 0 & 0 & \sigma_{ss} \end{pmatrix}, \ U_s = \begin{pmatrix} u_1 & u_2 & \cdots & u_s \end{pmatrix} \qquad \cdots \ (38)$$

By using the matrix R' in place of the autocorrelation matrix R, the relational expression of (33) Equation is rewritten into (39) Equation below.
[Mathematical equation 26]

$$\begin{pmatrix} R_{10} \\ R_{20} \\ \vdots \\ R_{m0} \end{pmatrix} = U_s \Sigma_s U_s^T \begin{pmatrix} \alpha_1 \\ \alpha_2 \\ \vdots \\ \alpha_m \end{pmatrix} \qquad \cdots \ (39)$$

(39) Equation is modified, and thereby (40) Equation below is obtained as the equation deriving the coefficient $\alpha$. The model that calculates the predicted value $y\hat{}_k$ of the physical quantity at the time k from (28) Equation while using the coefficient $\alpha$ derived by (40) Equation is the "corrected AR model".
[Mathematical equation 27]

$$\begin{pmatrix} \alpha_1 \\ \alpha_2 \\ \vdots \\ \alpha_m \end{pmatrix} = U_s \Sigma_s^{-1} U_s^T \begin{pmatrix} R_{10} \\ R_{20} \\ \vdots \\ R_{m0} \end{pmatrix} \qquad \cdots \ (40)$$

The case where the values of $\sigma_{11}, \sigma_{22}, \cdots, \sigma_{mm}$ being the diagonal components of the diagonal matrix $\Sigma$ are set in descending order has been explained here as an example. However, it is not necessary to set the diagonal components of the diagonal matrix $\Sigma$ in descending order during a process of calculating the coefficient $\alpha$. In that case, the matrix $U_s$ is not the submatrix composed of the left components of m×s cut out from the orthogonal matrix U. The matrix $U_s$ becomes a submatrix composed of the cut out column component vectors corresponding to the eigenvalues to be used (the eigenvectors). Further, the matrix $\Sigma_s$ is not the submatrix composed of the top and left components of s×s cut out from the diagonal matrix $\Sigma$. The matrix $\Sigma_s$ becomes a submatrix to be cut out so as to make the eigenvalues used for deciding the coefficient of the corrected AR model become the diagonal components.

(40) Equation is an equation to be used for deciding the coefficient of the corrected AR model. The matrix $U_s$ in (40) Equation is a matrix (a third matrix) in which the eigenvectors corresponding to the eigenvalues used for deciding the coefficient of the corrected AR model are set to the column component vectors, which is the submatrix of the orthogonal matrix U obtained by the singular value decomposition of the autocorrelation matrix R. Further, the matrix $\Sigma_s$ in (40) Equation is a matrix (a second matrix) in which the eigenvalues used for deciding the coefficient of the corrected AR model are set to the diagonal components, which is the submatrix of the diagonal matrix obtained by the singular value decomposition of the autocorrelation matrix R. The matrix $U_s \Sigma_s U_s^T$ in (40) Equation is a matrix (a first matrix) derived from the matrix $\Sigma_s$ and the matrix $U_s$.

The right side of (40) Equation is calculated, and thereby the coefficient $\alpha$ of the corrected AR model is derived.

One example of the method of deriving the coefficient $\alpha$ of the corrected AR model has been explained above. Here, as the method of deriving the coefficient of the AR model to be the base of the corrected AR model, the method of using the least square method for the predicted value $y^{\wedge}_k$ of the physical quantity at the time k was set in order to make the method understandable intuitively. However, there has been generally known a method of defining the AR model by using the concept of a stochastic process and deriving its coefficient. In that case, the autocorrelation is expressed by autocorrelation of the stochastic process (a population). This autocorrelation of the stochastic process is expressed as a function of a time lag. Thus, the autocorrelation of the data y in the present embodiment may be replaced with a value calculated by another calculating formula as long as it approximates the autocorrelation of the stochastic process. For example, $R_{22}$ to $R_{mm}$ are autocorrelation with a time lag of 0 (zero), but they may be replaced with $R_{11}$.

An inspection apparatus 300 of the present embodiment has been made based on the above findings.

(Configuration of inspection apparatus 300)

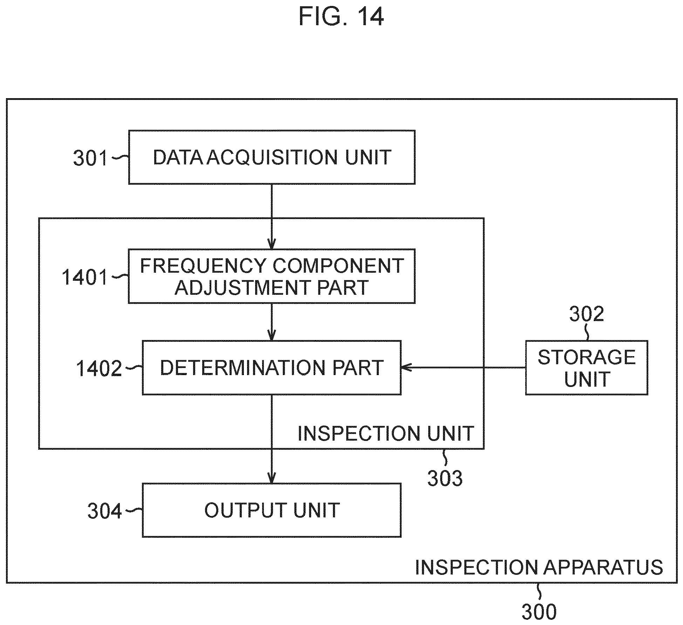

Fig. 14 is a view illustrating one example of a functional configuration of the inspection apparatus 300. The inspection apparatus 300 includes, as its functions, a data acquisition unit 301, a storage unit 302, an inspection unit 303, and an output unit 304.

[Data acquisition unit 301]

The data acquisition unit 301 acquires input data including the measured values of the forward-and-backward-direction forces $T_1$ to $T_4$ measured in the railway vehicle being the inspection target, at a predetermined sampling period. Accordingly, time-series data of the measured values of the forward-and-backward-direction forces $T_1$ to $T_4$ measured in the railway vehicle being the inspection target is obtained. The method of measuring the forward-and-backward-direction force is as described previously.

There is a possibility that the time-series data of the measured value of the forward-and-backward direction force includes a noise component other than a component (essential component) that contributes to determine whether or not the railway vehicle is normal. Accordingly, it is preferable that the noise component of the measured value of the forward-and-backward direction force is removed to extract the essential frequency component of the forward-and-backward direction force. Although it is possible to remove the noise component of the measured value of the forward-and-backward direction force by using a low-pass filter or a band-pass filter, it is not easy to set a cutoff frequency.

Accordingly, the present inventors came up with an idea to extract the essential signal component from the time-series data of the measured value of the forward-and-backward direction force by using the above-described corrected AR model.

[Storage unit 302]

The storage unit 302 previously stores corrected reference measured values. The corrected reference measured values are obtained by correcting the reference measured values using the corrected AR model. As described in the first reference example, the reference measured values are the measured values of the forward-and-backward direction forces $T_1$ to $T_4$ which are measured beforehand in the normal railway vehicle by making the normal railway vehicle travel in the inspection zone. The normal railway vehicle means the same one as described in the first reference example.

The corrected reference measured value is derived as follows by using the value $y_k$ of the data y of the measured value of the forward-and-backward-direction force at the time k.

First, based on the data y of the measured value of the forward-and-backward-direction force and preset numbers M, m, the autocorrelation matrix R is generated by using (32) Equation and (34) Equation.

Next, the autocorrelation matrix R is subjected to singular value decomposition, to thereby derive the orthogonal matrix U and the diagonal matrix $\Sigma$ of (35) Equation, and the eigenvalues $\sigma_{11}$ to $\sigma_{mm}$ of the autocorrelation matrix R are derived from the diagonal matrix $\Sigma$.

Next, among the plural eigenvalues $\sigma_{11}$ to $\sigma_{mm}$ of the autocorrelation matrix R, s pieces of the eigenvalues $\sigma_{11}$ to $\sigma_{ss}$ each having a value which is equal to or more than an average value of the plural eigenvalues, are selected as the eigenvalues of the autocorrelation matrix R to be used for deriving the coefficient $\alpha$ of the corrected AR model.

Next, based on the data y of the measured value of the forward-and-backward-direction force, the eigenvalues $\sigma_{11}$ to $\sigma_{ss}$, and the orthogonal matrix U obtained by the singular value decomposition of the autocorrelation matrix R, the coefficient $\alpha$ of the corrected AR model is decided by using (40) Equation.

Subsequently, based on the coefficient $\alpha$ of the corrected AR model and the data y of the measured value of the forward-and-backward-direction force, the predicted value $y^{\wedge}_k$ of the data y of the measured value of the forward-and-backward-direction force at the time k is derived through (28) Equation. In a manner as described above, the data y of the measured value of the forward-and-backward direction force is corrected.

The storage unit 302 previously stores the reference measured value corrected as above (the predicted value $y^\wedge_k$ of the data y of the measured value of the forward-and-backward-direction force at the time k) as the corrected reference measured value. The corrected reference measured value is stored in the storage unit 302 by being classified for each of the kind, the inspection zone, and the inspection velocity of the railway vehicle. The method of classification can be performed by replacing the reference measured value with the corrected reference measured value in the explanation of [storage unit 302] in the first reference example, for example. Therefore, detailed explanation of the method of classification of the corrected reference measured value will be omitted here.

[Inspection unit 303]

The inspection unit 303 includes, as its functions, a frequency component adjustment part 1401 and a determination part 1402.

<Frequency component adjustment part 1401>

The frequency component adjustment part 1401 uses the corrected AR model to derive the predicted value $y^\wedge_k$ of the data y of the measured value of the forward-and-backward-direction force at the time k obtained from the railway vehicle being the inspection target. In the following explanation, the predicted value $y^\wedge_k$ of the data y of the measured value of the forward-and-backward-direction force at the time k obtained from the railway vehicle being the inspection target is referred to as a corrected inspection measured value according to need.

<Determination part 1402>

The determination part 1402 can be realized by replacing the reference measured value with the corrected reference measured value and replacing the inspection measured value with the corrected inspection measured value in the explanation of <determination part 303a> in the first reference example. Therefore, detailed explanation of the determination part 1402 will be omitted here.

[Output unit 304]

The output unit 304 has the same function as the output unit 304 of the first reference example. Therefore, detailed explanation of the output unit 304 will be omitted here.

(Flowchart)

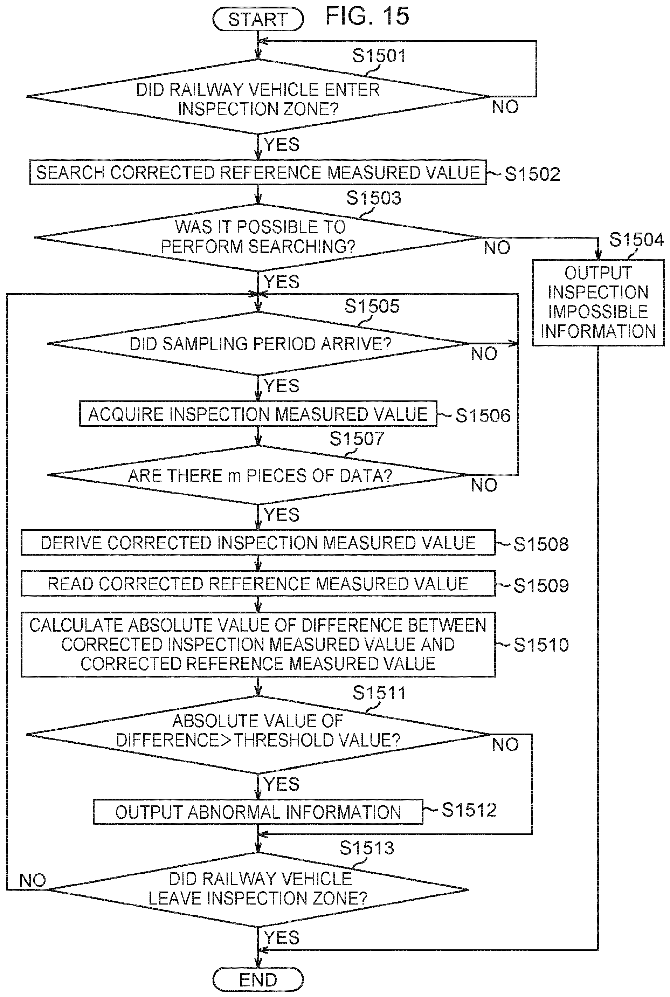

Next, one example of processing performed by the inspection apparatus 300 of the present embodiment will be described while referring to a flowchart in Fig. 15.
In step S1501, the inspection apparatus 300 waits until when the railway vehicle being the inspection target enters the inspection zone. When the railway vehicle being the inspection target enters the inspection zone, the processing proceeds to step S1502. When the processing proceeds to step S1502, the determination part 1402 searches, among the corrected reference measured values at respective positions in the inspection zone, corrected reference measured values complying with the kind, the inspection zone, and the inspection velocity of the railway vehicle being the inspection target, from the storage unit 302. The searching method in step S1502 can be realized by replacing the reference measured value with the corrected reference measured value in the searching method in step S1303. Therefore, detailed explanation of the searching method in step S1502 will be omitted here.
When, as a result of this determination, it is not possible to search the corrected reference measured values complying with the kind, the inspection zone, and the inspection velocity of the railway vehicle being the inspection target, among the corrected reference measured values at the respective positions in the inspection zone, from the storage unit 302, the processing proceeds to step S1504.
When the processing proceeds to step S1504, the output unit 304 outputs inspection impossible information indicating that the inspection cannot be performed in the inspection zone. Further, the processing according to the flowchart in Fig. 15 is terminated.
On the other hand, when, as a result of the determination in step S1503, it was possible to search the corrected reference measured values complying with the kind, the inspection zone, and the inspection velocity of the railway vehicle being the inspection target, among the corrected reference measured values at the respective positions in the inspection zone, from the storage unit 302, the processing proceeds to step S1505. When the processing proceeds to step S1505, the inspection apparatus 300 waits until when (a start time of) the predetermined sampling period arrives. When (the start time of) the predetermined sampling period arrives, the processing proceeds to step S1506. When the processing proceeds to step S1506, the data acquisition unit 301 acquires an inspection measured value at the current sampling period.

Next, in step S1507, the inspection apparatus 300 determines whether or not the number of inspection measured values is m (1500, for example) or more. When, as a result of this determination, the number of inspection measured values is not m or more, pieces of data for deriving the coefficient $\alpha$ of the corrected AR model are not gathered, so that the processing returns to step S1505. Subsequently, processing for acquiring an inspection measured value at the next sampling period is performed.

When, in step S1507, it is determined that the number of inspection measured values is m or more, the processing proceeds to step S1508. When the processing proceeds to step S1508, the frequency component adjustment part 1401 generates the autocorrelation matrix R based on the data y of m pieces of inspection measured values (refer to (32) Equation and (34) Equation). The frequency component adjustment part 1401 performs singular value decomposition on the autocorrelation matrix R, to thereby derive the orthogonal matrix U and the diagonal matrix $\Sigma$ (refer to (35) Equation). The frequency component adjustment part 1401 derives the eigenvalues $\sigma_{11}$ to $\sigma_{mm}$ of the autocorrelation matrix R from the diagonal matrix $\Sigma$, and selects the largest eigenvalue $\sigma_{11}$. The frequency component adjustment part 1401 decides the coefficient $\alpha$ of the corrected AR model based on the data y of the inspection measured value, the eigenvalue $\sigma_{11}$, and the orthogonal matrix U obtained by the singular value decomposition of the autocorrelation matrix R (refer to (40) Equation). The frequency component adjustment part 1401 derives the predicted value $y\hat{}_k$ of the data y of the inspection measured value at the current sampling period (time k) as the corrected inspection measured value, based on the coefficient $\alpha$ of the corrected AR model and (an actual value of) the data y of the inspection measured value (refer to (28) Equation).

Next, in step S1509, the determination part 1402 specifies a traveling position of the railway vehicle at the time corresponding to the sampling period at which it is determined that the number of inspection measured values is m or more in step S1507. The determination part 1402 reads the corrected reference measured value corresponding to the specified traveling position of the railway vehicle, from the corrected reference measured values at the respective positions in the inspection zone searched in step S1502.

Next, in step S1510, the determination part 1402 calculates an absolute value of difference between the corrected inspection measured value derived in step S1508 and the corrected reference measured value read in step S1509.

Next, in step S1511, the determination part 1402 determines whether or not the absolute value of difference between the corrected inspection measured value and the corrected reference measured value calculated in step S1507 is greater than a preset threshold value. When, as a result of this determination, the absolute value of difference between the corrected inspection measured value and the corrected reference measured value is greater than the threshold value, the processing proceeds to step S1512. When the processing proceeds to step S1512, the output unit 304 outputs abnormal information indicating that the inspection target member is not normal. Subsequently, the processing proceeds to step S1513 to be described later.

On the other hand, when, as a result of the determination in step S1511, the absolute value of difference between the corrected inspection measured value and the corrected reference measured value is not greater than the threshold value, the processing omits step S1512 and proceeds to step S1513.

When the processing proceeds to step S1513, the inspection apparatus 300 determines whether or not the railway vehicle being the inspection target left the inspection zone. When, as a result of this determination, the railway vehicle being the inspection target has not left the inspection zone, the processing returns to step S1505. Subsequently, the processing from steps S1505 to S1513 is repeatedly executed until when the railway vehicle being the inspection target leaves the inspection zone. Further, when it is determined that the railway vehicle being the inspection target left the inspection zone in step S1513, the processing according to the flowchart in Fig. 15 is terminated.

(Summary)

As described above, in the present embodiment, the inspection apparatus 300 generates the autocorrelation matrix R from the data y of the measured value of the forward-and-backward direction force. The inspection apparatus 300 uses, among the eigenvalues obtained by making the autocorrelation matrix R to be subjected to singular value decomposition, s pieces of eigenvalues each having a value being equal to or more than the average value of the obtained eigenvalues, to thereby decide the coefficient $\alpha$ of the corrected AR model approximating the data y of the measured value of the forward-and-backward direction force. Therefore, it is possible to decide the coefficient $\alpha$ so as to be able to emphasize, among the signal components included in the data y of the measured value of the forward-and-backward direction force, the signal component that changes depending on whether or not the inspection target member is normal. The inspection apparatus 300 calculates the predicted value $y\hat{}_k$ of the forward-and-backward-direction force at the time k by giving the data y of the measured value of the forward-and-backward-direction force at the time k-1 ($1 \leqq l \leqq m$), which is prior to the time k, to the corrected AR model whose coefficient $\alpha$ is determined in this manner. Accordingly, it is possible to extract the essential signal component from the data y of the measured value of the forward-and-backward direction force without estimating a cutoff frequency beforehand. Therefore, it is possible to more correctly determine whether or not the inspection target member is normal.

As described above, it is preferable to use the method of the present embodiment since it becomes unnecessary to estimate the cutoff frequency beforehand. However, it does not always have to design as above. For example, a frequency band of the signal component that changes depending on whether or not the inspection target member is normal, among the signal components included in the data y of the measured value of the forward-and-backward direction force is specified. A filter allowing the signal component in the frequency band specified as above to pass therethrough is used. The filter is one of a high-pass filter, a low-pass filter, and a band-pass filter, or a combination of two or more of them.

Further, also in the present embodiment, the various modified reference examples explained in the first reference example can be employed.

<<Third embodiment>>

Next, a third embodiment will be described. In the first reference example and second embodiment, the case where the magnitudes of the measured values of the forward-and-backward direction forces $T_1$ to $T_4$ at the respective times are compared has been explained as an example. In contrast to this, the present embodiment will be explained by citing a case, as an example, where it is determined whether or not the inspection target member of the railway vehicle being the inspection target is normal, by using frequency characteristics of the forward-and-backward direction forces $T_1$ to $T_4$. As described above, the present embodiment is different from the first reference example and second embodiment mainly in a point that the frequency characteristics of the forward-and-backward direction forces $T_1$ to $T_4$ are used instead of the instantaneous values of the forward-and-backward direction forces $T_1$ to $T_4$. Therefore, in the explanation of the present embodiment, the same reference numerals and symbols as those added to Fig. 1 to Fig. 15 are added to the same parts as those in the first reference example and second embodiment, or the like, and their detailed explanations will be omitted.

As described in the second embodiment, by using the corrected AR model, it is possible to emphasize the signal component which changes depending on whether or not the inspection target member is normal, among the signal components included in the data y of the measured value of the forward-and-backward direction force. Accordingly, the present embodiment will be explained by citing a case, as an example, where a frequency characteristic of the corrected AR model explained in the second embodiment is derived.

One example of a method of deriving the frequency characteristic of the corrected AR model will be described.

When using a property that a prediction error $x_k$ of the predicted value $y^\wedge_k$ of the measured data given by (28) Equation becomes a white noise, the corrected AR model can be regarded as a linear time-varying system in which the prediction error $x_k$ being the white noise is input and an actual measured value $y_k$ of data is output. Therefore, an equation of calculating the frequency characteristic can be derived in the following procedure. In the explanation below, the corrected AR model which is regarded as the linear time-varying model, is simply referred to as a system according to need. The prediction error $x_k$ is expressed by (41) Equation below.

[Mathematical equation 28]

$$y_k - \sum_{l=1}^{m} \alpha_l \, y_{k-l} = x_k \qquad \cdots (41)$$

When z-transform is performed on both sides of (41) Equation, (42) Equation below is obtained.

[Mathematical equation 29]

$$\left(1 - \sum_{l=1}^{m} \alpha_l \, z^{-l}\right) Y(z) = X(z) \qquad \cdots (42)$$

From (42) Equation, a transfer function H(z) being a z-transform of an impulse response of the system is derived as in (43) Equation below.

[Mathematical equation 30]

$$H(z) = \frac{Y(z)}{X(z)}$$

$$= \frac{1}{1 - \sum_{l=1}^{m} \alpha_l e^{-1}} \qquad \cdots \ (43)$$

The frequency characteristic of the system appears as a change between an amplitude and a phase of an output with respect to an input of sine wave, and is derived by Fourier transform of the impulse response. In other words, the transfer function H(z) when z rotates on a unit circle of a complex plane, becomes the frequency characteristic. Here, it is considered that z in (43) Equation is placed as in (44) Equation below.

[Mathematical equation 31]

$$Z = e^{j\omega T} \qquad \cdots \ (44)$$

Here, j is an imaginary unit, $\omega$ is an angular frequency, and T is a sampling period.

In that case, an amplitude characteristic of H(z) (the frequency characteristic of the system) can be expressed as in (45) Equation below. It is set that $\omega$T in (45) Equation changes in a range of 0 to $2\pi$.

[Mathematical equation 32]

$$\left| H(e^{j\omega T}) \right| = \frac{1}{\left| 1 - \sum_{l=1}^{m} \alpha_l e^{-jl\omega T} \right|} \qquad \cdots \ (45)$$

(Configuration of inspection apparatus 300)

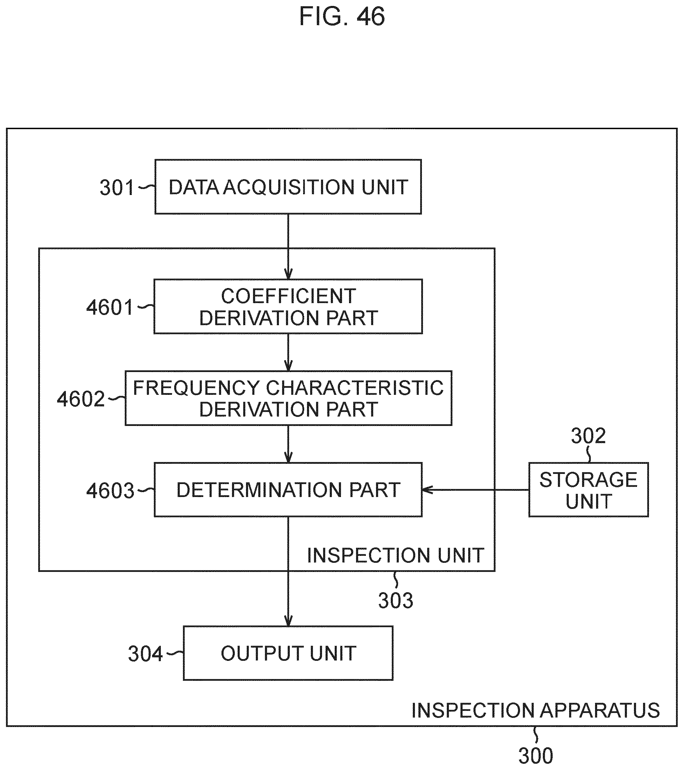

Fig. 46 is a view illustrating one example of a functional configuration of the inspection apparatus 300.

In Fig. 46, the inspection apparatus 300 includes, as its functions, a data acquisition unit 301, a storage unit 302, an inspection unit 303, and an output unit 304.

[Data acquisition unit 301]

The data acquisition unit 301 acquires input data including the measured values of the forward-and-backward-direction forces $T_1$ to $T_4$ measured in the railway vehicle being the inspection target, at a predetermined sampling period. Accordingly, time-series data of the measured values of the forward-and-backward-direction forces $T_1$ to $T_4$ measured in the railway vehicle being the inspection target is acquired. The method of measuring the forward-and-backward-direction force is as described previously.

[Storage unit 302]

The storage unit 302 previously stores frequency characteristics H1 to H4 of the corrected AR model in the normal railway vehicle at respective positions in the inspection zone. The normal railway vehicle means the same one as described in the first reference example.

From the time-series data of the measured values of the forward-and-backward-direction forces $T_1$ to $T_4$, the coefficient $\alpha$ of the corrected AR model is decided by using (40) Equation. The frequency characteristic of the corrected AR model is derived by using (45) Equation based on the coefficient $\alpha$ of the corrected AR model.

As will be described later, in the present embodiment, the frequency characteristics H1 to H4 of the corrected AR model of the railway vehicle being the inspection target and the frequency characteristics H1 to H4 of the corrected AR model of the normal railway vehicle are compared at the respective positions in the inspection zone. In the following explanation, the frequency characteristics H1 to H4 of the corrected AR model of the normal railway vehicle are referred to as reference frequency characteristics H1 to H4 according to need. The frequency characteristics H1 to H4 of the corrected AR model of the railway vehicle being the inspection target are referred to as inspection frequency characteristics H1 to H4 according to need. The inspection zone indicates a zone, in a traveling zone of the railway vehicle, in which the comparison between the inspection frequency characteristics H1 to H4 and the reference frequency characteristics H1 to H4 is performed.

Each position in the inspection zone can be obtained from the traveling position of the railway vehicle when deriving the corrected AR model of the normal railway vehicle. The traveling position of the railway vehicle can be obtained by detecting a position of the railway vehicle at each time by using the GPS (Global Positioning System), for example. Further, the traveling position of the railway vehicle may also be derived from an integrated value of velocity of the railway vehicle at each time, or the like.

As described above, in the present embodiment, the inspection frequency characteristics H1 to H4 and the reference frequency characteristics H1 to H4 are compared at the respective positions in the inspection zone. For this reason, it is preferable that the reference frequency characteristics H1 to H4 whose condition when obtaining them is as close as possible to the condition when obtaining the inspection frequency characteristics H1 to H4, are compared with the inspection frequency characteristics H1 to H4. Accordingly, in the present embodiment, the reference frequency characteristics H1 to H4 at the respective positions in the inspection zone are classified for each of the kind, the inspection zone, and the inspection velocity of the railway vehicle, to be stored in the storage unit 302. Such classification can be realized by replacing the reference measured values with the reference frequency characteristics H1 to H4 in the explanation of [storage unit 302] in the first reference example. Therefore, detailed explanation of the method of classification of the reference frequency characteristics H1 to H4 will be omitted.

[Inspection unit 303]

The inspection unit 303 includes, as its functions, a coefficient derivation part 1601, a frequency characteristic derivation part 1602, and a determination part 1603.

<Coefficient derivation part 1601>

The coefficient derivation part 1601 derives a coefficient $\alpha$ of the corrected AR model. The coefficient $\alpha$ of the corrected AR model is one described in the second embodiment.

The coefficient derivation part 1601 performs the following processing by using the data y of the measured values of the forward-and-backward direction forces $T_1$ to $T_4$ measured in the railway vehicle being the inspection target, every time the sampling period arrives.

First, based on the data y of the measured values of the forward-and-backward-direction forces $T_1$ to $T_4$ measured in the railway vehicle being the inspection target and preset numbers M, m, the coefficient derivation part 1601 generates the autocorrelation matrix R by using (32) Equation and (34) Equation.

Next, the coefficient derivation part 1601 performs singular value decomposition on the autocorrelation matrix R to derive the orthogonal matrix U and the diagonal matrix $\Sigma$ of (35) Equation, and derives the eigenvalues $\sigma_{11}$ to $\sigma_{mm}$ of the autocorrelation matrix R from the diagonal matrix $\Sigma$.

Next, the coefficient derivation part 1601 selects, among the plural eigenvalues $\sigma_{11}$ to $\sigma_{mm}$ of the autocorrelation matrix R, s pieces of the eigenvalues $\sigma_{11}$ to $\sigma_{ss}$ as the eigenvalues of the autocorrelation matrix R to be used for deriving the coefficient $\alpha$ of the corrected AR model.

Next, based on the data y of the measured values of the forward-and-backward-direction forces $T_1$ to $T_4$, the eigenvalues $\sigma_{11}$ to $\sigma_{ss}$, and the orthogonal matrix U obtained by the singular value decomposition of the autocorrelation matrix R, the coefficient derivation part 1601 decides the coefficient $\alpha$ of the corrected AR model by using (40) Equation. Note that the coefficient $\alpha$ of the corrected AR model is individually derived for each of the data y of the measured values of the forward-and-backward direction forces $T_1$ to $T_4$ measured in the railway vehicle being the inspection target.

<Frequency characteristic derivation part 1602>

The frequency characteristic derivation part 1602 uses (45) Equation to derive the inspection frequency characteristics H1 to H4 based on the coefficient $\alpha$ of the corrected AR model derived by the coefficient derivation part 1601.

<Determination part 1603>

The determination part 1603 determines whether or not the inspection target member of the railway vehicle being the inspection target is normal, based on the result of comparison between the inspection frequency characteristics H1 to H4 and the reference frequency characteristics H1 to H4.

In the present embodiment, the determination part 1603 derives similarity between the inspection frequency characteristics H1 to H4 and the reference frequency characteristics H1 to H4. The determination part 1603 determines whether or not the derived similarity is greater than a preset threshold value. The similarity is derived by using a publicly-known pattern matching method.

For example, a sum of square of a difference in signal strengths of the corrected AR models at respective frequencies, is set as the similarity. It does not always have to obtain the sum of square of the difference in signal strengths of the corrected AR models at each of all frequencies. For example, the determination part 1603 specifies frequencies to which a predetermined number of values, from the top, of peaks of the signal strengths of the corrected AR model belong, regarding each of the railway vehicle being the inspection target and the normal railway vehicle. The determination part 1603 obtains the sum of square of the difference in signal strengths of the corrected AR models regarding the specified frequency characteristic. When the value of similarity is greater than the preset threshold value, the determination part 1603 determines that the inspection target member is not normal, and in the other case, the determination part 1603 determines that the inspection target member is normal.

More concretely, for example, the determination part 1603 specifies frequencies to which top three values of peaks of the signal strengths of the corrected AR model belong, regarding each of the railway vehicle being the inspection target and the normal railway vehicle. The determination part 1603 sets the similarity, which is the sum of square of the difference in signal strengths of the corrected AR models at each of the specified frequencies. The determination part 1603 sets the threshold value, which is a value obtained by multiplying the sum of square of the signal strength of the corrected AR model obtained from the normal railway vehicle at each of the specified frequencies by a constant. Here, the constant may be decided by analyzing and verifying the past measurement results. Further, the threshold value may be set according to a similar method based on simulation results.

[Output unit 304]

The output unit 304 has the same function as the output unit 304 of the first reference example. Therefore, detailed explanation of the output unit 304 will be omitted here.

(Results of simulation)

The frequency characteristics of the corrected AR model were derived by using the measured values of the forward-and-backward direction forces $T_1$ to $T_4$ obtained by the simulation described in the first reference example. Here, m in (28) Equation was set to 1500. Further, the sampling period was set to 0.002 s.

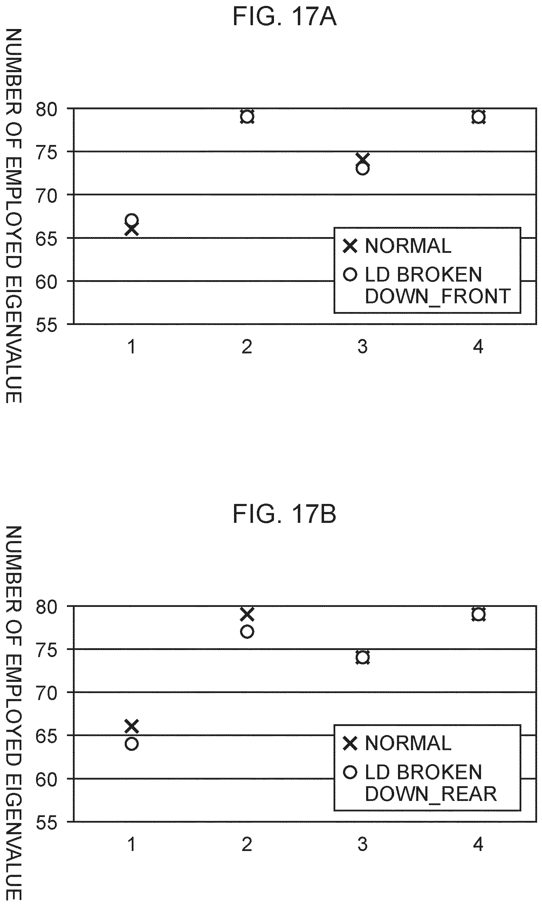

Each of Fig. 17A and Fig. 17B is a view illustrating the number of employed eigenvalues when the lateral movement damper 23 is assumed to be broken down. Fig. 17A illustrates a case where the lateral movement damper 23 of the front-side bogie 12a is assumed to be broken down. Fig. 17B illustrates a case where the lateral movement damper 23 of the rear-side bogie 12b is assumed to be broken down.

In Fig. 17A and Fig. 17B, the number of employed eigenvalues on the vertical axis indicates the number s of eigenvalues employed when deriving the coefficient $\alpha$ of the corrected AR model regarding the wheel sets 13a, 13b, 13c, 13d. "1", "2", "3", "4" on the horizontal axis indicate the wheel sets 13a, 13b, 13c, 13d, respectively.

Further, in Fig. 17A and Fig. 17B, "normal" indicates the number of employed eigenvalues when the railway vehicle is assumed to be normal. In Fig. 17A, "LD broken down_front" indicates the number of employed eigenvalues when the lateral movement damper 23 of the front-side bogie 12a is assumed to be broken down. In Fig. 17B, "LD broken down_rear" indicates the number of employed eigenvalues when the lateral movement damper 23 of the rear-side bogie 12b is assumed to be broken down.

By using the employed eigenvalues having the number indicated in Fig. 17A and Fig. 17B, the coefficients $\alpha$ were respectively derived, thereby deriving the frequency characteristics of the corrected AR model.

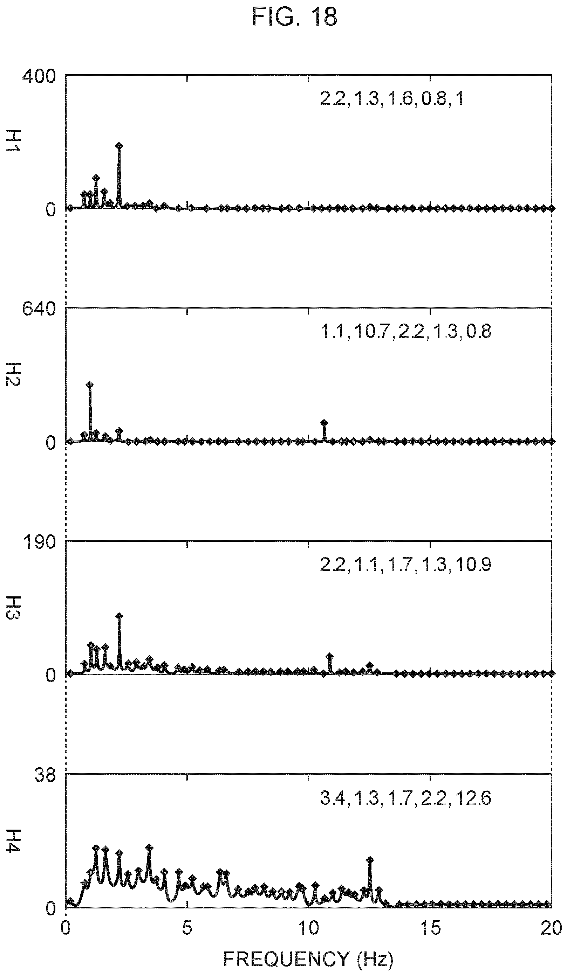

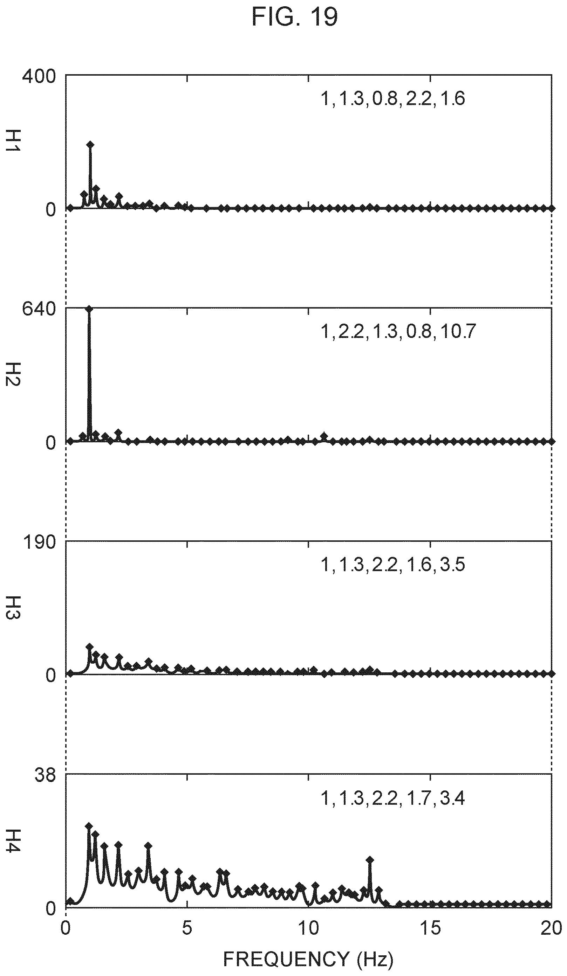

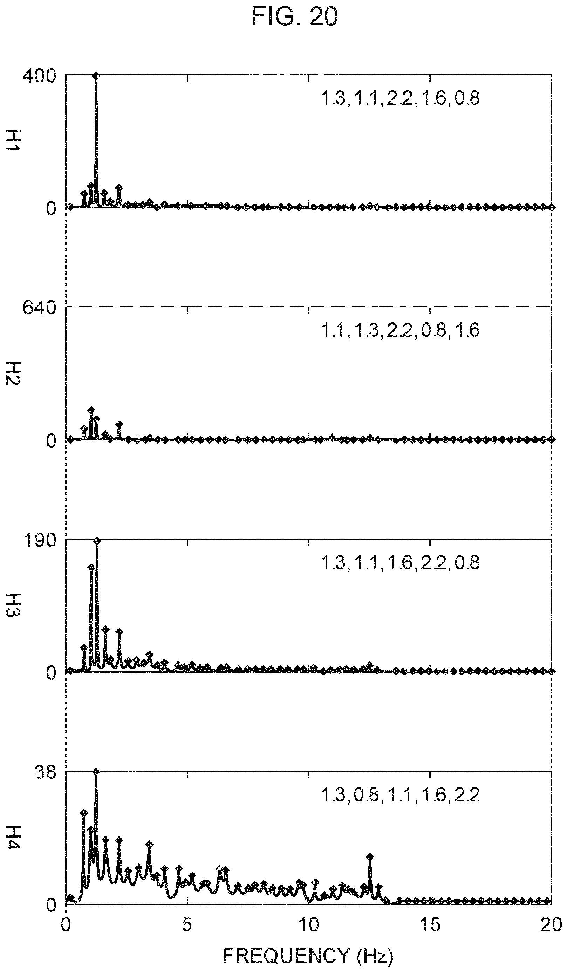

Fig. 18 is a view illustrating the frequency characteristics of the corrected AR model when the railway vehicle is assumed to be normal. Fig. 19 is a view illustrating the frequency characteristics of the corrected AR model when the lateral movement damper 23 of the front-side bogie 12a is assumed to be broken down. Fig. 20 is a view illustrating the frequency characteristics of the corrected AR model when the lateral movement damper 23 of the rear-side bogie 12b is assumed to be broken down.

In Fig. 18 to Fig. 20, "H1", "H2", "H3", "H4" on the vertical axis indicate values of frequency characteristics (signal strengths) of the corrected AR model expressed by (45) Equation regarding the wheel sets 13a, 13b, 13c, 13d, respectively. Further, in each drawing, numeric characters indicated within the graph indicate frequencies at which the values of peaks of the signal strengths become large, in the descending order of the values, from the left. For example, at the top of Fig. 18 (H1), there is indicated "2.2, 1.3, 1.6, 0.8, 1". This indicates that the frequency at which the value of peak of the signal strength becomes the largest is 2.2 Hz, the frequency at which the value becomes the second largest is 1.3 Hz, and the frequencies at which the values become the third largest, the fourth largest, and the fifth largest are 1.6 Hz, 0.8 Hz, and 1 Hz, respectively.

When Fig. 18 and Fig. 19 are compared, it can be understood that when the lateral movement damper 23 of the front-side bogie 12a is broken down, the frequency characteristics of the corrected AR model regarding the front-side wheel set 13a of the front-side bogie 12a and the rear-side wheel set 13b of the front-side bogie 12a (H1, H2) greatly change from the normal time. Further, when Fig. 18 and Fig. 20 are compared, it can be understood that when the lateral movement damper 23 of the rear-side bogie 12b is broken down, the frequency characteristics of the corrected AR model regarding the front-side wheel set 13c of the rear-side bogie 12b and the rear-side wheel set 13d of the rear-side bogie 12b (H3, H4) greatly change from the normal time.

(Flowchart)

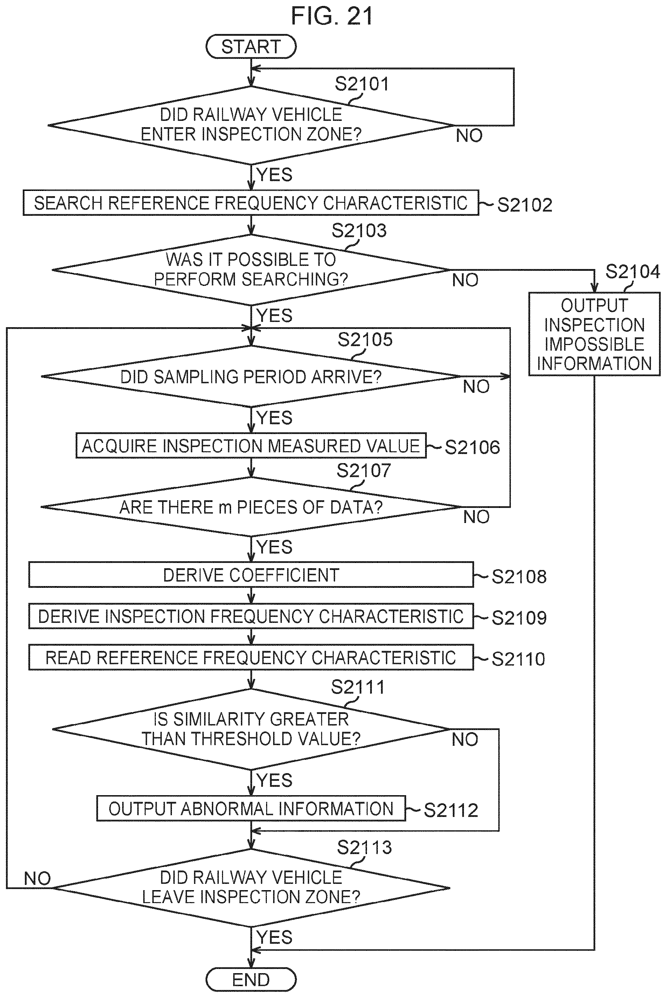

Next, one example of processing performed by the inspection apparatus 300 of the present embodiment will be described while referring to a flowchart in Fig. 21.

In step S2101, the inspection apparatus 300 waits until when the railway vehicle being the inspection target enters the inspection zone. When the railway vehicle being the inspection target enters the inspection zone, the processing proceeds to step S2102. When the processing proceeds to step S2102, the determination part 1603 searches, among the reference frequency characteristics H1 to H4 at the respective positions in the inspection zone, reference frequency characteristics complying with the kind, the inspection zone, and the inspection velocity of the railway vehicle being the inspection target, from the storage unit 302.

Next, in step S2103, the determination part 1603 determines whether or not it was possible to search, among the reference frequency characteristics H1 to H4 at the respective positions in the inspection zone, the reference frequency characteristics complying with the kind, the inspection zone, and the inspection velocity of the railway vehicle being the inspection target, from the storage unit 302.

The searching method in step S2103 can be realized by replacing the reference measured values with the reference frequency characteristics H1 to H4 in the searching method in step S1303. Therefore, detailed explanation of the searching method in step S2102 will be omitted here.

When, as a result of this determination, it is not possible to search the reference frequency characteristics complying with the kind, the inspection zone, and the inspection velocity of the railway vehicle being the inspection target, among the reference frequency characteristics H1 to H4 at the respective positions in the inspection zone, from the storage unit 302, the processing proceeds to step S2104.

When the processing proceeds to step S2104, the output unit 304 outputs inspection impossible information indicating that the inspection cannot be performed in the inspection zone. Further, the processing according to the flowchart in Fig. 21 is terminated.

On the other hand, when, as a result of the determination in step S2103, it was possible to search the reference frequency characteristics complying with the kind, the inspection zone, and the inspection velocity of the railway vehicle being the inspection target, among the reference frequency characteristics H1 to H4 at the respective positions in the inspection zone, from the storage unit 302, the processing proceeds to step S2105. When the processing proceeds to step S2105, the inspection apparatus 300 waits until when (a start time of) the predetermined sampling period arrives. When (the start time of) the predetermined sampling period arrives, the processing proceeds to step S2106. When the processing proceeds to step S2106, the data acquisition unit 301 acquires an inspection measured value at the current sampling period.

Next, in step S2107, the inspection apparatus 300 determines whether or not the number of inspection measured values is m (1500, for example) or more. When, as a result of this determination, the number of inspection measured values is not m or more, pieces of data for deriving the coefficient $\alpha$ of the corrected AR model are not gathered, so that the processing returns to step S2105. Subsequently, processing for acquiring an inspection measured value at the next sampling period is performed.

When, in step S2107, it is determined that the number of inspection measured values is m or more, the processing proceeds to step S2108. When the processing proceeds to step S2108, the coefficient derivation part 1601 derives the coefficient $\alpha$ of the corrected AR model for each of the data y of the inspection measured value.

Next, in step S2109, the frequency characteristic derivation part 1602 derives the inspection frequency characteristics H1 to H4 based on the coefficient $\alpha$ of the corrected AR model derived in step S2108.

Next, in step S2110, the determination part 1603 specifies a traveling position of the railway vehicle at the time corresponding to the sampling period at which it is determined that the number of inspection measured values is m or more in step S2107. The determination part 1603 reads the reference frequency characteristics H1 to H4 corresponding to the specified traveling position of the railway vehicle, from the reference frequency characteristics H1 to H4 at the respective positions in the inspection zone searched in step S2102.

Next, in step S2111, the determination part 1603 derives the similarity between the inspection frequency characteristics H1 to H4 derived in step S2109 and the reference frequency characteristics H1 to H4 read in step S2110. The determination part 1603 determines whether or not the similarity between the inspection frequency characteristics H1 to H4 and the reference frequency characteristics H1 to H4 is greater than the threshold value. When, as a result of this determination, the similarity between the inspection frequency characteristics H1 to H4 and the reference frequency characteristics H1 to H4 is greater than the threshold value, the processing proceeds to step S2112. When the processing proceeds to step S2112, the output unit 304 outputs abnormal information indicating that the inspection target member is not normal. Subsequently, the processing proceeds to step S2113 to be described later.

On the other hand, when, as a result of the determination in step S2111, the similarity between the inspection frequency characteristics H1 to H4 and the reference frequency characteristics H1 to H4 is not greater than the threshold value, the processing omits step S2112 and proceeds to step S2113.

When the processing proceeds to step S2113, the inspection apparatus 300 determines whether or not the railway vehicle being the inspection target left the inspection zone. When, as a result of this determination, the railway vehicle being the inspection target has not left the inspection zone, the processing returns to step S2105. Subsequently, the processing from steps S2105 to S2113 is repeatedly executed until when the railway vehicle being the inspection target leaves the inspection zone. Further, when it is determined that the railway vehicle being the inspection target left the inspection zone in step S2113, the processing according to the flowchart in Fig. 21 is terminated.

(Summary)

As described above, in the present embodiment, the inspection apparatus 300 determines that the inspection target member in the railway vehicle being the inspection target is not normal when the frequency characteristics of the corrected AR model obtained from the railway vehicle being the inspection target and the frequency characteristics of the corrected AR model obtained from the normal railway vehicle are deviated. Even if it is designed as above, it is possible to correctly determine whether or not the inspection target member in the railway vehicle is normal, similarly to the first reference example and second embodiment.

It is preferable to derive the frequency characteristics of the corrected AR model as in the present embodiment, since it is possible to emphasize the difference in frequency characteristics caused depending on whether or not the inspection target member is normal. However, it does not always have to design as above. For example, it is also possible to derive power spectra of the measured values of the forward-and-backward direction forces $T_1$ to $T_4$ by performing Fourier transform on the measured values of the forward-and-backward direction forces $T_1$ to $T_4$.

Further, it does not always have to compare the frequency characteristics of the corrected AR model obtained from the railway vehicle being the inspection target and the frequency characteristics of the corrected AR model obtained from the normal railway vehicle. When the inspection target member is not normal, the signal strength at the specified frequency becomes large, as illustrated in Fig. 19 and Fig. 20. Therefore, for example, it is also possible to determine whether or not the signal strength at the predetermined frequency or in the predetermined frequency band is greater than the preset threshold value in the frequency characteristics of the corrected AR model obtained from the railway vehicle being the inspection target.

Further, also in the present embodiment, the various modified examples and reference examples explained in the first reference example and second embodiment can be employed.

<<Fourth embodiment>>

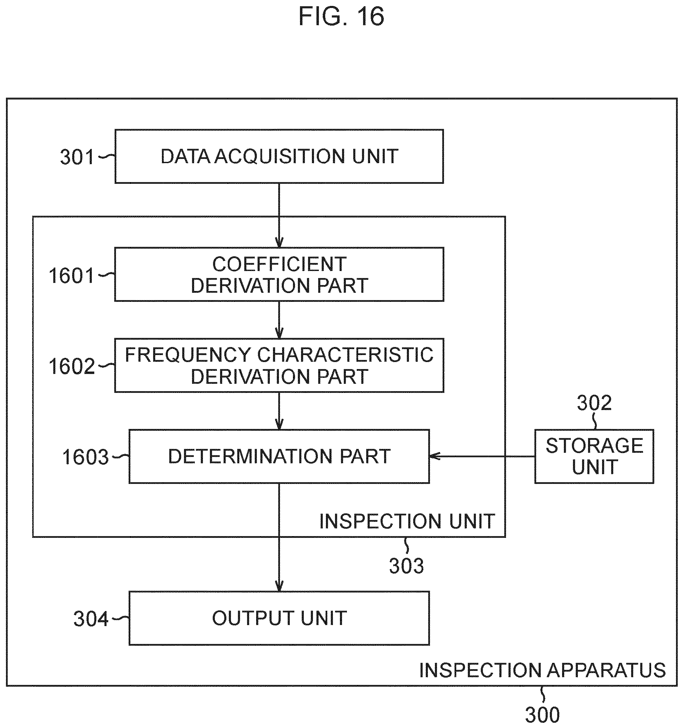

Next, a fourth embodiment will be described. In the first reference example and second to third embodiments, the inspection is performed regarding whether or not any of the inspection target members is abnormal. In contrast to this, the present embodiment will be explained by citing a case, as an example, where inspection is performed regarding whether or not a yaw damper being one of the inspection target members is abnormal, by using the measured values of the forward-and-backward direction forces $T_1$ to $T_4$. As described above, the present embodiment, and the first reference example and second to third embodiments are mainly different in the configuration and the processing based on the limitation of the inspection target member to the yaw damper. Therefore, in the explanation of the present embodiment, the same reference numerals and symbols as those added to Fig. 1 to Fig. 21 are added to the same parts as those in the first reference example and second to third embodiments, or the like, and their detailed explanations will be omitted.

[Configuration of inspection apparatus 300]

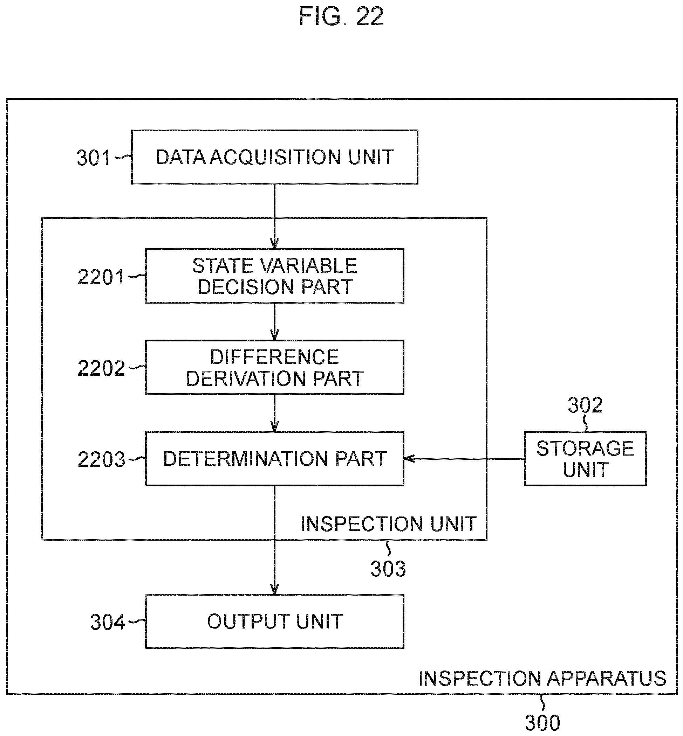

Fig. 22 is a view illustrating one example of a functional configuration of the inspection apparatus 300. The inspection apparatus 300 includes, as its functions, a data acquisition unit 301, a storage unit 302, an inspection unit 303, and an output unit 304.

[Data acquisition unit 301]

The data acquisition unit 301 acquires input data including the measured values of the forward-and-backward direction forces $T_1$ to $T_4$ measured in the railway vehicle being the inspection target at a predetermined sampling period. In the present embodiment, the input data includes a measured value of the acceleration of the vehicle body 11 in the right and left direction, measured values of the accelerations of the bogies 12a, 12b in the right and left direction, and measured values of the accelerations of the wheel sets 13a to 13d in the right and left direction, in addition to the measured values of the forward-and-backward direction forces $T_1$ to $T_4$ measured in the railway vehicle being the inspection target. Accordingly, pieces of time-series data of the measured values of the forward-and-backward direction forces $T_1$ to $T_4$ measured in the railway vehicle being the inspection target, the measured value of the acceleration of the vehicle body 11 in the right and left direction, the measured values of the accelerations of the bogies 12a, 12b in the right and left direction, and the measured values of the accelerations of the wheel sets 13a to 13d in the right and left direction are obtained. The respective accelerations are measured by using strain gauges attached to the vehicle body 11, the bogies 12a, 12b, and the wheel sets 13a to 13d respectively and an arithmetic device that calculates the accelerations by using measured values of these strain gauges, for example. Note that the measurement of the accelerations can be performed by a publicly-known technique, and thus its detailed explanation will be omitted.

[Storage unit 302]

The storage unit 302 makes the normal railway vehicle travel in the inspection zone, to thereby store angular velocity differences $\phi_{y1}\cdot - \phi_b\cdot$, $\phi_{y2}\cdot - \phi_b\cdot$, and angular displacement differences $\phi_{y1} - \phi_{t1}$, $\phi_{y2} - \phi_{t2}$, at respective positions in the inspection zone measured beforehand in the normal railway vehicle. Here, in the present embodiment, the inspection zone is preferably selected from a zone of a linear rail.

The angular velocity difference $\phi_{y1}\cdot - \phi_b\cdot$ is obtained by subtracting the angular velocity $\phi_b\cdot$ of the vehicle body 11 in the yawing direction from the angular velocity $\phi_{y1}\cdot$ of the yaw damper in the yawing direction disposed on the bogie 12a. The angular velocity difference $\phi_{y2}\cdot - \phi_b\cdot$ is obtained by subtracting the angular velocity $\phi_b\cdot$ of the vehicle body 11 in the yawing direction from the angular velocity $\phi_{y2}\cdot$ of the yaw damper in the yawing direction disposed on the bogie 12b.

The angular displacement difference $\phi_{y1} - \phi_{t1}$ is obtained by subtracting the pivot amount (angular displacement) $\phi_{t1}$ of the bogie 12a in the yawing direction from the pivot amount (angular displacement) $\phi_{y1}$ of the yaw damper in the yawing direction disposed on the bogie 12a. The angular displacement difference $\phi_{y2} - \phi_{t2}$ is obtained by subtracting the pivot amount (angular displacement) $\phi_{t2}$ of the bogie 12b in the yawing direction from the pivot amount (angular displacement) $\phi_{y2}$ of the yaw damper in the yawing direction disposed on the bogie 12b.

The railway vehicle is set to have 21 degrees of freedom. In this case, motion equations describing the motions of the yaw dampers 24a, 24b are expressed by (46) Equation and (47) Equation below.

[Mathematical equation 33]

$$2c_0 b'^2_0 \{\dot{\psi}_{y1} - \dot{\psi}_b\} + 2k'_0 b'^2_0 \{\psi_{y1} - \psi_{t1}\} = 0 \qquad \cdots \quad (46)$$

$$2c_0 b'^2_0 \{\dot{\psi}_{y2} - \dot{\psi}_b\} + 2k'_0 b'^2_0 \{\psi_{y2} - \psi_{t2}\} = 0 \qquad \cdots \quad (47)$$

$c_0$ is a damping coefficient of the yaw dampers 24a, 24b in the forward and backward direction. Further, $b'_0$ represents 1/2 of the interval between the two yaw dampers 24a, 24b, which are disposed on the right and left sides of each of the bogies 12a, 12b, in the right and left direction. Further, $K'_0$ is stiffness (spring constant) of a rubber bush of the yaw damper.

The present inventors found out that when the yaw dampers 24a, 24b in the bogie 12a become abnormal, $\{\phi_{y1}\cdot - \phi_b\cdot\}$ and $\{\phi_{y1} - \phi_{t1}\}$ in (46) Equation and (47) Equation deviate from values at normal time. Similarly, the present inventors found out that when the yaw dampers 24a, 24b in the bogie 12b become abnormal, $\{\phi_{y2}\cdot - \phi_b\cdot\}$ and $\{\phi_{y2} - \phi_{t2}\}$ in (46) Equation and (47) Equation deviate from values at normal time.

The storage unit 302 previously stores the angular velocity differences $\phi_{y1}\cdot - \phi_b\cdot$, $\phi_{y2}\cdot - \phi_b\cdot$, and the angular displacement differences $\phi_{y1} - \phi_{t1}$, $\phi_{y2} - \phi_{t2}$, at respective positions in the inspection zone obtained beforehand in the normal railway vehicle by making the normal railway vehicle travel in the inspection zone. In the following explanation, the angular velocity differences $\phi_{y1}\cdot - \phi_b\cdot$, $\phi_{y2}\cdot - \phi_b\cdot$, and the angular displacement differences $\phi_{y1} - \phi_{t1}$, $\phi_{y2} - \phi_{t2}$, at the respective positions in the inspection zone obtained beforehand by making the normal railway vehicle travel in the inspection zone, are referred to as reference angular velocity differences $\phi_{y1}\cdot - \phi_b\cdot$, $\phi_{y2}\cdot - \phi_b\cdot$, and reference angular displacement differences $\phi_{y1} - \phi_{t1}$, $\phi$

$_{y2}$-$\phi_{t2}$, respectively. Further, the angular velocity differences $\phi_{y1}$·-$\phi_{b}$·, $\phi_{y2}$·-$\phi_{b}$·, and the angular displacement differences $\phi_{y1}$-$\phi_{t1}$, $\phi_{y2}$-$\phi_{t2}$, at respective positions in the inspection zone obtained by making the railway vehicle being the inspection target travel in the inspection zone, are referred to as inspection angular velocity differences $\phi_{y1}$·-$\phi_{b}$·, $\phi_{y2}$·-$\phi_{b}$·, and inspection angular displacement differences $\phi_{y1}$-$\phi_{t1}$, $\phi_{y2}$-$\phi_{t2}$, respectively.

The normal railway vehicle means the same one as described in the first reference example.

In the present embodiment, the inspection angular velocity differences $\phi_{y1}$·- $\phi_{b}$·, $\phi_{y2}$·- $\phi_{b}$· and the reference angular velocity differences $\phi_{y1}$·-$\phi_{b}$·, $\phi_{y2}$·-$\phi_{b}$· are compared, and the inspection angular displacement differences $\phi_{y1}$-$\phi_{t1}$, $\phi_{y2}$-$\phi_{t2}$ and the reference angular displacement differences $\phi_{y1}$-$\phi_{t1}$, $\phi_{y2}$-$\phi_{t2}$ are compared. The inspection zone indicates a zone, in the traveling zone of the railway vehicle, in which the comparison of them is performed. Note that the inspection zone may be a linear rail or a curved rail, or it may also include both of them in the first reference example and second to third embodiments. In contrast to this, in the present embodiment, the inspection zone is preferably a zone of linear rail. Each position in the inspection zone can be obtained from the traveling position of the railway vehicle when obtaining the reference angular velocity differences $\phi_{y1}$·-$\phi_{b}$·, , $\phi_{y2}$·-$\phi_{b}$·, and the reference angular displacement differences $\phi_{y1}$-$\phi_{t1}$, $\phi_{y2}$-$\phi_{t2}$. The traveling position of the railway vehicle can be obtained by detecting a position of the railway vehicle at each time by using the GPS (Global Positioning System), for example. Further, the traveling position of the railway vehicle may also be derived from an integrated value of velocity of the railway vehicle at each time, or the like.

Further, it is preferable that the reference angular velocity differences $\phi_{y1}$·-$\phi_{b}$·, $\phi_{y2}$·-$\phi_{b}$·, and the reference angular displacement differences $\phi_{y1}$-$\phi_{t1}$, $\phi_{y2}$-$\phi_{t2}$ whose condition when obtaining them is as close as possible to the condition when obtaining the inspection angular velocity differences $\phi_{y1}$·-$\phi_{b}$·, $\phi_{y2}$·-$\phi_{b}$·, and the inspection angular displacement differences $\phi_{y1}$-$\phi_{t1}$, $\phi_{y2}$-$\phi_{t2}$, are compared with the inspection angular velocity differences and the inspection angular displacement differences. Accordingly, similarly to the first reference example, the reference angular velocity differences $\phi_{y1}$·-$\phi_{b}$·, $\phi_{y2}$·- $\phi_{b}$·, and the reference angular displacement differences $\phi_{y1}$-$\phi_{t1}$, $\phi_{y2}$-$\phi_{t2}$ at respective positions in the inspection zone are classified for each of the kind, the inspection zone, and the inspection velocity of the railway vehicle, to be stored, for example. The method of classification can be realized by replacing the reference measured values with the reference angular velocity differences $\phi_{y1}$·-$\phi_{b}$·, $\phi_{y2}$·-$\phi_{b}$·, and the reference angular displacement differences $\phi_{y1}$-$\phi_{t1}$, $\phi_{y2}$-$\phi_{t2}$ in the explanation of the first reference example. Therefore, detailed explanation of the method of classification of the reference angular velocity differences $\phi_{y1}$·-$\phi_{b}$·, $\phi_{y2}$·-$\phi_{b}$·, and the reference angular displacement differences $\phi_{y1}$-$\phi_{t1}$, $\phi_{y2}$-$\phi_{t2}$ will be omitted here.

[Method of deriving alignment irregularity amount $y_R$, angular velocity differences $\phi_{y1}$.-$\phi_{b}$·, $\phi_{y2}$·-$\phi_{b}$·, and angular displacement differences $\phi_{y1}$-$\phi_{t1}$, $\phi_{y2}$-$\phi_{t2}$]

Here, one example of a method of deriving the alignment irregularity amount $y_R$, the angular velocity differences $\phi_{y1}$·-$\phi_{b}$·, $\phi_{y2}$-$\phi_{b}$·, and the angular displacement differences $\phi_{y1}$-$\phi_{t1}$, $\phi_{y2}$-$\phi_{t2}$ will be described. The present embodiment will be explained by citing a case, as an example, where the alignment irregularity amount $y_R$, the angular velocity differences $\phi_{y1}$.-$\phi_{b}$·, $\phi_{y2}$.-$\phi_{b}$·, and the angular displacement differences $\phi_{y1}$-$\phi_{t1}$, $\phi_{y2}$-$\phi_{t2}$ are derived by using the method described in Patent Literature 5. Here, the method of Patent Literature 5 will be briefly described.

In Patent Literature 5, variables illustrated in (48) Equation below are set as the state variables, and by using the motion equations of (49) Equation to (65) Equation below, the state equation is constituted.

[Mathematical equation 34]

$$
\text{State variables} =
\begin{bmatrix}
\dot{y}_{w1} & y_{w1} & \dot{y}_{w2} & y_{w2} & \dot{y}_{w3} & y_{w3} & \dot{y}_{w4} & y_{w4} & \dot{y}_{t1} & y_{t1} & \dot{y}_{t2} & y_{t2} & \dot{\psi}_{t1} & \psi_{t1} & \dot{\psi}_{t2} & \psi_{t2} \\
\dot{\phi}_{t1} & \phi_{t1} & \dot{\phi}_{t2} & \phi_{t2} & \dot{y}_b & y_b & \dot{\psi}_b & \psi_b & \dot{\phi}_b & \phi_b & \psi_{y1} & \psi_{y2} & \phi_{a1} & \phi_{a2}
\end{bmatrix}
$$

$$\cdots \ (48)$$

$$
m_t \ddot{y}_{t1} + c_2' [ \{ \dot{y}_{t1} - h_4 \dot{\phi}_{t1} \} - \{ \dot{y}_b + L \dot{\psi}_b + h_5 \dot{\phi}_b \} ] + 2 C_{wy} \{ \dot{y}_{t1} + h_1 \dot{\phi}_{t1} \} - C_{wy} \{ \dot{y}_{w1} + \dot{y}_{w2} \}
$$

$$
+ 2 k_2' [ \{ y_{t1} - h_2 \phi_{t1} \} - \{ y_b + L \psi_b + h_3 \phi_b \} ] + 2 K_{wy} \{ y_{t1} + h_1 \phi_{t1} \} - K_{wy} \{ y_{w1} + y_{w2} \} = 0
$$

$$\cdots \ (49)$$

$$
m_t \ddot{y}_{t2} + c_2' [ \{ \dot{y}_{t2} - h_4 \dot{\phi}_{t2} \} - \{ \dot{y}_b + L \dot{\psi}_b + h_5 \dot{\phi}_b \} ] + 2 C_{wy} \{ \dot{y}_{t1} + h_1 \dot{\phi}_{t1} \} - C_{wy} \{ \dot{y}_{w3} + \dot{y}_{w4} \}
$$

$$
+ 2 k_2' [ \{ y_{t2} - h_2 \phi_{t2} \} - \{ y_b + L \psi_b + h_3 \phi_b \} ] + 2 K_{wy} \{ y_2 + h_1 \phi_{t2} \} - K_{wy} \{ y_{w3} + y_{w4} \} = 0
$$

$$\cdots \ (50)$$

[Mathematical equation 35]

$$I_{Tx}\ddot{\phi}_{t1}$$

$$+2c_1(b_1')^2\dot{\phi}_{t1}+2c_2b_2^2\{\dot{\phi}_{t1}-\dot{\phi}_{a1}\}+C_{wy}h_1[2\{\dot{y}_{t1}+h_1\dot{\phi}_{t1}\}-\{\dot{y}_{w1}+\dot{y}_{w2}\}]$$

$$-c_2'h_4[\{\dot{y}_{t1}-h_4\dot{\phi}_{t1}\}-\{\dot{y}_b+L\dot{\psi}_b+h_5\dot{\phi}_b\}]$$

$$+2k_1b_1^2\phi_{t1}+2\lambda k_2b_2^2\{\phi_{t1}-\phi_{a1}\}+K_{wy}h_1[2\{y_{t1}+h_1\phi_{t1}\}-\{y_{w1}+y_{w2}\}]$$

$$-2k_2'h_2[\{y_{t1}-h_2\phi_{t1}\}-\{y_b+L\psi_b+h_3\phi_b\}]$$

$$+2k_3b_2^2\{\phi_{t1}-\phi_b\}=0 \qquad\qquad \cdots (51)$$

$$I_{Tx}\ddot{\phi}_{t2}$$

$$+2c_1(b_1')^2\dot{\phi}_{t2}+2c_2b_2^2\{\dot{\phi}_{t2}-\dot{\phi}_{a2}\}+C_{wy}h_1[2\{\dot{y}_{t2}+h_1\dot{\phi}_{t2}\}-\{\dot{y}_{w3}+\dot{y}_{w4}\}]$$

$$-c_2'h_4[\{\dot{y}_{t2}-h_4\dot{\phi}_{t2}\}-\{\dot{y}_b-L\dot{\psi}_b+h_5\dot{\phi}_b\}]$$

$$+2k_1b_1^2\phi_{t2}+2\lambda k_2b_2^2\{\phi_{t2}-\phi_{a2}\}+K_{wy}h_1[2\{y_{t2}+h_1\phi_{t2}\}-\{y_{w3}+y_{w4}\}]$$

$$-2k_2'h_2[\{y_{t2}-h_2\phi_{t2}\}-\{y_b+L\psi_b+h_3\phi_b\}]$$

$$+2k_3b_2^2\{\phi_{t2}-\phi_b\}=0 \qquad\qquad \cdots (52)$$

$$m_b\ddot{y}_b+2c_2'\{\dot{y}_b+h_5\dot{\phi}_b\}-c_2'[\{\dot{y}_{t1}+\dot{y}_{t2}\}-h_4\{\dot{\phi}_{t1}+\dot{\phi}_{t2}\}]$$

$$+4k_2'\{y_b+h_3\phi_b\}-2k_2'[\{y_{t1}+y_{t2}\}-h_2\{\phi_{t1}+\phi_{t2}\}]=0$$

$$\cdots (53)$$

$$I_{Bz}\ddot{\psi}_b+2c_2'L^2\dot{\psi}_b-c_2'L\{\dot{y}_{t1}-\dot{y}_{t2}\}+c_2'Lh_4\{\dot{\phi}_{t1}-\dot{\phi}_{t2}\}$$

$$+2c_0(b_0')^2\{\dot{\psi}_b-\dot{\psi}_{y1}\}+2c_0(b_0')^2\{\dot{\psi}_b-\dot{\psi}_{y2}\}$$

$$+4k_2'L^2\psi_b-2k_2'L\{y_{t1}-y_{t2}\}+2k_2'Lh_2\{\phi_{t1}-\phi_{t2}\}$$

$$+2k_2''b_2^2\{\psi_b-\psi_{t1}\}+2k_2''b_2^2\{\psi_b-\psi_{t2}\}=0 \qquad \cdots (54)$$

[Mathematical equation 36]

$$I_{Bx}\ddot{\phi}_b + 2c_2' h_5 \{\dot{y}_b + h_5 \dot{\phi}_b\} - c_2' h_5 [\{\dot{y}_{t1} + \dot{y}_{t2}\} - h_4 \{\dot{\phi}_{t1} + \dot{\phi}_{t2}\}]$$

$$+ 4k_2' h_3 \{y_b + h_3 \phi_b\} - 2k_2' h_3 [\{y_{t1} + y_{t2}\} - h_2 \{\phi_{t1} + \phi_{t2}\}]$$

$$+ 2k_3 b_2^2 \{\phi_b - \phi_{t1}\} + 2k_3 b_0^2 \{\phi_b - \phi_{t2}\}$$

$$+ 2k_2 b_2^2 \{\phi_b - \phi_{a1}\} + 2k_2 b_2^2 \{\phi_b - \phi_{a2}\} = 0 \qquad \cdots \ (55)$$

$$2c_0 b_0'^2 \{\dot{\psi}_{y1} - \dot{\psi}_b\} + 2k_0' b_0'^2 \{\psi_{y1} - \psi_{t1}\} = 0 \qquad \cdots \ (56)$$

$$2c_0 b_0'^2 \{\dot{\psi}_{y2} - \dot{\psi}_b\} + 2k_0' b_0'^2 \{\psi_{y2} - \psi_{t2}\} = 0 \qquad \cdots \ (57)$$

$$2c_2 b_2^2 \{\dot{\phi}_{a1} - \dot{\phi}_{t1}\} + 2\lambda k_2 b_2^2 \{\phi_{a1} - \phi_{t1}\} + 2k_2 b_2^2 \{\phi_{a1} - \phi_b\} = 0$$
$$\cdots \ (58)$$

$$2c_2 b_2^2 \{\dot{\phi}_{a2} - \dot{\phi}_{t2}\} + 2\lambda k_2 b_2^2 \{\phi_{a2} - \phi_{t2}\} + 2k_2 b_2^2 \{\phi_{a2} - \phi_b\} = 0$$
$$\cdots \ (59)$$

$$m_w \ddot{y}_{w1} + \frac{f_2}{v} \dot{y}_{w1} + C_{wy} [\dot{y}_{w1} - \{\dot{y}_{t1} + a\dot{\psi}_{t1} + h_1 \dot{\phi}_{t1}\}] - f_2 \psi_{t1} + K_{wy} [y_{w1} - \{y_{t1} + a\psi_{t1} + h_1 \phi_{t1}\}] = -f_2 e_1$$
$$\cdots \ (60)$$

$$m_w \ddot{y}_{w2} + \frac{f_2}{v} \dot{y}_{w2} + C_{wy} [\dot{y}_{w2} - \{\dot{y}_{t1} + a\dot{\psi}_{t1} + h_1 \dot{\phi}_{t1}\}] - f_2 \psi_{t1} + K_{wy} [y_{w2} - \{y_{t1} + a\psi_{t1} + h_1 \phi_{t1}\}] = -f_2 e_1$$
$$\cdots \ (61)$$

$$m_w \ddot{y}_{w3} + \frac{f_2}{v} \dot{y}_{w3} + C_{wy} [\dot{y}_{w3} - \{\dot{y}_{t2} + a\dot{\psi}_{t2} + h_1 \dot{\phi}_{t2}\}] - f_2 \psi_{t2} + K_{wy} [y_{w3} - \{y_{t2} + a\psi_{t2} + h_1 \phi_{t2}\}] = -f_2 e_3$$
$$\cdots \ (62)$$

$$m_w \ddot{y}_{w4} + \frac{f_2}{v} \dot{y}_{w4} + C_{wy} [\dot{y}_{w4} - \{\dot{y}_{t2} + a\dot{\psi}_{t2} + h_1 \dot{\phi}_{t2}\}] - f_2 \psi_{t2} + K_{wy} [y_{w4} - \{y_{t2} + a\psi_{t2} + h_1 \phi_{t2}\}] = -f_2 e_4$$
$$\cdots \ (63)$$

[Mathematical equation 37]

$$I_{Tz}\ddot{\psi}_{t1}+2C_{wy}a^2\dot{\psi}_{t1}-C_{wy}a\{\dot{y}_{w1}-\dot{y}_{w2}\}$$
$$+2K_{wy}a^2\psi_{t1}-K_{wy}a\{y_{w1}-y_{w2}\}$$
$$+2k_0'(b_0')^2\{\psi_{t1}-\psi_{y1}\}+2k_2''b_2^2\{\psi_{t1}-\psi_b\}=-T_1-T_2$$
$$\cdots\ (64)$$

$$I_{Tz}\ddot{\psi}_{t2}+2C_{wy}a^2\dot{\psi}_{t2}-C_{wy}a\{\dot{y}_{w3}-\dot{y}_{w4}\}$$
$$+2K_{wy}a^2\psi_{t2}-K_{wy}a\{y_{w3}-y_{w4}\}$$
$$+2k_0'(b_0')^2\{\psi_{t2}-\psi_{y2}\}+2k_2''b_2^2\{\psi_{t2}-\psi_b\}=-T_3-T_4$$
$$\cdots\ (65)$$

$m_b$ is the mass of the vehicle body 11. $\ddot{y}_b$ is acceleration of the vehicle body 11 in the right and left direction. $\dot{\phi}_{tj}$ is an angular velocity of the bogie 12a or 12b in the rolling direction. $\dot{\phi}_{yj}$ is an angular velocity of the yaw dampers 24a, 24b in the yawing direction disposed on the bogie 12a or 12b. $\ddot{\phi}_b$ is angular acceleration of the vehicle body 11 in the rolling direction. Note that the meanings of the subscripts i, j are as described above. Note that as described in Patent Literature 5, the motion equations ((53) Equation to (55) Equation) of the vehicle body 11 do not have to be taken into consideration. Further, (56) Equation and (57) Equation are the above-described (46) Equation and (47) Equation.

Further, by using (60) Equation to (63) Equation, (49) Equation, (50) Equation, and (53) Equation, the observation equation is constituted.

The observation equation and the state equation are applied to the Kalman filter, and by using the input data acquired by the data acquisition unit 301, the state variables illustrated in (48) Equation are decided. The Kalman filter is one example of a filter that derives the state variable so as to minimize an error between a measured value of the observation variable and a calculated value or minimize an expected value of the error (namely, a filter that performs data assimilation). The Kalman filter itself can be realized by a publicly-known technique. From these state variables, the angular velocity differences $\dot{\phi}_{y1}-\dot{\phi}_b$, $\dot{\phi}_{y2}-\dot{\phi}_b$, and the angular displacement differences $\phi_{y1}-\phi_{t1}$, $\phi_{y2}-\phi_{t2}$ are derived. Therefore, it is preferable that (48) Equation further includes $\dot{\phi}_{y1}$ and $\dot{\phi}_{y2}$ in the state variables.

Further, based on (18) Equation to (21) Equation, estimated values of the pivot amounts (angular displacements) $\phi_{w1}$ to $\phi_{w4}$ of the wheel sets 13a to 13d in the yawing direction are calculated. Further, by giving the estimated values of the pivot amounts (angular displacements) $\phi_{w1}$ to $\phi_{w4}$ of the wheel sets 13a to 13d in the yawing direction, the state variables illustrated in (48) Equation, and the measured values of the forward-and-backward-direction forces $T_1$ to $T_4$ in the wheel sets 13a to 13d to (66) Equation to (69) Equation below, the alignment irregularity amounts $y_{R1}$ to $y_{R4}$ at the positions of the wheel sets 13a to 13d are calculated. The state variables to be used here are the displacements $y_{t1}$ and $y_{t2}$ of the bogies 12a, 12b in the right and left direction, the velocities $\dot{y}_{t1}$ and $\dot{y}_{t2}$ of the bogies 12a, 12b in the right and left direction, the displacements $y_{w1}$ to $y_{w4}$ of the wheel sets 13a to 13d in the right and left direction, and the velocities $\dot{y}_{w1}$ to $\dot{y}_{w4}$ of the wheel sets 13a to 13d in the right and left direction. Further, a final alignment irregularity amount $y_R$ is calculated from the alignment irregularity amounts $y_{R1}$ to $y_{R4}$.

[Mathematical equation 38]

$$I_{wz}\ddot{\psi}_{w1}+\frac{f_1 b^2}{v}\dot{\psi}_{w1}+\frac{f_1 b\gamma}{r}\{y_{w1}-y_{R1}\}+s_a K_{wy}\{y_{w1}-y_{t1}\}+s_a C_{wy}\{\dot{y}_{w1}-\dot{y}_{t1}\}=T_1 \quad\cdots(66)$$

$$I_{wz}\ddot{\psi}_{w2}+\frac{f_1 b^2}{v}\dot{\psi}_{w2}+\frac{f_1 b\gamma}{r}\{y_{w2}-y_{R2}\}+s_a K_{wy}\{y_{w2}-y_{t1}\}+s_a C_{wy}\{\dot{y}_{w2}-\dot{y}_{t1}\}=T_2 \quad\cdots(67)$$

$$I_{wz}\ddot{\psi}_{w3}+\frac{f_1 b^2}{v}\dot{\psi}_{w3}+\frac{f_1 b\gamma}{r}\{y_{w3}-y_{R3}\}+s_a K_{wy}\{y_{w3}-y_{t2}\}+s_a C_{wy}\{\dot{y}_{w3}-\dot{y}_{t2}\}=T_3 \quad\cdots(68)$$

$$I_{wz}\ddot{\psi}_{w4}+\frac{f_1 b^2}{v}\dot{\psi}_{w4}+\frac{f_1 b\gamma}{r}\{y_{w4}-y_{R4}\}+s_a K_{wy}\{y_{w4}-y_{t2}\}+s_a C_{wy}\{\dot{y}_{w4}-\dot{y}_{t2}\}=T_4 \quad\cdots(69)$$

$I_{wz}$ is a moment of inertia of each of the wheel sets 13a to 13d in the yawing direction. $\phi_{wi}\cdot\cdot$ is angular acceleration of each of the wheel sets 13a to 13d in the yawing direction. $f_1$ is a longitudinal creep coefficient. b is a distance in the right and left direction between contacts between the two wheels, which are attached to each of the wheel sets 13a to 13d, and the **track** 20 (the rails 20a, 20b). $y_{wi}$ is a displacement of each of the wheel sets 13a to 13d in the right and left direction. $y_{Ri}$ is an alignment irregularity amount at the position of each of the wheel sets 13a to 13d. $s_a$ is an offset from the middle of the axles 15a to 15d to an axle box suspension spring in the forward and backward direction. $y_{tj}$ is a displacement of the bogie 12a or 12b in the right and left direction. $I_{Bz}$ is a moment of inertia of the vehicle body 11 in the yawing direction. $\phi_b\cdot\cdot$ is angular acceleration of the vehicle body 11 in the yawing direction. $\phi_{yj}\cdot$ is an angular velocity of the yaw damper in the yawing direction disposed on the bogie 12a or 12b. $I_{Bx}$ is a moment of inertia of the vehicle body 11 in the rolling direction. Note that the method of deriving the state variables and the alignment irregularity amounts $y_{R1}$ to $y_{R4}$, and $y_R$ as described above is described in detail in Patent Literature 5. Therefore, detailed explanation of the method of deriving the state variables and the alignment irregularity amounts $y_{R1}$ to $y_{R4}$, and $y_R$ will be omitted here.

[Inspection unit 303]

The inspection unit 303 includes, as its functions, a state variable decision part 2201, a difference derivation part 2202, and a determination part 2203.

<State variable decision part 2201>

When the railway vehicle being the inspection target enters the inspection zone, the state variable decision part 2201 applies the observation equation and the state equation to the Kalman filter, and decides the state variables illustrated in (48) Equation by using the input data acquired by the data acquisition unit 301.

<Difference derivation part 2202>

The difference derivation part 2202 derives the alignment irregularity amount $y_R$, the inspection angular velocity differences $\phi_{y1}\cdot-\phi_b\cdot, \phi_{y2}\cdot-\phi_b\cdot$, and the inspection angular displacement differences $\phi_{y1}-\phi_{t1}, \phi_{y2}-\phi_{t2}$ at respective positions in the inspection zone, based on the state variables derived by the state variable decision part 2201, and the measured values of the forward-and-backward direction forces $T_1$ to $T_4$ measured in the railway vehicle being the inspection target.

<Determination part 2203>

When the railway vehicle being the inspection target enters the inspection zone, the determination part 2203 selects the reference angular velocity differences $\phi_{y1}\cdot-\phi_b\cdot, \phi_{y2}\cdot-\phi_b\cdot$, and the reference angular displacement differences

$\phi_{y1}$-$\phi_{t1}$, $\phi_{y2}$-$\phi_{t2}$ corresponding to the railway vehicle being the inspection target on which the inspection apparatus 300 is mounted, from the reference angular velocity differences $\phi_{y1}$·- $\phi_{b}$·, $\phi_{y2}$·- $\phi_{b}$·, and the reference angular displacement differences $\phi_{y1}$-$\phi_{t1}$, $\phi_{y2}$-$\phi_{t2}$ stored in the storage unit 302. The method of selecting the reference angular velocity differences $\phi_{y1}$·-$\phi_{b}$·, $\phi_{y2}$·-$\phi_{b}$·, and the reference angular displacement differences $\phi_{y1}$-$\phi_{t1}$, $\phi_{y2}$-$\phi_{t2}$ can be realized by replacing the reference measured values with the reference angular velocity differences $\phi_{y1}$·-$\phi_{b}$·, $\phi_{y2}$·- $\phi_{b}$·, and the reference angular displacement differences $\phi_{y1}$-$\phi_{t1}$, $\phi_{y2}$-$\phi_{t2}$ in the explanation of <determination part 303a> in the first reference example, for example. Therefore, detailed explanation of the method of selecting the reference angular velocity differences $\phi_{y1}$·-$\phi_{b}$·, $\phi_{y2}$·-$\phi_{b}$·, and the reference angular displacement differences $\phi_{y1}$-$\phi_{t1}$, $\phi_{y2}$-$\phi_{t2}$ will be omitted here. Further, when it is not possible to select the reference measured values at the respective positions in the inspection zone, the determination part 2203 determines that the inspection cannot be performed in the inspection zone.

Further, the determination part 2203 calculates absolute values of differences between the inspection angular velocity differences $\phi_{y1}$·- $\phi_{b}$·, $\phi_{y2}$·-$\phi_{b}$· and the reference angular velocity differences $\phi_{y1}$·-$\phi_{b}$·, $\phi_{y2}$·-$\phi_{b}$·, and absolute values of differences between the inspection angular displacement differences $\phi_{y1}$-$\phi_{t1}$, $\phi_{y2}$-$\phi_{t2}$ and the reference angular displacement differences $\phi_{y1}$-$\phi_{t1}$, $\phi_{y2}$-$\phi_{t2}$ at the same position in the inspection zone. The differences are calculated between the angular velocity differences with respect to the same bogie 12a or 12b and between the angular displacement differences with respect to the same bogie 12a or 12b. Specifically, the absolute value of difference between the inspection angular velocity difference $\phi_{y1}$·- $\phi_{b}$· and the reference angular velocity difference $\phi_{y1}$·- $\phi_{b}$· with respect to the bogie 12a, and the absolute value of difference between the inspection angular displacement difference $\phi_{y1}$-$\phi_{t1}$ and the reference angular displacement difference $\phi_{y1}$-$\phi_{t1}$ with respect to the bogie 12a are calculated. In a similar manner, the absolute value of difference between the inspection angular velocity difference $\phi_{y2}$·-$\phi_{b}$· and the reference angular velocity difference $\phi_{y2}$·-$\phi_{b}$· with respect to the bogie 12b, and the absolute value of difference between the inspection angular displacement difference $\phi_{y2}$-$\phi_{t2}$ and the reference angular displacement difference $\phi_{y2}$-$\phi_{t2}$ with respect to the bogie 12b are calculated.

Subsequently, when at least any one of the absolute value of difference between the inspection angular velocity difference $\phi_{y1}$·-$\phi_{b}$· and the reference angular velocity difference $\phi_{y1}$·-$\phi_{b}$· with respect to the bogie 12a and the absolute value of difference between the inspection angular displacement difference $\phi_{y1}$-$\phi_{t1}$ and the reference angular displacement difference $\phi_{y1}$-$\phi_{t1}$ with respect to the bogie 12a is greater than a threshold value, the determination part 2203 determines that the yaw dampers 24a, 24b disposed on the bogie 12a are not normal. Further, when at least any one of the absolute value of difference between the inspection angular velocity difference $\phi_{y2}$·-$\phi_{b}$· and the reference angular velocity difference $\phi_{y2}$·- $\phi_{b}$· with respect to the bogie 12b and the absolute value of difference between the inspection angular displacement difference $\phi_{y2}$-$\phi_{t2}$ and the reference angular displacement difference $\phi_{y2}$-$\phi_{t2}$ with respect to the bogie 12b is greater than the threshold value, the determination part 2203 determines that the yaw dampers 24a, 24b disposed on the bogie 12b are not normal.

The determination part 2203 repeatedly performs the calculation of the absolute value of difference between the inspection angular velocity difference $\phi_{y1}$·-$\phi_{b}$· and the reference angular velocity difference $\phi_{y1}$·-$\phi_{b}$·, the calculation of the absolute value of difference between the inspection angular displacement difference $\phi_{y1}$-$\phi_{t1}$ and the reference angular displacement difference $\phi_{y1}$-$\phi_{t1}$, the calculation of the absolute value of difference between the inspection angular velocity difference $\phi_{y2}$·-$\phi_{b}$· and the reference angular velocity difference $\phi_{y2}$·-$\phi_{b}$· with respect to the bogie 12b, the calculation of the absolute value of difference between the inspection angular displacement difference $\phi_{y2}$-$\phi_{t2}$ and the reference angular displacement difference $\phi_{y2}$-$\phi_{t2}$, and the determination whether or not each of the absolute values is greater than the threshold value, every time the inspection measured value is obtained, from when the railway vehicle being the inspection target enters the inspection zone to when it leaves the inspection zone.

The threshold value can be decided based on the method similar to the method of deciding the threshold value with which the absolute value of difference between the inspection measured value and the reference measured value is compared in the first reference example. Further, the threshold value with which the absolute value of difference between the inspection angular velocity difference $\phi_{y1}$·- $\phi_{b}$· and the reference angular velocity difference $\phi_{y1}$·-$\phi_{b}$· with respect to the bogie 12a is compared, the threshold value with which the absolute value of difference between the inspection angular displacement difference $\phi_{y1}$-$\phi_{t1}$ and the reference angular displacement difference $\phi_{y1}$-$\phi_{t1}$ with respect to the bogie 12a is compared, the threshold value with which the absolute value of difference between the inspection angular velocity difference $\phi_{y2}$·-$\phi_{b}$· and the reference angular velocity difference $\phi_{y2}$·-$\phi_{b}$· with respect to the bogie 12b is compared, and the threshold value with which the absolute value of difference between the inspection angular displacement difference $\phi_{y2}$-$\phi_{t2}$ and the reference angular displacement difference $\phi_{y2}$-$\phi_{t2}$ with respect to the bogie 12b is compared, may be the same or different.

[Output unit 304]

The output unit 304 outputs information indicating the result determined by the inspection unit 303. In the present embodiment, concretely, when the inspection unit 303 determines that the yaw damper is not normal, the output unit 304 outputs information indicating that. At this time, the output unit 304 also outputs information indicating that the yaw damper determined as not normal is a yaw damper that belongs to which of the bogies 12a and 12b. Further, when the inspection unit 303 determines that the inspection cannot be performed in the inspection zone, the output unit 304 outputs information indicating that. As a form of output, it is possible to employ at least any one of displaying the information on a computer display, transmitting the information to an external device, and storing the information in an internal or external storage medium, for example.

(Results of simulation)

It was confirmed that, in the following simulation, when the yaw dampers disposed on the left side and the right side of the bogie 12a become abnormal in the railway vehicle that travels in the inspection zone of the linear rail, the inspection angular velocity differences $\phi_{y1}\dot{}- \phi_b\dot{}$, $\phi_{y2}\dot{}-\phi_b\dot{}$, and the inspection angular displacement differences $\phi_{y1}-\phi_{t1}$, $\phi_{y2}-\phi_{t2}$ change from the reference angular velocity differences $\phi_{y1}\dot{}-\phi_b\dot{}$, $\phi_{y2}\dot{}-\phi_b\dot{}$, and the reference angular displacement differences $\phi_{y1}-\phi_{t1}$, $\phi_{y2}-\phi_{t2}$, respectively. Note that by constructing the above-described motion equation on both sides in the right and left direction, the above-described state variables and alignment irregularity amount $y_R$ were calculated on each of both sides in the right and left direction. Further, it was assumed that the railway vehicle travels in the inspection zone at 270 km/h here.

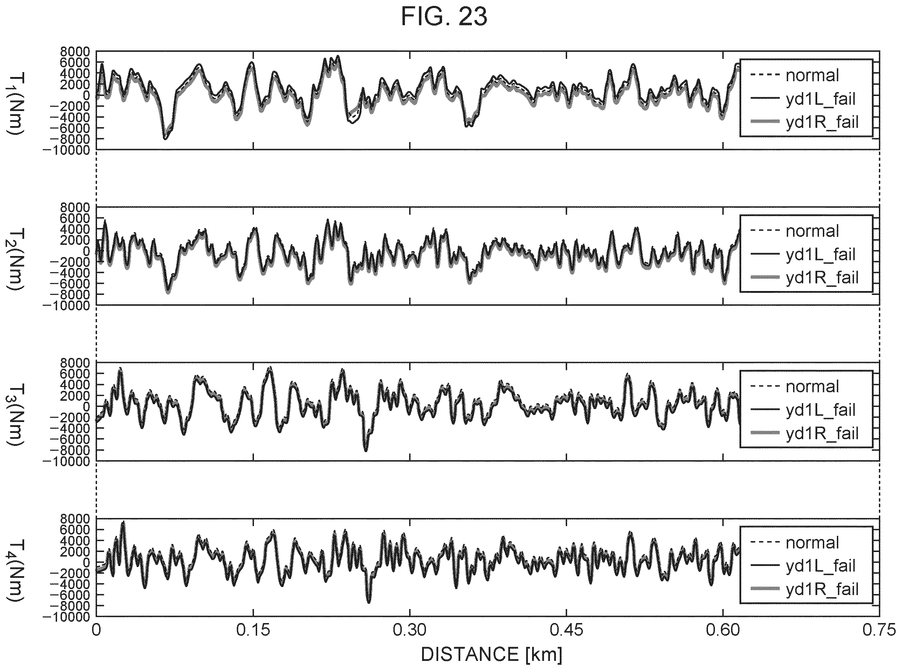

Fig. 23 is a view illustrating one example of a result of simulation regarding the measured values of the forward-and-backward direction forces $T_1$ to $T_4$. In Fig. 23, normal indicates the measured values of the forward-and-backward direction forces $T_1$ to $T_4$ in the inspection zone when the railway vehicle is assumed to be normal. yd1L_fail indicates the measured values of the forward-and-backward direction forces $T_1$ to $T_4$ in the inspection zone when the yaw damper disposed on the left side of the bogie 12a is assumed to be broken down. yd1R_fail indicates the measured values of the forward-and-backward direction forces $T_1$ to $T_4$ in the inspection zone when the yaw damper disposed on the right side of the bogie 12a is assumed to be broken down.

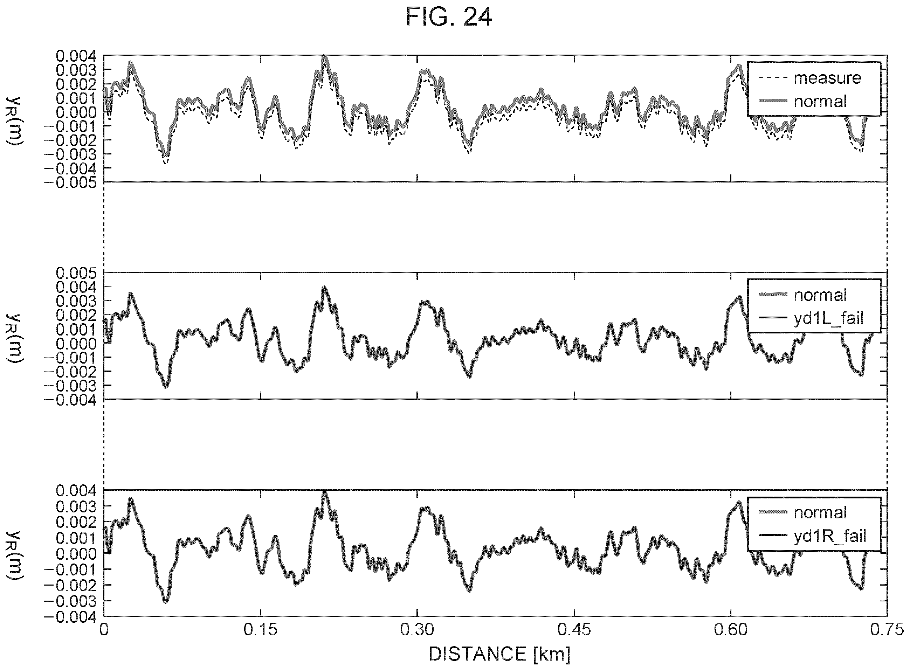

Fig. 24 is a view illustrating one example of a result of simulation regarding the alignment irregularity amount $y_R$. In Fig. 24, measure indicates an actual measured value of the alignment irregularity amount $y_R$. normal indicates an estimated value of the alignment irregularity amount $y_R$ in the inspection zone when the railway vehicle is assumed to be normal. yd1L_fail indicates an estimated value of the alignment irregularity amount $y_R$ in the inspection zone when the yaw damper disposed on the left side of the bogie 12a is assumed to be broken down. yd1R_fail indicates an estimated value of the alignment irregularity amount $y_R$ in the inspection zone when the yaw damper disposed on the right side of the bogie 12a is assumed to be broken down.

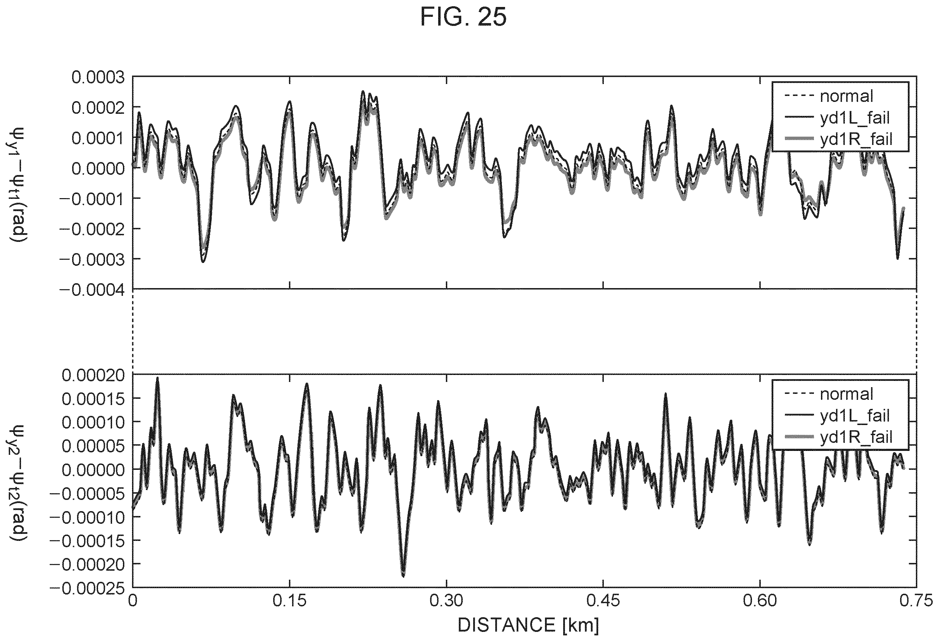

Fig. 25 is a view illustrating one example of a result of simulation regarding the angular displacement differences $\phi_{y1}-\phi_{t1}$, $\phi_{y2}-\phi_{t2}$. In Fig. 25, normal indicates estimated values of the angular displacement differences $\phi_{y1}-\phi_{t1}$, $\phi_{y2}-\phi_{t2}$ in the inspection zone when the railway vehicle is assumed to be normal (the reference angular displacement differences $\phi_{y1}-\phi_{t1}$, $\phi_{y2}-\phi_{t2}$). yd1L_fail indicates estimated values of the angular displacement differences $\phi_{y1}-\phi_{t1}$, $\phi_{y2}-\phi_{t2}$ in the inspection zone when the yaw damper disposed on the left side of the bogie 12a is assumed to be broken down (the inspection angular displacement differences $\phi_{y1}-\phi_{t1}$, $\phi_{y2}-\phi_{t2}$). yd1R_fail indicates estimated values of the angular displacement differences $\phi_{y1}-\phi_{t1}$, $\phi_{y2}-\phi_{t2}$ in the inspection zone when the yaw damper disposed on the right side of the bogie 12a is assumed to be broken down (the inspection angular displacement differences $\phi_{y1}-\phi_{t1}$, $\phi_{y2}-\phi_{t2}$).

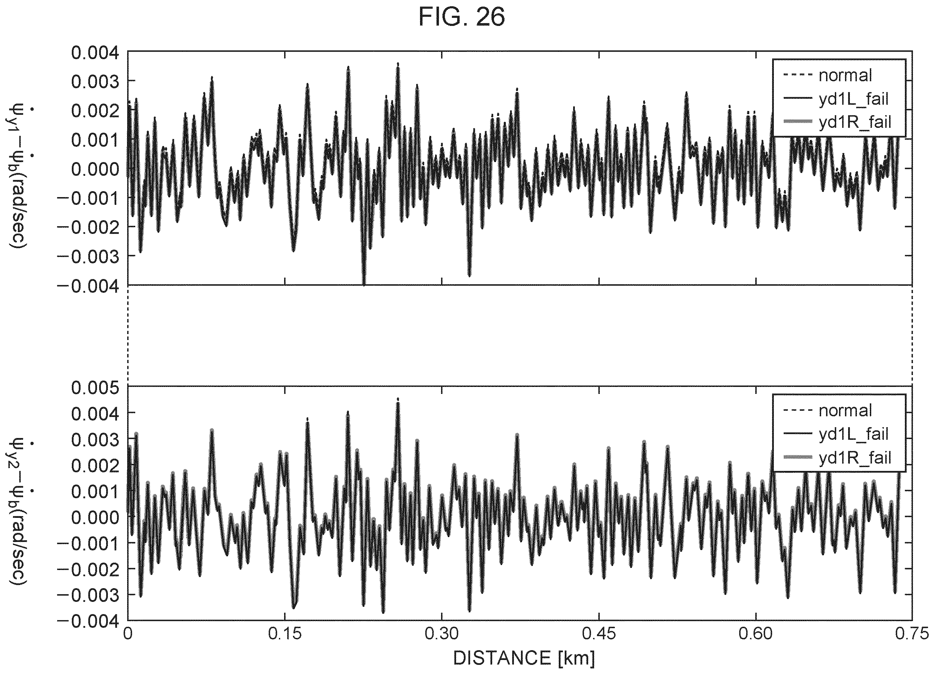

Fig. 26 is a view illustrating one example of a result of simulation regarding the angular velocity differences $\phi_{y1}\dot{}-\phi_b\dot{}$, $\phi_{y2}\dot{}-\phi_b\dot{}$. In Fig. 26, normal indicates estimated values of the angular velocity differences $\phi_{y1}\dot{}-\phi_b\dot{}$, $\phi_{y2}\dot{}-\phi_b\dot{}$ in the inspection zone when the railway vehicle is assumed to be normal (the reference angular velocity differences $\phi_{y1}\dot{}-\phi_b\dot{}$, $\phi_{y2}\dot{}-\phi_b\dot{}$). yd1L_fail indicates estimated values of the angular velocity differences $\phi_{y1}\dot{}-\phi_b\dot{}$, $\phi_{y2}\dot{}-\phi_b\dot{}$ in the inspection zone when the yaw damper disposed on the left side of the bogie 12a is assumed to be broken down (the inspection angular velocity differences $\phi_{y1}\dot{} - \phi_b\dot{}$, $\phi_{y2}\dot{} - \phi_b\dot{}$). yd1R_fail indicates estimated values of the angular velocity differences $\phi_{y1}\dot{}-\phi_b\dot{}$, $\phi_{y2}\dot{}-\phi_b\dot{}$ in the inspection zone when the yaw damper disposed on the right side of the bogie 12a is assumed to be broken down (the inspection angular velocity differences $\phi_{y1}\dot{}-\phi_b\dot{}$, $\phi_{y2}\dot{}-\phi_b\dot{}$).

As illustrated in Fig. 23, it can be understood that when compared to the forward-and-backward direction forces $T_3$, $T_4$ in the bogie 12b, the forward-and-backward direction forces $T_1$, $T_2$ in the bogie 12a on which the broken-down yaw damper is disposed change greatly from the normal time.

Further, as illustrated in Fig. 24, it can be understood that the estimated value and the actual measured value of the alignment irregularity amount $y_R$ match accurately (refer to the upper view in Fig. 24). Further, it can be understood that the deviation of the forward-and-backward direction forces $T_1$, $T_2$ in the bogie 12a on which the broken-down yaw damper is disposed from the normal time does not exert an influence on the prediction result of the alignment irregularity amount $y_R$ (refer to the middle and lower views in Fig. 24).

Further, as illustrated in Fig. 25, it can be understood that when compared to the angular displacement difference $\phi_{y2}-\phi_{t2}$ in the bogie 12b (refer to the lower view in Fig. 25), the angular displacement difference $\phi_{y1}-\phi_{t1}$ in the bogie 12a on which the broken-down yaw damper is disposed (refer to the upper view in Fig. 25) changes greatly from the normal time.

Further, as illustrated in Fig. 26, it can be understood that when compared to the angular velocity difference $\phi_{y2}\dot{}-$

$\phi_b\cdot$ in the bogie 12b (refer to the lower view in Fig. 26), the angular velocity difference $\phi_{y1}\cdot-\phi_b\cdot$ in the bogie 12a on which the broken-down yaw damper is disposed changes greatly from the normal time (refer to the upper view in Fig. 26).

(Flowchart)

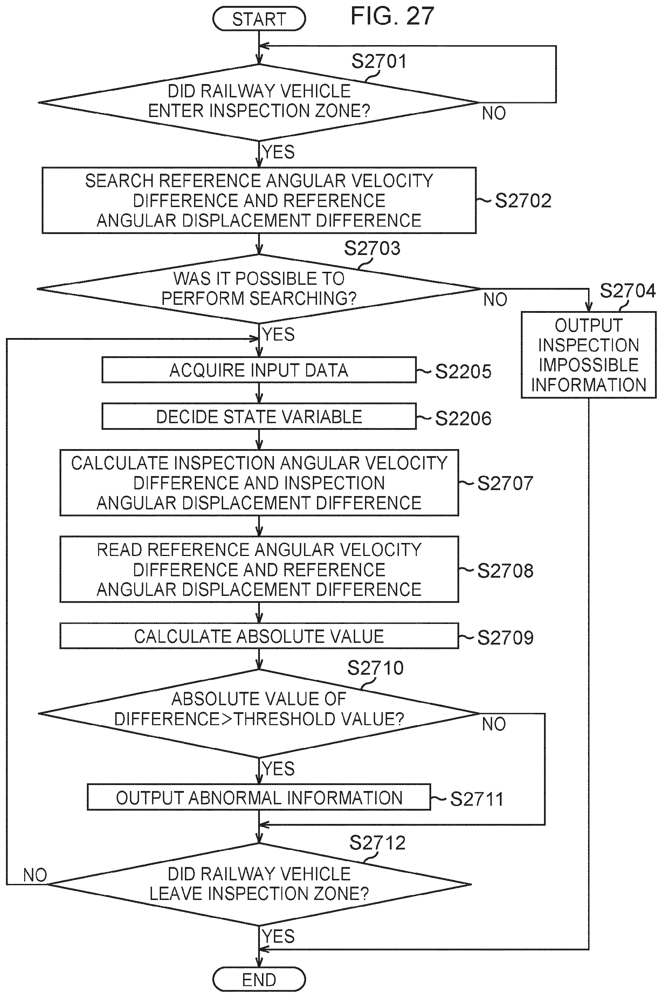

Next, one example of processing performed by the inspection apparatus 300 of the present embodiment will be described while referring to a flowchart in Fig. 27.

In step S2701, the inspection apparatus 300 waits until when the railway vehicle being the inspection target enters the inspection zone. When the railway vehicle being the inspection target enters the inspection zone, the processing proceeds to step S2702. When the processing proceeds to step S2702, the determination part 2203 searches, among the reference angular velocity differences $\phi_{y1}\cdot-\phi_b\cdot$, $\phi_{y2}\cdot-\phi_b\cdot$, and the reference angular displacement differences $\phi_{y1}-\phi_{t1}$, $\phi_{y2}-\phi_{t2}$ at the respective positions in the inspection zone, the reference angular velocity differences and the reference angular displacement differences corresponding to the railway vehicle being the inspection target, from the storage unit 302.

Next, in step S2703, the determination part 2203 determines whether or not it was possible to search, among the reference angular velocity differences $\phi_{y1}\cdot-\phi_b\cdot$, $\phi_{y2}\cdot-\phi_b\cdot$, and the reference angular displacement differences $\phi_{y1}-\phi_{t1}$, $\phi_{y2}-\phi_{t2}$ at the respective positions in the inspection zone, the reference angular velocity differences and the reference angular displacement differences corresponding to the railway vehicle being the inspection target, from the storage unit 302.

When, as a result of this determination, it is not possible to search the reference angular velocity differences and the reference angular displacement differences corresponding to the railway vehicle being the inspection target, among the reference angular velocity differences $\phi_{y1}\cdot-\phi_b\cdot$, $\phi_{y2}\cdot-\phi_b\cdot$, and the reference angular displacement differences $\phi_{y1}-\phi_{t1}$, $\phi_{y2}-\phi_{t2}$ at the respective positions in the inspection zone, from the storage unit 302, the processing proceeds to step S2704.

When the processing proceeds to step S2704, the output unit 304 outputs inspection impossible information indicating that the inspection cannot be performed in the inspection zone. Further, the processing according to the flowchart in Fig. 27 is terminated.

On the other hand, when, as a result of the determination in step S2703, it was possible to search the reference angular velocity differences and the reference angular displacement differences corresponding to the railway vehicle being the inspection target, among the reference angular velocity differences $\phi_{y1}\cdot-\phi_b\cdot$, $\phi_{y2}\cdot-\phi_b\cdot$, and the reference angular displacement differences $\phi_{y1}-\phi_{t1}$, $\phi_{y2}-\phi_{t2}$ at the respective positions in the inspection zone, from the storage unit 302, the processing proceeds to step S2705. When the processing proceeds to step S2705, the data acquisition unit 301 acquires input data.

Next, in step S2206, the state variable decision part 2201 decides the state variables illustrated in (48) Equation by using the input data acquired in step S2205.

Next, in step S2707, the difference derivation part 2202 uses the state variables decided in step S2206 and the inspection measured values, to thereby calculate the alignment irregularity amount $y_R$, the inspection angular velocity differences $\phi_{y1}\cdot-\phi_b\cdot$, $\phi_{y2}\cdot-\phi_b\cdot$, and the inspection angular displacement differences $\phi_{y1}-\phi_{t1}$, $\phi_{y2}-\phi_{t2}$.

Next, in step S2708, the determination part 2203 specifies a traveling position of the railway vehicle at the time of calculation of the inspection angular velocity differences $\phi_{y1}\cdot-\phi_b\cdot$, $\phi_{y2}\cdot-\phi_b\cdot$, and the inspection angular displacement differences $\phi_{y1}-\phi_{t1}$, $\phi_{y2}-\phi_{t2}$ calculated in step S2707. The determination part 2203 reads the reference angular velocity differences $\phi_{y1}\cdot-\phi_b\cdot$, $\phi_{y2}\cdot-\phi_b\cdot$, and the reference angular displacement differences $\phi_{y1}-\phi_{t1}$, $\phi_{y2}-\phi_{t2}$ corresponding to the specified traveling position of the railway vehicle, from the reference angular velocity differences $\phi_{y1}-\phi_b\cdot$, $\phi_{y2}\cdot-\phi_b\cdot$, and the reference angular displacement differences $\phi_{y1}-\phi_{t1}$, $\phi_{y2}-\phi_{t2}$ at the respective positions in the inspection zone searched in step S2703. The time of calculation of the inspection angular displacement differences $\phi_{y1}-\phi_{t1}$, $\phi_{y2}-\phi_{t2}$ can be set to the time of measurement of the measured values used for calculating these, for example.

Next, in step S2709, the determination part 2203 calculates absolute values of differences between the inspection angular velocity differences $\phi_{y1}\cdot-\phi_b\cdot$, $\phi_{y2}\cdot-\phi_b\cdot$ calculated in step S2707 and the reference angular velocity differences $\phi_{y1}\cdot-\phi_b\cdot$, $\phi_{y2}\cdot-\phi_b\cdot$ read in step S2708, and between the inspection angular displacement differences $\phi_{y1}-\phi_{t1}$, $\phi_{y2}-\phi_{t2}$ calculated in step S2707 and the reference angular displacement differences $\phi_{y1}-\phi_{t1}$, $\phi_{y2}-\phi_{t2}$ read in step S2708.

Next, in step S2710, the determination part 2203 determines whether or not at least one of the absolute values of differences between the inspection angular velocity differences $\phi_{y1}\cdot-\phi_b\cdot$, $\phi_{y2}\cdot-\phi_b\cdot$ and the reference angular velocity differences $\phi_{y1}\cdot-\phi_b\cdot$, $\phi_{y2}\cdot-\phi_b\cdot$, and between the inspection angular displacement differences $\phi_{y1}-\phi_{t1}$, $\phi_{y2}-\phi_{t2}$ and the reference angular displacement differences $\phi_{y1}-\phi_{t1}$, $\phi_{y2}-\phi_{t2}$ calculated in step S2709 is greater than the preset threshold value. When, as a result of this determination, at least one of the absolute values of differences between the inspection angular velocity differences $\phi_{y1}\cdot-\phi_b\cdot$, $\phi_{y2}\cdot-\phi_b\cdot$ and the reference angular velocity differences $\phi_{y1}\cdot-\phi_b\cdot$, $\phi_{y2}\cdot-\phi_b\cdot$, and between the inspection angular displacement differences $\phi_{y1}-\phi_{t1}$, $\phi_{y2}-\phi_{t2}$ and the reference angular displacement differences $\phi_{y1}-\phi_{t1}$, $\phi_{y2}-\phi_{t2}$ is greater than the threshold value, the processing proceeds to step S2711. When the processing proceeds to step S2711, the output unit 304 outputs abnormal information indicating that the yaw damper is not normal. When calculating the angular velocity differences $\phi_{y1}\cdot-\phi_b\cdot$, $\phi_{y2}\cdot-\phi_b\cdot$, and the angular displacement differences $\phi_{y1}-\phi_{t1}$, $\phi_{y2}-\phi_{t2}$ on each of right and left sides, as in the simulations in Fig. 23 to Fig. 26, information indicating that which of the right and left yaw dampers is not normal, can be included in the abnormal information. Further, the output unit 304 can output information of the alignment irregularity amount $y_R$. Subsequently, the processing proceeds to step S2712 to be described later.

On the other hand, when, as a result of the determination in step S2710, all of the absolute values of differences between the inspection angular velocity differences $\phi_{y1}\cdot-\phi_b\cdot$, $\phi_{y2}\cdot-\phi_b\cdot$ and the reference angular velocity differences $\phi_{y1}\cdot-\phi_b\cdot$, $\phi_{y2}\cdot-\phi_b\cdot$, and between the inspection angular displacement differences $\phi_{y1}-\phi_{t1}$, $\phi_{y2}-\phi_{t2}$ and the reference angular displacement differences $\phi_{y1}-\phi_{t1}$, $\phi_{y2}-\phi_{t2}$ are not greater than the threshold value, the processing omits step S2711 and proceeds to step S2712. At this time, the output unit 304 can output information of the alignment irregularity amount $y_R$.

When the processing proceeds to step S2712, the inspection apparatus 300 determines whether or not the railway vehicle being the inspection target left the inspection zone. When, as a result of this determination, the railway vehicle being the inspection target has not left the inspection zone, the processing returns to step S2707. Subsequently, the processing from steps S2707 to S2712 is repeatedly executed until when the railway vehicle being the inspection target leaves the inspection zone. Further, when it is determined that the railway vehicle being the inspection target left the inspection zone in step S2712, the processing according to the flowchart in Fig. 27 is terminated.

(Summary)

As described above, in the present embodiment, when the deviation between the angular velocity differences $\phi_{y1}\cdot-\phi_b\cdot$, $\phi_{y2}\cdot-\phi_b\cdot$ calculated beforehand in the normal railway vehicle and the angular velocity differences $\phi_{y1}\cdot-\phi_b\cdot$, $\phi_{y2}\cdot-\phi_b\cdot$ calculated in the railway vehicle being the inspection target, and the deviation between the angular displacement differences $\phi_{y1}-\phi_{t1}$, $\phi_{y2}-\phi_{t2}$ calculated beforehand in the normal railway vehicle and the angular displacement differences $\phi_{y1}-\phi_{t1}$, $\phi_{y2}-\phi_{t2}$ calculated in the railway vehicle being the inspection target occur, the inspection apparatus 300 determines that the yaw damper in the railway vehicle being the inspection target is not normal. Therefore, by using the forward-and-backward direction forces $T_1$ to $T_4$, it is possible to correctly determine whether or not the yaw damper is normal.

In the present embodiment, the case in which both the angular velocity differences $\phi_{y1}\cdot-\phi_b\cdot$, $\phi_{y2}\cdot-\phi_b\cdot$ and the angular displacement differences $\phi_{y1}-\phi_{t1}$, $\phi_{y2}-\phi_{t2}$ are derived, has been explained as an example. However, only either of them may be derived.

Further, regarding the measured values of the forward-and-backward direction forces $T_1$ to $T_4$, it is also possible to extract and use the essential signal components included in the measured values of the forward-and-backward direction forces $T_1$ to $T_4$, as in the second embodiment.

Further, also in the present embodiment, the various modified examples and reference examples explained in the first reference example and second to third embodiments can be employed.

<<Fifth embodiment>>

Next, a fifth embodiment will be described. In the first reference example and second to third embodiments, the inspection is performed regarding whether or not any of the inspection target members is abnormal. In the fourth embodiment, the inspection target member is limited to the yaw damper. In contrast to this, the present embodiment will be explained by citing a case, as an example, where inspection is performed regarding whether or not the stiffness of the axle box suspensions 18a, 18b each being one of the inspection target members in the forward and backward direction is abnormal, by using the measured values of the forward-and-backward direction forces $T_1$ to $T_4$. As described above, the present embodiment, and the first reference example and second to fourth embodiments are mainly different in the configuration and the processing based on the limitation of the inspection target member to the axle box suspensions 18a, 18b. Therefore, in the explanation of the present embodiment, the same reference numerals and symbols as those added to Fig. 1 to Fig. 27 are added to the same parts as those in the first reference example and second to fourth embodiments, or the like, and their detailed explanations will be omitted.

(Findings)

First, the findings obtained by the present inventors will be described.

The present inventors found out that by using the measured values of the forward-and-backward direction forces, it is possible to correctly inspect whether or not the stiffness of the axle box suspensions 18a, 18b in the forward and backward direction is normal.

When a curved rail is taken into consideration, the forward-and-backward direction force $T_i$ is expressed by (70) Equation below.

[Mathematical equation 39]

$$T_i = k_{wx}b_i^2 \left\{ \psi_{tj} - \psi_{wi} \pm a \frac{1}{R_i} \right\} + C_{wx}b_i^2 \left\{ \dot{\psi}_{tj} - \dot{\psi}_{wi} \pm a \frac{\dot{i}}{R_i} \right\} \quad \cdots (70)$$

In each Equation, a subscript i is a symbol for distinguishing the wheel sets 13a, 13b, 13c, 13d (i being 1 corresponds to the wheel set 13a, i being 2 corresponds to the wheel set 13b, i being 3 corresponds to the wheel set 13c, and i being 4 corresponds to the wheel set 13d). Further, a subscript j is a symbol for distinguishing the bogies 12a and 12b (j being 1 corresponds to the bogie 12a, and j being 2 corresponds to the bogie 12b).

$K_{wx}$ is a spring constant of the axle box suspensions 18a, 18b in the forward and backward direction. $C_{wx}$ is a damping coefficient of the axle box suspensions 18a, 18b in the forward and backward direction. $b_1$ represents a length of 1/2 of the interval between the axle box suspensions 18a and 18b in the right and left direction (the interval of the two axle box suspensions 18a, 18b, which are provided on the right and left sides of the single wheel set, in the right and left direction becomes $2b_1$). $\phi_{tj}$ is a rotation amount (angular displacement) of the bogie 12a or 12b in the yawing direction. $\phi_{wi}$ is a pivot amount (angular displacement) of each of the wheel sets 13a to 13d in the yawing direction. $\phi_{tj}\cdot$ is an angular velocity of the bogie 12a or 12b in the yawing direction. $\phi_{wi}\cdot$ is an angular velocity of each of the wheel sets 13a to 13d in the yawing direction.

a represents 1/2 of each distance between the wheel sets 13a and 13b and between the wheel sets 13c and 13d in the forward and backward direction, which are provided on the bogies 12a, 12b (the distance between the wheel sets 13a and 13b and the distance between the wheel sets 13c and 13d, which are provided on the bogies 12a, 12b, each become 2a). $1/R_i$ is a curvature of rails 20a, 20b at a position of the wheel set 13a, 13b, 13c, or 13d. $1/R_i\cdot$ is a time differential value of the curvature of the rails 20a, 20b at the position of the wheel set 13a, 13b, 13c, or 13d. $1/R_i\bullet$ corresponds to $1/R_i$ in (70) Equation in which $\bullet$ is added above 1. Further, a symbol of + under which - is added indicates that + is employed for the equation with respect to the wheel sets 13a, 13c, and - is employed for the equation with respect to the wheel sets 13b, 13d.

When (70) Equation is modified, (71) Equation below is obtained.

[Mathematical equation 40]

$$K_{wx} = \frac{T_i - C_{wx}b_i^2 \left\{ \dot{\psi}_{tj} - \dot{\psi}_{wi} \pm a \frac{\dot{i}}{R_i} \right\}}{b_i^2 \left\{ \psi_{tj} - \psi_{wi} \pm a \frac{1}{R_i} \right\}} \quad \cdots (71)$$

The present inventors performed simulations (numerical analysis) on the traveling of the railway vehicle by setting that the railway vehicle has 86 degrees of freedom.

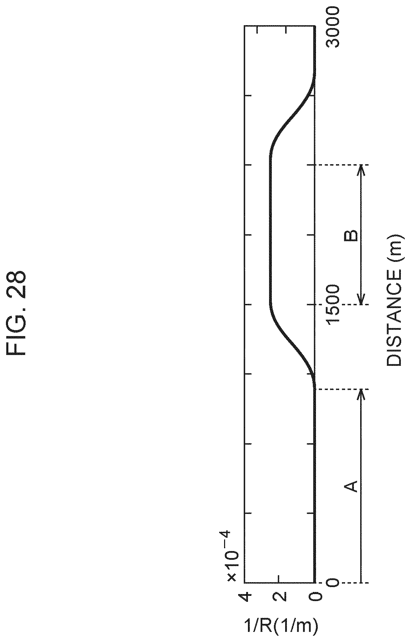

Fig. 28 is a view illustrating one example of a curvature of rails 20a, 20b in the inspection zone. In Fig. 28, a distance 0 indicates a starting point of the inspection zone (the same applies to the other drawings). Fig. 28 indicates that the railway vehicle travels clockwise toward the traveling direction.

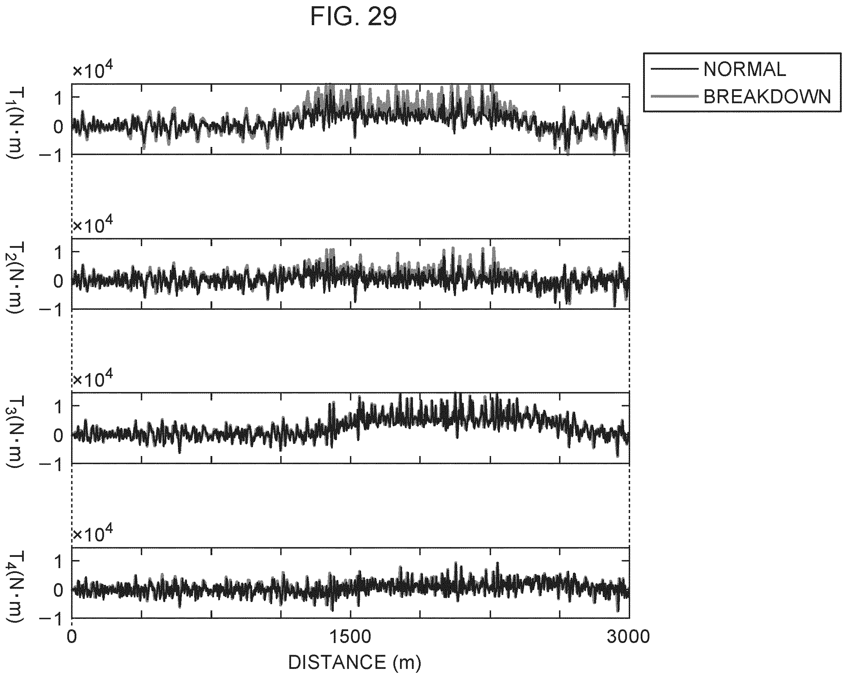

Fig. 29 is a view illustrating one example of results of simulation regarding the measured values of the forward-and-backward direction forces $T_1$ to $T_4$ in each of a case where the railway vehicle is assumed to be normal, and a case where the stiffness of the axle box suspension 18a of the wheel set 13a in the forward and backward direction is assumed to deteriorate. Here, the simulation regarding the measured values of the forward-and-backward direction forces $T_1$ to $T_4$ in the inspection zone illustrated in Fig. 28 was performed. Further, the railway vehicle was set to travel in the inspection zone at 270 km/h. Further, the spring constant $K_{wx}$ of the axle box suspension 18a in the forward and backward direction was set to 0.5 times that at the normal time, thereby assuming a case where the stiffness of the axle box suspension 18a of the wheel set 13a in the forward and backward direction deteriorates.

In Fig. 29, a gray line (normal) is a graph of a case where the railway vehicle is assumed to be normal, a black line (breakdown) is a graph of a case where the stiffness of the axle box suspension 18a of the wheel set 13a in the forward and backward direction is assumed to deteriorate, and a part at which only the black line appears indicates that the gray line is hidden behind the black line (namely, there is no difference between the normal and the breakdown).

As illustrated in Fig. 29, regarding the forward-and-backward direction forces $T_1$, $T_2$ (refer to the graphs indicating the breakdown, illustrated by the black lines) of the wheel sets 13a, 13b of the bogie 12a on which the axle box suspension 18a (the axle box suspension 18a in which the deterioration of stiffness in the forward and backward direction is assumed to occur) of the wheel set 13a is disposed, an amplitude is lowered on the linear rail, and both the amplitude and an average value are lowered on the curved rail, when compared to the forward-and-backward direction forces $T_1$, $T_2$ in the normal railway vehicle (refer to the graphs indicating the normal, illustrated by the gray lines).

As described above, there is a correlation between the forward-and-backward direction forces $T_1$ to $T_4$ and the spring constant $K_{wx}$ of the axle box suspensions 18a, 18b in the forward and backward direction. Based on this, the present inventors found out that by detecting, with the use of the measured values of the forward-and-backward direction forces $T_1$ to $T_4$, whether or not the spring constant $K_{wx}$ of the axle box suspensions 18a, 18b in the forward and backward direction is deviated from the value at the normal time, it is possible to correctly inspect whether or not (the stiffness in the forward and backward direction of) the axle box suspensions 18a, 18b are normal.

The present embodiment has been made based on the above-described findings.

(Configuration of inspection apparatus 300)

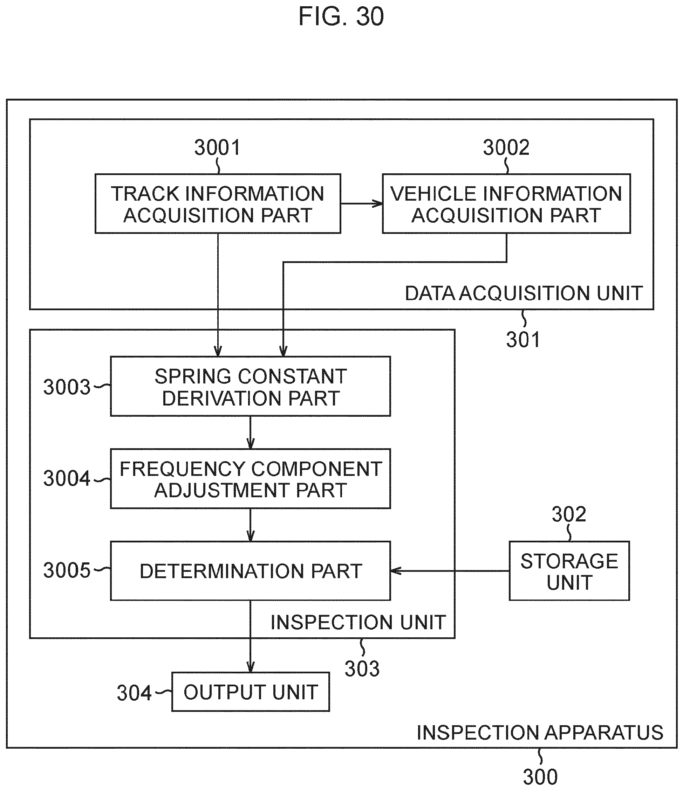

Fig. 30 is a view illustrating one example of a functional configuration of an inspection apparatus 300.

In Fig. 30, the inspection apparatus 300 includes, as its functions, a data acquisition unit 301, a storage unit 302, an inspection unit 303, and an output unit 304. The data acquisition unit 301 includes, as its functions, a track information acquisition part 3001, and a vehicle information acquisition part 3002. The inspection unit 303 includes, as its functions, a spring constant derivation part 3003, a frequency component adjustment part 3004, and a determination part 3005.

As expressed in (71) Equation, out of the parameters defining the spring constant $K_{wx}$ of the axle box suspensions 18a, 18b in the forward and backward direction, a (1/2 of each distance between the wheel sets 13a and 13b and between the wheel sets 13c and 13d in the forward and backward direction, which are provided on the bogies 12a, 12b), and $b_1$ (the length of 1/2 of the interval between the axle box suspensions 18a and 18b in the right and left direction) are previously set based on the structure of the railway vehicle. Further, $C_{wx}$ (the damping coefficient of the axle box suspensions 18a, 18b in the forward and backward direction) can be regarded as a fixed value (note that $C_{wx}$ may also be set to 0). Accordingly, the inspection apparatus 300 previously stores these pieces of information.

Therefore, out of the parameters required for deriving the spring constant $K_{wx}$ of the axle box suspensions 18a, 18b in the forward and backward direction, variable parameters are $1/R_i$ (the curvature of rails 20a, 20b at the position of the wheel set 13a, 13b, 13c, or 13d), $1/R_i\cdot$ (the time differential value of the curvature of the rails 20a, 20b at the position of the wheel set 13a, 13b, 13c, or 13d), $T_i$ (the forward-and-backward direction force), $\phi_{tj}$ (the rotation amount (angular displacement) of the bogie 12a or 12b in the yawing direction), $\phi_{wi}$ (the pivot amount (angular displacement) of each of the wheel sets 13a to 13d in the yawing direction), $\phi_{tj}\cdot$ (the angular velocity of the bogie 12a or 12b in the yawing direction), and $\phi_{wi}\cdot$ (the angular velocity of each of the wheel sets 13a to 13d in the yawing direction).

[Track information acquisition part 3001]

The track information acquisition part 3001 acquires track information at a predetermined sampling period, during traveling of the railway vehicle. The track information includes $1/R_i$ (the curvature of rails 20a, 20b at the position of each of the wheel sets 13a, 13b, 13c, 13d), $1/R_i\cdot$ (the time differential value of the curvature of the rails 20a, 20b at the position of each of the wheel sets 13a, 13b, 13c, 13d), $y_{Ri}$ (the alignment irregularity amount at the position of each of the wheel sets 13a, 13b, 13c, 13d), and $\phi_{raili}$ (the cant angle of the rails 20a, 20b at the position of each of the wheel sets 13a, 13b, 13c, 13d). The positions of the wheel sets 13a, 13b, 13c, 13d are specified from the traveling position of the railway vehicle. The traveling position (current position) of the railway vehicle is obtained by detecting the position of the railway vehicle at each time by using the GPS (Global Positioning System), for example. Further, the traveling position of the railway vehicle may also be derived from an integrated value of velocity of the railway vehicle at each time, or the like.

The track information acquisition part 3001 previously acquires the curvature (a design value or a measured value of the curvature) of the rails 20a, 20b at each position in the zone in which the railway vehicle travels, (a measured value of) the alignment irregularity amount, and (a measured value of) the cant angle. The track information acquisition part 3001 derives current positions of the wheel sets 13a, 13b, 13c, 13d from the traveling position (current position) of the railway vehicle. Subsequently, the track information acquisition part 3001 derives, based on the curvature of the rails 20a, 20b at each position in the zone in which the railway vehicle travels, the curvature $1/R_i$ of the rails 20a, 20b at the current position of each of the wheel sets 13a, 13b, 13c, 13d, and the time differential value $1/R_i\cdot$ thereof. Further, the track information acquisition part 3001 derives, based on the alignment irregularity amount at each position in the zone in which the railway vehicle travels, the alignment irregularity amount $y_{Ri}$ at the current position of each of the wheel sets 13a, 13b, 13c, 13d.

The track information acquisition part 3001 performs such derivation of $1/R_i$, $1/R_i\cdot$, and $Y_{Ri}$ every time the predetermined sampling period arrives. Note that $Y_{Ri}$ (the alignment irregularity amount at the position of the wheel set 13a, 13b, 13c, or 13d) may also be derived in a manner as described in Patent Literature 5.

Further, the track information acquisition part 3001 derives the cant angle $\phi_{raili}$ at the current position of each of the wheel sets 13a, 13b, 13c, 13d based on the cant angle at each position in the zone in which the railway vehicle travels. Such derivation of $1/R_i$, $1/R_i\cdot$, $Y_{Ri}$, and $\phi_{raili}$ is performed every time the predetermined sampling period arrives.

The track information acquisition part 3001 can also acquire, in addition to the above, information of the track 20 capable of being changed according to the traveling position of the railway vehicle, as track information, every time the predetermined sampling period arrives.

[Vehicle information acquisition part 3002]

The vehicle information acquisition part 3002 acquires vehicle information at a predetermined sampling period, during traveling of the railway vehicle. The vehicle information includes $T_i$ (the forward-and-backward direction force), $\phi_{tj}$ (the rotation amount (angular displacement) of the bogie 12a or 12b in the yawing direction), $\phi_{wi}$ (the pivot amount (angular displacement) of each of the wheel sets 13a to 13d in the yawing direction), $\phi_{tj}\cdot$ (the angular velocity of the bogie 12a or 12b in the yawing direction), and $\phi_{wi}\cdot$ (the angular velocity of each of the wheel sets 13a to 13d in the yawing direction).

The vehicle information acquisition part 3002 acquires a measured value of $T_i$ (the forward-and-backward direction force) every time the predetermined sampling period arrives. The method of measurement of $T_i$ (the forward-and-backward direction force) is as described above.

$\phi_{tj}$ (the rotation amount (angular displacement) of the bogie 12a or 12b in the yawing direction), $\phi_{wi}$ (the pivot amount (angular displacement) of each of the wheel sets 13a to 13d in the yawing direction), $\phi_{tj}\cdot$ (the angular velocity of the bogie 12a or 12b in the yawing direction), and $\phi_{wi}\cdot$ (the angular velocity of each of the wheel sets 13a to 13d in the yawing direction) may also be measured at the predetermined sampling period by using a measuring device such as a gyro sensor. However, it is not easy to perform the measurement with high accuracy in the yawing direction. Accordingly, in the present embodiment, they are set to be acquired by performing numerical analysis based on the motion equations describing the motions of the railway vehicle.

It is set that the railway vehicle has 21 degrees of freedom. Out of the motion equations describing the motions of the railway vehicle during traveling in this case, the transversal vibrations of the bogies 12a, 12b are expressed by (1) Equation. The yawings of the bogies 12a, 12b are expressed by (2) Equation. The rollings of the bogies 12a, 12b are expressed by (3) Equation. The transversal vibrations of the wheel sets 13a to 13d are expressed by (4) Equation. The yawings of the wheel sets 13a to 13d are expressed by (5) Equation. The motion equation describing the yaw dampers 24a, 24b disposed on the bogie 12a is expressed by (56) equation. The motion equation describing the yawings of the yaw dampers 24a, 24b disposed on the bogie 12b is expressed by (57) Equation. The motion equation describing the rollings of the air springs 22a, 22b disposed on the bogie 12a is expressed by (58) Equation. The motion equation describing the rollings of the air springs 22a, 22b disposed on the bogie 12b is expressed by (59) Equation. The motion equations describing the motions of the vehicle body 11 are as follows.

• Transversal vibration of vehicle body

The motion equation describing the transversal vibration (motion in the right and left direction) of the vehicle body 11 is expressed by (72) Equation below.
[Mathematical equation 41]

$$m_b \ddot{y}_b = -2c'_2 \{ \dot{y}_b - dx_b \dot{\psi}_b + h_5 \dot{\phi}_b \} + c'_2 [\{ \dot{y}_{t1} + \dot{y}_{t2} \} - h_4 \{ \dot{\phi}_{t1} + \dot{\phi}_{t2} \}]$$

$$-4k'_2 \{ y_b - dx_b \psi_b + h_3 \phi_b \} + 2k'_2 [\{ y_{t1} + y_{t2} \} - h_2 \{ \phi_{t1} + \phi_{t2} \}]$$

$$+ m_b v^2 (R_1^{-1} \cos \phi_{rail1} + R_2^{-1} \cos \phi_{rail2} + R_3^{-1} \cos \phi_{rail3} + R_4^{-1} \cos \phi_{rail4})/4$$

$$- m_b g (\sin \phi_{rail1} + \sin \phi_{rail2} + \sin \phi_{rail3} + \sin \phi_{rail4})/4 \quad \cdots \quad (72)$$

yb·· is acceleration of the vehicle body 11 in the right and left direction.

• Yawing of vehicle body

The motion equation describing the yawing of the vehicle body 11 is expressed by (73) Equation below.
[Mathematical equation 42]

$$I_{Bz}\ddot{\psi}_b = +2c'_2dx_b\dot{y}_b - 2c'_2(L^2+dx_b^2)\dot{\psi}_b + 2c'_2dx_bh_5\dot{\phi}_b - 2c'_2(L^2+dx_b^2)\dot{\psi}_b$$

$$+c'_2(L-dx_b)\dot{y}_{t1} - c'_2(L+dx_b)\dot{y}_{t2}$$

$$-c'_2(L-dx_b)h_4\dot{\phi}_{t1} + c'_2(L+dx_b)h_4\dot{\phi}_{t2}$$

$$-2c_0b'^2_0\{\dot{\psi}_b - \dot{\psi}_{y1}\} - 2c_0b'^2_0\{\dot{\psi}_b - \dot{\psi}_{y2}\}$$

$$+4k'_2dx_by_b - 4k'_2(L^2+dx_b^2)\psi_b + 4k'_2dx_bh_3\phi_b$$

$$+2k'_2(L-dx_b)y_{t1} - 2k'_2(L+dx_b)y_{t2}$$

$$-2k'_2(L-dx_b)h_2\phi_{t1} + 2k'_2(L+dx_b)h_2\phi_{t2}$$

$$-2k_0b^2_0\{\psi_b - \psi_{t1}\} - 2k_0b^2_0\{\psi_b - \psi_{t2}\}$$

$$-2k''_2b^2_2\{\psi_b - \psi_{t1}\} - 2k''_2b^2_2\{\psi_b - \psi_{t2}\}$$

$$+m_bv^2\{(L-dx_b)(R_1^{-1}\cos\phi_{rail1} + R_2^{-1}\cos\phi_{rail2})$$

$$-(L+dx_b)(R_3^{-1}\cos\phi_{rail3} + R_4^{-1}\cos\phi_{rail4})\}/4$$

$$-m_bg\{(L-dx_b)(\sin\phi_{rail1} + \sin\phi_{rail2})$$

$$-(L+dx_b)(\sin\phi_{rail3} + \sin\phi_{rail4})\}/4$$

$$-4Lk''_2b^2_2\left\{\frac{1}{R_1+R_2} - \frac{1}{R_3+R_4}\right\} \qquad \cdots (73)$$

$I_{Bz}$ is a moment of inertia of the vehicle body 11 in the yawing direction. $\phi_b\cdot\cdot$ is angular acceleration of the vehicle body 11 in the yawing direction. $c_0$ is a damping coefficient of the yaw damper in the forward and backward direction. $\phi_{yi}\cdot$ is an angular velocity of the yaw dampers 24a, 24b in the yawing direction, disposed on the bogie 12a or 12b.

• Rolling of vehicle body

The motion equation describing the rolling of the vehicle body 11 is expressed by (74) Equation below.
[Mathematical equation 43]

$$I_{Bx}\ddot{\phi}_b = -2c'_2 h_5 \{\dot{y}_b - dx_b\dot{\psi}_b + h_5\dot{\phi}_b\} + c'_2 h_5 [\{\dot{y}_{t1} + \dot{y}_{t2}\} - h_4\{\dot{\phi}_{t1} + \dot{\phi}_{t2}\}]$$

$$-4k'_2 h_3 \{y_b - dx_b\psi_b + h_3\phi_b\} + 2k'_2 h_3 [\{y_{t1} + y_{t2}\} - h_2\{\phi_{t1} + \phi_{t2}\}]$$

$$-2k_3 b_2^2 \{\phi_b - \phi_{t1}\} - 2k_3 b_2^2 \{\phi_b - \phi_{t2}\}$$

$$+2k_2 b_2^2 \{\phi_b - \phi_{a1}\} - 2k_2 b_2^2 \{\phi_b - \phi_{a2}\} = 0 \qquad \cdots \quad (74)$$

$\ddot{\phi}_b$ is angular acceleration of the vehicle body 11 in the rolling direction.

The vehicle information acquisition part 3002 performs the numerical analysis based on the above (1) Equation to (5) Equation, (56) Equation to (59) Equation, and (72) Equation to (74) Equation, to thereby derive $\phi_{tj}$ (the rotation amount (angular displacement) of the bogie 12a or 12b in the yawing direction), $\phi_{wi}$ (the pivot amount (angular displacement) of each of the wheel sets 13a to 13d in the yawing direction), $\phi_{tj}\cdot$ (the angular velocity of the bogie 12a or 12b in the yawing direction), and $\phi_{wi}\cdot$ (the angular velocity of each of the wheel sets 13a to 13d in the yawing direction) at the predetermined sampling period. At this time, the vehicle information acquisition part 3002 uses, as $1/R_i$, $1/R_i\cdot$, $y_{Ri}$, and $\phi_{raili}$ at a certain sampling period, those acquired at the sampling period by the track information acquisition part 3001. Further, as the constant such as $K_{wx}$, a value in the normal railway vehicle is used. The normal railway vehicle means the same one as described in the first reference example. Note that the method of solving the motion equation based on the numerical analysis can be realized by the publicly-known technique. Therefore, detailed explanation regarding the method of solving the motion equation based on the numerical analysis will be omitted here.

[Spring constant derivation part 3003]

The spring constant derivation part 3003 substitutes "$1/R_i$ (the curvature of rails 20a, 20b at the position of each of the wheel sets 13a, 13b, 13c, 13d) and $1/R_i\cdot$ (the time differential value of the curvature of the rails 20a, 20b at the position of each of the wheel sets 13a, 13b, 13c, 13d)" acquired by the track information acquisition part 3001, "$T_i$ (the forward-and-backward direction force), $\phi_{tj}$ (the rotation amount (angular displacement) of the bogie 12a or 12b in the yawing direction), $\phi_{wi}$ (the pivot amount (angular displacement) of each of the wheel sets 13a to 13d in the yawing direction), $\phi_{tj}\cdot$ (the angular velocity of the bogie 12a or 12b in the yawing direction), and $\phi_{wi}\cdot$ (the angular velocity of each of the wheel sets 13a to 13d in the yawing direction)" acquired by the vehicle information acquisition part 3002, and "a (1/2 of each distance between the wheel sets 13a and 13b and between the wheel sets 13c and 13d in the forward and backward direction, which are provided on the bogies 12a, 12b), $b_1$ (the length of 1/2 of the interval between the axle box suspensions 18a and 18b in the right and left direction), and $C_{wx}$ (the damping coefficient of the axle box suspensions 18a, 18b in the forward and backward direction)" previously stored in the inspection apparatus 300, into (71) Equation to derive $K_{wx}$ (the spring constant of the axle box suspensions 18a, 18b in the forward and backward direction), which is performed every time the predetermined sampling period arrives. Note that in the linear rail, each of $1/R_i$ (the curvature of rails 20a, 20b at the position of each of the wheel sets 13a to 13d) and $1/R_i\cdot$ (the time differential value of the curvature of the rails 20a, 20b at the position of each of the wheel sets 13a to 13d) becomes "0".

Here, it can be assumed that the value of $K_{wx}$ (the spring constant of the axle box suspensions 18a, 18b in the forward and backward direction) is not stabilized and the value of denominator in (71) Equation has both a positive value and a negative value with "0" sandwiched therebetween (namely, the value fluctuates). In this case, when the value of denominator in (71) Equation is "0", so-called division by zero is performed. For this reason, the value of $K_{wx}$ (the spring constant of the axle box suspensions 18a, 18b in the forward and backward direction) becomes extremely large or small. When calculation is performed as a continuous value (when discretization (numerical analysis) is not performed), divergence of $K_{wx}$ occurs. Accordingly, in the present embodiment, when the value of $K_{wx}$ (the spring constant of the axle box suspensions 18a, 18b in the forward and backward direction) derived as described above is greater than an upper limit value, the spring constant derivation part 3003 sets the value of $K_{wx}$ (the spring constant of the axle box suspensions 18a, 18b in the forward and backward direction) to the upper limit value. When the value of $K_{wx}$ (the spring constant of the axle box suspensions 18a, 18b in the forward and backward direction) derived as described above is lower than a lower limit value, the spring constant derivation part 3003 sets the value of $K_{wx}$ (the spring constant of the axle box suspensions 18a, 18b in the forward and backward direction) to the lower limit value. In the present embodiment, the upper limit value (= $bK_{wx}\text{-}$) and the lower limit value (= $aK_{wx}\text{-}$) are determined as in (75) Equation below, by setting a, b (> a) to real numbers of 0 or more.

[Mathematical equation 44]

$$a\overline{K}_{wx} \leq K_{wx} \leq b\overline{K}_{wx} \qquad \cdots \quad (75)$$

$K_{wx}$- corresponds to $K_{wx}$ in (75) Equation in which - is added above K. $K_{wx}$- is a spring constant of the axle box suspensions 18a, 18b in the forward and backward direction in the normal railway vehicle ($K_{wx}$ which is set when performing the above-described numerical analysis). For example, "0.5" can be previously set as the coefficient a, and "1.5" can be previously set as the coefficient b. In the following explanation, $K_{wx}$ (the spring constant of the axle box suspensions 18a, 18b in the forward and backward direction) derived by the spring constant derivation part 3003 is abbreviated as a spring constant $K_{wx}$ according to need.

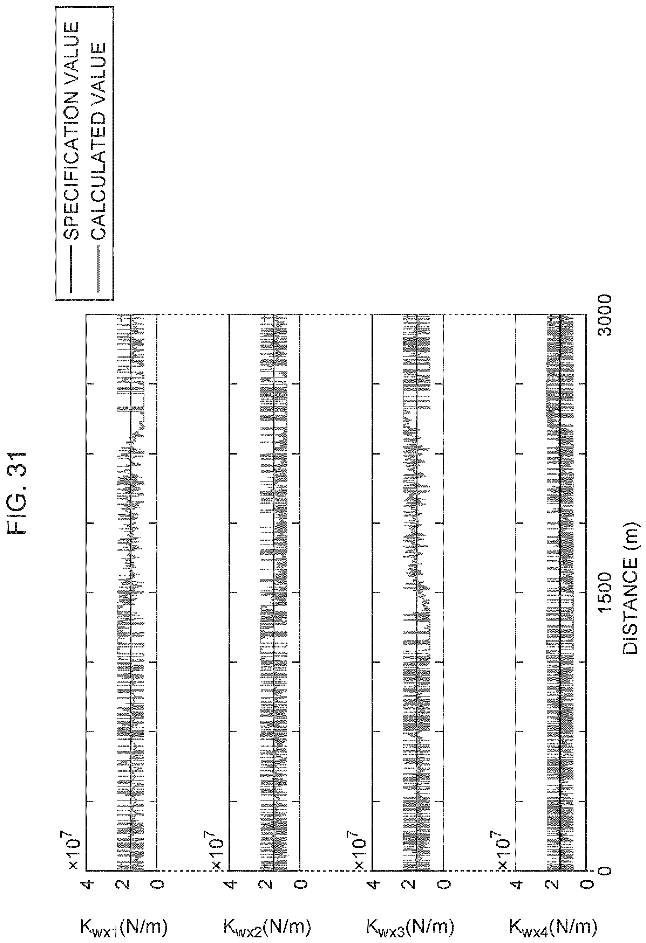

Fig. 31 is a view illustrating one example of spring constants $K_{wx}$ (time-series data of the spring constants $K_{wx}$) at each position in the inspection zone illustrated in Fig. 28. In Fig. 31, $K_{wx1}$, $K_{wx2}$, $K_{wx3}$, $K_{wx4}$ indicate the spring constants $K_{wx}$ in the axle box suspension with respect to the wheel sets 13a, 13b, 13c, 13d, respectively. The calculated values illustrated in Fig. 31 are results of simulation of the spring constants $K_{wx}$ obtained based on the result of simulation regarding the measured values of the forward-and-backward direction forces $T_1$ to $T_4$ when the railway vehicle is assumed to be normal in Fig. 29 (the graph of normal in Fig. 29), and the result obtained by performing the above-described numerical analysis by assuming that the railway vehicle is normal. When obtaining the calculated values illustrated in Fig. 31, the coefficients a, b were set to "0.5" and "1.5", respectively. Further, a specification value illustrated in Fig. 31 indicates the spring constant of the axle box suspensions 18a, 18b in the forward and backward direction in the normal railway vehicle ($K_{wx}$ which is set when performing the above-described numerical analysis).

[Frequency component adjustment part 3004]

As illustrated in Fig. 31, it can be assumed that the time-series data of the spring constant $K_{wx}$ is not stabilized, and the time-series data of the spring constant $K_{wx}$ includes a noise component other than a component (essential component) that contributes to determine whether or not the railway vehicle is normal. Accordingly, the frequency component adjustment part 3004 removes the noise component of the spring constant $K_{wx}$ derived by the spring constant derivation part 3003 to extract the essential frequency component of the spring constant $K_{wx}$. Although the frequency component adjustment part 3004 can remove the noise component of the spring constant $K_{wx}$ by using a low-pass filter or a band-pass filter, it is not easy to set a cutoff frequency.

Accordingly, the present inventors came up with an idea to extract the essential signal component from the time-series data of the spring constant $K_{wx}$ by using the corrected AR model described in the second embodiment. As described in the second embodiment, the model of calculating the predicted value $y^{\wedge}_k$ of the physical quantity at the time k through (28) Equation by using the coefficient $\alpha$ determined by (40) Equation, is "the corrected AR model".

The number s of eigenvalues to be extracted from the autocorrelation matrix R illustrated in (36) Equation can be decided from the distribution of eigenvalues of the autocorrelation matrix R, for example.

Here, the physical quantity in the explanation of the corrected AR model described above corresponds to the spring constant $K_{wx}$. The value of the spring constant $K_{wx}$ fluctuates according to the state of the railway vehicle. Accordingly, the railway vehicle is first made to travel on the track 20, to obtain data y regarding the spring constant $K_{wx}$. For each of the obtained data y, the autocorrelation matrix R is determined by using (32) Equation and (34) Equation. The singular value decomposition expressed by (35) Equation is performed on the autocorrelation matrix R, to thereby derive eigenvalues of the autocorrelation matrix R.

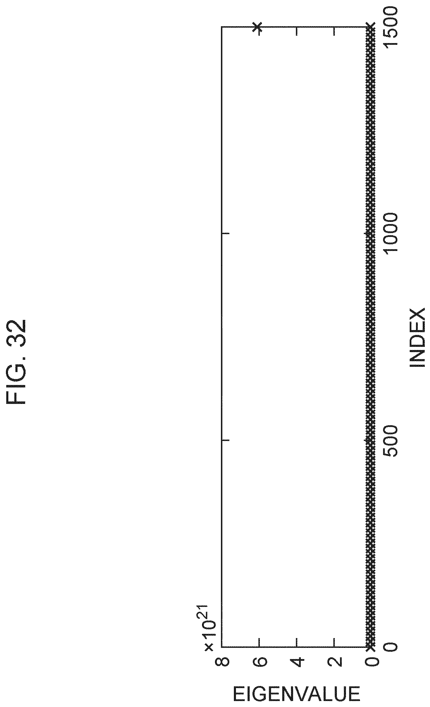

Fig. 32 is a view illustrating one example of the distribution of eigenvalues of the autocorrelation matrix R. In Fig. 32, eigenvalues $\sigma_{11}$ to $\sigma_{mm}$ obtained by performing singular value decomposition on the autocorrelation matrix R regarding each of the data y of the spring constant $K_{wx}$ in the axle box suspensions 18a, 18b with respect to the wheel set 13a, are rearranged in the ascending order and plotted. In Fig. 32, a horizontal axis indicates an index of eigenvalue, and a vertical axis indicates a value of eigenvalue. Note that m in (28) Equation was set to 1500 in this case. Further, the sampling period was set to 0.002 s.

In the example illustrated in Fig. 32, there is only one eigenvalue having significantly high value when compared to the other values. Based on this, it is possible to employ 1, for example, as the number s of eigenvalue to be extracted from the autocorrelation matrix R illustrated in (36) Equation. Other than the above, it is also possible to extract an eigenvalue which is greater than a threshold value, for example.

The frequency component adjustment part 3004 performs, every time the sampling period arrives, the following processing by using the value $y_k$ of the data y of the spring constant $K_{wx}$ at the time k (the sampling period).

First, based on the data y of the spring constant $K_{wx}$ and preset numbers M, m, the frequency component adjustment part 3004 generates the autocorrelation matrix R by using (32) Equation and (34) Equation.

Next, the frequency component adjustment part 3004 performs singular value decomposition on the autocorrelation matrix R to derive the orthogonal matrix U and the diagonal matrix $\Sigma$ of (35) Equation, and derives the eigenvalues $\sigma_{11}$ to $\sigma_{mm}$ of the autocorrelation matrix R from the diagonal matrix $\Sigma$.

Next, the frequency component adjustment part 3004 selects, among the plural eigenvalues $\sigma_{11}$ to $\sigma_{mm}$ of the autocorrelation matrix R, s pieces of the eigenvalues $\sigma_{11}$ to $\sigma_{ss}$ as the eigenvalues of the autocorrelation matrix R to be used for deriving the coefficient $\alpha$ of the corrected AR model. As described above, in the present embodiment, the frequency component adjustment part 3004 selects, among the plural eigenvalues $\sigma_{11}$ to $\sigma_{mm}$ of the autocorrelation matrix R, the largest eigenvalue $\sigma_{11}$ as the eigenvalue of the autocorrelation matrix R to be used for deriving the coefficient $\alpha$ of the corrected AR model.

Next, based on the data y of the spring constant $K_{wx}$, the eigenvalue $\sigma_{11}$, and the orthogonal matrix U obtained by the singular value decomposition of the autocorrelation matrix R, the frequency component adjustment part 3004 decides the coefficient $\alpha$ of the corrected AR model by using (40) Equation.

Subsequently, the frequency component adjustment part 3004 derives the predicted value $y^{\wedge}_k$ of the data y of the spring constant $K_{wx}$ at the time k by using (28) Equation, based on the coefficient $\alpha$ of the corrected AR model, and (an actual value of) the data y of the spring constant $K_{wx}$. The data y of the spring constant $K_{wx}$ is corrected in a manner as described above. In the following explanation, the spring constant $K_{wx}$ corrected by the frequency component adjustment part 3004 in a manner as described above, is referred to as a corrected spring constant $K_{wx}$ according to need.

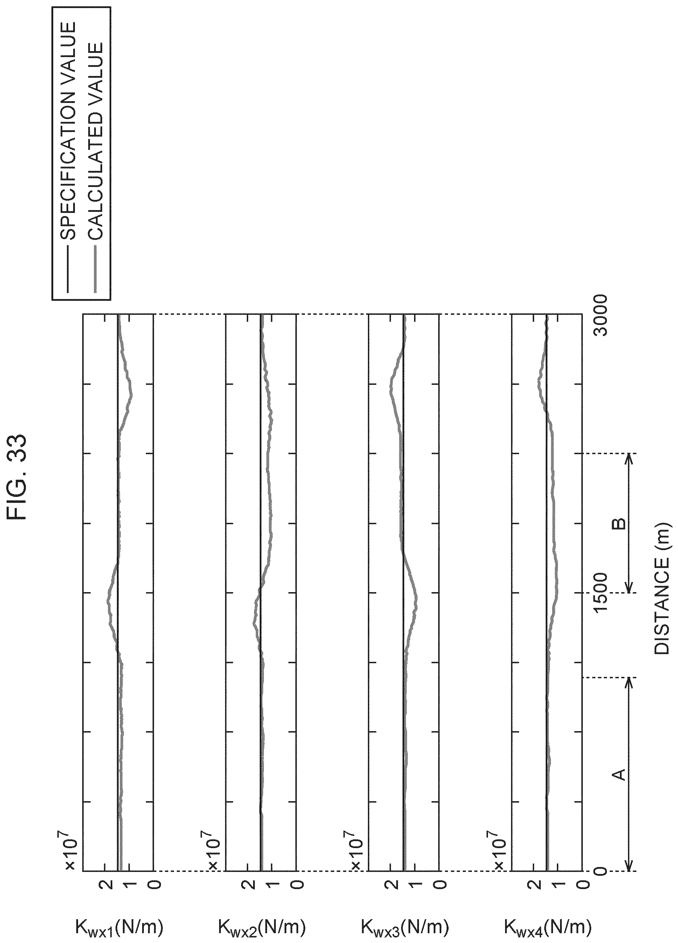

Each of Fig. 33 to Fig. 35 is a view illustrating one example of the corrected spring constants $K_{wx}$ (time-series data of the corrected spring constants $K_{wx}$) at respective positions in the inspection zone illustrated in Fig. 28. In Fig. 33 to Fig. 35, $K_{wx1}$, $K_{wx2}$, $K_{wx3}$, $K_{wx4}$ indicate corrected spring constants $K_{wx}$ in the axle box suspensions 18a, 18b with respect to the wheel sets 13a, 13b, 13c, 13d, respectively.

The calculated values illustrated in Fig. 33 indicate time-series data of the corrected spring constants $K_{wx}$ obtained from the spring constants $K_{wx}$ derived by using the result of simulation regarding the measured values of the forward-and-backward direction forces $T_1$ to $T_4$ when the railway vehicle is assumed to be normal (the graph of normal in Fig. 29).

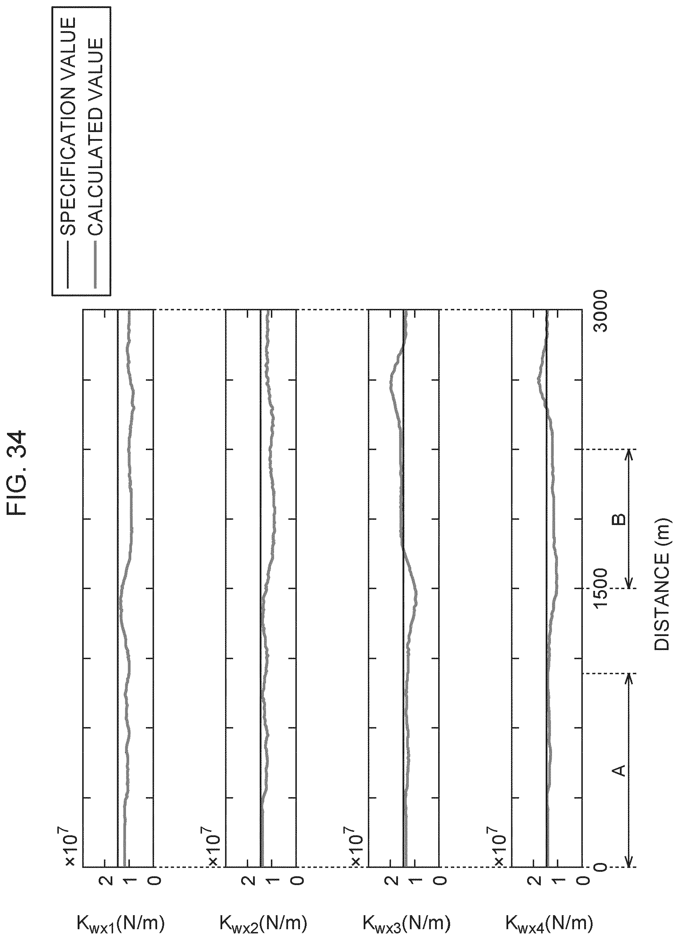

The calculated values illustrated in Fig. 34 indicate time-series data of the corrected spring constants $K_{wx}$ obtained from the spring constants $K_{wx}$ derived by using the result of simulation regarding the measured values of the forward-and-backward direction forces $T_1$ to $T_4$ when the stiffness of the axle box suspension 18a of the wheel set 13a in the forward and backward direction is assumed to deteriorate (the graph of breakdown in Fig. 29).

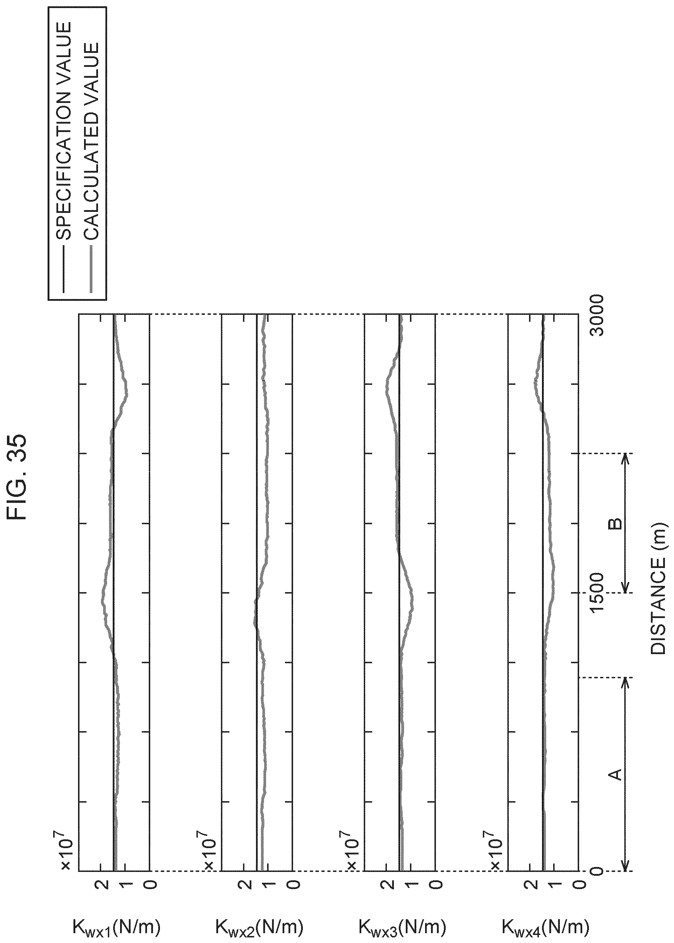

The calculated values illustrated in Fig. 35 indicate time-series data of the corrected spring constants $K_{wx}$ obtained from the spring constants $K_{wx}$ derived by using the result of simulation regarding the measured values of the forward-and-backward direction forces $T_1$ to $T_4$ when the stiffness of the axle box suspension 18b of the wheel set 13b in the forward and backward direction is assumed to deteriorate.

When obtaining the calculated values illustrated in each of Fig. 33 to Fig. 35, the coefficients a, b were set to "0.5" and "1.5", respectively. Further, a specification value illustrated in each of Fig. 33 to Fig. 35 indicates the spring constant of the axle box suspensions 18a, 18b in the forward and backward direction in the normal railway vehicle ($K_{wx}$ which is set when performing the above-described numerical analysis).

As illustrated in Fig. 33, it can be understood that when the railway vehicle is normal, in the zone A of the linear rail and the zone B of the curved rail whose curvature is constant, the corrected spring constant $K_{wx1}$ in the axle box suspension 18a with respect to the wheel set 13a and the specification value substantially match, and the corrected spring constant $K_{wx3}$ in the axle box suspension 18a with respect to the wheel set 13c and the specification value substantially match.

On the other hand, as illustrated in Fig. 34, it can be understood that when the stiffness of the axle box suspension 18a with respect to the wheel set 13a in the forward and backward direction deteriorates, the corrected spring constant $K_{wx1}$ in the axle box suspension 18a is greatly lowered relative to the specification value in the zone A of the linear rail and the zone B of the curved rail whose curvature is constant.

Further, as illustrated in Fig. 35, it can be understood that when the stiffness of the axle box suspension 18b with respect to the wheel set 13b in the forward and backward direction deteriorates, the corrected spring constant $K_{wx2}$ in the axle box suspension 18b is greatly lowered relative to the specification value in the zone A of the linear rail and the zone B of the curved rail whose curvature is constant.

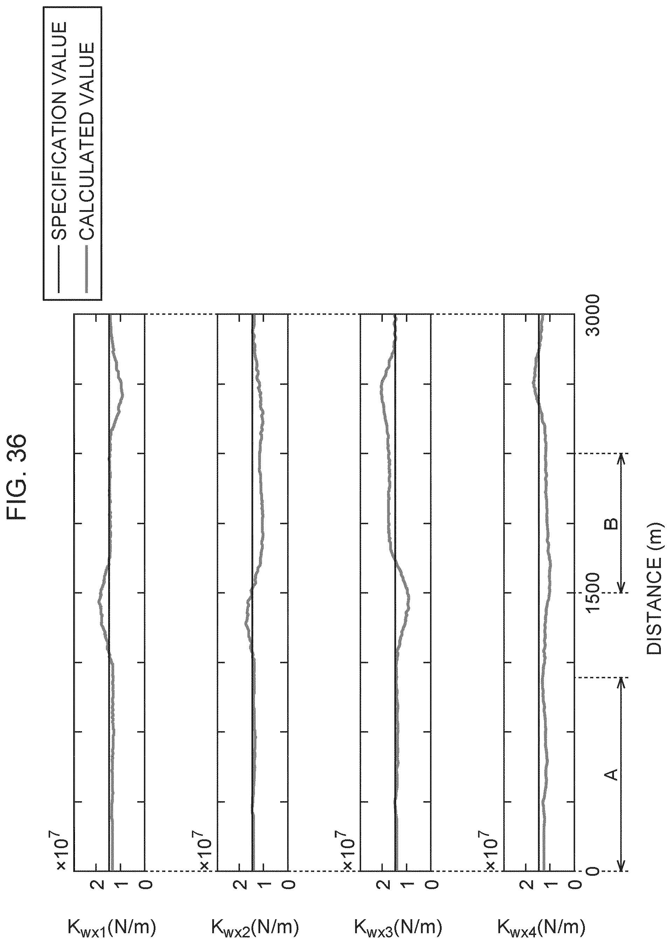

Further, the present inventors examined whether or not the way of deciding the values of coefficients a, b in (75) Equation described above exerts an influence on the calculation result of the corrected spring constant $K_{wx}$. Fig. 36 is a view illustrating one example of the corrected spring constants $K_{wx}$ (time-series data of the corrected spring constants $K_{wx}$) at respective positions in the inspection zone illustrated in Fig. 28, similarly to Fig. 33. When obtaining the calculated value illustrated in Fig. 33, the coefficients a, b were set to "0.5" and "1.5", respectively. On the contrary, when obtaining the calculated value illustrated in Fig. 36, the coefficients a, b were set to "0.0" and "2.0", respectively. The calculated value illustrated in Fig. 33 and the calculated value illustrated in Fig. 36 substantially match. Therefore, it can be said that the values of coefficients a, b do not greatly exert an influence on the calculation result of the corrected spring constant $K_{wx}$. Therefore, it is only required to decide the coefficients a, b so as to include an assumed value of the spring constant $K_{wx}$ (namely, the coefficients a, b have the degree of freedom).

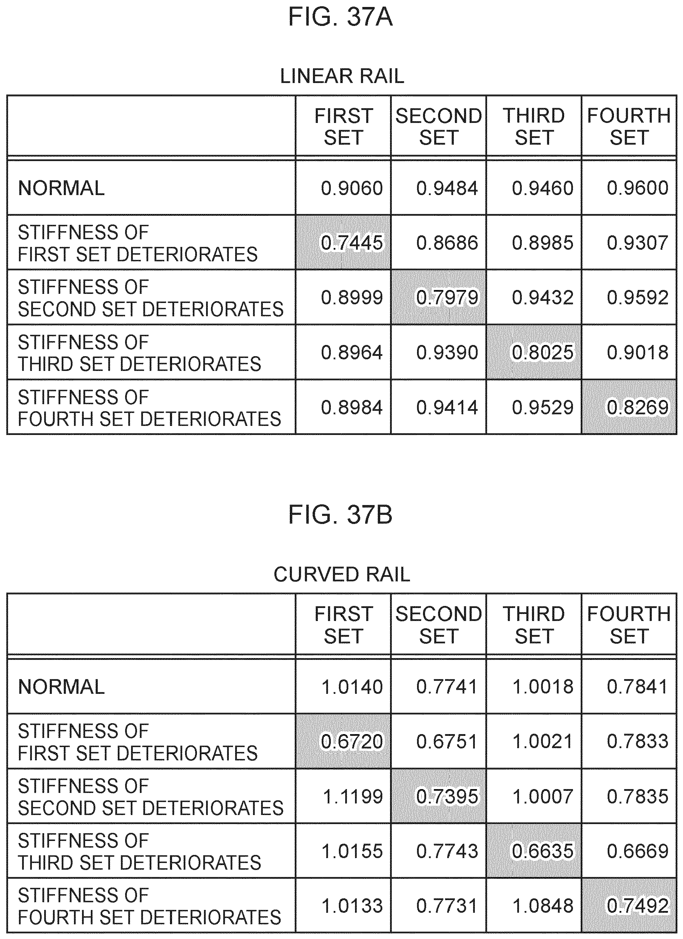

Fig. 37A is a view illustrating, in a form of table, one example of a result of simulation of the corrected spring constants $K_{wx1}$ to $K_{wx4}$ on the linear rail. Fig. 37B is a view illustrating, in a form of table, one example of a result of simulation of the corrected spring constants $K_{wx1}$ to $K_{wx4}$ on the curved rail.

A value indicated in each column in Fig. 37A is a value of each of the corrected spring constants $K_{wx1}$ to $K_{wx4}$ when the specification value is set to "1", in the zone A of the linear rail. A value indicated in each column in Fig. 37B is a value of each of the corrected spring constants $K_{wx1}$ to $K_{wx4}$ when the specification value is set to "1", in the zone B of the curved rail whose curvature is constant. The specification value is the spring constant of the axle box suspensions 18a, 18b in the forward and backward direction in the normal railway vehicle ($K_{wx}$ which is set when performing the above-described numerical analysis).

In Fig. 37A and Fig. 37B, "first set", "second set", "third set", "fourth set" indicate the corrected spring constants $K_{wx1}$, $K_{wx2}$, $K_{wx3}$, $K_{wx4}$ in the axle box suspensions 18a, 18b with respect to the wheel sets 13a, 13b, 13c, 13d, respectively.

In Fig. 37A and Fig. 37B, "normal" indicates values of the corrected spring constants $K_{wx}$ obtained from the spring constants $K_{wx}$ derived by using the result of simulation regarding the measured values of the forward-and-backward direction forces $T_1$ to $T_4$ when the railway vehicle is assumed to be normal (the graph of normal in Fig. 29).

In Fig. 37A and Fig. 37B, "stiffness of first set deteriorates" indicates the values of the corrected spring constants $K_{wx}$ obtained from the spring constants $K_{wx}$ derived by using the result of simulation regarding the measured values of the forward-and-backward direction forces $T_1$ to $T_4$ when the stiffness of the axle box suspensions 18a, 18b with respect to the wheel set 13a in the forward and backward direction is assumed to deteriorate. Similarly, "stiffness of second set deteriorates", "stiffness of third set deteriorates", "stiffness of fourth set deteriorates", indicate the values of the corrected spring constants $K_{wx}$ obtained from the spring constants $K_{wx}$ derived by using the result of simulation regarding the measured values of the forward-and-backward direction forces $T_1$ to $T_4$ when the stiffness of the axle box suspensions 18a, 18b with respect to the wheel sets 13b, 13c, 13d in the forward and backward direction are assumed to deteriorate, respectively.

As illustrated in Fig. 37A, it can be understood that in the zone A of the linear rail, even if the stiffness of the axle box suspensions 18a, 18b with respect to any of the wheel sets 13a, 13b, 13c, 13d in the forward and backward direction deteriorates, the value of the corrected spring constant $K_{wx}$ is greatly lowered relative to the value of "normal" (refer to the column whose background is indicated by gray, and the column of "normal" in Fig. 37A).

Further, as illustrated in Fig. 37B, it can be understood that in the zone B of the curved rail whose curvature is constant, the value of the corrected spring constant $K_{wx}$ is greatly lowered relative to the value of "normal" when the stiffness of the axle box suspension 18a with respect to the front-side wheel sets 13a, 13c of the bogies 12a, 12b in the forward and backward direction deteriorates (refer to the columns whose backgrounds are indicated by gray regarding "first set" and "third set" and the column of "normal" in Fig. 37B).

On the other hand, in the zone B of the curved rail whose curvature is constant, the value of the corrected spring constant $K_{wx}$ is not greatly lowered relative to the value of "normal" when the stiffness of the axle box suspension 18b with respect to the rear-side wheel sets 13b, 13d of the bogies 12a, 12b in the forward and backward direction deteriorates (refer to the columns whose backgrounds are indicated by gray regarding "second set" and "fourth set" and the column of "normal" in Fig. 37B).

During the traveling of the railway vehicle on the curved rail, the wheel sets 13a to 13d of the bogies 12a, 12b move toward the outside on the curved rail. Due to this movement, a wheel diameter difference is generated between the right and left wheels, resulting in that the longitudinal creep force that makes the bogies 12a, 12b turn in a direction along the curved rail, is generated. At this time, the rear-side wheel sets 13b, 13d enter the curved rail after the front-side wheel sets 13a, 13c. Therefore, a movement amount toward the outside of the curved rail of the rear-side wheel sets 13b, 13d becomes smaller than that of the front-side wheel sets 13a, 13c. Therefore, the longitudinal creep force of the rear-side wheel sets 13b, 13d becomes smaller than that of the front-side wheel sets 13a, 13c. In this case, the curvature of the curved rail is small. For this reason, the longitudinal creep force that acts on the rear-side wheel sets 13b, 13d on the curved rail, is almost 0. Consequently, the forward-and-backward direction forces $T_2$, $T_4$ of the rear-side wheel sets 13b, 13d become smaller than the forward-and-backward direction forces $T_1$, $T_3$ of the front-side wheel sets 13a, 13c, in accordance with the reduction in the longitudinal creep force (refer to Fig. 29). Accordingly, it can be considered that the change in the values of the corrected spring constants $K_{wx2}$, $K_{wx4}$ becomes small between the case where the stiffness of the axle box suspension 18b in the forward and backward direction deteriorates and the case where the stiffness does not deteriorate, as illustrated in Fig. 37B.

As described above, the deterioration of the stiffness of the axle box suspension 18a with respect to the wheel sets 13a, 13c in the forward and backward direction can be detected in both the zone of the linear rail and the zone of the curved rail whose curvature is constant. On the other hand, the deterioration of the stiffness of the axle box suspension 18b with respect to the wheel sets 13b, 13d in the forward and backward direction can be detected on the linear rail. If it is possible to detect the deterioration of stiffness of the axle box suspensions 18a, 18b in the forward and backward direction in any of the zones in which the railway vehicle travels, the object of the inspection can be achieved. Generally, the length of the linear rail is larger than that of the curved rail, so that the frequency of detecting whether or not the stiffness of the axle box suspension 18b with respect to the wheel sets 13b, 13d in the forward and backward direction deteriorates, is never lowered greatly.

[Determination part 3005, storage unit 302]

The determination part 3005 determines, every time the corrected spring constant $K_{wx}$ is derived by the frequency component adjustment part 3004 at each sampling period, whether or not the stiffness of the axle box suspensions 18a, 18b in the forward and backward direction deteriorates, based on the result of comparison between the corrected spring constant $K_{wx}$ and the reference value. In the present embodiment, the storage unit 302 stores the reference value.

In the present embodiment, by performing the processing of the track information acquisition part 3001, the vehicle information acquisition part 3002, the spring constant derivation part 3003, and the frequency component adjustment part 3004 described above, values of the corrected spring constants $K_{wx}$ with respect to the respective wheel sets 13a to 13d when the railway vehicle is normal, are previously derived. The storage unit 302 previously stores the values of the corrected spring constants $K_{wx}$ with respect to the respective wheel sets 13a to 13d when the railway vehicle is normal, as the reference values with respect to the respective wheel sets 13a to 13d. The normal railway vehicle means the same one as described in the first reference example. Subsequently, when the corrected spring constant $K_{wx}$ with respect to a certain wheel set is derived by the frequency component adjustment part 3004, the determination part 3005 derives a value which is obtained by dividing the corrected spring constant $K_{wx}$ with respect to the wheel set by the reference value with respect to the wheel set. The determination part 3005 determines whether or not the derived value is lower than a threshold value.

When, as a result of this determination, the value which is obtained by dividing the corrected spring constant $K_{wx}$ with respect to the wheel set by the reference value with respect to the wheel set is lower than the threshold value, the determination part 3005 determines that the stiffness of the axle box suspension with respect to the wheel set in the forward and backward direction is not normal. On the other hand, when the value which is obtained by dividing the corrected spring constant $K_{wx}$ with respect to the wheel set by the reference value with respect to the wheel set is not lower than the threshold value, the determination part 3005 determines that the stiffness of the axle box suspension with respect to the wheel set in the forward and backward direction is normal. The determination part 3005 performs such determination on each of the corrected spring constants $K_{wx1}$ to $K_{wx4}$ with respect to the wheel sets 13a to 13d. The threshold value can be decided based on the result of simulation as illustrated in Fig. 37A and Fig. 37B, for example. For example, a value as a result of dividing a value of "stiffness of first set deteriorates" regarding "first set" by a value of "normal" regarding "first set" is "0.8217 (= 0.7445 ÷ 0.9060)" in Fig. 37A, and is "0.6627 (= 0.6720 ÷ 1.0140)" in Fig. 37B. Therefore, in order to make it possible to detect whether or not the stiffness of the axle box suspension 18a with respect to the wheel set 13a in the forward and backward direction deteriorates in both the zone of the linear rail and the zone of the curved rail whose curvature is constant, it is possible to decide the threshold value with respect to the value which is obtained by dividing the corrected spring constant $K_{wx1}$ with respect to the wheel set 13a by the reference value with respect to the wheel set 13a, in a range of "0.85 to 0.90". Note that the threshold value may be different between the linear rail and the curved rail.

The determination part 3005 performs the above-described determination every time the sampling period arrives.

Note that the method of determination performed by the determination part 3005 is not limited to the above-described method as long as the corrected spring constant $K_{wx}$ and the reference value are compared. For example, the reference values with respect to the respective wheel sets 13a to 13d may be set to specification values. Further, it is also possible to design such that the determination part 3005 does not determine whether or not the values which are obtained by dividing the corrected spring constants $K_{wx2}$, $K_{wx4}$ with respect to the wheel sets 13b, 13d by the reference values with respect to the wheel sets, are lower than the threshold value, on the curved rail.

[Output unit 304]

The output unit 304 outputs information indicating the result determined by the determination part 3005. Concretely, when the determination part 3005 determines that the stiffness of the axle box suspensions 18a, 18b in the forward and backward direction is not normal, the output unit 304 outputs information indicating that. At this time, the output unit 304 also outputs information indicating the axle box suspension whose stiffness in the forward and backward direction is not normal. As a form of output, it is possible to employ at least any one of displaying the information on a computer display, transmitting the information to an external device, and storing the information in an internal or external storage medium, for example.

(Flowchart)

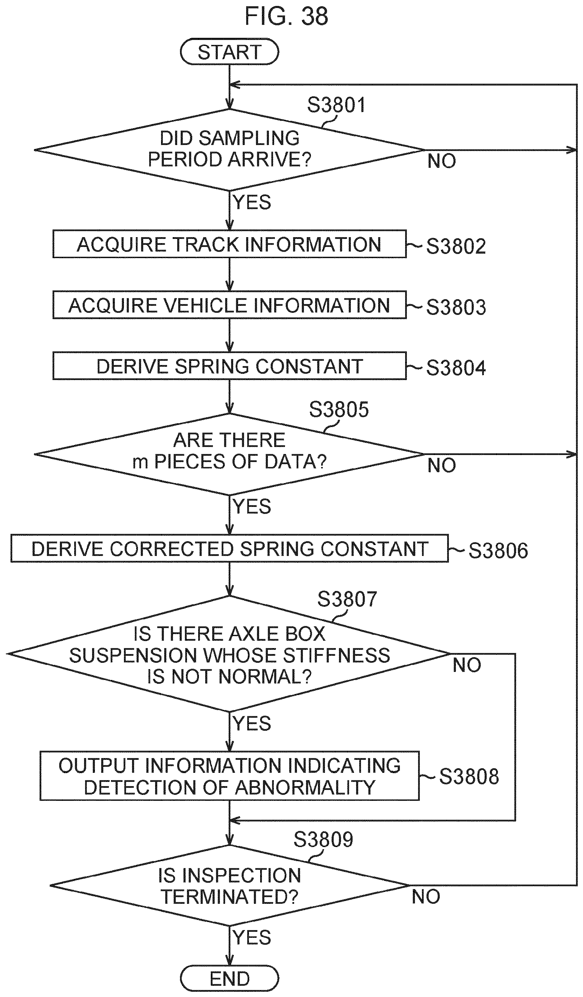

Next, one example of processing performed by the inspection apparatus 300 of the present embodiment will be described while referring to a flowchart in Fig. 38. Note that before starting the flowchart in Fig. 38, the normal railway vehicle is made to travel in a predetermined zone (for example, a commercial zone (a zone from a starting station to a terminal station)), to execute the processing of steps S3801 to S3806. By the processing, the values of the corrected spring constants $K_{wx}$ with respect to the respective wheel sets 13a to 13d when the railway vehicle is normal are derived. The storage unit 302 stores the values of the corrected spring constants $K_{wx}$ with respect to the respective wheel sets 13a to 13d when the railway vehicle is normal, as the reference values with respect to the respective wheel sets 13a to 13d. It is set that the flowchart in Fig. 38 is executed during when the railway vehicle is made to travel in the predetermined zone after finishing the storage in the storage unit 302. Further, the track information such as the curvature of the rails 20a, 20b at respective positions in the predetermined zone, the alignment irregularity amount, and the cant angle, and the information (the constants in (1) Equation to (5) Equation, (56) Equation to (59) Equation, and (72) Equation to (74) Equation, and so on) required for the processing according to the flowchart in Fig. 38 are also set to be stored in the inspection apparatus 300 before starting the flowchart in Fig. 38.

In step S3801, the inspection apparatus 300 waits until when (a start time of) the predetermined sampling period arrives. When (the start time of) the predetermined sampling period arrives, the processing proceeds to step S3802. When the processing proceeds to step S3802, the track information acquisition part 3001 acquires track information at the current sampling period. The track information includes $1/R_i$ (the curvature of rails 20a, 20b at the position of each of the wheel sets 13a to 13d), $1/R_i \cdot$ (the time differential value of the curvature of the rails 20a, 20b at the position of each of the wheel sets 13a to 13d), $y_{Ri}$ (the alignment irregularity amount at the position of each of the wheel sets 13a to 13d), and $\phi_{raili}$ (the cant angle of the rails 20a, 20b at the position of each of the wheel sets 13a to 13d).

Next, in step S3803, the vehicle information acquisition part 3002 acquires vehicle information at the current sampling period. The vehicle information includes $T_i$ (the forward-and-backward direction force), $\phi_{tj}$ (the rotation amount (angular displacement) of the bogie 12a or 12b in the yawing direction), $\phi_{wi}$ (the pivot amount (angular displacement) of each of the wheel sets 13a to 13d in the yawing direction), $\phi_{tj} \cdot$ (the angular velocity of the bogie 12a or 12b in the yawing direction), and $\phi_{wi} \cdot$ (the angular velocity of each of the wheel sets 13a to 13d in the yawing direction).

Next, in step S3804, the spring constant derivation part 3003 derives the spring constant $K_{wx}$ at the current sampling period based on (71) Equation and (75) Equation, by using the track information acquired in step S3802 and the vehicle information acquired in step S3803.

Next, in step S3805, the inspection apparatus 300 determines whether or not the number of spring constants $K_{wx}$ is m (1500, for example) or more. When, as a result of this determination, the number of spring constants $K_{wx}$ is not m or more, pieces of data for deriving the corrected spring constant $K_{wx}$ are not gathered, so that the processing returns to step S3801. Subsequently, processing for deriving a spring constant $K_{wx}$ at the next sampling period is performed.

On the other hand, when the number of spring constants $K_{wx}$ is m or more, the processing proceeds to step S3806. When the processing proceeds to step S3806, the frequency component adjustment part 3004 generates the autocorrelation matrix R based on the data y of m pieces of corrected spring constants $K_{wx}$ (refer to (32) Equation and (34) Equation). The frequency component adjustment part 3004 performs singular value decomposition on the autocorrelation matrix R, to thereby derive the orthogonal matrix U and the diagonal matrix $\Sigma$ (refer to (35) Equation). The frequency component adjustment part 3004 derives the eigenvalues $\sigma_{11}$ to $\sigma_{mm}$ of the autocorrelation matrix R from the diagonal matrix $\Sigma$, and selects the largest eigenvalue $\sigma_{11}$. The frequency component adjustment part 3004 decides the coefficient $\alpha$ of the corrected AR model based on the data y of the spring constant $K_{wx}$, the eigenvalue $\sigma_{11}$, and the orthogonal matrix U obtained by the singular value decomposition of the autocorrelation matrix R (refer to (40) Equation). The frequency component adjustment part 3004 derives the predicted value $y^\wedge_k$ of the data y of the spring constant $K_{wx}$ at the current sampling period (time k) as the corrected spring constant $K_{wx}$, based on the coefficient $\alpha$ of the corrected AR model and (an actual value of) the data y of the spring constant $K_{wx}$ (refer to (28) Equation).

Next, in step S3807, the determination part 3005 determines whether or not a value which is obtained by dividing the corrected spring constant $K_{wx}$ with respect to a certain wheel set by the reference value with respect to the wheel set is lower than the threshold value, for each of the corrected spring constants $K_{wx}$ with respect to the wheel sets 13a to 13d. When, as a result of this determination, the value which is obtained by dividing the corrected spring constant $K_{wx}$ with respect to the certain wheel set by the reference value with respect to the wheel set is lower than the threshold value, the determination part 3005 determines that the stiffness of the axle box suspension with respect to the wheel set in the forward and backward direction is not normal, and in the other case, the determination part 3005 determines that the stiffness of the axle box suspension with respect to the wheel set in the forward and backward direction is normal. When, as a result of the above-described determination, there is no axle box suspension whose stiffness in the forward and backward direction is not normal (when the stiffness of all axle box suspensions 18a, 18b in the forward and backward direction is normal), the processing omits step S3808 and proceeds to step S3809 to be described later.

On the other hand, when there is the axle box suspension whose stiffness in the forward and backward direction is not normal, the processing proceeds to step S3808. When the processing proceeds to step S3808, the output unit 304 outputs information indicating that the stiffness of the axle box suspension in the forward and backward direction is not normal, and information specifying the not-normal axle box suspension.

Next, in step S3809, the inspection apparatus 300 determines whether or not the inspection is terminated. This determination can be made based on whether or not the traveling of the railway vehicle in the predetermined zone is finished. Further, the determination can also be performed based on an input instruction made by an operator with respect to the inspection apparatus 300.

When, as a result of this determination, the inspection is not terminated, the processing returns to step S3801. Subsequently, the processing for determining whether or not the stiffness of the axle box suspensions 18a, 18b in the forward and backward direction is normal is performed at the next sampling period. On the other hand, when the inspection is terminated, the processing according to the flowchart in Fig. 38 is terminated.

(Summary)

As described above, in the present embodiment, the inspection apparatus 300 derives the spring constant $K_{wx}$ of the axle box suspensions 18a, 18b in the forward and backward direction based on the track information ($1/R_i$, $1/R_i\cdot$, $\phi_{raili}$), and the vehicle information ($T_i$, $\phi_{tj}$, $\phi_{wi}$, $\phi_{tj}\cdot$, $\phi_{wi}\cdot$). The inspection apparatus 300 uses the spring constant $K_{wx}$ of the axle box suspensions 18a, 18b in the forward and backward direction to determine whether or not the stiffness of the axle box suspensions 18a, 18b in the forward and backward direction is normal. Therefore, it is possible to correctly determine whether or not the stiffness of the axle box suspensions 18a, 18b in the forward and backward direction is normal.

Further, in the present embodiment, when the value of the spring constant $K_{wx}$ of the axle box suspensions 18a, 18b in the forward and backward direction derived based on the track information ($1/R_i$, $1/R_i\cdot$, $\phi_{raili}$), and the vehicle information ($T_i$, $\phi_{tj}$, $\phi_{wi}$, $\phi_{tj}\cdot$, $\phi_{wi}\cdot$) is greater than the upper limit value, the inspection apparatus 300 sets the value to the upper limit value, and when the value is lower than the lower limit value, the inspection apparatus 300 sets the value to the lower limit value. Therefore, it is possible to further stabilize the value of the spring constant $K_{wx}$ of the axle box suspensions 18a, 18b in the forward and backward direction.

Further, in the present embodiment, the inspection apparatus 300 generates the autocorrelation matrix R from the data y of the spring constant $K_{wx}$ of the axle box suspensions 18a, 18b in the forward and backward direction. The inspection apparatus 300 uses, among the eigenvalues obtained by making the autocorrelation matrix R to be subjected to singular value decomposition, the eigenvalue having the largest value, to thereby decide the coefficient $\alpha$ of the corrected AR model approximating the data y of the spring constant $K_{wx}$ of the axle box suspensions 18a, 18b in the forward and backward direction. Therefore, it is possible to decide the coefficient $\alpha$ so as to be able to emphasize, among the signal components included in the data y of the spring constant $K_{wx}$ of the axle box suspensions 18a, 18b in the forward and backward direction, the signal component that changes depending on whether or not the stiffness of the axle box suspensions 18a, 18b in the forward and backward direction is normal. The inspection apparatus 300 calculates the predicted value $y\hat{}_k$ of the spring constant $K_{wx}$ of the axle box suspensions 18a, 18b in the forward and backward direction at the time k by giving the data y of the spring constant $K_{wx}$ of the axle box suspensions 18a, 18b in the forward and backward direction at the time k-l ($1 \leqq l \leqq m$), which is prior to the time k, to the corrected AR model whose coefficient $\alpha$ is determined in this manner. Accordingly, it is possible to extract the essential signal component from the data y of the spring constant $K_{wx}$ of the axle box suspensions 18a, 18b in the forward and backward direction without estimating a cutoff frequency beforehand. Therefore, it is possible to more correctly determine whether or not the stiffness of the axle box suspensions 18a, 18b in the forward and backward direction is normal.

Further, in the present embodiment, the inspection apparatus 300 derives the vehicle information ($\phi_{tj}$, $\phi_{wi}$, $\phi_{tj}\cdot$, $\phi_{wi}\cdot$) based on the motion equations describing the motions of the railway vehicle during traveling. Therefore, it is possible to easily acquire correct information as information of the rotation amount (angular displacement) and the angular velocity in the yawing direction, which are not easily measured.

(Modified example)

The present embodiment has explained the case, as an example, in which every time it is determined whether or not the value which is obtained by dividing the corrected spring constant $K_{wx}$ with respect to a certain wheel set is divided by the reference value with respect to the wheel set is lower than the threshold value, the information indicating that the stiffness of the axle box suspension in the forward and backward direction is not normal, is output. However, it does not always have to design as above. For example, it is also possible that when the value which is obtained by dividing the corrected spring constant $K_{wx}$ with respect to a certain wheel set is divided by the reference value with respect to the wheel set is continuously lower than the threshold value a predetermined number of times, it is determined that the stiffness of the axle box suspension with respect to the wheel set in the forward and backward direction is not normal, and the information indicating that is output. Further, it is also possible that when a frequency at which the value which is obtained by dividing the corrected spring constant $K_{wx}$ with respect to a certain wheel set is divided by the reference value with respect to the wheel set is lower than the threshold value in all or a part of the inspection zone, exceeds a predetermined value, it is determined that the stiffness of the axle box suspension with respect to the wheel set in the forward and backward direction is not normal, and the information indicating that is output. As these concrete determination conditions, it is only required to select ones by which sufficient determination accuracy can be obtained in view of setting of the threshold value and the track information in the inspection zone. Further, the timing of outputting the information based on the results of these determinations is not limited to the time right after the determinations. For example, the information based on the results of these determinations may be output after the termination of the inspection.

Further, also in the present embodiment, the various modified examples and reference examples explained in the first reference example and second to fourth embodiments can be employed.

<<Sixth embodiment>>

Next, a sixth embodiment will be described. In the first reference example and second to fifth embodiments, the explanation has been made by citing the case, as an example, in which the inspection target member is the component of the railway vehicle. In contrast to this, the present embodiment will be explained by citing a case, as an example, in which the inspection target member is wheels 14a to 14d of the railway vehicle. As described above, the present embodiment and the first reference example and second to fifth embodiments are mainly different in the configuration and the processing based on the limitation of the inspection target member to the wheels 14a to 14d. Therefore, in the explanation of the present embodiment, the same reference numerals and symbols as those added to Fig. 1 to Fig. 38 are added to the same parts as those in the first reference example and second to fifth embodiments, or the like, and their detailed explanations will be omitted.

(Tread slope)

In the present embodiment, the inspection apparatus 300 determines the presence/absence of abnormality of a tread slope, as one example of the presence/absence of abnormality of states of the wheels 14a to 14d. First, the tread slope will be described.

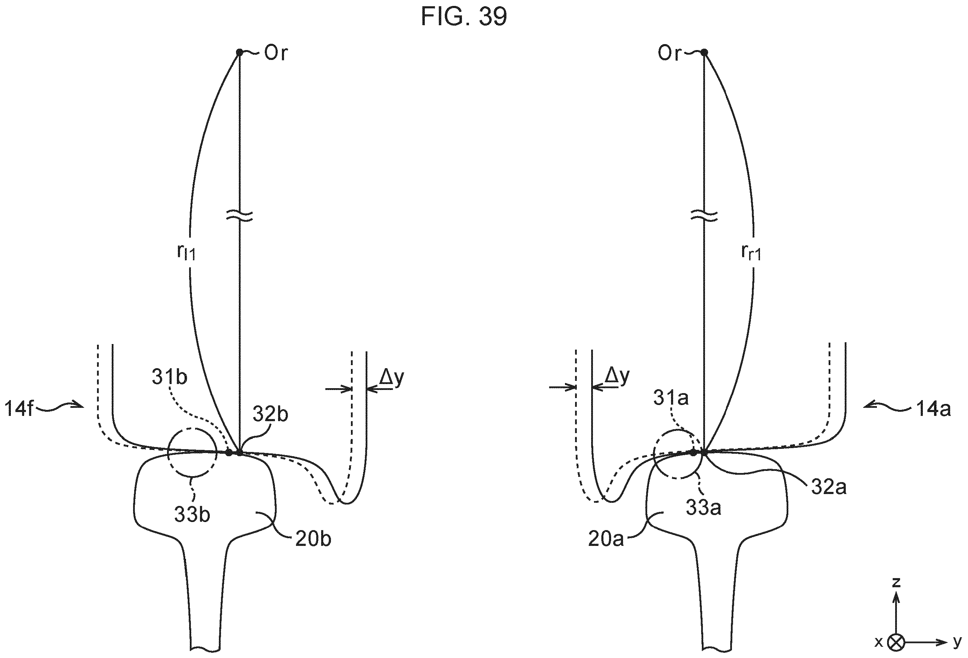

Fig. 39 is a view illustrating one example of the tread slope. Fig. 39 is a view conceptually illustrating a state where the wheels 14a, 14f disposed on the wheel set 13a are brought into contact with the rails 20a, 20b, in the railway vehicle during traveling. In Fig. 39, the wheels 14a, 14f at reference positions are illustrated by a dotted line, and the wheels 14a, 14f during traveling are illustrated by a solid line. For example, when middle positions of the wheels 14a, 14f in the right and left direction (y axis direction) match middle positions of the rails 20a, 20b in the right and left direction (y axis direction), the wheels 14a, 14f are at the reference positions. In this case, the wheels 14a, 14f are brought into contact with the rails 20a, 20b at positions 31a, 31b, respectively.

A displacement between the (predetermined) position of the wheel 14a at the reference position and the position of the wheel 14a during traveling in the right and left direction (y axis direction) and a displacement between the (predetermined) position of the wheel 14f at the reference position and the position of the wheel 14f during traveling in the right and left direction (y axis direction) (a relative displacement between the wheel 14a and the rail 20a, and a relative displacement between the wheel 14f and the rail 20b) are each set to $\Delta y_1$ ($\Delta y_i$). The shortest distance from a center $O_r$ (of a rotation axis) of the wheel 14a (axle 15a) to the contact position 32a of the wheel 14a with respect to the rail 20a (a radius of the wheel 14a) is set to $r_{r1}$ ($r_{ri}$). The shortest distance from a center $O_l$ (of a rotation axis) of the wheel 14f (axle 15a) to the contact position 32b of the wheel 14f with respect to the rail 20b (a radius of the wheel 14f) is set to $r_{l1}$ ($r_{li}$). The tread slope $\gamma_1$ ($\gamma_i$) is set to be expressed by (76) Equation below. Note that as illustrated in Fig. 39, on a y-z plane, the wheel 14a comes into point contact with the rail 20a, and the wheel 14f comes into point contact with the rail 20b.

[Mathematical equation 45]

$$\gamma_i = \frac{r_{ri} - r_{li}}{2\Delta y_i} \qquad \cdots (76)$$

The tread slope $\gamma_1$ ($\gamma_i$) illustrated in (76) Equation takes a value as a result of averaging the tread slope of the wheel 14a and the tread slope of the wheel 14f. Therefore, one tread slope $\gamma_i$ is obtained with respect to each of the wheel sets 13a to 13d ($\gamma_1$ to $\gamma_4$). Specifically, the tread slopes $\gamma_2$ to $\gamma_4$ are obtained with respect to the other wheel sets 13b to 13d (wheels 14b to 14d), similarly to the tread slope $\gamma_1$ with respect to the wheel set 13a (the wheels 14a, 14f). The present embodiment will be described by citing a case, as an example, in which the tread slope is expressed by (76) Equation. Note that the tread slope of each of the wheels 14a to 14f is expressed by $\tan\theta$, when an angle of a tread with respect to a horizontal plane (x-y plane) at each of the contact position of the wheel 14a at the reference position with respect to the rail 20a and the contact position of the wheel 14f at the reference position with respect to the rail 20b is set to $\theta$.

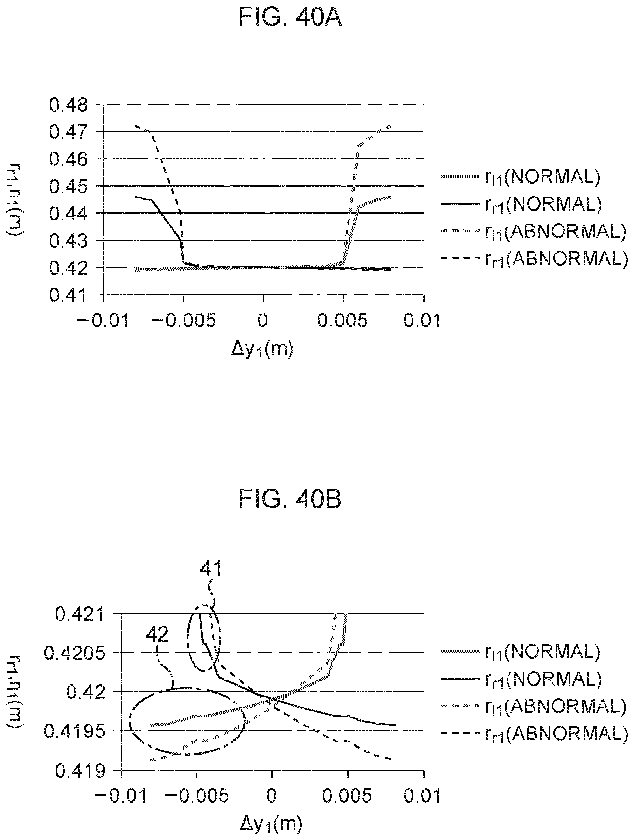

Fig. 40A is a view illustrating one example of a relation between the radii $r_{r1}$, $r_{l1}$ of the wheels 14a, 14f, and the

relative displacement $\Delta y_1$ between the wheel 14a and the rail 20a and between the wheel 14f and the rail 20b. Fig. 40B is a view illustrating, in an enlarged manner, a part of Fig. 40A. Note that the radii $r_{r1}$, $r_{l1}$ of the wheels 14a, 14f, and the relative displacement $\Delta y_1$ between the wheel 14a and the rail 20a and between the wheel 14f and the rail 20b, are those described while referring to Fig. 39. In Fig. 40A and Fig. 40B, normal indicates that each of the tread slopes $\gamma_i$ has a normal value (design value). Abnormal indicates that each of the tread slopes $\gamma_i$ has a value twice the normal value (design value). Circles 41, 42 indicated by a dot and dash line illustrated in Fig. 40B indicate graphs at positions of circles 33a, 33b, respectively, indicated by a dot and dash line illustrated in Fig. 39. As illustrated in Fig. 40B, generally, when the tread slope becomes large, abrasion of the wheel occurs, and thus the radius of the wheel becomes small according thereto. However, since a flange part of the wheel is angled, the radius of the wheel at the flange part becomes large.

(Findings)

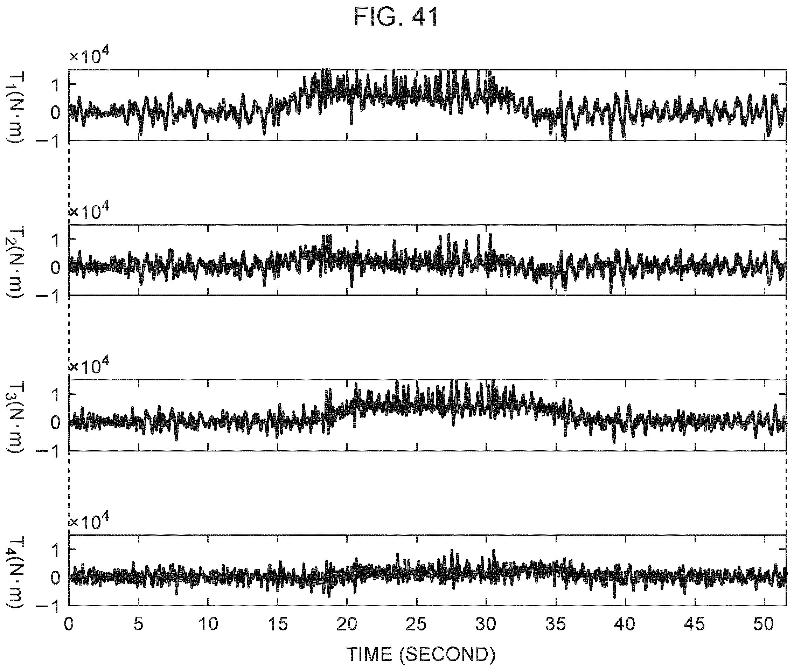

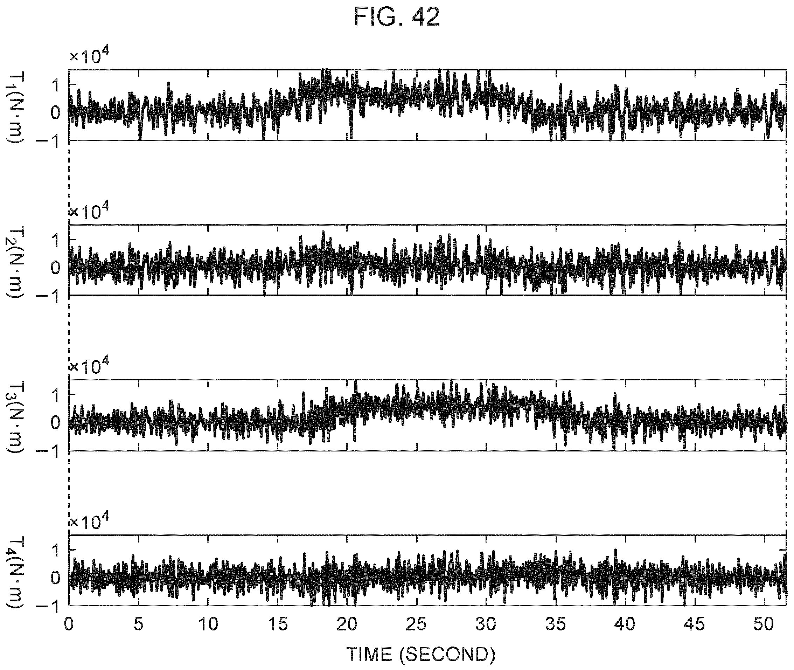

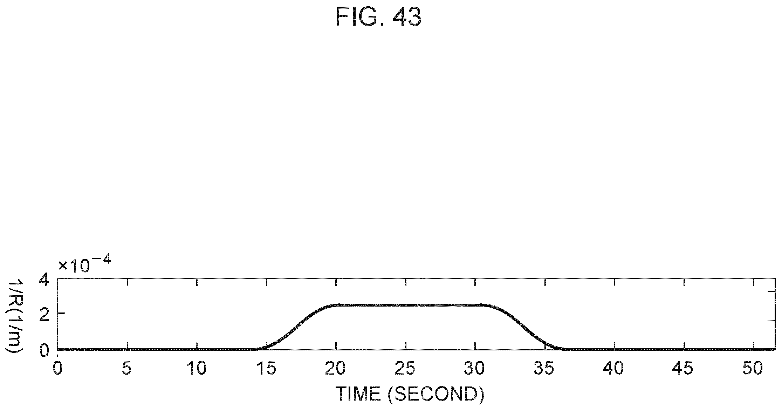

Fig. 41 is a view illustrating one example of time-series data of measured values of forward-and-backward direction forces $T_1$ to $T_4$ when the tread slope $\gamma_i$ has a normal value (a design value, for example). Fig. 42 is a view illustrating one example of time-series data of measured values of forward-and-backward direction forces $T_1$ to $T_4$ when a value of each tread slope $\gamma_i$ is twice the normal value (the design value, for example). Fig. 43 is a view illustrating one example of the curvature 1/R of the rails 20a, 20b. The time-series data of the measured values of the forward-and-backward direction forces $T_1$ to $T_4$ illustrated in each of Fig. 41 and Fig. 42 is one obtained when the railway vehicle travels on the rails 20a, 20b having the curvature 1/R illustrated in Fig. 43 (the time on the horizontal axis illustrated in each of Fig. 41 and Fig. 42 and the time on the horizontal axis illustrated in Fig. 43 correspond to each other). Note that in this case, the results obtained by performing simulation (numerical analysis) of traveling of the railway vehicle which is set to have 86 degrees of freedom and which travels at 270 km/h, are regarded as measured values to be shown. Note that when the railway vehicle has 86 degrees of freedom, the number of motion equations describing the motions during traveling of the railway vehicle is increased by 65, when compared to the case where the railway vehicle has 21 degrees of freedom. Therefore, when the traveling of the railway vehicle is simulated by setting that the railway vehicle has 86 degrees of freedom, it is possible to reproduce, with high accuracy, the traveling of the railway vehicle.

When Fig. 41 and Fig. 42 are compared, it can be understood that when the tread slope $\gamma_i$ becomes abnormal, the amplitudes of the forward-and-backward direction forces $T_1$ to $T_4$ become large and the frequencies are also changed in the time-series data of the measured values of the forward-and-backward direction forces $T_1$ to $T_4$.

In order to more clearly detect the difference in the time-series data of the measured values of the forward-and-backward direction forces $T_1$ to $T_4$, the present inventors derived the frequency characteristics of the corrected AR model described in the third embodiment from the time-series data of the measured values of the forward-and-backward direction forces $T_1$ to $T_4$, in each of the case where the tread slope $\gamma_i$ has the normal value (design value) and the case where the tread slope $\gamma_i$ has a value twice the normal value (design value). The number s of eigenvalues to be extracted from the autocorrelation matrix R was set to 2, and m in (28) Equation was set to 1500. Further, the sampling period was set to 0.002 s.

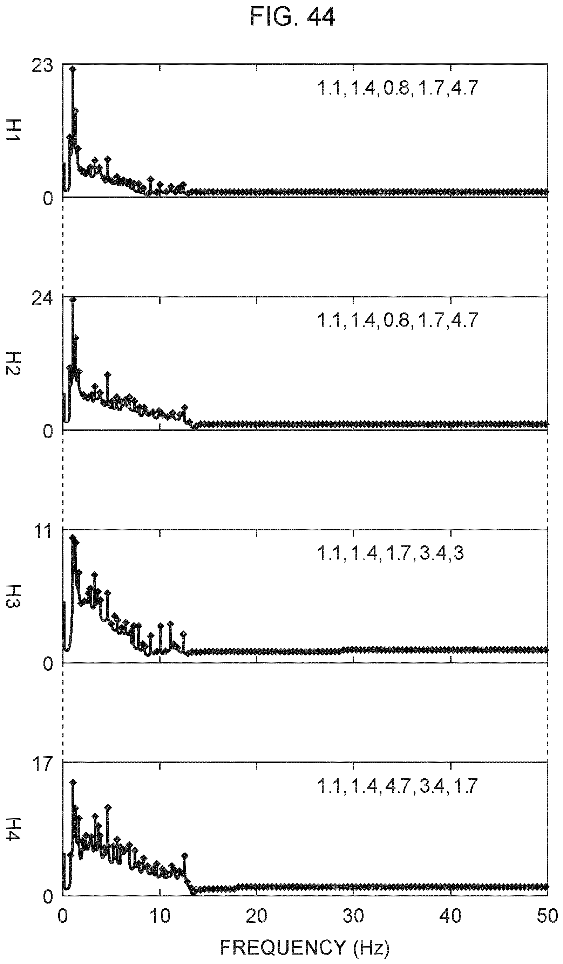

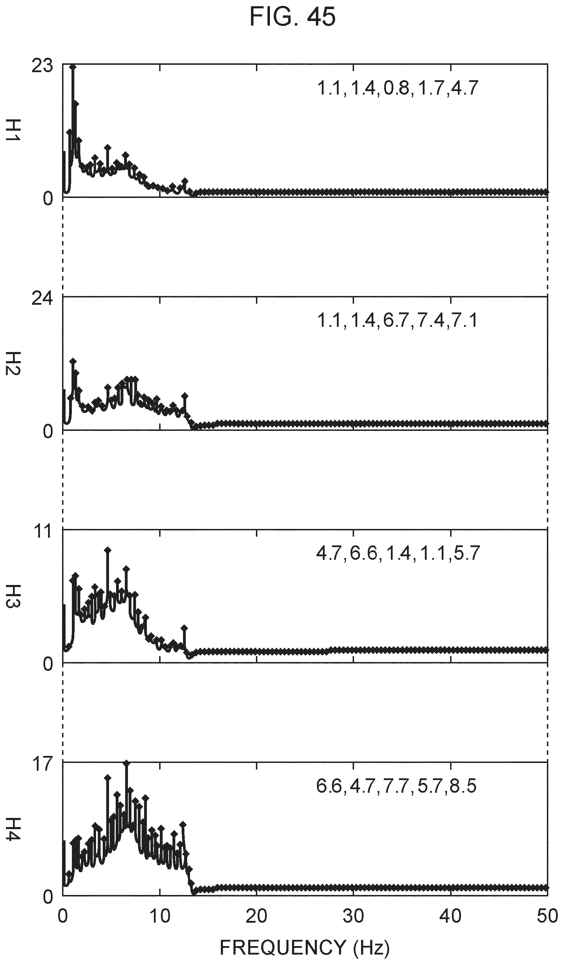

Fig. 44 is a view illustrating one example of frequency characteristics of the corrected AR model when the tread slope $\gamma_i$ has the normal value (design value). Fig. 44 is obtained from the time-series data of the measured values of the forward-and-backward direction forces $T_1$ to $T_4$ illustrated in Fig. 41. Fig. 45 is a view illustrating one example of frequency characteristics of the corrected AR model when a value of each tread slope $\gamma_i$ is twice the normal value (design value). Fig. 45 is obtained from the time-series data of the measured values of the forward-and-backward direction forces $T_1$ to $T_4$ illustrated in Fig. 42.

In Fig. 44 and Fig. 45, "H1", "H2", "H3", "H4" on the vertical axis indicate values of frequency characteristics (signal strengths) of the corrected AR model expressed by (45) Equation regarding the wheel sets 13a, 13b, 13c, 13d, respectively. Further, in each drawing, numeric characters indicated within the graph indicate frequencies at which the values of peaks of the signal strengths become large, in the descending order of the values, from the left. For example, at the top of Fig. 44 (H1), there is indicated "1.1, 1.4, 0.8, 1.7, 4.7". This indicates that the frequency at which the value of peak of the signal strength becomes the largest is 1.1 Hz, the frequency at which the value becomes the second largest is 1.4 Hz, and the frequencies at which the values become the third largest, the fourth largest, and the fifth largest are 0.8 Hz, 1.7 Hz, and 4.7 Hz, respectively.

When Fig. 44 and Fig. 45 are compared, it can be understood that when the tread slope $\gamma_i$ is changed, the frequency characteristics (H1 to H4) of the corrected AR model are greatly changed (relative to the time-series data of the measured values of the forward-and-backward direction forces $T_1$ to $T_4$).

As described above, the present inventors found out that when the frequency characteristics of the corrected AR model obtained from the railway vehicle being the inspection target and the frequency characteristics of the corrected AR model obtained from the normal railway vehicle are deviated, it is possible to determine that the tread slope $\gamma_i$ of the wheels 14a to 14f in the railway vehicle being the inspection target is not normal. An inspection apparatus 300 of the present embodiment has been made based on the above-described findings.

(Configuration of inspection apparatus 300)

Fig. 46 is a view illustrating one example of a functional configuration of the inspection apparatus 300.

In Fig. 46, the inspection apparatus 300 includes, as its functions, a data acquisition unit 301, a storage unit 302, an inspection unit 303, and an output unit 304.

[Data acquisition unit 301]

The data acquisition unit 301 acquires input data including the measured values of the forward-and-backward-direction forces $T_1$ to $T_4$ measured in the railway vehicle being the inspection target, at a predetermined sampling period. Accordingly, time-series data of the measured values of the forward-and-backward-direction forces $T_1$ to $T_4$ measured in the railway vehicle being the inspection target is obtained. The method of measuring the forward-and-backward-direction force is as described previously.

[Storage unit 302]

The storage unit 302 previously stores frequency characteristics H1 to H4 of the corrected AR model in the normal railway vehicle at respective positions in the inspection zone. The normal railway vehicle means the same one as described in the first reference example. The frequency characteristics of the corrected AR model are those described in the third embodiment.

As will be described later, in the present embodiment, the frequency characteristics H1 to H4 of the corrected AR model of the railway vehicle being the inspection target and the frequency characteristics H1 to H4 of the corrected AR model of the normal railway vehicle are compared at respective positions in the inspection zone. The inspection zone indicates a zone, in the traveling zone of the railway vehicle, in which the states of the wheels 14a to 14f of the railway vehicle are inspected. Note that the inspection zone may also be set to the entire traveling zone of the railway vehicle. In the following explanation, the frequency characteristics H1 to H4 of the corrected AR model of the normal railway vehicle are referred to as reference frequency characteristics H1 to H4 according to need. The frequency characteristics H1 to H4 of the corrected AR model of the railway vehicle being the inspection target are referred to as inspection frequency characteristics H1 to H4 according to need.

Each position in the inspection zone can be obtained from the traveling position of the railway vehicle when deriving the corrected AR model of the normal railway vehicle. The traveling position of the railway vehicle can be obtained by detecting a position of the railway vehicle at each time by using the GPS (Global Positioning System), for example. Further, the traveling position of the railway vehicle may also be derived from an integrated value of velocity of the railway vehicle at each time, or the like.

As described above, in the present embodiment, the inspection frequency characteristics H1 to H4 and the reference frequency characteristics H1 to H4 are compared at respective positions in the inspection zone. For this reason, it is preferable that the reference frequency characteristics H1 to H4 whose condition when obtaining them is as close as possible to the condition when obtaining the inspection frequency characteristics H1 to H4, are compared with the inspection frequency characteristics H1 to H4. Accordingly, in the present embodiment, the reference frequency characteristics H1 to H4 at respective positions in the inspection zone are classified for each of the kind, the inspection zone, and the inspection velocity of the railway vehicle, to be stored in the storage unit 302. Such classification can be realized by replacing the reference measured values with the reference frequency characteristics H1 to H4 in the explanation of [storage unit 302] in the first reference example. Therefore, detailed explanation of the method of classification of the reference frequency characteristics H1 to H4 will be omitted here.

[Inspection unit 303]

The inspection unit 303 detects, based on the measured values of the forward-and-backward-direction forces $T_1$ to $T_4$ measured in the railway vehicle being the inspection target, the states of the wheels 14a to 14f of the railway vehicle. In the present embodiment, the inspection unit 303 detects whether or not the tread slope $\gamma_i$ is normal, as the states of the wheels 14a to 14f of the railway vehicle. The inspection unit 303 includes, as its functions, a coefficient derivation part 4601, a frequency characteristic derivation part 4602, and a determination part 4603.

<Coefficient derivation part 4601>

The coefficient derivation part 4601 derives a coefficient $\alpha$ of the corrected AR model. The coefficient $\alpha$ of the corrected AR model is one described in the second embodiment.

Here, the number s of eigenvalues to be extracted from the autocorrelation matrix R illustrated in (36) Equation can be decided from the distribution of eigenvalues of the autocorrelation matrix R, for example.

In the present embodiment, the physical quantity in the explanation of the corrected AR model described above corresponds to the forward-and-backward direction forces $T_1$ to $T_4$. The values of the forward-and-backward direction forces $T_1$ to $T_4$ fluctuate according to the state of the railway vehicle. Accordingly, the railway vehicle is first made to travel on the track 20, to obtain data y regarding the forward-and-backward direction forces $T_1$ to $T_4$. For each of the obtained data y, the autocorrelation matrix R is derived by using (32) Equation and (34) Equation. The singular value decomposition expressed by (35) Equation is performed on the autocorrelation matrix R, to thereby derive eigenvalues of the autocorrelation matrix R.

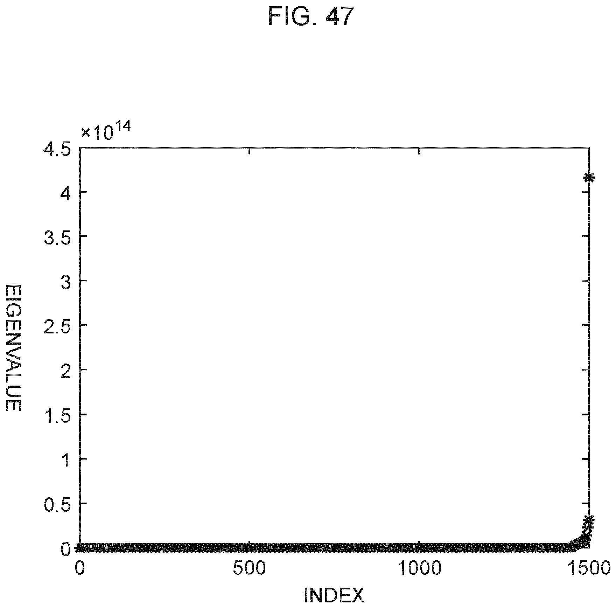

Fig. 47 is a view illustrating one example of the distribution of eigenvalues of the autocorrelation matrix R. In Fig. 47, eigenvalues $\sigma_{11}$ to $\sigma_{mm}$ obtained by performing singular value decomposition on the autocorrelation matrix R regarding each of the data y of the measured value of the forward-and-backward direction force $T_1$ in the wheel set 13a, are rearranged in the ascending order and plotted. In Fig. 47, a horizontal axis indicates an index of eigenvalue, and a vertical axis indicates a value of eigenvalue. Note that m in (28) Equation was set to 1500 in this case. Further, the sampling period was set to 0.002 s.

In the example illustrated in Fig. 47, there is one eigenvalue having significantly high value when compared to the other values. Further, there are two eigenvalues whose values are not so high when compared to the aforementioned eigenvalue having significantly high value, but are relatively large when compared to the other values and thus cannot be regarded as 0 (zero). Based on this, it is possible to employ 2 or 3, for example, as the number s of eigenvalues to be extracted from the autocorrelation matrix R illustrated in (36) Equation. Even if either of them is employed, there is generated no significant difference in the result. Other than the above, it is also possible to extract an eigenvalue which is greater than a threshold value, for example. In the following explanation, the number s of eigenvalues to be extracted from the autocorrelation matrix R illustrated in (36) Equation is set to 2.

The coefficient derivation part 4601 performs, every time the sampling period arrives, the following processing by using the data y of the measured values of the forward-and-backward direction forces $T_1$ to $T_4$ measured in the railway vehicle being the inspection target.

First, based on the data y of the measured values of the forward-and-backward direction forces $T_1$ to $T_4$ measured in the railway vehicle being the inspection target, and preset numbers M, m, the coefficient derivation part 4601 generates the autocorrelation matrix R by using (32) Equation and (34) Equation.

Next, the coefficient derivation part 4601 performs singular value decomposition on the autocorrelation matrix R to derive the orthogonal matrix U and the diagonal matrix $\Sigma$ of (35) Equation, and derives the eigenvalues $\sigma_{11}$ to $\sigma_{mm}$ of the autocorrelation matrix R from the diagonal matrix $\Sigma$.

Next, the coefficient derivation part 4601 selects, among the plural eigenvalues $\sigma_{11}$ to $\sigma_{mm}$ of the autocorrelation matrix R, s pieces of the eigenvalues $\sigma_{11}$ to $\sigma_{ss}$ as the eigenvalues of the autocorrelation matrix R to be used for deriving the coefficient $\alpha$ of the corrected AR model. As described above, in the present embodiment, the coefficient derivation part 4601 selects, among the plural eigenvalues $\sigma_{11}$ to $\sigma_{mm}$ of the autocorrelation matrix R, the largest eigenvalue $\sigma_{11}$ and the second largest eigenvalue $\sigma_{22}$ as the eigenvalues of the autocorrelation matrix R to be used for deriving the coefficient $\alpha$ of the corrected AR model.

Next, based on the data y of the measured values of the forward-and-backward direction forces $T_1$ to $T_4$, the eigenvalues $\sigma_{11}$ to $\sigma_{ss}$, and the orthogonal matrix U obtained by the singular value decomposition of the autocorrelation matrix R, the coefficient derivation part 4601 decides the coefficient $\alpha$ of the corrected AR model by using (40) Equation. Note that the coefficient $\alpha$ of the corrected AR model is individually derived for each of the data y of the measured values of the forward-and-backward direction forces $T_1$ to $T_4$ measured in the railway vehicle being the inspection target.

<Frequency characteristic derivation part 4602>

The frequency characteristic derivation part 4602 uses (45) Equation to derive the inspection frequency characteristics H1 to H4 based on the coefficient $\alpha$ of the corrected AR model derived by the coefficient derivation part 4601.

<Determination part 4603>

The determination part 4603 determines whether or not the tread slopes $\gamma_1$ to $\gamma_4$ of the wheels 14a to 14f of the railway vehicle being the inspection target are normal, based on the result of comparison between the inspection frequency characteristics H1 to H4 and the reference frequency characteristics H1 to H4.

Hereinafter, a concrete example of the processing performed by the determination part 4603 will be described.

When the railway vehicle being the inspection target enters the inspection zone, the determination part 4603 selects, among the reference frequency characteristics H1 to H4 stored in the storage unit 302 by being classified for each of the kind, the inspection zone, and the inspection velocity of the railway vehicle, frequency characteristics H1 to H4 of the corrected AR model stored by being classified based on contents same as the kind, the inspection zone, and the inspection velocity of the railway vehicle being the inspection target on which the inspection apparatus 300 is mounted. It is set that the kind, the inspection zone, and the inspection velocity of the railway vehicle being the inspection target on which the inspection apparatus 300 is mounted, are previously set with respect to the inspection apparatus 300.

When the reference frequency characteristics H1 to H4 stored by being classified based on contents same as the kind, the inspection zone, and the inspection velocity of the railway vehicle being the inspection target on which the inspection apparatus 300 is mounted, are not included in the storage unit 302, the determination part 4603 selects reference frequency characteristics H1 to H4 stored in the storage unit 302 by being classified based on the same kind and the same inspection zone of the railway vehicle being the inspection target on which the inspection apparatus 300 is mounted, and an inspection velocity having a difference with respect to the inspection velocity of the railway vehicle being the inspection target, of a preset threshold value or less.

When the selection of the reference frequency characteristics H1 to H4 at respective positions in the inspection zone as described above cannot be performed, the determination part 4603 determines that it is not possible to perform the inspection in the inspection zone.

On the other hand, when it was possible to select the reference frequency characteristics H1 to H4 at the respective positions in the inspection zone, the determination part 4603 specifies a traveling position of the railway vehicle at a time of deriving the inspection frequency characteristics H1 to H4. The traveling position of the railway vehicle at the time of deriving the inspection frequency characteristics H1 to H4 can be obtained by detecting a position of the railway vehicle at that time by using the GPS (Global Positioning System). Further, the traveling position of the railway vehicle at that time may also be derived from an integrated value of velocity of the railway vehicle at each time, or the like.

Next, the determination part 4603 reads the reference frequency characteristics H1 to H4 corresponding to the traveling position of the railway vehicle specified as above, from the reference frequency characteristics H1 to H4 at the respective positions in the inspection zone selected as described above. Subsequently, the determination part 4603 compares the inspection frequency characteristics H1 to H4 and the reference frequency characteristics H1 to H4 at the same position in the inspection zone.

For example, the determination part 4603 derives the similarity between the inspection frequency characteristics H1 to H4 and the reference frequency characteristics H1 to H4, and determines whether or not the derived similarity is greater than the preset threshold value. The similarity can be derived by using a publicly-known pattern matching method. The similarly is, for example, a sum of square of a difference in signal strengths of the corrected AR models at respective frequencies. It does not always have to obtain the sum of square of the difference in signal strengths of the corrected AR models at each of all frequencies. If it is designed as above, for example, frequencies to which a predetermined number of values, from the top, of peaks of the signal strengths of the corrected AR model belong are specified, regarding each of the railway vehicle being the inspection target and the normal railway vehicle. Subsequently, the sum of square of the difference in signal strengths of the corrected AR models regarding each of the specified frequencies is obtained. When it is designed as above, the determination part 4603 determines that the tread slope $\gamma_i$ of the wheels 14a to 14f of the railway vehicle being the inspection target is not normal when the value of the similarity is greater than the preset threshold value, and in the other case, the determination part 4603 determines that the tread slope $\gamma_i$ of the wheels 14a to 14f of the railway vehicle being the inspection target is normal.

A more concrete example of the determination method of the presence/absence of abnormality of the tread slope $\gamma_i$ will be described. First, the determination part 4603 specifies frequencies to which the top three values of peaks of the signal strengths of the corrected AR model belong, regarding each of the railway vehicle being the inspection target and the normal railway vehicle. The determination part 4603 sets the similarity, which is the sum of square of the difference in signal strengths of the corrected AR models at each of the specified frequencies. The determination part 4603 sets the threshold value, which is a value obtained by multiplying the sum of square of the signal strength of the corrected AR model at each of the specified frequencies by a constant. Here, the constant may be decided by analyzing and verifying the past measurement results. Further, the threshold value may be set according to a similar method based on simulation results.

Note that the frequency characteristics H1 to H4 of the corrected AR model can be obtained for each of the wheel sets 13a to 13d. Therefore, the determination part 4603 can determine whether or not the tread slope $\gamma_i$ is normal, for each of the wheel sets 13a to 13d.

The determination part 4603 repeatedly performs the determination described above every time the inspection frequency characteristics H1 to H4 are obtained, from when the railway vehicle being the inspection target enters the inspection zone to when it leaves the inspection zone.

[Output unit 304]

The output unit 304 outputs information indicating the result determined by the determination part 4603. Concretely, when the determination part 4603 determines that the tread slope $\gamma_i$ of the wheels 14a to 14f of the railway vehicle being the inspection target is not normal, the output unit 304 outputs information indicating that. At this time, the output unit 304 also outputs information indicating that the tread slope $\gamma_i$ determined as not normal is a tread slope of a wheel that belongs to which of the wheel sets 13a to 13d. Further, when the determination part 4603 determines that the inspection cannot be performed in the inspection zone, the output unit 304 outputs information indicating that. As a form of output, it is possible to employ at least any one of displaying the information on a computer display, transmitting the information to an external device, and storing the information in an internal or external storage medium, for example.

(Flowchart)

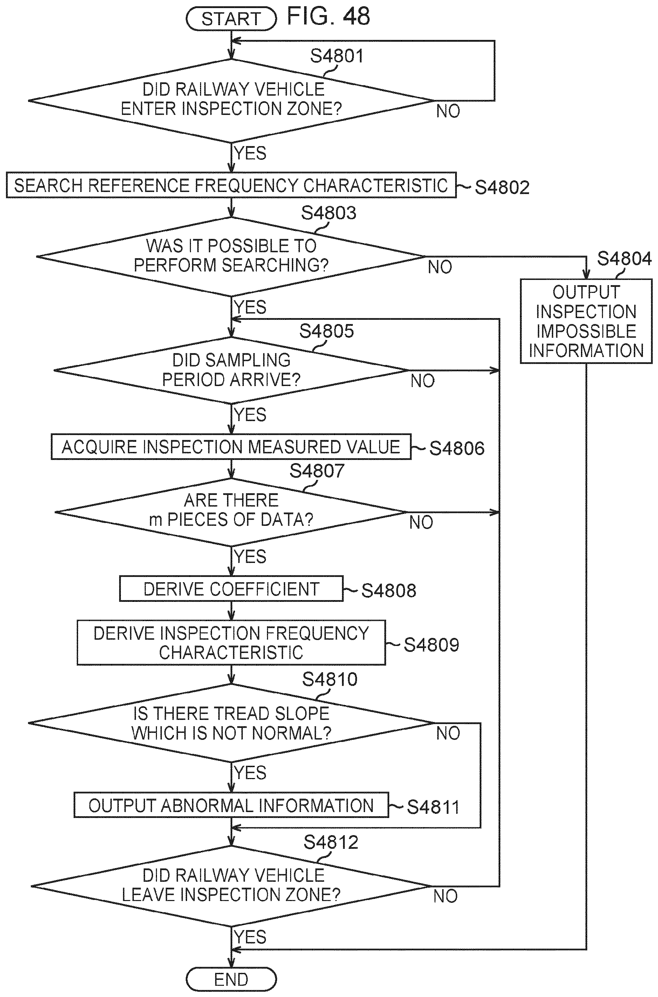

Next, one example of processing performed by the inspection apparatus 300 of the present embodiment will be described while referring to a flowchart in Fig. 48.

In step S4801, the inspection apparatus 300 waits until when the railway vehicle being the inspection target enters the inspection zone. When the railway vehicle being the inspection target enters the inspection zone, the processing proceeds to step S4802. When the processing proceeds to step S4802, the determination part 4603 searches, among the reference frequency characteristics H1 to H4 at the respective positions in the inspection zone, reference frequency characteristics complying with the kind, the inspection zone, and the inspection velocity of the railway vehicle being the inspection target, from the storage unit 302.

Next, in step S4803, the determination part 4603 determines whether or not it was possible to search, among the reference frequency characteristics H1 to H4 at the respective positions in the inspection zone, the reference frequency characteristics complying with the kind, the inspection zone, and the inspection velocity of the railway vehicle being the inspection target, from the storage unit 302.

The searching method in step S4803 can be realized by replacing the reference measured values with the reference frequency characteristics H1 to H4 in the searching method in step S1303. Therefore, detailed explanation of the searching method in step S4802 will be omitted here.

When, as a result of this determination, it is not possible to search the reference frequency characteristics complying with the kind, the inspection zone, and the inspection velocity of the railway vehicle being the inspection target, among the reference frequency characteristics H1 to H4 at the respective positions in the inspection zone, from the storage unit 302, the processing proceeds to step S4804.

When the processing proceeds to step S4804, the output unit 304 outputs inspection impossible information indicating that the inspection cannot be performed in the inspection zone. Further, the processing according to the flowchart in Fig. 48 is terminated.

On the other hand, when, as a result of the determination in step S4803, it was possible to search the reference frequency characteristics complying with the kind, the inspection zone, and the inspection velocity of the railway vehicle being the inspection target, among the reference frequency characteristics H1 to H4 at the respective positions in the inspection zone, from the storage unit 302, the processing proceeds to step S4805. When the processing proceeds to step S4805, the inspection apparatus 300 waits until when (a start time of) the predetermined sampling period arrives. When (the start time of) the predetermined sampling period arrives, the processing proceeds to step S4806. When the processing proceeds to step S4806, the data acquisition unit 301 acquires an inspection measured value at the current sampling period.

Next, in step S4807, the inspection apparatus 300 determines whether or not the number of inspection measured values is m (1500, for example) or more. When, as a result of this determination, the number of inspection measured values is not m or more, pieces of data for deriving the coefficient $\alpha$ of the corrected AR model are not gathered, so that the processing returns to step S4805. Subsequently, processing for acquiring an inspection measured value at the next sampling period is performed.

When, in step S4807, it is determined that the number of inspection measured values is m or more, the processing proceeds to step S4808. When the processing proceeds to step S4808, the coefficient derivation part 4601 derives the coefficient $\alpha$ of the corrected AR model for each of the data y of the inspection measured value.

Next, in step S4809, the frequency characteristic derivation part 4602 derives the inspection frequency characteristics H1 to H4 based on the coefficient $\alpha$ of the corrected AR model derived in step S4808.

Next, in step S4810, the determination part 4603 specifies a traveling position of the railway vehicle at the time of deriving the frequency characteristics H1 to H4 of the corrected AR model of the railway vehicle being the inspection target. Subsequently, the determination part 4603 reads the reference frequency characteristics H1 to H4 corresponding to the specified traveling position of the railway vehicle being the inspection target, from the reference frequency characteristics H1 to H4 at the respective positions in the inspection zone searched in step S4802. Further, the determination part 4603 determines whether or not the similarity between the specified inspection frequency characteristics H1 to H4 and the read reference frequency characteristics H1 to H4 is greater than the threshold value. Here, it is set that the tread slopes $\gamma_1$ to $\gamma_4$ of the wheels 14a to 14f (wheel sets 13a to 13d) corresponding to the inspection frequency characteristics H1 to H4 whose similarity with respect to the reference frequency characteristics H1 to H4 is greater than the threshold value, are not normal.

When, as a result of this determination, there are the inspection frequency characteristics H1 to H4 whose similarity with respect to the reference frequency characteristics H1 to H4 is greater than the threshold value, the processing proceeds to step S4811. When the processing proceeds to step S4811, the output unit 304 outputs abnormal information indicating that the tread slope $\gamma_i$ of the wheels 14a to 14f of the railway vehicle being the inspection target is not normal. Subsequently, the processing proceeds to step S4812 to be described later.

On the other hand, when, as a result of the determination in step S4810, there are no frequency characteristics H1 to H4 of the corrected AR model of the railway vehicle being the inspection target whose similarity with respect to the frequency characteristics H1 to H4 of the corrected AR model of the normal railway vehicle is greater than the threshold value, the processing omits step S4811 and proceeds to step S4812.

When the processing proceeds to step S4812, the inspection apparatus 300 determines whether or not the railway vehicle being the inspection target left the inspection zone. When, as a result of this determination, the railway vehicle being the inspection target has not left the inspection zone, the processing returns to step S4805. Subsequently, the processing from steps S4805 to S4812 is repeatedly executed until when the railway vehicle being the inspection target leaves the inspection zone. Further, when it is determined that the railway vehicle being the inspection target left the inspection zone in step S4812, the processing according to the flowchart in Fig. 48 is terminated.

(Summary)

As described above, in the present embodiment, the inspection apparatus 300 generates the autocorrelation matrix R from the data y of the measured values of the forward-and-backward direction forces $T_1$ to $T_4$. The inspection apparatus 300 uses, among the eigenvalues obtained by making the autocorrelation matrix R to be subjected to singular value decomposition, the eigenvalue having the largest value, to thereby decide the coefficient $\alpha$ of the corrected AR model approximating the data y of the measured values of the forward-and-backward direction forces $T_1$ to $T_4$. The inspection apparatus 300 uses the decided coefficient $\alpha$ to derive the frequency characteristics H1 to H4 of the corrected AR model. The inspection apparatus 300 compares the frequency characteristics H1 to H4 of the corrected AR model derived from the measured values of the forward-and-backward direction forces $T_1$ to $T_4$ measured beforehand in the normal railway vehicle, and the frequency characteristics H1 to H4 of the corrected AR model derived from the measured values of the forward-and-backward direction forces $T_1$ to $T_4$ measured in the railway vehicle being the inspection target. The inspection apparatus 300 determines, based on the result of comparison, whether or not the tread slope $\gamma_i$ of the wheels 14a to 14f in the railway vehicle being the inspection target is normal. Therefore, it is possible to inspect the states of the wheels of the railway vehicle without disposing an imaging unit or sensor on the ground. Consequently, it is possible to inspect the states of the wheels of the railway vehicle even at a place where the imaging unit or sensor is not disposed. In the example indicated in the present embodiment, it is possible to determine whether or not the tread slope $\gamma_i$ is normal. Further, since the measured values of the forward-and-backward direction forces $T_1$ to $T_4$ can be obtained by strain gauges or the like, it is possible to inspect the states of the wheels of the railway vehicle at low cost when compared to the sensor and the imaging unit used in the techniques described in Patent Literatures 3, 4.

(Modified example)

It is preferable to derive the frequency characteristics of the corrected AR model as in the present embodiment, since it is possible to emphasize the difference in frequency characteristics caused depending on whether or not the tread slope $\gamma_i$ is normal. However, it does not always have to design as above. For example, it is also possible to derive power spectra of the measured values of the forward-and-backward direction forces $T_1$ to $T_4$ by performing Fourier transform on the measured values of the forward-and-backward direction forces $T_1$ to $T_4$.

Further, it does not always have to compare the frequency characteristics of the corrected AR model obtained from the railway vehicle being the inspection target and the frequency characteristics of the corrected AR model obtained from the normal railway vehicle. When the tread slope $\gamma_i$ of the wheels 14a to 14f in the railway vehicle being the inspection target is not normal, the signal strength at the specified frequency becomes larger than that of the normal case, as illustrated in Fig. 44 and Fig. 45. Therefore, for example, it is also possible to determine whether or not the signal strength at the predetermined frequency or in the predetermined frequency band is greater than the preset threshold value in the inspection frequency characteristics.

Further, it is also possible to design such that the inspection is performed only when the state of the track 20 when obtaining the inspection measured values and the state of the track 20 when obtaining the measured values of the forward-and-backward direction forces $T_1$ to $T_4$ of the normal railway vehicle are close to each other. For example, when the measured values of the forward-and-backward direction forces $T_1$ to $T_4$ of the normal railway vehicle are obtained, the alignment irregularity amount at each position in the inspection zone is calculated in a manner as described in Patent Literature 5. After that, when the inspection measured values are obtained, the alignment irregularity amount at each position in the inspection zone is calculated in a manner as described in Patent Literature 5. Further, when an absolute value of difference in the alignment irregularity amounts at the same position is greater than the preset threshold value, the inspection may be canceled because the state of the track 20 when obtaining the inspection measured values and the state of the track 20 when obtaining the measured values of the forward-and-backward direction forces $T_1$ to $T_4$ of the normal railway vehicle are not close to each other. Further, information indicating that may also be output.

Further, also in the present embodiment, the various modified examples and reference examples explained in the first reference example and second to fifth embodiments can be employed.

<<Seventh embodiment>>

Next, a seventh embodiment will be described. The sixth embodiment has explained the case, as an example, in which the detection regarding whether or not the tread slope $\gamma_i$ is normal is performed, as the states of the wheels 14a to 14f of the railway vehicle, without deriving a value of the tread slope $\gamma_i$ during traveling of the railway vehicle. In contrast to this, the present embodiment is designed not to perform this, but derives the value of the tread slope $\gamma_i$ during traveling of the railway vehicle, by using the measured values of the forward-and-backward direction forces $T_1$ to $T_4$. As described above, the present embodiment and the sixth embodiment are mainly different in the method of detecting the states of the wheels 14a to 14f of the railway vehicle. Therefore, in the explanation of the present embodiment, the reference numerals and symbols added to Fig. 1 to Fig. 48 are added to the same parts as those in the first reference example and second to sixth embodiments, or the like, and their detailed explanations will be omitted.

(Configuration of inspection apparatus 300)

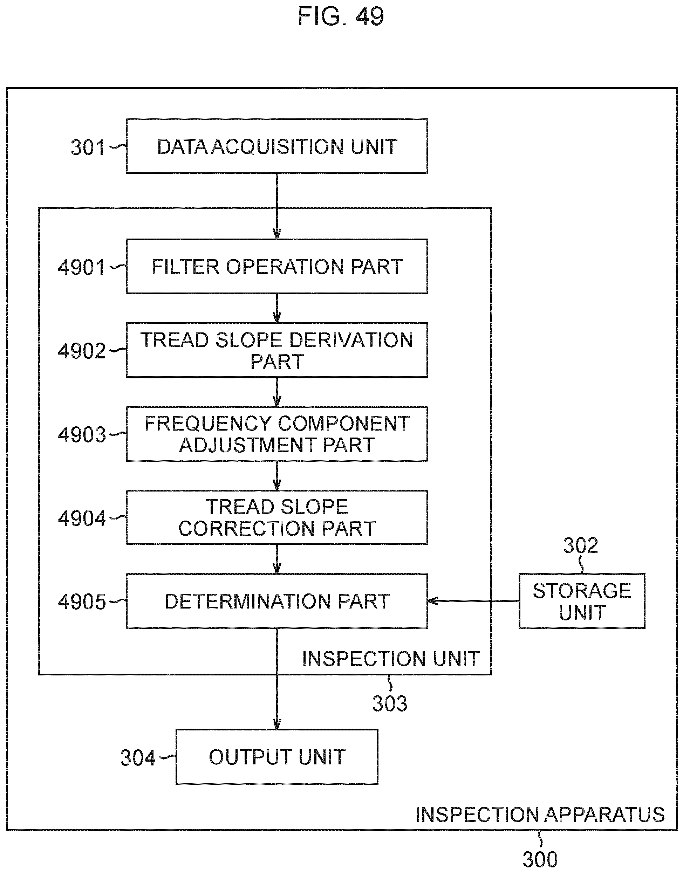

Fig. 49 is a view illustrating one example of a functional configuration of the inspection apparatus 300.
In Fig. 49, the inspection apparatus 300 includes, as its functions, a data acquisition unit 301, a storage unit 302, an inspection unit 303, and an output unit 304.

[Data acquisition unit 301]

The data acquisition unit 301 acquires input data including the measured values of the forward-and-backward-direction forces $T_1$ to $T_4$ measured in the railway vehicle being the inspection target, at a predetermined sampling period.
In the present embodiment, the input data includes time-series data a measured value of acceleration of the vehicle body 11 in the right and left direction, time-series data of measured values of accelerations of the bogies 12a, 12b in the right and left direction, and time-series data of measured values of accelerations of the wheel sets 13a to 13d in the right and left direction. The respective accelerations are measured by using strain gauges attached to the vehicle body 11, the bogies 12a, 12b, and the wheel sets 13a to 13d respectively and an arithmetic device that calculates the accelerations by using measured values of the strain gauges, for example. Note that the measurement of the accelerations can be realized by a publicly-known technique, and thus its detailed explanation will be omitted.
Further, the data acquisition unit 301 acquires time-series data of the measured values of the forward-and-backward direction forces $T_1$ to $T_4$ measured in the railway vehicle being the inspection target, as the input data. The method of measurement of the forward-and-backward direction force is as described in the first reference example.
The data acquisition unit 301 can acquire the input data by performing communication with the aforementioned arithmetic device, for example.

[Inspection unit 303]

The inspection unit 303 detects, based on the measured values of the forward-and-backward direction forces $T_1$ to $T_4$ measured in the railway vehicle being the inspection target, the states of the wheels 14a to 14f of the railway vehicle. In the present embodiment, the inspection unit 303 derives the tread slope $\gamma_i$ as the states of the wheels 14a to 14f of the railway vehicle being the inspection target. The inspection unit 303 detects, based on the derived tread slope $\gamma_i$, whether or not the tread slope $\gamma_i$ is normal. The inspection unit 303 includes, as its functions, a filter operation part 4901, a tread slope derivation part 4902, a frequency component adjustment part 4903, a tread slope correction part 4904, and a determination part 4905.

<Filter operation part 4901>

The filter operation part 4901 uses the input data acquired by the data acquisition unit 301, a state equation, and an observation equation to perform an operation using a filter performing data assimilation, thereby deciding estimated values of state variables (variables to determine estimated values in the state equation), at a predetermined sampling period. The present embodiment will describe a case, as an example, in which the estimated values of the state variables are decided by the method described in Patent Literature 5. The method of deciding the estimated values of the state variables is described in Patent Literature 5, so that the method of Patent Literature 5 will be briefly described and its detailed explanation will be omitted here.

As described in the fourth embodiment, in Patent Literature 5, the variables illustrated in (48) Equation are set to the state variables, and the state equation is constituted by using the motion equations in (49) Equation to (65) Equation. Further, the observation equation is constituted by using (60) Equation to (63) Equation, (49) Equation, (50) Equation, and (53) Equation.

The filter operation part 4901 applies the observation equation and the state equation to the Kalman filter (being one example of a filter that derives the state variables so that the error between the measured value of the observation variable and the calculated value becomes minimum or the expected value of this error becomes minimum (that is, a filter that performs data assimilation)), and uses the input data acquired by the data acquisition unit 301 to decide the state variables illustrated in (48) Equation. The Kalman filter itself can be realized by a publicly-known technique.

Further, the filter operation part 4901 derives estimated values of pivot amounts (angular displacements) $\phi_{w1}$ to $\phi_{w4}$ of the wheel sets 13a to 13d in the yawing direction, by using (10) Equation to (13) Equation.

<Tread slope derivation part 4902>

The tread slope derivation part 4902 gives the estimated values of pivot amounts (angular displacements) $\phi_{w1}$ to $\phi_{w4}$ of the wheel sets 13a to 13d in the yawing direction, the state variables illustrated in (48) Equation, and the measured values of the forward-and-backward direction forces $T_1$ to $T_4$ in the wheel sets 13a to 13d to (77) Equation to (80) Equation below, to thereby derive the tread slopes $\gamma_i$ ($\gamma_1$ to $\gamma_4$) of the wheel sets 13a to 13d, at a predetermined sampling period. (77) Equation to (80) Equation are based on motion equations describing the motions of the wheel sets 13a to 13d in the yawing direction.

[Mathematical equation 46]

$$\gamma_1 = \frac{r}{f_{1\_1} b (y_{w1} - y_{R1})} \left[ -I_{wz} \ddot{\psi}_{w1} - f_{1\_1} \frac{b^2 \dot{\psi}_{w1}}{v} + T_1 \right]$$

$$+ \frac{r}{f_{1\_1} b (y_{w1} - y_{R1})} \left[ saC_{wy} \{ \dot{y}_{w1} - \dot{y}_{t1} \} \right]$$

$$+ \frac{r}{f_{1\_1} b (y_{w1} - y_{R1})} \left[ saK_{wy} \right] \qquad \cdots \ (77)$$

$$\gamma_2 = \frac{r}{f_{1\_2} b (y_{w2} - y_{R2})} \left[ -I_{wz} \ddot{\psi}_{w2} - f_{1\_2} \frac{b^2 \dot{\psi}_{w2}}{v} + T_2 \right]$$

$$+ \frac{r}{f_{1\_2} b (y_{w2} - y_{R2})} \left[ -saC_{wy} \{ \dot{y}_{w2} - \dot{y}_{t1} \} \right]$$

$$+ \frac{r}{f_{1\_2} b (y_{w2} - y_{R2})} \left[ -saK_{wy} \right] \qquad \cdots \ (78)$$

$$\gamma_3 = \frac{r}{f_{1\_3} b (y_{w3} - y_{R3})} \left[ -I_{wz} \ddot{\psi}_{w3} - f_{1\_3} \frac{b^2 \dot{\psi}_{w3}}{v} + T_3 \right]$$

$$+ \frac{r}{f_{1\_3} b (y_{w3} - y_{R3})} \left[ saC_{wy} \{ \dot{y}_{w3} - \dot{y}_{t2} \} \right]$$

$$+ \frac{r}{f_{1\_3} b (y_{w3} - y_{R3})} \left[ saK_{wy} \right] \qquad \cdots \ (79)$$

$$\gamma_4 = \frac{r}{f_{1\_4} b (y_{w4} - y_{R4})} \left[ -I_{wz} \ddot{\psi}_{w4} - f_{1\_4} \frac{b^2 \dot{\psi}_{w4}}{v} + T_4 \right]$$

$$+ \frac{r}{f_{1\_4} b (y_{w4} - y_{R4})} \left[ -saC_{wy} \{ \dot{y}_{w4} - \dot{y}_{t2} \} \right]$$

$$+ \frac{r}{f_{1\_4} b (y_{w4} - y_{R4})} \left[ -saK_{wy} \right] \qquad \cdots \ (80)$$

r is a radius of each of the wheels 14a to 14d, and is an average value of the two wheels 14a, 14f and so on, except for flange parts, attached to the wheel sets 13a to 13d. $f_{1\_1}$, $f_{1\_2}$, $f_{1\_3}$, $f_{1\_4}$ are longitudinal creep coefficients of the wheel sets 13a, 13b, 13c, 13d, respectively. b is a distance in the right and left direction between contacts between the two wheels 14a, 14f, and so on attached to the wheel sets 13a to 13d, and the rails 20a, 20b. $Y_{R1}$, $Y_{R2}$, $Y_{R3}$, $Y_{R4}$ are alignment irregularity amounts at the positions of the wheel sets 13a, 13b, 13c, 13d, respectively. It is set that the alignment irregularity amounts $y_{R1}$, $y_{R2}$, $y_{R3}$, $y_{R4}$ at respective positions in the inspection zone are previously measured. $I_{wz}$ is a moment of inertia of each of the wheel sets 13a to 13d in the yawing direction. sa is an offset from the middle of the axles 15a to 15d to an axle box suspension spring in the forward and backward direction.

In the technique described in Patent Literature 5, the motion equations that describe the yawings of the wheel sets 13a to 13d are not included in the state equation. Namely, the motion equations that describe the transversal vibrations (motion in the right and left direction) of the wheel sets 13a to 13d in (60) Equation to (63) Equation are expressed by using the transformation variables $e_1$ to $e_4$, thereby making it possible to eliminate the pivot amounts (angular displacements) $\phi_{w1}$ to $\phi_{w4}$ of the wheel sets 13a to 13d in the yawing direction that are included in these motion equations. Further, the motion equations that describe the yawings of the bogies 12a, 12b in (64) Equation and (65) Equation are expressed by using the forward-and-backward-direction forces $T_1$ to $T_4$, thereby making it possible to eliminate the angular displacements $\phi_{w1}$ to $\phi_{w4}$ and the angular velocities $\phi_{w1} \cdot$ to $\phi_{w4} \cdot$ of the wheel sets 13a to 13d in the yawing direction that are included in these motion equations.

As described above, the degrees of freedom of the motions decrease by the eliminated amount of the yawings of the wheel sets 13a to 13d. Further, measured values to be used for the filter that performs data assimilation such as a Kalman filter increase by the forward-and-backward-direction forces $T_1$ to $T_4$. Accordingly, the accuracy of information of motion to be calculated by performing the operation using the filter that performs data assimilation such as a Kalman filter improves.

Here, it can be assumed that the values of the tread slopes $\gamma_i$ ($\gamma_1$ to $\gamma_4$) derived as described above are not stabilized, and the value of denominator in each of (77) Equation to (80) Equation has both a positive value and a negative value with "0" sandwiched therebetween (namely, the value fluctuates). In this case, when the value of denominator in each of (77) Equation to (80) Equation is "0", so-called division by zero is performed. For this reason, the values of the tread slopes $\gamma_i$ ($\gamma_1$ to $\gamma_4$) become extremely large or small. When calculation is performed as a continuous value (when discretization (numerical analysis) is not performed), divergence of the tread slopes $\gamma_i$ ($\gamma_1$ to $\gamma_4$) occurs. Accordingly, in the present embodiment, when the value of each of the tread slopes $\gamma_i$ ($\gamma_1$ to $\gamma_4$) derived as described above is greater than an upper limit value, the tread slope derivation part 4902 sets the value of each of the tread slopes $\gamma_i$ ($\gamma_1$ to $\gamma_4$) to the upper limit value. When the value of each of the tread slopes $\gamma_i$ ($\gamma_1$ to $\gamma_4$) derived as described above is lower than a lower limit value, the tread slope derivation part 4902 sets the value of each of the tread slopes $\gamma_i$ ($\gamma_1$ to $\gamma_4$) to the lower limit value. A range of the tread slopes $\gamma_i$ is limited as described above. In the present embodiment, the upper limit value ($= c\gamma_0$) and the lower limit value ($= 0$) are defined so as to limit the range of the tread slopes $\gamma_i$ to a range indicated in (81) Equation below by setting a coefficient c to a real number of 0 or more.

[Mathematical equation 47]

$$0 \leq \gamma_i \leq c\gamma_0 \qquad \qquad \cdots \ (81)$$

$\gamma_0$ is a tread slope in the normal railway vehicle, and as a value thereof, a design value can be used, for example. In the following explanation, the tread slope in the normal railway vehicle is referred to as a tread slope reference value $\gamma_0$ according to need. Further, for example, "10" can be previously set as the coefficient c. In the following explanation, a tread slope to be derived by the tread slope derivation part 4902 by limiting the range to the range expressed by (81) Equation, is referred to as a tread slope before correction, according to need.

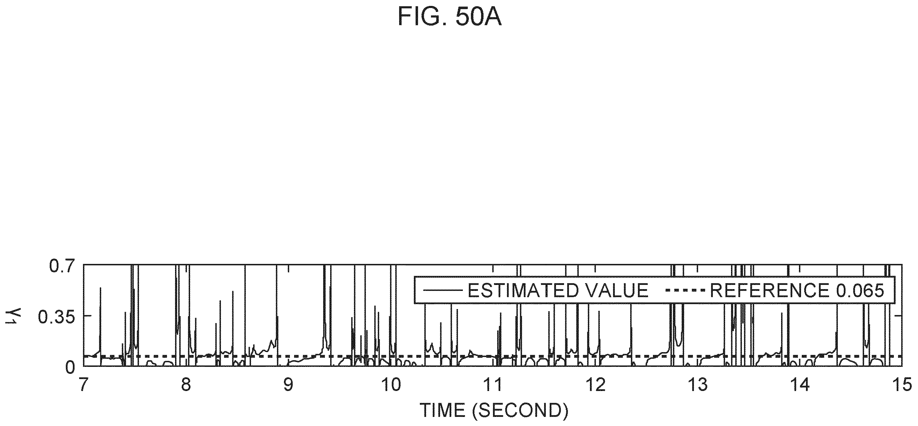

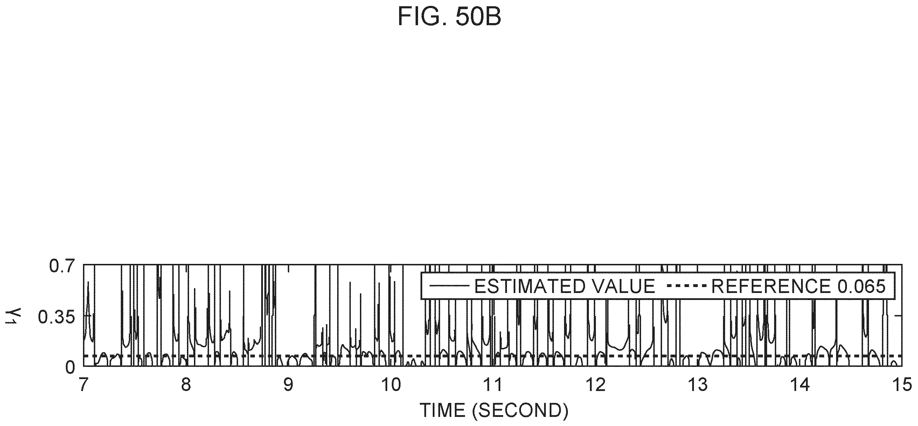

Each of Fig. 50A and Fig. 50B is a view illustrating one example of time-series data of the tread slope $\gamma_1$ before correction in the wheel set 13a. Fig. 50A illustrates one example of time-series data of the tread slope $\gamma_1$ before correction when the tread slope $\gamma_i$ has a normal value (design value, for example). Concretely, Fig. 50A illustrates time-series data of the tread slope $\gamma_1$ before correction which is derived in a manner as described above by using the time-series data of the measured values of the forward-and-backward direction forces $T_1$ to $T_4$ when the tread slope $\gamma_i$ has a normal value (design value, for example) (Fig. 41). Fig. 50B illustrates one example of time-series data of the tread slope $\gamma_1$ before correction when each of the tread slopes $\gamma_i$ is not normal. Concretely, Fig. 50B illustrates time-series data of the tread slope $\gamma_1$ before correction which is derived in a manner as described above by using the time-series data of the measured values of the forward-and-backward direction forces $T_1$ to $T_4$ when the tread slopes $\gamma_i$ do not have normal values (design values, for example) (Fig. 42).

The time-series data of the tread slope $\gamma_1$ before correction illustrated in each of Fig. 50A and Fig. 50B is one obtained when the railway vehicle travels on the rails 20a, 20b having the curvature 1/R illustrated in Fig. 43 (the time on the horizontal axis illustrated in each of Fig. 50A and Fig. 50B and the time on the horizontal axis illustrated in Fig. 43 correspond to each other). Each of Fig. 50A and Fig. 50B illustrates the time-series data of the tread slope $\gamma_1$ before correction in the zone in which the curvature 1/R of the rails 20a, 20b is "0 (zero)".

Further, in this case, the coefficient c was set to "10", and the tread slope reference value $\gamma_0$ was set to "0.065" (refer to "reference 0.065" in Fig. 50A and Fig. 50B).

<Frequency component adjustment part 4903>

As illustrated in Fig. 50A and Fig. 50B, it can be assumed that the time-series data of the tread slope $\gamma_i$ before correction is not stabilized, and the time-series data of the tread slope $\gamma_i$ before correction includes a noise component other than a component (essential component) that contributes to decide the value of the tread slope $\gamma_i$. Accordingly, the frequency component adjustment part 4903 removes the noise component of the tread slope $\gamma_i$ before correction derived by the tread slope derivation part 4902 to extract the essential frequency component of the tread slope $\gamma_i$. Although the frequency component adjustment part 4903 can remove the noise component of the tread slope $\gamma_i$ before correction by using a lowpass filter or a band-pass filter, it is not easy to set a cutoff frequency.

Accordingly, the present inventors found out that it is possible to remove the noise component of the tread slope $\gamma_i$ before correction derived by the tread slope derivation part 4902 to extract the essential frequency component of the tread slope $\gamma_i$ by using the corrected AR model described in the second embodiment.

In the second embodiment, the physical quantity of the time-series data y of the physical quantity is the forward-and-backward direction force, but, it is the tread slope $\gamma_i$ (tread slope $\gamma_i$ before correction) in the present embodiment.

Further, as described in the sixth embodiment, the number s of eigenvalues to be extracted from the autocorrelation matrix R illustrated in (36) Equation can be decided from the distribution of eigenvalues of the autocorrelation matrix R, for example.

In the present embodiment, the physical quantity in the corrected AR model becomes the tread slope $\gamma_i$ (tread slope $\gamma_i$ before correction). The value of the tread slope $\gamma_i$ (tread slope $\gamma_i$ before correction) fluctuates according to the state of the railway vehicle. Accordingly, the railway vehicle is made to travel on the track 20, to obtain data y regarding the tread slope $\gamma_i$ (tread slope $\gamma_i$ before correction). For each of the obtained data y, the autocorrelation matrix R is derived by using (32) Equation and (34) Equation. The singular value decomposition expressed by (35) Equation is performed on the autocorrelation matrix R, to thereby derive eigenvalues of the autocorrelation matrix R.

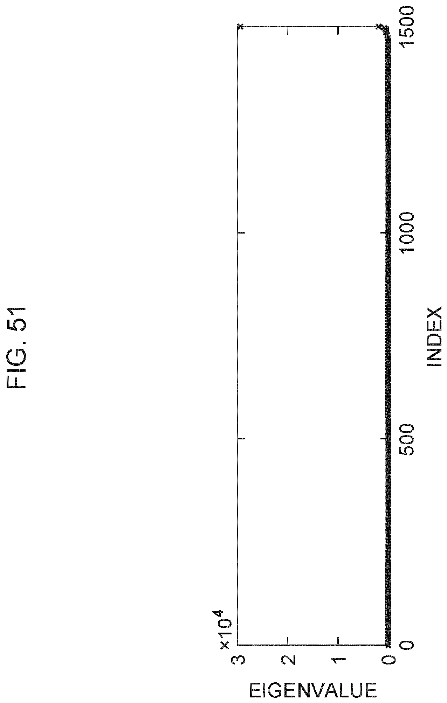

Fig. 51 is a view illustrating one example of the distribution of eigenvalues of the autocorrelation matrix R. In Fig. 51, eigenvalues $\sigma_{11}$ to $\sigma_{mm}$ obtained by performing singular value decomposition on the autocorrelation matrix R regarding each of the data y of the tread slope $\gamma_1$ (tread slope $\gamma_1$ before correction) with respect to the wheel set 13a, are rearranged in the ascending order and plotted. In Fig. 51, a horizontal axis indicates an index of eigenvalue, and a vertical axis indicates a value of eigenvalue. Note that m in (28) Equation was set to 1500 in this case. Further, the sampling period was set to 0.002 s.

In the example illustrated in Fig. 51, there is only one eigenvalue having significantly high value when compared to the other values. Based on this, it is possible to employ 1, for example, as the number s of eigenvalue to be extracted from the autocorrelation matrix R illustrated in (36) Equation. Other than the above, it is also possible to extract an eigenvalue which is greater than a threshold value, for example.

Based on the data y of the tread slope $\gamma_i$ before correction and preset numbers M, m, the frequency component adjustment part 4903 generates the autocorrelation matrix R by using (32) Equation and (34) Equation.

Next, the frequency component adjustment part 4903 performs singular value decomposition on the autocorrelation matrix R to derive the orthogonal matrix U and the diagonal matrix $\Sigma$ of (35) Equation, and derives the eigenvalues $\sigma_{11}$ to $\sigma_{mm}$ of the autocorrelation matrix R from the diagonal matrix $\Sigma$.

Next, the frequency component adjustment part 4903 selects, among the plural eigenvalues $\sigma_{11}$ to $\sigma_{mm}$ of the autocorrelation matrix R, s pieces of the eigenvalues $\sigma_{11}$ to $\sigma_{ss}$ as the eigenvalues of the autocorrelation matrix R to be used for deriving the coefficient $\alpha$ of the corrected AR model. As described above, in the present embodiment, the frequency component adjustment part 4903 selects, among the plural eigenvalues $\sigma_{11}$ to $\sigma_{mm}$ of the autocorrelation matrix R, the largest eigenvalue $\sigma_{11}$ as the eigenvalue of the autocorrelation matrix R to be used for deriving the coefficient $\alpha$ of the corrected AR model.

Next, based on the data y of the tread slope $\gamma_i$ before correction, the eigenvalue $\sigma_{11}$, and the orthogonal matrix U obtained by the singular value decomposition of the autocorrelation matrix R, the frequency component adjustment part 4903 decides the coefficient $\alpha$ of the corrected AR model by using (40) Equation.

Subsequently, the frequency component adjustment part 4903 derives the predicted value $y^{\wedge}_k$ of the data y of the tread slope $\gamma_i$ before correction at the time k by using (28) Equation, based on the coefficient $\alpha$ of the corrected AR model, and (an actual value of) the data y of the tread slope $\gamma_i$ before correction. The data y of the tread slope $\gamma_i$ before correction is corrected in a manner as described above. In the following explanation, the tread slope $\gamma_i$ before correction corrected by the frequency component adjustment part 4903 in a manner as described above, is referred to as a corrected tread slope $\gamma_i$ according to need.

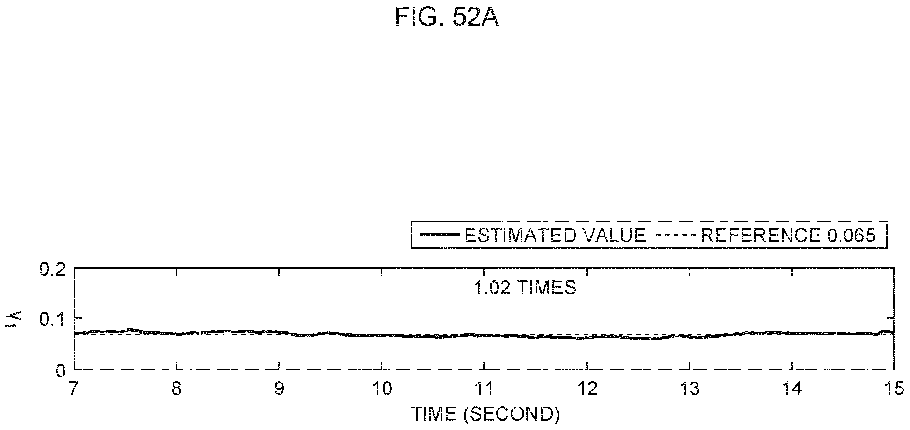

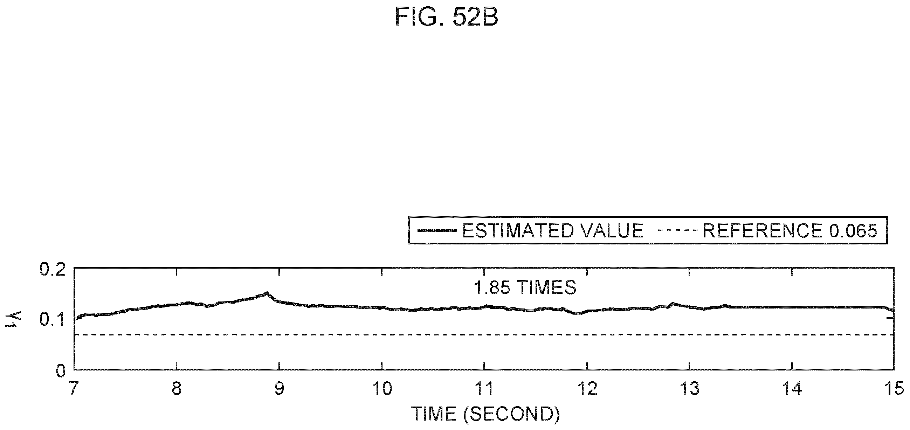

Each of Fig. 52A and Fig. 52B is a view illustrating one example of time-series data of the corrected tread slope $\gamma_1$ in the wheel set 13a. Fig. 52A illustrates one example of time-series data of the corrected tread slope $\gamma_1$ when the tread slope $\gamma_i$ has a normal value (design value, for example). Concretely, Fig. 52A illustrates time-series data of the corrected tread slope $\gamma_1$ which is derived in a manner as described above by using the time-series data of the tread slope $\gamma_1$ before correction illustrated in Fig. 50A. Fig. 52B illustrates one example of time-series data of the corrected tread slope $\gamma_1$ when

each of the tread slopes $\gamma_i$ is not normal. Concretely, Fig. 52B illustrates time-series data of the corrected tread slope $\gamma_1$ which is derived in a manner as described above by using the time-series data of the tread slope $\gamma_i$ before correction illustrated in Fig. 50B.

In Fig. 52A, the corrected tread slope $\gamma_1$ is 1.02 times, on average, the tread slope reference value $\gamma_0$ (= 0.065), and thus it substantially matches the tread slope reference value $\gamma_0$. Further, in Fig. 52B, the corrected tread slope $\gamma_1$ is 1.85 times, on average, the tread slope reference value $\gamma_0$ (= 0.065). As described above, Fig. 52B is obtained from Fig. 50B, Fig. 50B is obtained from Fig. 42, and Fig. 42 illustrates the time-series data of the measured values of the forward-and-backward direction forces $T_1$ to $T_4$ when each of the tread slopes $\gamma_i$ has a value twice the normal value (design value, for example). Therefore, it can be understood that, based on the corrected tread slope $\gamma_1$, it is possible to detect that the tread slope $\gamma_i$ is increased relative to the tread slope reference value $\gamma_0$ (= 0.065).

<Tread slope correction part 4904>

In the present embodiment, in order to increase the accuracy of the corrected tread slope $\gamma_i$, a relation between a first ratio and a second ratio is previously examined for each of the wheel sets 13a to 13d. The first ratio is a ratio of a calculated value of the corrected tread slope $\gamma_i$ of the railway vehicle being the inspection target, to the tread slope reference value $\gamma_0$ of the railway vehicle being the inspection target (= $\gamma_i/\gamma_0$). The second ratio is a ratio of an actual measured value of the tread slope $\gamma_i$ of the railway vehicle being the inspection target, to the tread slope reference value $\gamma_0$ of the railway vehicle being the inspection target (= $\gamma_i/\gamma_0$). The relation between the first ratio and the second ratio as described above, is previously stored in the internal or external storage medium of the inspection apparatus 300. The relation between the first ratio and the second ratio can be obtained in a manner as follows, for example.

A tread slope $\gamma_i$ of a certain railway vehicle is measured to obtain an actual measured value of the tread slope $\gamma_i$ of the railway vehicle. Subsequently, after confirming that the tread slope $\gamma_i$ does not change from the state when obtaining the actual measured value of the tread slope $\gamma_i$, the railway vehicle is made to travel, thereby deriving a corrected tread slope $\gamma_i$ of the railway vehicle in a manner as described above. Consequently, one pair of the actual measured value of the tread slope $\gamma_i$ of the railway vehicle and the calculated value of the corrected tread slope $\gamma_i$ of the railway vehicle is obtained. Further, the first ratio and the second ratio are derived for each of the wheel sets 13a to 13d.

Consequently, one pair of the first ratio and the second ratio is obtained. The derivation of pair as described above is performed while differentiating the tread slope $\gamma_i$ of the railway vehicle. Accordingly, plural pairs of the first ratio and the second ratio are obtained. The number of these plural pairs is determined by taking a balance between the accuracy of an approximate equation (approximate function) based on a method of regression analysis to be described later and a calculation load into consideration.

Further, by using each pair of the first ratio and the second ratio, the approximate equation (approximate function) indicating the relation between the first ratio and the second ratio is derived for each of the wheel sets 13a to 13d, based on a publicly-known method of regression analysis such as a least square method.

Such an approximate equation is set to the relation between the first ratio and the second ratio.

When deriving the relation between the first ratio and the second ratio, the railway vehicle being the inspection target or a railway vehicle of the same kind of the railway vehicle being the inspection target is used. Further, the relation between the first ratio and the second ratio is preferably derived for each inspection zone.

The relation between the first ratio and the second ratio can be expressed by the mathematical equation (approximate equation) as described above. Further, the relation between the first ratio and the second ratio may also be expressed by a table. In the table, the first ratio and the second ratio are stored by being related to each other.

In the following explanation, the relation between the first ratio and the second ratio is referred to as tread slope correction information according to need.

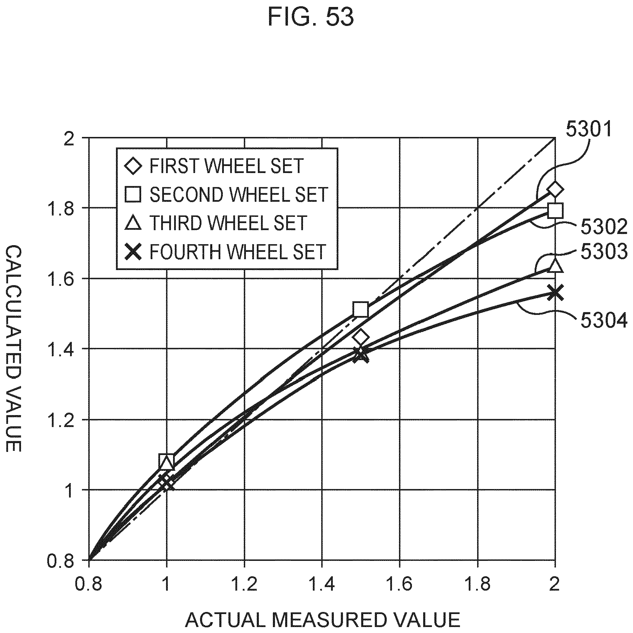

Fig. 53 is a view illustrating one example of the tread slope correction information. In Fig. 53, a calculated value on a vertical axis corresponds to the first ratio. An actual measured value on a horizontal axis corresponds to the second ratio. In Fig. 53, a graph 5301 indicates the tread slope correction information with respect to the wheel set 13a. A graph 5302 indicates the tread slope correction information with respect to the wheel set 13b. A graph 5303 indicates the tread slope correction information with respect to the wheel set 13c. A graph 5304 indicates the tread slope correction information with respect to the wheel set 13d.

After the tread slope correction information is stored as described above, the tread slope correction part 4904 derives a ratio of the corrected tread slope $\gamma_1$ of the railway vehicle being the inspection target derived by the frequency component adjustment part 4903 to the tread slope reference value $\gamma_0$ of the railway vehicle being the inspection target (= $\gamma_1/\gamma_0$). The tread slope correction part 4904 sets the derived value as a value on the vertical axis of the graph 5301 illustrated in Fig. 53, and reads a value on the horizontal axis corresponding to the value. The tread slope correction part 4904 decides the read value as the ratio of the tread slope $\gamma_1$ of the wheel set 13a of the railway vehicle being the inspection target to the tread slope reference value $\gamma_0$ of the railway vehicle being the inspection target. The tread slope correction part 4904 also decides ratios of the tread slopes $\gamma_2$, $\gamma_3$, $\gamma_4$ of the wheel sets 13b, 13c, 13d of the railway vehicle being the inspection target to the tread slope reference value $\gamma_0$ of the railway vehicle being the inspection target, similarly to the wheel set 13a.

In a manner as described above, the ratio of the tread slope $\gamma_i$ of the railway vehicle being the inspection target to the tread slope reference value $\gamma_0$ of the railway vehicle being the inspection target is decided.

<Determination part 4905>

The determination part 4905 determines whether or not the ratio of the tread slope $\gamma_i$ of the railway vehicle being the inspection target to the tread slope reference value $\gamma_0$ of the railway vehicle being the inspection target, decided by the tread slope correction part 4904, is within a preset range. This range is determined based on an amount of displacement of the value of tread slope relative to the tread slope reference value $\gamma_0$, by which the tread slope is regarded as not normal, for example.

When, as a result of this determination, the ratio of the tread slope $\gamma_i$ of the railway vehicle being the inspection target to the tread slope reference value $\gamma_0$ of the railway vehicle being the inspection target is within the preset range, the determination part 4905 determines that the tread slope $\gamma_i$ is normal. On the other hand, when the ratio of the tread slope $\gamma_i$ of the railway vehicle being the inspection target to the tread slope reference value $\gamma_0$ of the railway vehicle being the inspection target is not within the preset range, the determination part 4905 determines that the tread slope $\gamma_i$ is not normal.

Note that it is also possible to derive the tread slope $\gamma_i$ of the railway vehicle being the inspection target by multiplying the ratio of the tread slope $\gamma_i$ of the railway vehicle being the inspection target to the tread slope reference value $\gamma_0$ of the railway vehicle being the inspection target by the tread slope reference value $\gamma_0$ of the railway vehicle being the inspection target. When it is designed as above, the determination part 4905 may also determine whether or not the tread slope $\gamma_i$ of the railway vehicle being the inspection target is within the preset range.

[Storage unit 302]

The storage unit 302 stores the range which is compared with the ratio of the tread slope $\gamma_i$ of the railway vehicle being the inspection target to the tread slope reference value $\gamma_0$ of the railway vehicle being the inspection target in the determination part 4905.

[Output unit 304]

The output unit 304 outputs information indicating the result determined by the determination part 4905. Concretely, when the determination part 4905 determines that the tread slope $\gamma_i$ is not normal, the output unit 304 outputs information indicating that. At this time, the output unit 304 also outputs information indicating that the tread slope $\gamma_i$ is of which wheel set. Further, the output unit 304 also outputs the value of the tread slope $\gamma_i$. As a form of output, it is possible to employ at least any one of displaying the information on a computer display, transmitting the information to an external device, and storing the information in an internal or external storage medium, for example.

(Flowchart)

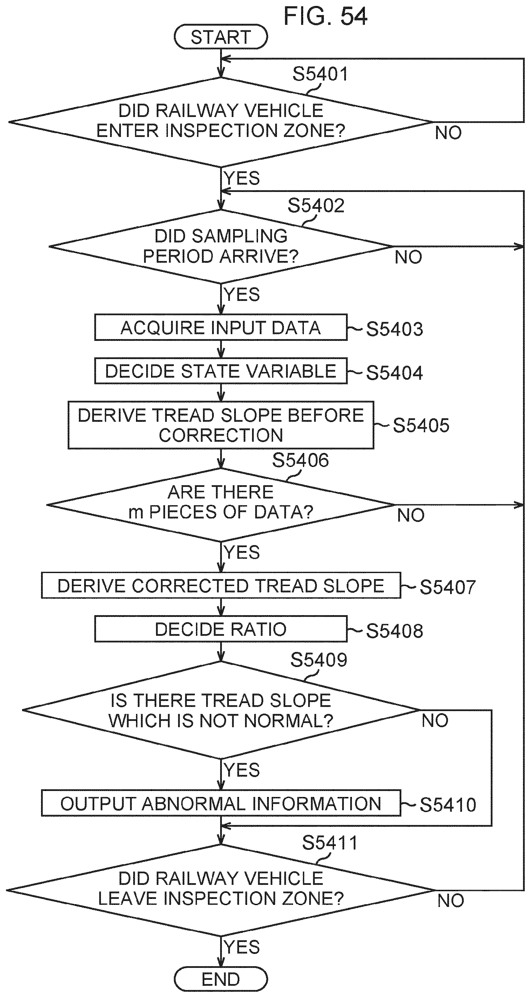

Next, one example of processing performed by the inspection apparatus 300 of the present embodiment will be described while referring to a flowchart in Fig. 54.

In step S5401, the inspection apparatus 300 waits until when the railway vehicle being the inspection target enters the inspection zone. When the railway vehicle being the inspection target enters the inspection zone, the processing proceeds to step S5402. When the processing proceeds to step S5402, the inspection apparatus 300 waits until when (a start time of) the predetermined sampling period arrives. When (the start time of) the predetermined sampling period arrives, the processing proceeds to step S5403.

When the processing proceeds to step S5403, the data acquisition unit 301 acquires input data of the railway vehicle being the inspection target. The input data includes the measured value of acceleration of the vehicle body 11 in the right and left direction, the measured values of accelerations of the bogies 12a, 12b in the right and left direction, the measured values of accelerations of the wheel sets 13a to 13d in the right and left direction, and the measured values of the forward-and-backward direction forces $T_1$ to $T_4$.

Next, in step S5404, the filter operation part 4901 decides estimated values of the state variables of the railway vehicle being the inspection target and derives estimated values of the pivot amounts (angular displacements) $\phi_{w1}$ to $\phi_{w4}$ of the wheel sets 13a to 13d in the yawing direction of the railway vehicle being the inspection target based on the input data acquired in step S5403. The state variables are those illustrated in (48) Equation.

Next, in step S5405, the tread slope derivation part 4902 derives the tread slopes $\gamma_i$ ($\gamma_1$ to $\gamma_4$) before correction in the wheel sets 13a to 13d of the railway vehicle being the inspection target, based on the measured values of the forward-and-backward direction forces $T_1$ to $T_4$ in the wheel sets 13a to 13d acquired in step S5403, the estimated values of the state variables decided in step S5404, and the estimated values of the pivot amounts (angular displacements) $\phi_{w1}$ to $\phi_{w4}$ of the wheel sets 13a to 13d in the yawing direction derived in step S5404.

Next, in step S5406, the inspection apparatus 300 determines whether or not the number of tread slopes $\gamma_i$ before correction in the wheel sets 13a to 13d of the railway vehicle being the inspection target is m (1500, for example) or more. When, as a result of this determination, the number of tread slopes $\gamma_i$ before correction in the wheel sets 13a to 13d of the railway vehicle being the inspection target is not m or more, pieces of data for deriving the coefficient $\alpha$ of the corrected AR model are not gathered, so that the processing returns to step S5402. Subsequently, processing for deriving the tread slopes $\gamma_i$ before correction in the wheel sets 13a to 13d of the railway vehicle being the inspection target at the next sampling period is performed.

When, in step S5406, it is determined that the number of tread slopes $\gamma_i$ before correction in the wheel sets 13a to 13d of the railway vehicle being the inspection target is m or more, the processing proceeds to step S5407. When the processing proceeds to step S5407, the frequency component adjustment part 4903 uses the m pieces of tread slopes $\gamma_i$ before correction derived in step S5405 to decide the coefficient $\alpha$ of the corrected AR model, and derives, by using the decided coefficient $\alpha$ of the corrected AR model and the m pieces of tread slopes $\gamma_i$ before correction derived in step S5405, the corrected tread slope $\gamma_i$ of the railway vehicle being the inspection target through (28) Equation.

Next, in step S5408, the tread slope correction part 4904 derives the ratio of the corrected tread slope $\gamma_i$ of the railway vehicle being the inspection target derived in step S5407 to the tread slope reference value $\gamma_0$ of the railway vehicle being the inspection target. Subsequently, the tread slope correction part 4904 uses the tread slope correction information to decide the ratio of the tread slope $\gamma_i$ of the railway vehicle being the inspection target to the tread slope reference value $\gamma_0$ of the railway vehicle being the inspection target. The ratio of the tread slope $\gamma_i$ of the railway vehicle being the inspection target to the tread slope reference value $\gamma_0$ of the railway vehicle being the inspection target is a value on the horizontal axis when the ratio of the corrected tread slope $\gamma_i$ of the railway vehicle being the inspection target derived in step S5407 to the tread slope reference value $\gamma_0$ of the railway vehicle being the inspection target is applied to the vertical axis of each of the graphs 1801 to 1804.

Next, in step S5409, the determination part 4905 determines whether or not there is a not-normal tread slope $\gamma_i$, by determining whether or not the ratio of the tread slope $\gamma_i$ of the railway vehicle being the inspection target to the tread slope reference value $\gamma_0$ of the railway vehicle being the inspection target decided in step S5408 is within the preset range. As described above, when the ratio of the tread slope $\gamma_i$ of the railway vehicle being the inspection target is not within the preset range, the tread slope $\gamma_i$ having the ratio is determined as not normal.

When, as a result of this determination, there is the not-normal tread slope $\gamma_i$, the processing proceeds to step S5410. When the processing proceeds to step S5410, the output unit 304 outputs abnormal information indicating that the tread slope $\gamma_i$ of the wheels 14a to 14f of the railway vehicle being the inspection target is not normal. Subsequently, the processing proceeds to step S5411 to be described later.

On the other hand, when, as a result of the determination in step S5409, there is no not-normal tread slope $\gamma_i$ (namely, all tread slopes $\gamma_i$ are normal), the processing omits step S5410 and proceeds to step S5411.

When the processing proceeds to step S5411, the inspection apparatus 300 determines whether or not the railway vehicle being the inspection target left the inspection zone. When, as a result of this determination, the railway vehicle being the inspection target has not left the inspection zone, the processing returns to step S5402. Subsequently, the processing from steps S5402 to S5411 is repeatedly executed until when the railway vehicle being the inspection target leaves the inspection zone. Further, when it is determined that the railway vehicle being the inspection target left the inspection zone in step S5411, the processing according to the flowchart in Fig. 54 is terminated.

(Summary)

As described above, in the present embodiment, the inspection apparatus 300 gives the accelerations of the vehicle body 11, the bogies 12a, 12b, and the wheel sets 13a to 13d of the railway vehicle being the inspection target in the right and left direction, the measured values of the forward-and-backward direction forces $T_1$ to $T_4$, and the actual values of the transformation variables $e_1$ to $e_4$ to the Kalman filter, to thereby derive the state variables. The inspection apparatus 300 uses the pivot amounts (angular displacements) $\phi_{t1}$ and $\phi_{t2}$ of the bogies 12a, 12b in the yawing direction included in the state variables, and the actual values of the transformation variables $e_1$ to $e_4$, to derive the estimated values of the pivot amounts (angular displacements) $\phi_{w1}$ to $\phi_{w4}$ of the wheel sets 13a to 13d in the yawing direction. The inspection apparatus 300 substitutes the state variables, the measured value of the forward-and-backward direction force $T_i$, and the estimated values of the pivot amounts (angular displacements) $\phi_{w1}$ to $\phi_{w4}$ of the wheel sets 13a to 13d in the yawing direction in the motion equations describing the yawings of the wheel sets 13a to 13d, to thereby derive the tread slope $\gamma_i$. Therefore, there is no need to dispose an imaging unit or sensor on the ground, and it is possible to inspect whether or not the tread slope $\gamma_i$ is normal as a state of the wheel of the railway vehicle, and in addition to that, it is possible to inspect the value of the tread slope $\gamma_i$ in the present embodiment.

Further, in the present embodiment, when the value of the tread slope $\gamma_i$ is greater than the upper limit value, the inspection apparatus 300 sets the value to the upper limit value, and when the value is lower than the lower limit value, the inspection apparatus 300 sets the value to the lower limit value. Therefore, it is possible to further stabilize the value of the tread slope $\gamma_i$.

Further, in the present embodiment, the inspection apparatus 300 generates the autocorrelation matrix R from the data y of the tread slope $\gamma_i$, and decides the coefficient $\alpha$ of the corrected AR model approximating the data y of the tread slope $\gamma_i$, by using the eigenvalue having the largest value among the eigenvalues obtained by making the autocorrelation matrix R to be subjected to singular value decomposition. Therefore, it is possible to decide the coefficient $\alpha$ so as to be able to emphasize, among the signal components included in the data y of the tread slope $\gamma_i$, the original signal component of the tread slope $\gamma_i$. The inspection apparatus 300 calculates the predicted value $y\hat{}_k$ of the tread slope $\gamma_i$ at the time k by giving the data y of the tread slope $\gamma_i$ at the time k-l ($1 \leq l \leq m$), which is prior to the time k, to the corrected AR model whose coefficient $\alpha$ is determined in this manner. Accordingly, it is possible to extract the essential signal component from the data y of the tread slope $\gamma_i$ without estimating a cutoff frequency beforehand. Therefore, it is possible to more correctly derive the tread slope $\gamma_i$.

Further, in the present embodiment, the inspection apparatus 300 uses the tread slope correction information being the correspondence between the previously-determined calculated value and the actual measured value to correct the tread slope $\gamma_i$, so that it is possible to more correctly derive the tread slope $\gamma_i$.

(Modified example)

The present embodiment has explained the case, as an example, in which every time it is determined that the ratio of the tread slope $\gamma_i$ of the railway vehicle being the inspection target to the tread slope reference value $\gamma_0$ of the railway vehicle being the inspection target is not within the preset range, the information indicating that the tread slope $\gamma_i$ is not normal is output. However, it does not always have to design as above. For example, it is also possible to design such that when it is continuously determined, a predetermined number of times, that the ratio of the tread slope $\gamma_i$ of the railway vehicle being the inspection target to the tread slope reference value $\gamma_0$ of the railway vehicle being the inspection target is not within the preset range, it is determined that the tread slope $\gamma_i$ is not normal, and information indicating that is output. Further, it is also possible to design such that when, in all or a part of the inspection zone, the ratio of the tread slope $\gamma_i$ of the railway vehicle being the inspection target to the tread slope reference value $\gamma_0$ of the railway vehicle being the inspection target is not within the preset range, it is determined that the tread slope $\gamma_i$ is not normal, and information indicating that is output. As these concrete determination conditions, it is only required to select ones by which sufficient determination accuracy can be obtained in view of setting of the threshold value and the track information in the inspection zone. Further, the timing of outputting the information based on the results of these determinations is not limited to the time right after the determinations. For example, the information based on the results of these determinations may be output after the termination of the inspection. Further, the sixth embodiment may also employ the present modified example.

Further, the present embodiment has explained the case, as an example, in which the tread slope correction information is derived for each of the wheel sets 13a to 13d to store the information beforehand. However, it does not always have to design as above. For example, it is also possible that one approximate equation (approximate function) is derived and stored for each plot illustrated in Fig. 53. When it is designed as above, the tread slope correction part 4904 applies each ratio of the corrected tread slope $\gamma_i$ of the railway vehicle being the inspection target derived by the frequency component adjustment part 4903 to the tread slope reference value $\gamma_0$ of the railway vehicle being the inspection target, to the approximate equation (approximate function).

<<Eighth embodiment>>

Next, an eighth embodiment will be described.

In the first reference example and second to seventh embodiments, the case where the inspection apparatus 300 mounted on the railway vehicle determines whether or not the inspection target member is normal has been explained as an example. In contrast to this, in the present embodiment, a data processing device in which some functions of the inspection apparatus 300 are mounted is disposed in an operation center. The data processing device receives input data including measured values of the forward-and-backward direction forces $T_1$ to $T_4$ transmitted from the railway vehicle, and determines whether or not the inspection target member is normal by using the received input data. In this manner, in the present embodiment, the functions that the inspection apparatus 300 in the first reference example and second to seventh embodiments has are shared and executed by the railway vehicle and the operation center. Configurations and processing due to this are mainly different between the present embodiment, and the first reference example and second to seventh embodiments. Accordingly, in the explanation of the present embodiment, the same reference numerals and symbols as those added to Fig. 1 to Fig. 54 are added to the same parts as those in the first reference example and second to seventh embodiments, or the like, and their detailed explanations will be omitted.

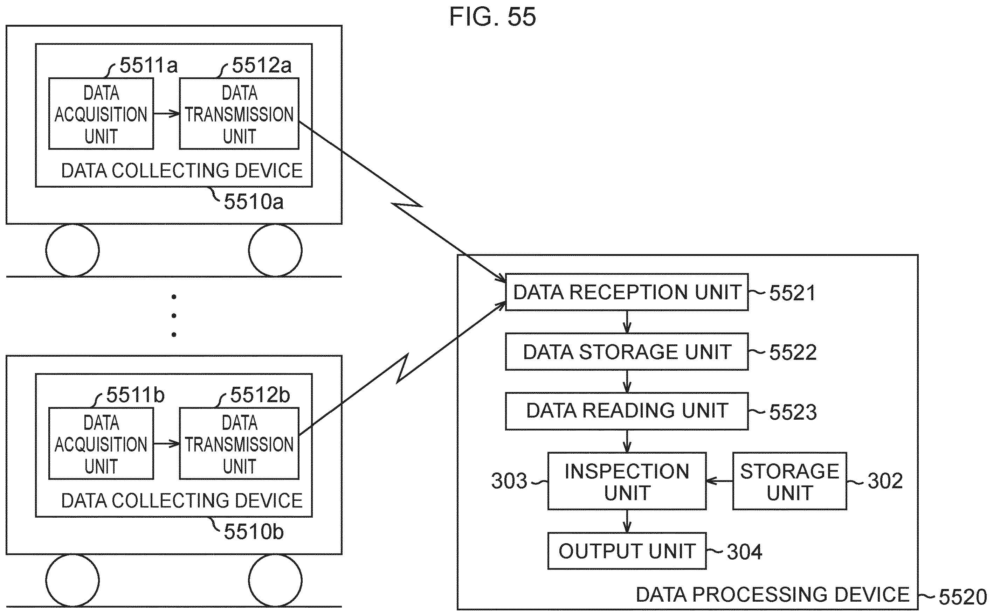

Fig. 55 is a view illustrating one example of a configuration of an inspection system. In Fig. 55, the inspection system includes data collecting devices 5510a, 5510b, and a data processing device 5520. In Fig. 55, one example of functional configurations of the data collecting devices 5510a, 5510b and the data processing device 5520 is also illustrated. Note that each hardware of the data collecting devices 5510a, 5510b and the data processing device 5520 can be realized by the one illustrated in Fig. 4, for example. Accordingly, detailed explanations of the hardware configurations of the data collecting devices 5510a, 5510b and the data processing device 5520 will be omitted.

The data collecting devices 5510a, 5510b are mounted on each railway vehicle one by one. The data processing device 5520 is disposed at the operation center. The operation center centrally manages operations of a plurality of railway vehicles, for example.

<Data collecting devices 5510a, 5510b>

The data collecting devices 5510a, 5510b can be realized by the same components. The data collecting devices 5510a, 5510b include data acquisition units 5511a, 5511b, and data transmission units 5512a, 5512b.

<Data acquisition units 5511a, 5511b>

The data acquisition units 5511a, 5511b have the same function as that of the data acquisition unit 301. That is, the data acquisition units 5511a, 5511b acquire the input data including the measured values of the forward-and-backward direction forces $T_1$ to $T_4$, similarly to the data acquisition unit 301. In the first reference example and second to fourth embodiments, and in the sixth and seventh embodiments, the input data includes the measured values of the forward-and-backward direction forces $T_1$ to $T_4$. In the fifth embodiment, the input data includes the track information ($1/R_i$, $1/R_i \cdot$, $\phi_{raili}$), and the vehicle information ($T_i$, $\phi_{tj}$, $\phi_{wi}$, $\phi_{tj} \cdot$, $\phi_{wi} \cdot$).

<Data transmission units 5512a, 5512b>

The data transmission units 5512a, 5512b transmit the input data acquired by the data acquisition units 5511a, 5511b to the data processing device 5520. In the present embodiment, the data transmission units 5512a, 5512b transmit the input data acquired by the data acquisition units 5511a, 5511b to the data processing device 5520 by radio. At this time, the data transmission units 5512a, 5512b add identification numbers of the railway vehicles on which the data collecting devices 5510a, 5510b are mounted to the input data acquired by the data acquisition units 5511a, 5511b. In this manner, the data transmission units 5512a, 5512b transmit the input data with the identification numbers of the railway vehicles added thereto.

[Data processing device 5520]

<Data reception unit 5521>

A data reception unit 5521 receives the input data transmitted by the data transmission units 5512a, 5512b. To the input data, the identification numbers of the railway vehicles, which are transmission sources of the input data, have been added.

<Data storage unit 5522>

A data storage unit 5522 stores the input data received by the data reception unit 5521. The data storage unit 5522 stores the input data for each identification number of the railway vehicle. The data storage unit 5522 specifies the traveling position of the railway vehicle at the time of receipt of the input data based on the current operation situation of the railway vehicle and the time of receipt of the input data. The data storage unit 5522 stores information of the specified traveling position and the input data by making them relate to each other. Note that the data collecting devices 5510a, 5510b may collect the information of the current traveling position of the railway vehicle and add the collected information to the input data.

<Data reading unit 5523>

A data reading unit 5523 reads the input data stored in the data storage unit 5522. The data reading unit 5523 can read, out of the input data stored in the data storage unit 5522, the input data designated by an operator. Further, the data reading unit 5523 can also read the input data matching a previously-determined condition at a previously-determined timing. In the present embodiment, the input data read by the data reading unit 5523 is decided based on at least any one of the identification number and the traveling position of the railway vehicle, for example.

Each of a storage unit 302, an inspection unit 303, and an output unit 304 is the same as any one of those explained in the first reference example and second to seventh embodiments. Accordingly, their detailed explanations will be omitted here. Note that the inspection unit 303 uses the input data read by the data reading unit 5523 in place of using the input data acquired by the data acquisition unit 301, to determine whether or not the inspection target member is normal.

(Summary)

As described above, in the present embodiment, the data collecting devices 5510a, 5510b mounted on the railway vehicles collect the input data to transmit the data to the data processing device 5520. The data processing device 5520 disposed at the operation center stores the input data received from the data collecting devices 5510a, 5510b, and uses the stored input data to determine whether or not the inspection target member is normal. Accordingly, in addition to the effects explained in the first reference example and second to seventh embodiments, for example, the following effects are exhibited. That is, the data processing device 5520 can determine whether or not the inspection target member of each railway vehicle managed by the operation center is normal at an arbitrary timing by reading the input data at an arbitrary timing.

(Modified example)

In the present embodiment, the case where the data collecting devices 5510a, 5510b directly transmit the input data to the data processing device 5520 has been explained as an example. However, it does not always have to design as above. An inspection system may be built by using cloud computing, for example.

Other than the above, also in the present embodiment, the various modified examples and reference examples explained in the first reference example and second to seventh embodiments can be employed.

Further, in the first reference example and second to seventh embodiments, the case where the data acquisition unit 301, the storage unit 302, the inspection unit 303, and the output unit 304 are included in one apparatus has been explained as an example. However, it does not always have to design as above. Functions of the data acquisition unit 301, the storage unit 302, the inspection unit 303, and the output unit 304 may be realized by a plurality of apparatuses. Further, the function of the inspection unit 303 may be realized by a plurality of apparatuses. In this case, the inspection system is configured by using the plural apparatuses.

<<Another embodiment>>

Note that the embodiments of the present invention explained above can be realized by causing a computer to execute a program. Further, a computer-readable recording medium in which the aforementioned program is recorded and a computer program product such as the aforementioned program can also be applied as the embodiment of the present invention. As the recording medium, it is possible to use a flexible disk, a hard disk, an optical disk, a magneto-optic disk, a CD-ROM, a magnetic tape, a nonvolatile memory card, a ROM, or the like, for example.

Further, the embodiments of the present invention explained above merely illustrate concrete examples of implementing the present invention, and the technical scope of the present invention is not to be construed in a restrictive manner by these embodiments. That is, the present invention may be implemented in various forms without departing from the scope of the appended claims.

INDUSTRIAL APPLICABILITY

The present invention can be utilized for inspecting railway vehicles, for example.

**Claims**

1. A railway vehicle comprising a vehicle body (11), a bogie (12a,12b), a wheel set (13a-13d), an axle box (17a-17d), an axle box suspension (18a,18b), and an inspection system (300) that inspects an inspection target member of the railway vehicle, the inspection system (300) comprising:

   an acquisition means (301) that acquires input data including a measured value of a forward-and-backward direction force ($T_1$-$T_4$) to be measured by making the railway vehicle travel on a track (20); and
   an inspection means (303) that inspects the inspection target member by using the measured value of the forward-and-backward direction force ($T_1$-$T_4$) acquired by the acquisition means (301), wherein

the forward-and-backward direction force ($T_1$-$T_4$) is a force in a forward and backward direction that occurs in a member configuring the axle box suspension (18a,18b),
the member is a member for supporting the axle box (17a-17d),
the forward and backward direction is a direction along a traveling direction of the railway vehicle, and
the inspection target member is at least one of:

a member disposed between a bogie frame (16) of the bogie (12a,12b) and the wheel set (13a-13d);
a member disposed between the bogie frame (16) of the bogie (12a,12b) and the vehicle body (11); and
a wheel (14a-14f), and in the case that the inspection target member is a wheel (14a-14f), the inspection means (303) inspects at least a tread slope ($\gamma$) of the wheel (14a-14f), and wherein
the inspection means (303) comprises a determination means that determines whether or not the inspection target member is normal by using the measured value of the forward-and-backward direction force ($T_1$-$T_4$) acquired by the acquisition means (301), and **characterised in that** the inspection means (303) further comprises:

(a) a frequency component adjustment means that adjusts a frequency component of a signal of the measured value of the forward-and-backward direction force ($T_1$-$T_4$) so as to reduce a noise included in the signal of the measured value of the forward-and-backward direction force ($T_1$-$T_4$),
the determination means determines whether or not the inspection target member is normal based on the measured value of the forward-and-backward direction force ($T_1$-$T_4$) having the frequency component adjusted by the frequency component adjustment means, and **in that**
(b) the frequency component adjustment means uses time-series data of the measured value of the forward-and-backward direction force ($T_1$-$T_4$) to derive a coefficient in a corrected Auto-Regressive model (AR), and uses the coefficient to correct the measured value of the forward-and-backward direction force ($T_1$-$T_4$), thereby adjusting the frequency component of the signal of the measured value of the forward-and-backward direction force ($T_1$-$T_4$),

the corrected AR model is an expression representing a predicted value of the forward-and-backward direction force ($T_1$-$T_4$) by using an actual value of the forward-and-backward direction force ($T_1$-$T_4$) and the coefficient responsive to the actual value,
the coefficient is derived by using an equation in which a first matrix is set to a coefficient matrix and an autocorrelation vector is set to a constant vector,
the autocorrelation vector is a vector whose component is autocorrelation of the time-series data of the measured value of the forward-and-backward direction force ($T_1$-$T_4$) with a time lag of 1 to m,
m is a number of the value of the forward-and-backward direction force ($T_1$-$T_4$) used in the corrected AR model,
the first matrix is a matrix $U_s \Sigma_s U_s^T$ derived from a second matrix $\Sigma_s$ and a third matrix $U_s$, s being a number of 1 or more and less than m,
the second matrix $\Sigma_s$ is derived from s pieces of eigenvalues of an autocorrelation matrix and a diagonal matrix $\Sigma$ ,
the third matrix $U_s$ is derived from the s pieces of eigenvalues and an orthogonal matrix U,
the autocorrelation matrix is a matrix whose component is autocorrelation of the time-series data of the measured value of the forward-and-backward direction force ($T_1$-$T_4$) with a time lag of 0 to m-1,
the diagonal matrix is a matrix whose diagonal component is eigenvalues of the autocorrelation matrix,
the eigenvalues of the autocorrelation matrix are derived by singular value decomposition of the autocorrelation matrix,
the orthogonal matrix is a matrix in which an eigenvector of the autocorrelation matrix is set to a column component vector,
the second matrix is a submatrix of the diagonal matrix and is a matrix whose diagonal component is the s pieces of eigenvalues, and
the third matrix is a submatrix of the orthogonal matrix and is a matrix in which eigenvectors corresponding to the s pieces of eigenvalues are set to column component vectors.

2. The railway vehicle according to claim 1, wherein

the determination means determines whether or not the inspection target member is normal based on a result of comparison between the measured value of the forward-and-backward direction force ($T_1$-$T_4$) acquired by the

acquisition means (301) and a measured value of the forward-and-backward direction force ($T_1$-$T_4$) with respect to the railway vehicle which is normal,
and/or
the determination means determines whether or not the inspection target member is normal based on a difference between the measured value of the forward-and-backward direction force ($T_1$-$T_4$) acquired by the acquisition means (301) and the forward-and-backward direction force ($T_1$-$T_4$) with respect to the railway vehicle which is normal.

3. The railway vehicle according to any one of claims 1 to 2, wherein

(c) the determination means determines whether or not the inspection target member is normal based on a result of comparison between time-series data of the measured value of the forward-and-backward direction force ($T_1$-$T_4$) with respect to the railway vehicle which is normal and the time-series data of the measured value of the forward-and-backward direction force ($T_1$-$T_4$) having the frequency component adjusted by the frequency component adjustment means, and
the time-series data of the measured value of the forward-and-backward direction force ($T_1$-$T_4$) with respect to the railway vehicle which is normal is time-series data whose frequency component is adjusted by using the corrected AR model in the railway vehicle which is normal and the time-series data of the measured value of the forward-and-backward direction force ($T_1$-$T_4$) with respect to the railway vehicle which is normal.

4. The railway vehicle according to any one of claims 1 to 2, wherein

(d) the inspection means (303) comprises:

a coefficient derivation means that derives a coefficient in a corrected AR model by using time-series data of the measured value of the forward-and-backward direction force ($T_1$-$T_4$); and
a frequency characteristic derivation means that derives a frequency characteristic indicating a distribution of frequencies of the corrected AR model by using the coefficient derived by the coefficient derivation means,
the corrected AR model is an expression representing a predicted value of the forward-and-backward direction force ($T_1$-$T_4$) by using an actual value of the forward-and-backward direction force ($T_1$-$T_4$) and the coefficient responsive to the actual value,
the coefficient derivation means derives the coefficient by using an equation in which a first matrix is set to a coefficient matrix and an autocorrelation vector is set to a constant vector,
the autocorrelation vector is a vector whose component is autocorrelation of the time-series data of the measured value of the forward-and-backward direction force ($T_1$-$T_4$) with a time lag of 1 to m,
m is a number of the value of the forward-and-backward direction force ($T_1$-$T_4$) used in the corrected AR model,
the first matrix is a matrix $U_s \Sigma_s U_s^T$ derived from a second matrix $\Sigma_s$ and a third matrix $U_s$, s being a number of 1 or more and less than m,
the second matrix $\Sigma_s$ is derived from s pieces of eigenvalues of an autocorrelation matrix and a diagonal matrix $\Sigma$ ,
the third matrix $U_s$ is derived from the s pieces of eigenvalues and an orthogonal matrix U,
the autocorrelation matrix is a matrix whose component is autocorrelation of the time-series data of the measured value of the forward-and-backward direction force ($T_1$-$T_4$) with a time lag of 0 to m-1,
the diagonal matrix is a matrix whose diagonal component is eigenvalues of the autocorrelation matrix,
the eigenvalues of the autocorrelation matrix are derived by singular value decomposition of the autocorrelation matrix,
the orthogonal matrix is a matrix in which an eigenvector of the autocorrelation matrix is set to a column component vector,
the second matrix is a submatrix of the diagonal matrix and is a matrix whose diagonal component is the s pieces of eigenvalues,
the third matrix is a submatrix of the orthogonal matrix and is a matrix in which eigenvectors corresponding to the s pieces of eigenvalues are set to column component vectors, and
the determination means determines whether or not the inspection target member is normal by using the frequency characteristic derived by the frequency characteristic derivation means,
and, optionally, in case (d),

(e) the determination means determines whether or not the inspection target member is normal based on a result of comparison between the frequency characteristic indicating the distribution of frequencies of the corrected AR model derived by the frequency characteristic derivation means and a frequency characteristic indicating a distribution of frequencies of the corrected AR model of the railway vehicle which is normal.

5. The railway vehicle according to any one of claims 1 to 4, case (b), (c), (d), or (e), wherein
(f) the s pieces of eigenvalues are eigenvalues each having a value which is equal to or more than an average value of the eigenvalues of the autocorrelation matrix, out of the eigenvalues of the autocorrelation matrix.

6. The railway vehicle according to any one of claims 1 to 5, wherein
the inspection target member includes at least any one of the axle box (17a-17d), a lateral movement damper, a yaw damper, an air spring, and the axle box suspension (18a,18b).

7. The railway vehicle according to claim 1, wherein

(g) the inspection target member is a yaw damper,
the inspection means (303) comprises:

a difference derivation means that derives at least any one of an angular velocity difference and an angular displacement difference, based on the measured value of the forward-and-backward direction force ($T_1$-$T_4$) acquired by the acquisition means (301); and
a determination means that determines whether or not the yaw damper is normal based on a result of comparison between at least any one of the angular velocity difference and the angular displacement difference derived by the difference derivation means and a value with respect to the railway vehicle which is normal,
the angular velocity difference represents a difference between an angular velocity of the yaw damper in a yawing direction and an angular velocity of the vehicle body (11) in the yawing direction,
the angular displacement difference represents a difference between an angular displacement of the yaw damper in the yawing direction and an angular displacement of the bogie (12a,12b) in the yawing direction, and
the yawing direction is a pivoting direction with an up and down direction being a direction vertical to the track set as a pivot axis,
and, in case (g), optionally,

(h) the input data includes the measured value of the forward-and-backward direction force ($T_1$-$T_4$), and measured values of accelerations of the vehicle body (11), the bogie (12a,12b), and the wheel set (13a-13d) in a right and left direction,
the inspection means (303) comprises a state variable decision means that performs an operation using a filter performing data assimilation by using the input data, a state equation, and an observation equation, to decide state variables being variables to be decided in the state equation,
the difference derivation means derives at least any one of the angular velocity difference and the angular displacement difference by using the state variables decided by the state variable decision means,
the right and left direction is a direction vertical to both the forward and backward direction and the up and down direction being a direction vertical to the track (20),
the forward-and-backward direction force ($T_1$-$T_4$) is a force to be determined according to a difference between an angular displacement of the wheel set (13a-13d) in the yawing direction and an angular displacement of the bogie (12a,12b), in the yawing direction, on which the wheel set (13a-13d) is provided,
the yawing direction is a pivoting direction with the up and down direction set as a pivot axis,
the state equation is an equation described by using the state variables, the forward-and-backward direction force ($T_1$-$T_4$), and a transformation variable,
the state variables include a displacement and a velocity of the vehicle body (11) in the right and left direction, an angular displacement and an angular velocity of the vehicle body (11) in the yawing direction, an angular displacement and an angular velocity of the vehicle body (11) in a rolling direction, a displacement and a velocity of the bogie (12a,12b) in the right and left direction, an angular displacement and an angular velocity of the bogie (12a,12b) in the yawing direction, an angular displacement and an angular velocity of the bogie (12a,12b) in the rolling direction, a displacement and a velocity of the wheel set (13a-13d) in the right and left direction, an angular displacement of an air spring, in the rolling direction, attached to the railway vehicle, and an angular displacement of the yaw damper, in the yawing direction, attached to the railway vehicle, and do not include an angular displacement and an angular velocity of the wheel set (13a-13d) in the yawing direction,

the rolling direction is a pivoting direction with the forward and backward direction set as a pivot axis, the transformation variable is a variable that performs mutual transformation between the angular displacement of the wheel set (13a-13d) in the yawing direction and the angular displacement of the bogie (12a,12b) in the yawing direction,

the observation equation is an equation described by using an observation variable and the transformation variable,

the observation variable includes the accelerations of the vehicle body (11), the bogie (12a,12b), and the wheel set (13a-13d) in the right and left direction,

the inspection means (303) uses the state equation into which a measured value of the observation variable, the measured value of the forward-and-backward direction force ($T_1$-$T_4$), and an actual value of the transformation variable are substituted and the observation equation into which the actual value of the transformation variable is substituted, to decide the state variables when an error between, of the observation variable, the measured value and a calculated value or an expected value of the error becomes minimum, and

the actual value of the transformation variable is derived by using the measured value of the forward-and-backward direction force ($T_1$-$T_4$).

8. The railway vehicle according to claim 1, wherein

  (i) the input data includes vehicle information,

    the vehicle information includes the measured value of the forward-and-backward direction force ($T_1$-$T_4$), an angular displacement and an angular velocity of the bogie (12a,12b) in a yawing direction, and an angular displacement and an angular velocity of the wheel set (13a-13d) in the yawing direction,
    the inspection means (303) comprises:

      a spring constant derivation means that derives a spring constant of the axle box suspension (18a,18b) in the forward and backward direction based on the vehicle information acquired by the acquisition means (301); and
      a determination means that determines whether or not stiffness of the axle box suspension (18a,18b) in the forward and backward direction is normal based on the spring constant of the axle box suspension (18a,18b) in the forward and backward direction derived by the spring constant derivation means, and
      the yawing direction is a pivoting direction with an up and down direction being a direction vertical to the track set as a pivot axis,
      and, in case (i), optionally,
  (j) the input data includes track information,

      the track information includes a curvature of a rail (20a,20b) at a position of the wheel set (13a-13d), and a time differential value of the curvature of the rail (20a,20b) at the position of the wheel set (13a-13d), and
      the spring constant derivation means derives the spring constant of the axle box suspension (18a,18b) in the forward and backward direction based on the vehicle information acquired by the acquisition means (301) and the track information acquired by the acquisition means (301),

    and, in case (i) or (j), optionally,
  (k) when the spring constant of the axle box suspension (18a,18b) in the forward and backward direction is greater than an upper limit value, the spring constant derivation means sets the value of the spring constant of the axle box suspension (18a,18b) in the forward and backward direction to the upper limit value, and when the spring constant of the axle box suspension (18a,18b) in the forward and backward direction is lower than a lower limit value, the spring constant derivation means sets the value of the spring constant of the axle box suspension (18a,18b) in the forward and backward direction to the lower limit value,
    and, in case (k), optionally,
  (l) the upper limit value and the lower limit value are set based on a spring constant of the axle box suspension (18a,18b) in the forward and backward direction of the railway vehicle which is normal,

and, in any of (i), (j), (k), or (1), optionally,

(m) the inspection means (303) comprises a frequency component adjustment means that adjusts a frequency component of a signal of the spring constant of the axle box suspension (18a,18b) in the forward and backward direction so as to reduce a noise included in the signal of the spring constant of the axle box suspension (18a,18b) in the forward and backward direction derived by the spring constant derivation means, and

the determination means determines whether or not the stiffness of the axle box suspension (18a,18b) in the forward and backward direction is normal based on the spring constant of the axle box suspension (18a,18b) in the forward and backward direction having the frequency component adjusted by the frequency component adjustment means,

and, in case (m), optionally,

(n) the frequency component adjustment means uses time-series data of the spring constant of the axle box suspension (18a,18b) in the forward and backward direction derived by the spring constant derivation means to derive a coefficient in a corrected AR model, and uses the derived coefficient to correct the spring constant of the axle box suspension (18a,18b) in the forward and backward direction derived by the spring constant derivation means, thereby adjusting the frequency component of the signal of the spring constant of the axle box suspension (18a,18b) in the forward and backward direction,

the corrected AR model is an expression representing a predicted value of the spring constant of the axle box suspension (18a,18b) in the forward and backward direction by using an actual value of the spring constant of the axle box suspension (18a,18b) in the forward and backward direction and the coefficient responsive to the actual value,

the coefficient is decided by using an equation in which a first matrix is set to a coefficient matrix and an autocorrelation vector is set to a constant vector,

the autocorrelation vector is a vector whose component is autocorrelation of the time-series data of the spring constant of the axle box suspension (18a,18b) in the forward and backward direction with a time lag of 1 to m, m being a number of the spring constant of the axle box suspension (18a,18b) in the forward and backward direction used in the corrected AR model,

the first matrix is a matrix $U_s \Sigma_s U_s^T$ derived from a second matrix $\Sigma_s$ and a third matrix $U_s$, s being a number of 1 or more and less than m,

the second matrix $\Sigma_s$ is derived from s pieces of eigenvalues of an autocorrelation matrix and a diagonal matrix $\Sigma$,

the third matrix $U_s$ is derived from the s pieces of eigenvalues and an orthogonal matrix U,

the autocorrelation matrix is a matrix whose component is autocorrelation of the time-series data of the spring constant of the axle box suspension (18a,18b) in the forward and backward direction with a time lag of 0 to m-1,

the diagonal matrix is a matrix whose diagonal component is eigenvalues of the autocorrelation matrix,

the eigenvalues of the autocorrelation matrix are derived by singular value decomposition of the autocorrelation matrix,

the orthogonal matrix is a matrix in which an eigenvector of the autocorrelation matrix is set to a column component vector,

the second matrix is a submatrix of the diagonal matrix and is a matrix whose diagonal component is the s pieces of eigenvalues, and

the third matrix is a submatrix of the orthogonal matrix and is a matrix in which eigenvectors corresponding to the s pieces of eigenvalues are set to column component vectors,

and, in case (n), optionally,

(o) the s pieces of eigenvalues correspond to an eigenvalue having the largest value,

and, in any of cases (i) to (o), optionally,

(p) the acquisition means (301) performs numerical analysis based on motion equations describing motions of the railway vehicle, to derive the angular displacement and the angular velocity of the bogie (12a,12b) in the yawing direction, and the angular displacement and the angular velocity of the wheel set (13a-13d) in the yawing direction,

and, in any of cases (i) to (p), optionally,

(q) the determination means determines whether or not the stiffness of the axle box suspension (18a,18b) in the forward and backward direction is normal based on a result of comparison between the spring constant of the axle box suspension (18a,18b) in the forward and backward direction and a reference value.

**9.** The railway vehicle according to claim 1, wherein

(r) the inspection target member is a wheel (14a-14f),
and, in case (r), optionally,
(s) the inspection means (303) comprises a tread slope derivation means that derives the tread slope ($\gamma$) of the wheel (14a-14f) by using a relational expression representing a relation between the tread slope ($\gamma$) of the wheel (14a-14f) and the forward-and-backward direction force ($T_1$-$T_4$), and the measured value of the forward-and-backward direction force ($T_1$-$T_4$) acquired by the acquisition means (301),
and, in case (s), optionally,

(t) the relational expression is an expression based on a motion equation describing a motion of the wheel set (13a-13d) in a yawing direction, and
the yawing direction is a pivoting direction with an up and down direction being a direction vertical to the track set as a pivot axis,

and, in case (s) or (t), optionally,
(u) when the tread slope ($\gamma$) of the wheel (14a-14f) derived by the relational expression is greater than a predetermined upper limit value, the tread slope derivation means sets the value of the tread slope ($\gamma$) of the wheel (14a-14f) to the upper limit value, and when the tread slope ($\gamma$) of the wheel (14a-14f) derived by the relational expression is lower than a predetermined lower limit value, the tread slope derivation means sets the value of the tread slope ($\gamma$) of the wheel (14a-14f) to the lower limit value.

**10.** The railway vehicle according to claim 9, wherein, in case (s), (t), or (u),

(v) the inspection means (303) further comprises a frequency component adjustment means that adjusts a frequency component of the tread slope ($\gamma$) of the wheel (14a-14f) so as to reduce a noise included in the tread slope ($\gamma$) of the wheel (14a-14f) derived by the tread slope derivation means,
and, in case (v), optionally,

(w) the frequency component adjustment means uses time-series data of the tread slope ($\gamma$) of the wheel (14a-14f) derived by the tread slope derivation means to derive a coefficient in a corrected AR model, and uses the derived coefficient to correct the tread slope ($\gamma$) of the wheel (14a-14f) derived by the tread slope derivation means, thereby adjusting the frequency component of the signal of the tread slope ($\gamma$) of the wheel (14a-14f),
the corrected AR model is an expression representing a predicted value of the tread slope ($\gamma$) of the wheel (14a-14f) by using an actual value of the tread slope ($\gamma$) of the wheel (14a-14f) and the coefficient responsive to the actual value,
the coefficient is derived by using an equation in which a first matrix is set to a coefficient matrix and an autocorrelation vector is set to a constant vector,
the autocorrelation vector is a vector whose component is autocorrelation of the time-series data of the tread slope ($\gamma$) of the wheel (14a-14f) with a time lag of 1 to m,
m is a number of the tread slope ($\gamma$) of the wheel (14a-14f) used in the corrected AR model,
the first matrix is a matrix $U_s \Sigma_s U_s^T$ derived from a second matrix $\Sigma_s$ that is derived from s pieces of eigenvalues of an autocorrelation matrix, s being a number of 1 or more and less than m, and a diagonal matrix $\Sigma$ and a third matrix $U_s$ that is derived from the s pieces of eigenvalues and an orthogonal matrix U,
the autocorrelation matrix is a matrix whose component is autocorrelation of the time-series data of the tread slope ($\gamma$) of the wheel (14a-14f) with a time lag of 0 to m-1,
the diagonal matrix is a matrix whose diagonal component is eigenvalues of the autocorrelation matrix that are derived by singular value decomposition of the autocorrelation matrix,
the orthogonal matrix is a matrix in which an eigenvector of the autocorrelation matrix is set to a column component vector,
the second matrix is a submatrix of the diagonal matrix and is a matrix whose diagonal component is the s pieces of eigenvalues, and
the third matrix is a submatrix of the orthogonal matrix and is a matrix in which eigenvectors corresponding to the s pieces of eigenvalues are set to column component vectors,

and, in case (w), optionally,

(x) the s pieces of eigenvalues correspond to an eigenvalue having the largest value,

and, in any of (v), (w), or (x), optionally,

(y) the inspection means (303) comprises a tread slope correction means that corrects the tread slope ($\gamma$) of the wheel (14a-14f) having the frequency component adjusted by the frequency component adjustment means, by using previously-stored tread slope correction information, and

the tread slope correction information is information indicating a relation between an actual measured value of the tread slope ($\gamma$) of the wheel (14a-14f) and a calculated value of the tread slope ($\gamma$) of the wheel (14a-14f).

11. The railway vehicle according to any one of claims 9 to 10, wherein

the inspection means inspects at least normality or abnormality of the tread slope ($\gamma$) of the wheel (14a-14f), as an inspection of the tread slope of the wheel, and

the inspection means (303) comprises a determination means that determines whether or not the tread slope ($\gamma$) of the wheel (14a-14f) is normal based on a value of the tread slope ($\gamma$) of the wheel (14a-14f).

12. The railway vehicle according to claim 9, case (r), wherein

(z) the inspection means inspects at least normality or abnormality of the tread slope ($\gamma$) of the wheel (14a-14f) as an inspection of the tread slope of the wheel,

the inspection means (303) further comprises:

a coefficient derivation means that derives a coefficient in a corrected AR model by using time-series data of the measured value of the forward-and-backward direction force ($T_1$-$T_4$);

a frequency characteristic derivation means that derives a frequency characteristic indicating a distribution of frequencies of the corrected AR model by using the coefficient derived by the coefficient derivation means; and

a determination means that determines whether or not the tread slope ($\gamma$) of the wheel (14a-14f) is normal by using the frequency characteristic derived by the frequency characteristic derivation means,

the corrected AR model is an expression representing a predicted value of the forward-and-backward direction force ($T_1$-$T_4$) by using an actual value of the forward-and-backward direction force ($T_1$-$T_4$) and the coefficient responsive to the actual value,

the coefficient derivation means derives the coefficient by using an equation in which a first matrix is set to a coefficient matrix and an autocorrelation vector is set to a constant vector,

the autocorrelation vector is a vector whose component is autocorrelation of the time-series data of the measured value of the forward-and-backward direction force ($T_1$-$T_4$) with a time lag of 1 to m,

m is a number of the value of the forward-and-backward direction force ($T_1$-$T_4$) used in the corrected AR model,

the first matrix is a matrix $U_s \Sigma_s U_s^T$ derived from a second matrix $\Sigma_s$ and a third matrix $U_s$, s being a number set to be 1 or more and less than m,

the second matrix $\Sigma_s$ is derived from s pieces of eigenvalues of an autocorrelation matrix and a diagonal matrix $\Sigma$,

the third matrix $U_s$ is derived from the s pieces of eigenvalues and an orthogonal matrix U,

the autocorrelation matrix is a matrix whose component is autocorrelation of the time-series data of the measured value of the forward-and-backward direction force ($T_1$-$T_4$) with a time lag of 0 to m-1,

the diagonal matrix is a matrix whose diagonal component is eigenvalues of the autocorrelation matrix,

the eigenvalues of the autocorrelation matrix are derived by singular value decomposition of the autocorrelation matrix,

the orthogonal matrix is a matrix in which an eigenvector of the autocorrelation matrix is set to a column component vector,

the second matrix is a submatrix of the diagonal matrix and is a matrix whose diagonal component is the s pieces of eigenvalues, and

the third matrix is a submatrix of the orthogonal matrix and is a matrix in which eigenvectors corresponding to the s pieces of eigenvalues are set to column component vectors,

and, in case (z), optionally,

the determination means determines whether or not the tread slope ($\gamma$) of the wheel (14a-14f) is normal based on a result of comparison between the frequency characteristic indicating the distribution of frequencies of the corrected AR model derived by the frequency characteristic derivation means and a frequency characteristic indicating a distribution of frequencies of the corrected AR model of the railway vehicle which is normal.

13. An inspection method of inspecting an inspection target member of a railway vehicle including a vehicle body (11), a bogie (12a,12b), a wheel set (13a-13d), an axle box (17a-17d), and an axle box suspension (18a,18b), the inspection method comprising:

an acquisition step of acquiring input data including a measured value of a forward-and-backward direction force ($T_1$-$T_4$) to be measured by making the railway vehicle travel on a track (20); and
an inspection step of inspecting the inspection target member by using the measured value of the forward-and-backward direction force ($T_1$-$T_4$) acquired by the acquisition step, wherein
the forward-and-backward direction force ($T_1$-$T_4$) is a force in a forward and backward direction that occurs in a member configuring the axle box suspension (18a,18b),
the member is a member for supporting the axle box (17a-17d),
the forward and backward direction is a direction along a traveling direction of the railway vehicle, and
the inspection target member is at least one of:
a member disposed between a bogie frame (16) of the bogie (12a,12b) and the wheel set (13a-13d);
a member disposed between the bogie frame (16) of the bogie (12a,12b) and the vehicle body (11); and
a wheel (14a-14f), and in the case that the inspection target member is a wheel (14a-14f), the inspection step inspects at least a tread slope ($\gamma$) of the wheel (14a-14f); and wherein
in the inspection step, a determination means determines whether or not the inspection target member is normal by using the measured value of the forward-and-backward direction force (T1-T4) acquired in the acquisition step, and

(a) in the inspection step, a frequency component adjustment means adjusts a frequency component of a signal of the measured value of the forward-and-backward direction force ($T_1$-$T_4$) so as to reduce a noise included in the signal of the measured value of the forward-and-backward direction force ($T_1$-$T_4$), and the determination means determines whether or not the inspection target member is normal based on the measured value of the forward-and-backward direction force ($T_1$-$T_4$) having the frequency component adjusted by the frequency component adjustment means, and
(b) the frequency component adjustment means uses time-series data of the measured value of the forward-and-backward direction force ($T_1$-$T_4$) to derive a coefficient in a corrected Auto-Regressive model (AR), and uses the coefficient to correct the measured value of the forward-and-backward direction force ($T_1$-$T_4$), thereby adjusting the frequency component of the signal of the measured value of the forward-and-backward direction force ($T_1$-$T_4$),

the corrected AR model is an expression representing a predicted value of the forward-and-backward direction force ($T_1$-$T_4$) by using an actual value of the forward-and-backward direction force ($T_1$-$T_4$) and the coefficient responsive to the actual value,
the coefficient is decided by using an equation in which a first matrix is set to a coefficient matrix and an autocorrelation vector is set to a constant vector,
the autocorrelation vector is a vector whose component is autocorrelation of the time-series data of the measured value of the forward-and-backward direction force ($T_1$-$T_4$) with a time lag of 1 to m,
m is a number of the value of the forward-and-backward direction force ($T_1$-$T_4$) used in the corrected AR model,
the first matrix is a matrix $U_s \Sigma_s U_s^T$ derived from a second matrix $\Sigma_s$ and a third matrix $U_s$, s being a number of 1 or more and less than m,
the second matrix $\Sigma_s$ is derived from s pieces of eigenvalues of an autocorrelation matrix and a diagonal matrix $\Sigma$ ,
the third matrix $U_s$ is derived from the s pieces of eigenvalues and an orthogonal matrix U,
the autocorrelation matrix is a matrix whose component is autocorrelation of the time-series data of the measured value of the forward-and-backward direction force ($T_1$-$T_4$) with a time lag of 0 to m-1,
the diagonal matrix is a matrix whose diagonal component is eigenvalues of the autocorrelation matrix,
the eigenvalues of the autocorrelation matrix are derived by singular value decomposition of the autocorrelation matrix,
the orthogonal matrix is a matrix in which an eigenvector of the autocorrelation matrix is set to a column component vector,
the second matrix is a submatrix of the diagonal matrix and is a matrix whose diagonal component is the s pieces of eigenvalues, and

the third matrix is a submatrix of the orthogonal matrix and is a matrix in which eigenvectors corresponding to the s pieces of eigenvalues are set to column component vectors.

**14.** A use of a program for causing a computer to execute inspection of an inspection target member of a railway vehicle including a vehicle body (11), a bogie (12a,12b), a wheel set (13a-13d), an axle box (17a-17d), and an axle box suspension (18a,18b), the program causing the computer to execute:

an acquisition step of acquiring input data including a measured value of a forward-and-backward direction force $(T_1\text{-}T_4)$ to be measured by making the railway vehicle travel on a track (20); and

an inspection step of inspecting the inspection target member by using the measured value of the forward-and-backward direction force $(T_1\text{-}T_4)$ acquired by the acquisition step, wherein

the forward-and-backward direction force $(T_1\text{-}T_4)$ is a force in a forward and backward direction that occurs in a member configuring the axle box suspension (18a,18b),

the member is a member for supporting the axle box (17a-17d),

the forward and backward direction is a direction along a traveling direction of the railway vehicle, and

the inspection target member is at least one of:

a member disposed between a bogie frame (16) of the bogie (12a,12b) and the wheel set (13a-13d);

a member disposed between the bogie frame (16) of the bogie (12a,12b) and the vehicle body (11); and

a wheel (14a-14f), and in the case that the inspection target member is a wheel (14a-14f), the inspection step inspects at least a tread slope $(\gamma)$ of the wheel (14a-14f); and wherein

in the inspection step, a determination means determines whether or not the inspection target member is normal by using the measured value of the forward-and-backward direction force (T1-T4) acquired in the acquisition step, and

(a) in the inspection step, a frequency component adjustment means adjusts a frequency component of a signal of the measured value of the forward-and-backward direction force $(T_1\text{-}T_4)$ so as to reduce a noise included in the signal of the measured value of the forward-and-backward direction force $(T_1\text{-}T_4)$, and the determination means determines whether or not the inspection target member is normal based on the measured value of the forward-and-backward direction force $(T_1\text{-}T_4)$ having the frequency component adjusted by the frequency component adjustment means, and

(b) the frequency component adjustment means uses time-series data of the measured value of the forward-and-backward direction force $(T_1\text{-}T_4)$ to derive a coefficient in a corrected AR model, and uses the coefficient to correct the measured value of the forward-and-backward direction force $(T_1\text{-}T_4)$, thereby adjusting the frequency component of the signal of the measured value of the forward-and-backward direction force $(T_1\text{-}T_4)$,

the corrected Auto-Regressive model (AR) is an expression representing a predicted value of the forward-and-backward direction force $(T_1\text{-}T_4)$ by using an actual value of the forward-and-backward direction force $(T_1\text{-}T_4)$ and the coefficient responsive to the actual value,

the coefficient is decided by using an equation in which a first matrix is set to a coefficient matrix and an autocorrelation vector is set to a constant vector,

the autocorrelation vector is a vector whose component is autocorrelation of the time-series data of the measured value of the forward-and-backward direction force $(T_1\text{-}T_4)$ with a time lag of 1 to m,

m is a number of the value of the forward-and-backward direction force $(T_1\text{-}T_4)$ used in the corrected AR model,

the first matrix is a matrix $U_s \Sigma_s U_s^T$ derived from a second matrix $\Sigma_s$ and a third matrix $U_s$, s being a number of 1 or more and less than m,

the second matrix $\Sigma_s$ is derived from s pieces of eigenvalues of an autocorrelation matrix and a diagonal matrix $\Sigma$,

the third matrix $U_s$ is derived from the s pieces of eigenvalues and an orthogonal matrix U,

the autocorrelation matrix is a matrix whose component is autocorrelation of the time-series data of the measured value of the forward-and-backward direction force $(T_1\text{-}T_4)$ with a time lag of 0 to m-1,

the diagonal matrix is a matrix whose diagonal component is eigenvalues of the autocorrelation matrix,

the eigenvalues of the autocorrelation matrix are derived by singular value decomposition of the autocorrelation matrix,

the orthogonal matrix is a matrix in which an eigenvector of the autocorrelation matrix is set to a column component vector,

the second matrix is a submatrix of the diagonal matrix and is a matrix whose diagonal component is the s pieces of eigenvalues, and

the third matrix is a submatrix of the orthogonal matrix and is a matrix in which eigenvectors corresponding to the s pieces of eigenvalues are set to column component vectors.

## Patentansprüche

**1.** Schienenfahrzeug umfassend einen Fahrzeugkörper (11), ein Drehgestell (12a, 12b), einen Radsatz (13a-13d), ein Achslager (17a-17d), eine Achslageraufhängung (18a, 18b) und ein Prüfsystem (300), das ein zu prüfendes Bauteil des Schienenfahrzeugs prüft, wobei das Prüfsystem (300) umfasst:

eine Erfassungseinrichtung (301), die Eingangsdaten erfasst, die einen Messwert einer Vorwärts- und Rückwärtsrichtungskraft ($T_1$-$T_4$) aufweisen, der gemessen wird, indem das Schienenfahrzeug auf einer Schiene (20) fährt; und

eine Prüfeinrichtung (303), die das zu prüfende Bauteil unter Verwendung des von der Erfassungseinrichtung (301) erfassten Messwerts der Vorwärts- und Rückwärtsrichtungskraft ($T_1$-$T_4$) prüft, wobei die Vorwärts- und Rückwärtsrichtungskraft ($T_1$-$T_4$) eine Kraft in einer Vorwärts- und Rückwärtsrichtung ist, die in einem Bauteil auftritt, das die Achslageraufhängung (18a, 18b) ausbildet,

das Bauteil ein Bauteil zum Halten des Achslagers (17a-17d) ist,

die Vorwärts- und Rückwärtsrichtung eine Richtung entlang einer Fahrtrichtung des Schienenfahrzeugs ist, und das zu prüfende Bauteil mindestens eines ist aus Folgendem:

ein Bauteil, das zwischen einem Drehgestellrahmen (16) des Drehgestells (12a, 12b) und dem Radsatz (13a-13d) angeordnet ist;

ein Bauteil, das zwischen dem Drehgestellrahmen (16) des Drehgestells (12a, 12b) und dem Fahrzeugkörper (11) angeordnet ist; und

ein Rad (14a-14f), und wenn das zu prüfende Bauteil ein Rad (14a-14f) ist, prüft die Prüfeinrichtung (303) mindestens eine Laufflächenneigung ($\gamma$) des Rades (14a-14f), und wobei

die Prüfeinrichtung (303) eine Bestimmungseinrichtung umfasst, die anhand des von der Erfassungseinrichtung (301) erfassten Messwerts der Vorwärts- und Rückwärtsrichtungskraft ($T_1$-$T_4$) bestimmt, ob das zu prüfende Bauteil normal ist oder nicht, und **dadurch gekennzeichnet, dass** die Prüfeinrichtung (303) ferner umfasst:

(a) eine Frequenzkomponenten-Einstelleinrichtung, die eine Frequenzkomponente eines Signals des Messwerts der Vorwärts- und Rückwärtsrichtungskraft ($T_1$-$T_4$) so einstellt, dass ein in dem Signal des Messwerts der Vorwärts- und Rückwärtsrichtungskraft ($T_1$-$T_4$) enthaltenes Rauschen reduziert wird, die Bestimmungseinrichtung auf der Grundlage des Messwerts der Vorwärts- und Rückwärtsrichtungskraft ($T_1$-$T_4$), dessen Frequenzkomponente durch die Frequenzkomponenten-Einstelleinrichtung eingestellt wurde, bestimmt, ob das zu prüfende Bauteil normal ist oder nicht, und dass

(b) die Frequenzkomponenten-Einstelleinrichtung Zeitreihendaten des Messwerts der Vorwärts- und Rückwärtsrichtungskraft ($T_1$-$T_4$) verwendet, um einen Koeffizienten in einem korrigierten autoregressiven Modell (AR) abzuleiten, und den Koeffizienten verwendet, um den Messwert der Vorwärts- und Rückwärtsrichtungskraft ($T_1$-$T_4$) zu korrigieren, wodurch die Frequenzkomponente des Signals des Messwerts der Vorwärts- und Rückwärtsrichtungskraft ($T_1$-$T_4$) eingestellt wird,

das korrigierte AR-Modell ein Ausdruck ist, der einen vorhergesagten Wert der Vorwärts- und Rückwärtsrichtungskraft ($T_1$-$T_4$) unter Verwendung eines tatsächlichen Werts der Vorwärts- und Rückwärtsrichtungskraft ($T_1$-$T_4$) und des auf den tatsächlichen Wert ansprechenden Koeffizienten darstellt,

wobei der Koeffizient unter Verwendung einer Gleichung abgeleitet wird, in der eine erste Matrix als Koeffizientenmatrix festgelegt ist und ein Autokorrelationsvektor als konstanter Vektor festgelegt ist,

der Autokorrelationsvektor ein Vektor ist, dessen Komponente die Autokorrelation der Zeitreihendaten des Messwerts der Vorwärts- und Rückwärtsrichtungskraft ($T_1$-$T_4$) mit einer Zeitverzögerung von 1 bis m ist,

m eine Zahl der Werte der Vorwärts- und Rückwärtsrichtungskraft ($T_1$-$T_4$) ist, die im korrigierten AR-Modell verwendet werden,

die erste Matrix eine Matrix $U_s \Sigma_s U_s^T$ ist, die aus einer zweiten Matrix $\Sigma_s$ und einer dritten Matrix $U_s$ abgeleitet wird, wobei s eine Zahl von 1 oder mehr und kleiner als m ist,

die zweite Matrix $\Sigma_s$ aus s Teilen von Eigenwerten einer Autokorrelationsmatrix und einer Diagonalmatrix $\Sigma$

abgeleitet ist,

die dritte Matrix $U_s$ aus den s Teilen von Eigenwerten und einer orthogonalen Matrix U abgeleitet ist,

die Autokorrelationsmatrix eine Matrix ist, deren Komponente die Autokorrelation der Zeitreihendaten des Messwerts der Vorwärts- und Rückwärtsrichtungskraft ($T_1$-$T_4$) mit einer Zeitverzögerung von 0 bis m-1 ist,

die Diagonalmatrix eine Matrix ist, deren Diagonalkomponente Eigenwerte der Autokorrelationsmatrix sind,

die Eigenwerte der Autokorrelationsmatrix werden durch Singulärwertzerlegung der Autokorrelationsmatrix abgeleitet,

die orthogonale Matrix eine Matrix ist, in der ein Eigenvektor der Autokorrelationsmatrix als Spaltenkomponentenvektor festgelegt ist,

die zweite Matrix eine Untermatrix der Diagonalmatrix ist und eine Matrix ist, deren Diagonalkomponenten die s Teile der Eigenwerte sind, und

die dritte Matrix eine Untermatrix der orthogonalen Matrix ist und eine Matrix ist, in der Eigenvektoren, die den s Teilen von Eigenwerten entsprechen, als Spaltenkomponentenvektoren festgelegt sind.

2. Schienenfahrzeug nach Anspruch 1, wobei

die Bestimmungseinrichtung auf der Grundlage eines Vergleichsergebnisses zwischen dem von der Erfassungseinrichtung (301) erfassten Messwert der Vorwärts- und Rückwärtsrichtungskraft ($T_1$-$T_4$) und einem Messwert der Vorwärts- und Rückwärtsrichtungskraft ($T_1$-$T_4$) in Bezug auf das Schienenfahrzeug, das normal ist, bestimmt, ob das zu prüfende Bauteil normal ist oder nicht,

und/oder

die Bestimmungseinrichtung auf der Grundlage einer Differenz zwischen dem von der Erfassungseinrichtung (301) erfassten Messwert der Vorwärts- und Rückwärtsrichtungskraft ($T_1$-$T_4$) und der Vorwärts- und Rückwärtsrichtungskraft ($T_1$-$T_4$) in Bezug auf das Schienenfahrzeug, das normal ist, bestimmt, ob das zu prüfende Bauteil normal ist oder nicht.

3. Schienenfahrzeug nach einem der Ansprüche 1 bis 2, wobei

(c) die Bestimmungseinrichtung auf der Grundlage eines Vergleichsergebnisses zwischen Zeitreihendaten des Messwerts der Vorwärts- und Rückwärtsrichtungskraft ($T_1$-$T_4$) in Bezug auf das Schienenfahrzeug, das normal ist, und den Zeitreihendaten des Messwerts der Vorwärts- und Rückwärtsrichtungskraft ($T_1$-$T_4$) mit der durch die Frequenzkomponenten-Einstelleinrichtung eingestellten Frequenzkomponente bestimmt, ob das zu prüfende Bauteil normal ist oder nicht, und

die Zeitreihendaten des Messwerts der Vorwärts- und Rückwärtsrichtungskraft ($T_1$-$T_4$) in Bezug auf das Schienenfahrzeug, das normal ist, Zeitreihendaten sind, deren Frequenzkomponente unter Verwendung des korrigierten AR-Modells in dem Schienenfahrzeug, das normal ist, eingestellt wird, und die Zeitreihendaten des Messwerts der Vorwärts- und Rückwärtsrichtungskraft ($T_1$-$T_4$) in Bezug auf das Schienenfahrzeug, das normal ist.

4. Schienenfahrzeug nach einem der Ansprüche 1 bis 2, wobei

(d) die Prüfeinrichtung (303) umfasst:

eine Koeffizienten-Ableitungseinrichtung, die einen Koeffizienten in einem korrigierten AR-Modell unter Verwendung von Zeitreihendaten des Messwerts der Vorwärts- und Rückwärtsrichtungskraft ($T_1$-$T_4$) ableitet; und

eine Frequenzcharakteristik-Ableitungseinrichtung, die eine Frequenzcharakteristik ableitet, die eine Verteilung von Frequenzen des korrigierten AR-Modells unter Verwendung des von der Koeffizienten-Ableitungseinrichtung abgeleiteten Koeffizienten angibt,

das korrigierte AR-Modell ein Ausdruck ist, der einen vorhergesagten Wert der Vorwärts- und Rückwärtsrichtungskraft ($T_1$-$T_4$) unter Verwendung eines tatsächlichen Werts der Vorwärts- und Rückwärtsrichtungskraft ($T_1$-$T_4$) und des auf den tatsächlichen Wert reagierenden Koeffizienten darstellt,

die Koeffizienten-Ableitungseinrichtung den Koeffizienten unter Verwendung einer Gleichung ableitet, in der eine erste Matrix als Koeffizientenmatrix und ein Autokorrelationsvektor als konstanter Vektor festgelegt ist,

der Autokorrelationsvektor ein Vektor ist, dessen Komponente die Autokorrelation der Zeitreihendaten des Messwerts der Vorwärts- und Rückwärtsrichtungskraft ($T_1$-$T_4$) mit einer Zeitverzögerung von 1 bis m ist,

m eine Anzahl des Werts der Vorwärts- und Rückwärtsrichtungskraft ($T_1$-$T_4$) ist, die in dem korrigierten AR-Modell verwendet werden,

die erste Matrix eine Matrix $U_s \Sigma_s U_s^T$ ist, die aus einer zweiten Matrix $\Sigma_s$ und einer dritten Matrix $U_s$ abgeleitet wird, wobei s eine Zahl von 1 oder mehr und kleiner als m ist,

die zweite Matrix $L_s$ aus s Teilen von Eigenwerten einer Autokorrelationsmatrix und einer Diagonalmatrix $\Sigma$ abgeleitet ist,

die dritte Matrix $U_s$ aus den s Teilen von Eigenwerten und einer orthogonalen Matrix U abgeleitet ist,

die Autokorrelationsmatrix eine Matrix ist, deren Komponente die Autokorrelation der Zeitreihendaten des Messwerts der Vorwärts- und Rückwärtsrichtungskraft ($T_1$-$T_4$) mit einer Zeitverzögerung von 0 bis m-1 ist,

die Diagonalmatrix eine Matrix ist, deren Diagonalkomponente Eigenwerte der Autokorrelationsmatrix sind,

die Eigenwerte der Autokorrelationsmatrix werden durch Singulärwertzerlegung der Autokorrelationsmatrix abgeleitet,

die orthogonale Matrix eine Matrix ist, in der ein Eigenvektor der Autokorrelationsmatrix als Spaltenkomponentenvektor festgelegt ist,

die zweite Matrix eine Untermatrix der Diagonalmatrix ist und eine Matrix ist, deren Diagonalkomponenten die s Teile der Eigenwerte sind.

die dritte Matrix eine Untermatrix der orthogonalen Matrix ist und eine Matrix ist, in der Eigenvektoren, die den s Teilen von Eigenwerten entsprechen, als Spaltenkomponentenvektoren festgelegt sind, und

die Bestimmungseinrichtung bestimmt, ob das zu prüfende Bauteil normal ist oder nicht, indem sie die durch die Frequenzcharakteristik-Ableitungseinrichtung abgeleitete Frequenzcharakteristik verwenden,

und, optional, im Fall (d)

(e) die Bestimmungseinrichtung auf der Grundlage eines Vergleichsergebnisses zwischen der Frequenzcharakteristik, die die Verteilung der Frequenzen des korrigierten AR-Modells angibt, das durch die Frequenzcharakteristik-Ableitungseinrichtung abgeleitet wurde, und einer Frequenzcharakteristik, die eine Verteilung der Frequenzen des korrigierten AR-Modells des Schienenfahrzeugs angibt, das normal ist, bestimmt, ob das zu prüfende Bauteil normal ist oder nicht.

5. Schienenfahrzeug nach einem der Ansprüche 1 bis 4, Fall (b), (c), (d) oder (e), wobei

(f) die s Teile der Eigenwerte Eigenwerte sind, die jeweils einen Wert haben, der gleich oder größer als ein Durchschnittswert der Eigenwerte der Autokorrelationsmatrix ist, aus den Eigenwerten der Autokorrelationsmatrix.

6. Schienenfahrzeug nach einem der Ansprüche 1 bis 5, wobei

das zu prüfende Bauteil mindestens eines umfasst vom dem Achslager (17a-17d), einem Querbewegungsdämpfer, einem Gierdämpfer, einer Luftfeder und der Achslageraufhängung (18a, 18b).

7. Schienenfahrzeug nach Anspruch 1, wobei

(g) das zu prüfende Bauteil ein Gierdämpfer ist,

die Prüfeinrichtung (303) umfasst:

eine Differenzableitungseinrichtung, die mindestens eines ableitet von einer Winkelgeschwindigkeitsdifferenz und eine Winkelverschiebungsdifferenz, basierend auf dem von der Erfassungseinrichtung (301) erfassten Messwert der Vorwärts- und Rückwärtsrichtungskraft ($T_1$-$T_4$); und

eine Bestimmungseinrichtung, die auf der Grundlage eines Vergleichsergebnisses zwischen mindestens einem der von der Differenzableitungseinrichtung abgeleiteten Winkelgeschwindigkeitsdifferenz und Winkelverschiebungsdifferenz und einem Wert in Bezug auf das Schienenfahrzeug, das normal ist, bestimmt, ob der Gierdämpfer normal ist oder nicht,

wobei die Winkelgeschwindigkeitsdifferenz eine Differenz zwischen einer Winkelgeschwindigkeit des Gierdämpfers in einer Gierrichtung und einer Winkelgeschwindigkeit des Fahrzeugkörpers (11) in der Gierrichtung darstellt,

die Winkelverschiebungsdifferenz eine Differenz zwischen einer Winkelverschiebung des Gierdämpfers in der Gierrichtung und einer Winkelverschiebung des Drehgestells (12a, 12b) in der Gierrichtung darstellt, und

die Gierrichtung eine Schwenkrichtung ist, wobei eine Auf- und Abwärtsrichtung eine Richtung senkrecht zu der als Schwenkachse festgelegten Gleisausrichtung ist,

und, im Fall (g), optional,

(h) die Eingangsdaten den Messwert der Vorwärts- und Rückwärtsrichtungskraft ($T_1$-$T_4$) und Messwerte der Beschleunigungen des Fahrzeugkörpers (11), des Drehgestells (12a, 12b) und des Radsatzes (13a-13d) in einer rechten und linken Richtung umfassen,

die Prüfeinrichtung (303) eine Zustandsvariablen-Entscheidungseinrichtung umfasst, die unter Verwendung eines Filters, der unter Verwendung der Eingangsdaten, einer Zustandsgleichung und einer Beobachtungsgleichung eine Datenassimilation durchführt, eine Operation durchführt, um Zustandsvariablen zu bestimmen, die in der Zustandsgleichung zu bestimmende Variablen sind,

die Differenzableitungseinrichtung leitet unter Verwendung der von der Zustandsvariablen-Entscheidungseinrichtung bestimmten Zustandsvariablen mindestens eine der Winkelgeschwindigkeitsdifferenz und der Winkelverschiebungsdifferenz ab,

die rechte und die linke Richtung sind Richtungen vertikal zur Vorwärts- und Rückwärtsrichtung, und die Aufwärts- und Abwärtsrichtung sind Richtungen vertikal zur Schiene (20),

die Vorwärts- und Rückwärtsrichtungskraft ($T_1$-$T_4$) eine Kraft ist, die gemäß einer Differenz zwischen einer Winkelverschiebung des Radsatzes (13a-13d) in der Gierrichtung und einer Winkelverschiebung des Drehgestells (12a, 12b) in der Gierrichtung, auf dem der Radsatz (13a-13d) vorgesehen ist, zu bestimmen ist,

die Gierrichtung eine Schwenkrichtung ist, wobei die Aufwärts- und Abwärtsrichtung als Schwenkachse festgelegt ist,

die Zustandsgleichung eine Gleichung ist, die unter Verwendung der Zustandsvariablen, der Vorwärts- und Rückwärtsrichtungskraft ($T_1$-$T_4$) und einer Transformationsvariablen beschrieben wird,

die Zustandsvariablen eine Verschiebung und eine Geschwindigkeit des Fahrzeugkörpers (11) in der rechten und linken Richtung, eine Winkelverschiebung und eine Winkelgeschwindigkeit des Fahrzeugkörpers (11) in der Gierrichtung, eine Winkelverschiebung und eine Winkelgeschwindigkeit des Fahrzeugkörpers (11) in einer Rollrichtung, eine Verschiebung und eine Geschwindigkeit des Drehgestells (12a, 12b) in der rechten und linken Richtung, eine Winkelverschiebung und eine Winkelgeschwindigkeit des Drehgestells (12a, 12b) in der Gierrichtung, eine Winkelverschiebung und eine Winkelgeschwindigkeit des Drehgestells (12a, 12b) in der Rollrichtung, eine Verschiebung und eine Geschwindigkeit des Radsatzes (13a-13d) in der rechten und linken Richtung, eine Winkelverschiebung einer Luftfeder in der Rollrichtung, die an dem Schienenfahrzeug angebracht ist, und eine Winkelverschiebung des Gierdämpfers in der Gierrichtung, der an dem Schienenfahrzeug angebracht ist, und keine Winkelverschiebung und keine Winkelgeschwindigkeit des Radsatzes (13a-13d) in der Gierrichtung umfassen,

die Rollrichtung eine Schwenkrichtung ist, wobei die Vorwärts- und Rückwärtsrichtung als Schwenkachse festgelegt ist,

die Transformationsvariable eine Variable ist, die eine gegenseitige Transformation zwischen der Winkelverschiebung des Radsatzes (13a-13d) in der Gierrichtung und der Winkelverschiebung des Drehgestells (12a, 12b) in der Gierrichtung durchführt,

die Beobachtungsgleichung eine Gleichung ist, die unter Verwendung einer Beobachtungsvariablen und der Transformationsvariablen beschrieben wird,

die Beobachtungsvariable die Beschleunigungen des Fahrzeugkörpers (11), des Drehgestells (12a, 12b) und des Radsatzes (13a-13d) in der rechten und linken Richtung umfasst,

die Prüfeinrichtung (303) verwendet die Zustandsgleichung, in die ein Messwert der Beobachtungsgröße, der Messwert der Vorwärts- und Rückwärtsrichtungskraft ($T_1$-$T_4$) und ein tatsächlicher Wert der Transformationsvariablen eingesetzt werden, und die Beobachtungsgleichung, in die der tatsächliche Wert der Transformationsvariable eingesetzt wird, um die Zustandsvariable zu bestimmen, wenn ein Fehler der Beobachtungsgröße zwischen dem gemessenen Wert und einem berechneten Wert oder ein erwarteter Wert des Fehlers minimal wird, und

der tatsächliche Wert der Transformationsvariablen unter Verwendung des gemessenen Werts der Vorwärts- und Rückwärtsrichtungskraft ($T_1$-$T_4$) abgeleitet wird.

8.   Schienenfahrzeug nach Anspruch 1, wobei

(i) die Eingangsdaten Fahrzeuginformation umfasst,

die Fahrzeuginformationen den Messwert der Vorwärts- und Rückwärtsrichtungskraft ($T_1$-$T_4$), eine Winkelverschiebung und eine Winkelgeschwindigkeit des Drehgestells (12a, 12b) in einer Gierrichtung, und eine Winkelverschiebung und eine Winkelgeschwindigkeit des Radsatzes (13a-13d) in der Gierrichtung umfassen,

die Prüfeinrichtung (303) umfasst:

eine Federkonstanten-Ableitungseinrichtung, die eine Federkonstante der Achslageraufhängung (18a, 18b) in Vorwärts- und Rückwärtsrichtung auf der Grundlage der von der Erfassungseinrichtung (301) erfassten Fahrzeuginformationen ableitet; und

eine Bestimmungseinrichtung, die auf der Grundlage der von der Federkonstanten-Ableitungseinrichtung abgeleiteten Federkonstante der Achslageraufhängung (18a, 18b) in Vorwärts- und Rückwärtsrichtung bestimmt, ob die Steifigkeit der Achslageraufhängung (18a, 18b) in Vorwärts- und Rückwärtsrichtung normal ist, und
die Gierrichtung eine Schwenkrichtung ist, wobei eine Auf- und Abwärtsrichtung eine Richtung vertikal zu der als Schwenkachse festgelegten Schiene ist,

und, im Fall (i), optional,

(j) die Eingangsdaten Schieneninformationen umfassen,

die Gleisinformationen eine Krümmung einer Schiene (20a, 20b) an einer Position des Radsatzes (13a-13d), und einen Zeitdifferenzwert der Krümmung der Schiene (20a, 20b) an der Position des Radsatzes (13a-13d) umfassen, und
die Federkonstanten-Ableitungseinrichtung die Federkonstante der Achslageraufhängung (18a, 18b) in Vorwärts- und Rückwärtsrichtung auf der Grundlage der von der Erfassungseinrichtung (301) erfassten Fahrzeuginformationen und der von der Erfassungseinrichtung (301) erfassten Gleisinformationen ableitet, und, im Fall (i) oder (j), optional,

(k) wenn die Federkonstante der Achslageraufhängung (18a, 18b) in der Vorwärts- und Rückwärtsrichtung größer als ein oberer Grenzwert ist, setzt die Federkonstanten-Ableitungseinrichtung den Wert der Federkonstante der Achslageraufhängung (18a, 18b) in Vorwärts- und Rückwärtsrichtung auf den oberen Grenzwert, und wenn die Federkonstante der Achslageraufhängung (18a, 18b) in Vorwärts- und Rückwärtsrichtung kleiner als ein unterer Grenzwert ist, setzt die Federkonstanten-Ableitungseinrichtung den Wert der Federkonstante der Achslageraufhängung (18a, 18b) in Vorwärts- und Rückwärtsrichtung auf den unteren Grenzwert, und, im Fall (k), optional,

(l) der obere Grenzwert und der untere Grenzwert auf der Grundlage einer Federkonstante der Achslageraufhängung (18a, 18b) in Vorwärts- und Rückwärtsrichtung des Schienenfahrzeugs, das normal ist, eingestellt werden,
und in jedem der Fälle (i), (j), (k) oder (l), optional,

(m) die Prüfeinrichtung (303) eine Frequenzkomponenten-Einstelleinrichtung umfasst, die eine Frequenzkomponente eines Signals der Federkonstante der Achslageraufhängung (18a, 18b) in Vorwärts- und Rückwärtsrichtung so einstellt, dass ein in dem Signal der Federkonstante der Achslageraufhängung (18a, 18b) in Vorwärts- und Rückwärtsrichtung enthaltenes Rauschen, das durch die Federkonstanten-Ableitungseinrichtung abgeleitet wird, reduziert wird, und

die Bestimmungseinrichtung auf der Grundlage der Federkonstante der Achslageraufhängung (18a, 18b) in Vorwärts- und Rückwärtsrichtung, deren Frequenzkomponente durch die Frequenzkomponenten-Einstelleinrichtung eingestellt ist, bestimmt, ob die Steifigkeit der Achslageraufhängung (18a, 18b) in Vorwärts- und Rückwärtsrichtung normal ist,
und, im Fall (m), optional,

(n) die Frequenzkomponenten-Einstelleinrichtung Zeitreihendaten der Federkonstante der Achslageraufhängung (18a, 18b) in Vorwärts- und Rückwärtsrichtung, die von der Federkonstanten-Ableitungseinrichtung abgeleitet wurden, verwendet, um einen Koeffizienten in einem korrigierten AR-Modell abzuleiten, und den abgeleiteten Koeffizienten verwendet, um die Federkonstante der Achslageraufhängung (18a, 18b) in Vorwärts- und Rückwärtsrichtung, die von der Federkonstanten-Ableitungseinrichtung abgeleitet wurde, zu korrigieren, wodurch die Frequenzkomponente des Signals der Federkonstante der Achslageraufhängung (18a, 18b) in Vorwärts- und Rückwärtsrichtung eingestellt wird,

wobei das korrigierte AR-Modell ein Ausdruck ist, der einen vorhergesagten Wert der Federkonstante der Achslageraufhängung (18a, 18b) in Vorwärts- und Rückwärtsrichtung unter Verwendung eines aktuellen Werts der Federkonstante der Achslageraufhängung (18a, 18b) in Vorwärts- und Rückwärtsrichtung und des auf den aktuellen Wert ansprechenden Koeffizienten darstellt,
der Koeffizient wird unter Verwendung einer Gleichung bestimmt, in der eine erste Matrix als Koeffizientenmatrix und ein Autokorrelationsvektor als konstanter Vektor festgelegt sind,
der Autokorrelationsvektor ein Vektor ist, dessen Komponente die Autokorrelation der Zeitreihendaten der Federkonstante der Achslageraufhängung (18a, 18b) in Vorwärts- und Rückwärtsrichtung mit einer Zeitverzögerung von 1 bis m ist, wobei m eine Anzahl der Federkonstante der Achslageraufhängung (18a, 18b) in Vorwärts- und Rückwärtsrichtung ist, die in dem korrigierten AR-Modell verwendet wird,
die erste Matrix eine Matrix $U_s \Sigma_s U_s^T$ ist, die aus einer zweiten Matrix $\Sigma_s$ und einer dritten Matrix $U_s$ abgeleitet

ist, wobei s eine Zahl von 1 oder mehr und kleiner als m ist,

die zweite Matrix $\Sigma_s$ aus s Teilen von Eigenwerten einer Autokorrelationsmatrix und einer Diagonalmatrix $\Sigma$ abgeleitet ist,

die dritte Matrix $U_s$ aus den s Teilen von Eigenwerten und einer orthogonalen Matrix U abgeleitet ist,

die Autokorrelationsmatrix eine Matrix ist, deren Komponente die Autokorrelation der Zeitreihendaten der Federkonstante der Achslageraufhängung (18a, 18b) in Vorwärts- und Rückwärtsrichtung mit einer Zeitverzögerung von 0 bis m-1 ist,

die Diagonalmatrix eine Matrix ist, deren Diagonalkomponente Eigenwerte der Autokorrelationsmatrix sind,

die Eigenwerte der Autokorrelationsmatrix werden durch Singulärwertzerlegung der Autokorrelationsmatrix abgeleitet,

die orthogonale Matrix eine Matrix ist, in der ein Eigenvektor der Autokorrelationsmatrix als Spaltenkomponentenvektor gesetzt ist,

die zweite Matrix eine Untermatrix der Diagonalmatrix ist und eine Matrix, ist deren Diagonalkomponenten die s Teile der Eigenwerte sind, und

die dritte Matrix eine Untermatrix der orthogonalen Matrix ist und eine Matrix ist, in der Eigenvektoren, die den s Teilen von Eigenwerten entsprechen, auf Spaltenkomponentenvektoren gesetzt sind,

und, im Fall (n), optional,

(o) die s Teile der Eigenwerte entsprechen einem Eigenwert mit dem größten Wert,

und, in jedem der Fälle (i) bis (o), optional,

(p) führt die Erfassungseinrichtung (301) eine numerische Analyse auf der Grundlage von Bewegungsgleichungen durch, die Bewegungen des Schienenfahrzeugs beschreiben, um die Winkelverschiebung und die Winkelgeschwindigkeit des Drehgestells (12a, 12b) in der Gierrichtung und die Winkelverschiebung und die Winkelgeschwindigkeit des Radsatzes (13a-13d) in der Gierrichtung abzuleiten,

und, in jedem der Fälle (i) bis (p), optional,

(q) die Bestimmungseinrichtung auf der Grundlage eines Vergleichsergebnisses zwischen der Federkonstante der Achslageraufhängung (18a, 18b) in Vorwärts- und Rückwärtsrichtung und einem Referenzwert bestimmt, ob die Steifigkeit der Achslageraufhängung (18a, 18b) in Vorwärts- und Rückwärtsrichtung normal ist.

**9.** Schienenfahrzeug nach Anspruch 1, wobei

(r) das zu prüfende Bauteil ein Rad (14a-14f) ist,

und, in diesem Fall (r), optional,

(s) die Prüfeinrichtung (303) eine Laufflächenneigungs-Ableitungseinrichtung umfasst, die die Laufflächenneigung ($\gamma$) des Rades (14a-14f) unter Verwendung eines relationalen Ausdrucks ableitet, der ein Verhältnis zwischen der Laufflächenneigung ($\gamma$) des Rades (14a-14f) und der Vorwärts- und Rückwärtsrichtungskraft ($T_1$-$T_4$) darstellt, und den von der Erfassungseinrichtung (301) erfassten Messwert der Vorwärts- und Rückwärtsrichtungskraft ($T_1$-$T_4$),

und, im Fall (s), optional,

(t) der relationale Ausdruck ein Ausdruck ist, der auf einer Bewegungsgleichung basiert, die eine Bewegung des Radsatzes (13a-13d) in einer Gierrichtung beschreibt, und

die Gierrichtung eine Schwenkrichtung ist, wobei eine Auf- und Abwärtsrichtung eine Richtung vertikal zu der als Schwenkachse festgelegten Spur ist,

und, im Fall (s) oder (t), optional,

(u) wenn die durch den relationalen Ausdruck abgeleitete Laufflächenneigung ($\gamma$) des Rades (14a-14f) größer als ein vorbestimmter oberer Grenzwert ist, setzt die Laufflächenneigungs-Ableitungseinrichtung den Wert der Laufflächenneigung ($\gamma$) des Rades (14a-14f) auf den oberen Grenzwert, und wenn die durch den relationalen Ausdruck abgeleitete Laufflächenneigung ($\gamma$) des Rades (14a-14f) kleiner als ein vorbestimmter unterer Grenzwert ist, legt die Laufflächenneigungs-Ableitungseinrichtung den Wert der Laufflächenneigung ($\gamma$) des Rades (14a-14f) auf den unteren Grenzwert fest.

**10.** Schienenfahrzeug nach Anspruch 9, wobei, in den Fällen (s), (t), oder (u),

(v) die Prüfeinrichtung (303) ferner eine Frequenzkomponenten-Einstelleinrichtung umfasst, die eine Frequenzkomponente der Laufflächenneigung ($\gamma$) des Rades (14a-14f) so einstellt, dass ein in der von der Laufflächenneigungs-Ableitungseinrichtung abgeleiteten Laufflächenneigung ($\gamma$) des Rades (14a-14f) enthaltenes Rauschen reduziert wird,

und, im Fall (v), optional,

(w) die Frequenzkomponenten-Einstelleinrichtung Zeitreihendaten der Laufflächenneigung ($\gamma$) des Rades (14a-14f), die von der Laufflächenneigungs-Ableitungseinrichtung abgeleitet wurden, verwendet, um einen Koeffizienten in einem korrigierten AR-Modell abzuleiten, und den abgeleiteten Koeffizienten verwendet, um die Laufflächenneigung ($\gamma$) des Rades (14a-14f), die von der Laufflächenneigungs-Ableitungseinrichtung abgeleitet wurde, zu korrigieren, wodurch die Frequenzkomponente des Signals der Laufflächenneigung ($\gamma$) des Rades (14a-14f) eingestellt wird,

das korrigierte AR-Modell ein Ausdruck ist, der einen vorhergesagten Wert der Laufflächenneigung ($\gamma$) des Rades (14a-14f) unter Verwendung eines vorhergesagten Werts der Laufflächenneigung ($\gamma$) des Rades (14a-14f) und des auf den vorhergesagten Wert ansprechenden Koeffizienten darstellt,

der Koeffizient unter Verwendung einer Gleichung abgeleitet wird, in der eine erste Matrix als Koeffizientenmatrix und ein Autokorrelationsvektor als konstanter Vektor festgelegt wird,

der Autokorrelationsvektor ein Vektor ist, dessen Komponente die Autokorrelation der Zeitreihendaten der Laufflächenneigung ($\gamma$) des Rades (14a-14f) mit einer Zeitverzögerung von 1 bis m ist,

m eine Zahl der Laufflächenneigung ($\gamma$) des Rades (14a-14f) ist, die in dem korrigierten AR-Modell verwendet wird,

die erste Matrix eine Matrix $U_s\Sigma_sU_s^T$ ist, die aus einer zweiten Matrix $\Sigma_s$ abgeleitet ist, die aus s Teilen von Eigenwerten einer Autokorrelationsmatrix abgeleitet ist, wobei s eine Zahl von 1 oder mehr und kleiner als m ist, und einer Diagonalmatrix $\Sigma$ und einer dritten Matrix $U_s$, die aus den s Teilen von Eigenwerten und einer orthogonalen Matrix U abgeleitet ist,

wobei die Autokorrelationsmatrix eine Matrix ist, deren Komponente die Autokorrelation der Zeitreihendaten der Laufflächenneigung ($\gamma$) des Rades (14a-14f) mit einer Zeitverzögerung von 0 bis m-1 ist,

die Diagonalmatrix eine Matrix ist, deren Diagonalkomponenten Eigenwerte der Autokorrelationsmatrix sind, die durch Singulärwertzerlegung der Autokorrelationsmatrix abgeleitet werden,

die orthogonale Matrix eine Matrix ist, in der ein Eigenvektor der Autokorrelationsmatrix als Spaltenkomponentenvektor festgelegt ist,

die zweite Matrix eine Untermatrix der Diagonalmatrix ist und eine Matrix ist, deren Diagonalkomponenten die s Teile der Eigenwerte sind, und

die dritte Matrix eine Untermatrix der orthogonalen Matrix ist und eine Matrix ist, in der Eigenvektoren, die den s Teilen von Eigenwerten entsprechen, auf Spaltenkomponentenvektoren festgelegt sind,

und, im Fall (w), optional,

(x) die s Teile der Eigenwerte einem Eigenwert mit dem größten Wert entsprechen,

und in jedem der Fälle (v), (w), oder (x), optional,

(y) die Prüfeinrichtung (303) eine Laufflächenneigungs-Korrektureinrichtung umfasst, die die Laufflächenneigung ($\gamma$) des Rades (14a-14f), dessen Frequenzkomponente durch die Frequenzkomponenten-Einstellungseinrichtung eingestellt wurde, unter Verwendung zuvor gespeicherter Laufflächenneigungs-Korrekturinformationen korrigiert, und

die Laufflächenneigungs-Korrekturinformationen Informationen sind, die eine Beziehung zwischen einem tatsächlich gemessenen Wert der Laufflächenneigung ($\gamma$) des Rades (14a-14f) und einem berechneten Wert der Laufflächenneigung ($\gamma$) des Rades (14a-14f) angeben.

**11.** Schienenfahrzeug nach einem der Ansprüche 9 bis 10, wobei

die Prüfeinrichtung mindestens die Normalität oder Abnormalität der Laufflächenneigung ($\gamma$) des Rades (14a-14f) als Prüfung der Laufflächenneigung des Rades prüft, und

die Prüfeinrichtung (303) eine Bestimmungseinrichtung umfasst, die auf der Grundlage eines Wertes der Laufflächenneigung ($\gamma$) des Rades (14a-14f) bestimmt, ob die Laufflächenneigung ($\gamma$) des Rades (14a-14f) normal ist oder nicht.

**12.** Schienenfahrzeug nach Anspruch 9, Fall (r), wobei

(z) die Prüfeinrichtung mindestens die Normalität oder Abnormalität der Laufflächenneigung ($\gamma$) des Rades (14a-14f) als eine Prüfung der Laufflächenneigung des Rades prüft,

die Prüfeinrichtung (303) ferner umfasst:

eine Koeffizienten-Ableitungseinrichtung, die einen Koeffizienten in einem korrigierten AR-Modell unter Verwendung von Zeitreihendaten des Messwerts der Vorwärts- und Rückwärtsrichtungskraft ($T_1$-$T_4$) ableitet;

eine Frequenzcharakteristik-Ableitungseinrichtung, die eine Frequenzcharakteristik ableitet, die eine Verteilung von Frequenzen des korrigierten AR-Modells unter Verwendung des durch die Koeffizienten-Ableitungseinrichtung abgeleiteten Koeffizienten angibt; und

eine Bestimmungseinrichtung, die unter Verwendung der von der Frequenzcharakteristik-Ableitungseinrichtung abgeleiteten Frequenzcharakteristik bestimmt, ob die Laufflächenneigung ($\gamma$) des Rades (14a-14f) normal ist oder nicht,

wobei das korrigierte AR-Modell ein Ausdruck ist, der einen vorhergesagten Wert der Vorwärts- und Rückwärtsrichtungskraft ($T_1$-$T_4$) unter Verwendung eines tatsächlichen Werts der Vorwärts- und Rückwärtsrichtungskraft ($T_1$-$T_4$) und des auf den tatsächlichen Wert ansprechenden Koeffizienten darstellt,

wobei die Koeffizienten-Ableitungseinrichtung den Koeffizienten unter Verwendung einer Gleichung ableitet, in der eine erste Matrix als Koeffizientenmatrix und ein Autokorrelationsvektor als konstanter Vektor festgelegt sind,

der Autokorrelationsvektor ein Vektor ist, dessen Komponente die Autokorrelation der Zeitreihendaten des Messwerts der Vorwärts- und Rückwärtsrichtungskraft ($T_1$-$T_4$) mit einer Zeitverzögerung von 1 bis m ist, m eine Anzahl der Werte der Vorwärts- und Rückwärtsrichtungskraft ($T_1$-$T_4$) ist, die im korrigierten AR-Modell verwendet werden,

die erste Matrix eine Matrix $U_s\Sigma_sU_s^T$ ist, die aus einer zweiten Matrix $\Sigma_s$ und einer dritten Matrix $U_s$ abgeleitet ist, wobei s eine Zahl ist, die auf 1 oder mehr und kleiner als m gesetzt ist,

die zweite Matrix $\Sigma_s$ aus s Teilen von Eigenwerten einer Autokorrelationsmatrix und einer Diagonalmatrix $\Sigma$ abgeleitet ist,

die dritte Matrix $U_s$ aus den s Teilen von Eigenwerten und einer orthogonalen Matrix U abgeleitet ist,

die Autokorrelationsmatrix ist eine Matrix, deren Komponente die Autokorrelation der Zeitreihendaten des Messwerts der Vorwärts- und Rückwärtsrichtungskraft ($T_1$-$T_4$) mit einer Zeitverzögerung von 0 bis m-1 ist,

die Diagonalmatrix eine Matrix ist, deren Diagonalkomponente Eigenwerte der Autokorrelationsmatrix sind,

die Eigenwerte der Autokorrelationsmatrix durch Singulärwertzerlegung der Autokorrelationsmatrix abgeleitet werden,

die orthogonale Matrix eine Matrix ist, in der ein Eigenvektor der Autokorrelationsmatrix als Spaltenkomponentenvektor festgelegt ist,

die zweite Matrix eine Untermatrix der Diagonalmatrix ist und eine Matrix ist, deren Diagonalkomponenten die s Teile der Eigenwerte sind, und

die dritte Matrix eine Untermatrix der orthogonalen Matrix ist und eine Matrix ist, in der Eigenvektoren, die den s Teilen von Eigenwerten entsprechen, als Spaltenkomponentenvektoren festgelegt sind,

und, im Fall (z), optional,

die Bestimmungseinrichtung bestimmt, ob die Laufflächenneigung ($\gamma$) des Rades (14a-14f) normal ist oder nicht, basierend auf einem Ergebnis eines Vergleichs zwischen der Frequenzcharakteristik, die die Verteilung der Frequenzen des korrigierten AR-Modells angibt, das durch die Frequenzcharakteristik-Ableitungseinrichtung abgeleitet wurde, und

einer Frequenzcharakteristik, die eine Verteilung der Frequenzen des korrigierten AR-Modells des Schienenfahrzeugs, das normal ist, angibt.

**13.** Prüfverfahren zum Prüfen eines zu prüfenden Bauteils eines Schienenfahrzeugs, das einen Fahrzeugkörper (11), ein Drehgestell (12a, 12b), einen Radsatz (13a-13d), ein Achslager (17a-17d) und eine Achslageraufhängung (18a, 18b) umfasst, wobei das Prüfverfahren umfasst:

einen Erfassungsschritt zum Erfassen von Eingangsdaten, die einen Messwert einer Vorwärts- und Rückwärtsrichtungskraft ($T_1$-$T_4$) umfassen, der durch Fahren des Schienenfahrzeugs auf einer Schiene (20) gemessen wird; und

einen Prüfschritt zum Prüfen des zu prüfenden Bauteils unter Verwendung des durch den Erfassungsschritt erfassten Messwerts der Vorwärts- und Rückwärtsrichtungskraft ($T_1$-$T_4$), wobei

die Vorwärts- und Rückwärtsrichtungskraft ($T_1$-$T_4$) eine Kraft in Vorwärts- und Rückwärtsrichtung ist, die in einem Bauteil auftritt, das die Achslageraufhängung (18a, 18b) ausbildet,

das Bauteil ein Bauteil zum Halten des Achslagers (17a-17d) ist,

die Vorwärts- und Rückwärtsrichtung eine Richtung entlang einer Fahrtrichtung des Schienenfahrzeugs ist, und

das zu prüfende Bauteil mindestens eines von Folgendem ist:

ein Bauteil, das zwischen einem Drehgestellrahmen (16) des Drehgestells (12a, 12b) und dem Radsatz (13a-13d) angeordnet ist; ein Bauteil, das zwischen dem Drehgestellrahmen (16) des Drehgestells (12a, 12b) und dem Fahrzeugkörper (11) angeordnet ist; und

ein Rad (14a-14f), und wenn das zu prüfende Bauteil ein Rad (14a-14f) ist, prüft der Prüfschritt mindestens eine Laufflächenneigung ($\gamma$) des Rades (14a-14f); und wobei

in dem Prüfschritt eine Bestimmungseinrichtung bestimmt, ob das zu prüfende Bauteil normal ist oder nicht, anhand des in dem Erfassungsschritt erfassten Messwert der Vorwärts- und Rückwärtsrichtungskraft (T1-T4), und

(a) in dem Prüfschritt eine Frequenzkomponenten-Einstelleinrichtung eine Frequenzkomponente eines Signals des Messwerts der Vorwärts- und Rückwärtsrichtungskraft ($T_1$-$T_4$) so einstellt, dass ein in dem Signal des Messwerts der Vorwärts- und Rückwärtsrichtungskraft ($T_1$-$T_4$) enthaltenes Rauschen reduziert wird, und

die Bestimmungseinrichtung auf der Grundlage des Messwerts der Vorwärts- und Rückwärtsrichtungskraft ($T_1$-$T_4$), dessen Frequenzkomponente durch die Frequenzkomponenten-Einstelleinrichtung eingestellt wurde, bestimmt, ob das zu prüfende Bauteil normal ist oder nicht, und

(b) die Frequenzkomponenten-Einstelleinrichtung Zeitreihendaten des Messwerts der Vorwärts- und Rückwärtsrichtungskraft ($T_1$-$T_4$) verwendet, um einen Koeffizienten in einem korrigierten autoregressiven Modell (AR) abzuleiten, und den Koeffizienten verwendet, um den Messwert der Vorwärts- und Rückwärtsrichtungskraft ($T_1$-$T_4$) zu korrigieren, wodurch die Frequenzkomponente des Signals des Messwerts der Vorwärts- und Rückwärtsrichtungskraft ($T_1$-$T_4$) eingestellt wird,

das korrigierte autoregressive Modell (AR) ein Ausdruck ist, der einen Vorhersagewert der Vorwärts- und Rückwärtsrichtungskraft ($T_1$-$T_4$) unter Verwendung eines tatsächlichen Werts der Vorwärts- und Rückwärtsrichtungskraft ($T_1$-$T_4$) und des auf den tatsächlichen Wert ansprechenden Koeffizienten darstellt,

wobei der Koeffizient unter Verwendung einer Gleichung bestimmt wird, in der eine erste Matrix als Koeffizientenmatrix und ein Autokorrelationsvektor als konstanter Vektor festgelegt sind,

wobei der Autokorrelationsvektor ein Vektor ist, dessen Komponente die Autokorrelation der Zeitreihendaten des gemessenen Werts der Vorwärts- und Rückwärtsrichtungskraft ($T_1$-$T_4$) mit einer Zeitverzögerung von 1 bis m ist,

m eine Anzahl der Werte der Vorwärts- und Rückwärtsrichtungskraft ($T_1$-$T_4$) ist, die im korrigierten AR-Modell verwendet werden,

die erste Matrix ist eine Matrix $U_s\Sigma_s U_s^T$, die aus einer zweiten Matrix $\Sigma_s$ und einer dritten Matrix $U_s$ abgeleitet ist, wobei s eine Zahl von 1 oder mehr und kleiner als m ist,

die zweite Matrix $\Sigma_s$ aus s Teilen von Eigenwerten einer Autokorrelationsmatrix und einer Diagonalmatrix $\Sigma$ abgeleitet ist,

die dritte Matrix $U_s$ aus den s Teilen von Eigenwerten und einer orthogonalen Matrix U abgeleitet ist,

die Autokorrelationsmatrix eine Matrix ist, deren Komponente die Autokorrelation der Zeitreihendaten des Messwerts der Vorwärts- und Rückwärtsrichtungskraft ($T_1$-$T_4$) mit einer Zeitverzögerung von 0 bis m-1 ist,

die Diagonalmatrix eine Matrix ist, deren Diagonalkomponente Eigenwerte der Autokorrelationsmatrix sind,

die Eigenwerte der Autokorrelationsmatrix durch Singulärwertzerlegung der Autokorrelationsmatrix abgeleitet werden,

die orthogonale Matrix eine Matrix ist, in der ein Eigenvektor der Autokorrelationsmatrix als Spaltenkomponentenvektor festgelegt ist,

die zweite Matrix eine Untermatrix der Diagonalmatrix ist und eine Matrix ist, deren Diagonalkomponenten die s Teile der Eigenwerte sind,

die dritte Matrix eine Untermatrix der orthogonalen Matrix ist und eine Matrix ist, in der Eigenvektoren, die den s Teilen von Eigenwerten entsprechen, als Spaltenkomponentenvektoren festgelegt sind.

**14.** Verwendung eines Programms, das einen Computer veranlasst, eine Prüfung eines zu prüfenden Bauteils eines Schienenfahrzeugs durchzuführen, das einen Fahrzeugkörper (11), ein Drehgestell (12a, 12b), einen Radsatz (13a-13d), ein Achslager (17a-17d) und eine Achslageraufhängung (18a, 18b) umfasst, wobei das Programm den Computer dazu veranlasst, Folgendes auszuführen:

einen Erfassungsschritt zum Erfassen von Eingangsdaten, die einen Messwert einer Vorwärts- und Rückwärtsrichtungskraft ($T_1$-$T_4$) umfassen, der gemessen wird, indem das Schienenfahrzeug auf einer Schiene (20) gefahren wird; und

einen Prüfschritt zum Prüfen des zu prüfenden Bauteils unter Verwendung des im Erfassungsschritt erfassten Messwerts der Vorwärts- und Rückwärtsrichtungskraft ($T_1$-$T_4$), wobei
die Vorwärts- und Rückwärtsrichtungskraft ($T_1$-$T_4$) eine Kraft in einer Vorwärts- und Rückwärtsrichtung ist, die in einem Bauteil auftritt, das die Achslageraufhängung (18a, 18b) ausbildet,
das Bauteil ein Bauteil zum Halten des Achslagers (17a-17d) ist,
die Vorwärts- und Rückwärtsrichtung eine Richtung entlang einer Fahrtrichtung des Schienenfahrzeugs ist, und
das zu prüfende Bauteil mindestens eines von Folgendem ist:

ein Bauteil, das zwischen einem Drehgestellrahmen (16) des Drehgestells (12a, 12b) und dem Radsatz (13a-13d) angeordnet ist;
ein Bauteil, das zwischen dem Drehgestellrahmen (16) des Drehgestells (12a, 12b) und dem Fahrzeugkörper (11) angeordnet ist; und
ein Rad (14a-14f), und wenn das zu prüfende Bauteil ein Rad (14a-14f) ist, prüft der Prüfschritt mindestens eine Laufflächenneigung ($\gamma$) des Rades (14a-14f); und wobei
in dem Prüfschritt eine Bestimmungseinrichtung bestimmt, ob das zu prüfende Bauteil normal ist oder nicht, anhand des in dem Erfassungsschritt erfassten Messwert der Vorwärts- und Rückwärtsrichtungskraft (T1-T4), und

(a) in dem Prüfschritt eine Frequenzkomponenten-Einstelleinrichtung eine Frequenzkomponente eines Signals des Messwerts der Vorwärts- und Rückwärtsrichtungskraft ($T_1$-$T_4$) so einstellt, dass ein in dem Signal des Messwerts der Vorwärts- und Rückwärtsrichtungskraft ($T_1$-$T_4$) enthaltenes Rauschen reduziert wird, und
die Bestimmungseinrichtung auf der Grundlage des Messwerts der Vorwärts- und Rückwärtsrichtungs-kraft ($T_1$-$T_4$), dessen Frequenzkomponente durch die Frequenzkomponenten-Einstelleinrichtung eingestellt wurde, bestimmt, ob das zu prüfende Bauteil normal ist oder nicht, und
(b) die Frequenzkomponenten-Einstelleinrichtung Zeitreihendaten des Messwerts der Vorwärts- und Rückwärtsrichtungskraft ($T_1$-$T_4$) verwendet, um einen Koeffizienten in einem korrigierten AR-Modell abzuleiten, und den Koeffizienten verwendet, um den Messwert der Vorwärts- und Rückwärtsrichtungs-kraft ($T_1$-$T_4$) zu korrigieren, wodurch die Frequenzkomponente des Signals des Messwerts der Vor-wärts- und Rückwärtsrichtungskraft ($T_1$-$T_4$) eingestellt wird,

das korrigierte autoregressive Modell (AR) ein Ausdruck ist, der einen vorhergesagten Wert der Vorwärts- und Rückwärtsrichtungskraft ($T_1$-$T_4$) unter Verwendung eines aktuellen Werts der Vorwärts- und Rück-wärtsrichtungskraft ($T_1$-$T_4$) und des auf den aktuellen Wert ansprechenden Koeffizienten darstellt,
der Koeffizient unter Verwendung einer Gleichung bestimmt wird, in der eine erste Matrix als Koeffizientenmatrix und ein Autokorrelationsvektor als konstanter Vektor festgelegt sind,
der Autokorrelationsvektor ein Vektor ist, dessen Komponente die Autokorrelation der Zeitreihendaten des Messwerts der Vorwärts- und Rückwärtsrichtungskraft ($T_1$-$T_4$) mit einer Zeitverzögerung von 1 bis m ist,
m eine Anzahl der Werte der Vorwärts- und Rückwärtsrichtungskraft ($T_1$-$T_4$) ist, die im korrigierten AR-Modell verwendet werden,
die erste Matrix eine Matrix $U_s\Sigma_sU_s^T$ ist, die aus einer zweiten Matrix $\Sigma_s$ und einer dritten Matrix $U_s$ abgeleitet ist, wobei s eine Zahl von 1 oder mehr und kleiner als m ist,
die zweite Matrix $\Sigma_s$ aus s Teilen von Eigenwerten einer Autokorrelationsmatrix und einer Diagonalmatrix $\Sigma$ abgeleitet wird,
die dritte Matrix $U_s$ aus den s Teilen von Eigenwerten und einer orthogonalen Matrix U abgeleitet wird,
die Autokorrelationsmatrix eine Matrix ist, deren Komponente die Autokorrelation der Zeitreihendaten des Messwerts der Vorwärts- und Rückwärtsrichtungskraft ($T_1$-$T_4$) mit einer Zeitverzögerung von 0 bis m-1 ist,
die Diagonalmatrix eine Matrix ist, deren Diagonalkomponente Eigenwerte der Autokorrelationsmatrix sind,
die Eigenwerte der Autokorrelationsmatrix durch Singulärwertzerlegung der Autokorrelationsmatrix abgeleitet werden,
die orthogonale Matrix eine Matrix ist, in der ein Eigenvektor der Autokorrelationsmatrix als Spaltenkomponentenvektor festgelegt ist,
die zweite Matrix, eine Untermatrix der Diagonalmatrix ist und eine Matrix ist, deren Diagonalkomponenten die s Teile der Eigenwerte sind, und
die dritte Matrix ist eine Untermatrix der orthogonalen Matrix ist und eine Matrix ist, in der Eigenvektoren, die den s Teilen von Eigenwerten entsprechen, als Spaltenkomponentenvektoren festgelegt sind.

**Revendications**

1. Véhicule ferroviaire comprenant un corps de véhicule (11), un bogie (12a, 12b), un ensemble de roues (13a-13d), une boîte d'essieu (17a-17d), une suspension de boîte d'essieu (18a, 18b), et un système d'inspection (300) qui inspecte un élément cible à inspecter du véhicule ferroviaire, le système d'inspection (300) comprenant :

   un moyen d'acquisition (301) qui acquiert des données d'entrée comprenant une valeur mesurée d'une force dans la direction vers l'avant et vers l'arrière ($T_1$ - $T_4$) à mesurer en faisant circuler le véhicule ferroviaire sur une voie (20) ; et
   un moyen d'inspection (303) qui inspecte l'élément cible à inspecter en utilisant la valeur mesurée de la force dans la direction vers l'avant et vers l'arrière ($T_1$ - $T_4$) acquise par le moyen d'acquisition (301), dans lequel :

   la force dans la direction vers l'avant et vers l'arrière ($T_1$ - $T_4$) est une force dans une direction vers l'avant et vers l'arrière qui se produit dans un élément configurant la suspension de boîte d'essieu (18a, 18b),
   l'élément est un élément pour supporter la boîte d'essieu (17a-17d),
   la direction vers l'avant et vers l'arrière est une direction le long d'une direction de déplacement du véhicule ferroviaire, et
   l'élément cible à inspecter est au moins l'un parmi :

   un élément disposé entre un châssis de bogie (16) du bogie (12a, 12b) et l'ensemble de roues (13a-13d) ;
   un élément disposé entre le châssis de bogie (16) du bogie (12a, 12b) et le corps de véhicule (11) ; et
   une roue (14a-14f), et dans le cas dans lequel l'élément cible à inspecter est une roue (14a-14f), le moyen d'inspection (303) inspecte au moins une inclinaison de la table de roulement ($\gamma$) de la roue (14a-14f), et dans lequel :

   le moyen d'inspection (303) comprend un moyen de détermination qui détermine si l'élément cible à inspecter est normal ou pas en utilisant la valeur mesurée de la force dans la direction vers l'avant et vers l'arrière ($T_1$ - $T_4$) acquise par le moyen d'acquisition (301), et **caractérisé en ce que** le moyen d'inspection (303) comprend en outre :

   (a) un moyen de réglage de composante de fréquence qui règle une composante de fréquence d'un signal de la valeur mesurée de la force dans la direction vers l'avant et vers l'arrière ($T_1$ - $T_4$) afin de réduire un bruit inclus dans le signal de la valeur mesurée de la force dans la direction vers l'avant et vers l'arrière ($T_1$ - $T_4$),
   le moyen de détermination détermine si l'élément cible à inspecter est normal ou pas sur la base de la valeur mesurée de la force dans la direction vers l'avant et vers l'arrière ($T_1$ - $T_4$) ayant la composante de fréquence réglée par le moyen de réglage de composante de fréquence, et **en ce que** :
   (b) le moyen de réglage de composante de fréquence utilise des données de séries temporelles de la valeur mesurée de la force dans la direction vers l'avant et vers l'arrière ($T_1$ - $T_4$) afin de dériver un coefficient dans un modèle autorégressif (AR) corrigé et utilise le coefficient pour corriger la valeur mesurée de la force dans la direction vers l'avant et vers l'arrière ($T_1$ - $T_4$), réglant ainsi la composante de fréquence du signal de la valeur mesurée de la force dans la direction vers l'avant et vers l'arrière ($T_1$ - $T_4$),

   le modèle AR corrigé est une expression représentant une valeur prédite de la force dans la direction vers l'avant et vers l'arrière ($T_1$ - $T_4$) en utilisant une valeur réelle de la force dans la direction vers l'avant et vers l'arrière ($T_1$ - $T_4$) et le coefficient sensible à la valeur réelle,
   le coefficient est dérivé en utilisant une équation dans laquelle une première matrice est définie comme une matrice de coefficient et un vecteur d'autocorrélation est défini comme un vecteur constant,
   le vecteur d'autocorrélation est un vecteur dont la composante est l'autocorrélation des données de séries temporelles de la valeur mesurée de la force dans la direction vers l'avant et vers l'arrière ($T_1$ - $T_4$) avec un décalage dans le temps de 1 à m,
   m est un nombre de la valeur de la force dans la direction vers l'avant et vers l'arrière ($T_1$ - $T_4$) utilisée dans le modèle AR corrigé,
   la première matrice est une matrice $U_s \Sigma_s U_s^T$ dérivée d'une deuxième matrice $\Sigma_s$ et d'une troisième matrice $U_s$, s étant un nombre de 1 ou supérieur et inférieur à m,

la deuxième matrice $\Sigma_s$ est dérivée de s pièces de valeurs propres d'une matrice d'autocorrélation et d'une matrice diagonale $\Sigma$,

la troisième matrice $U_s$ est dérivée de s pièces de valeurs propres et d'une matrice orthogonale U,

la matrice d'autocorrélation est une matrice dont la composante est l'autocorrélation des données de séries temporelles de la valeur mesurée de la force dans la direction vers l'avant et vers l'arrière $(T_1 - T_4)$ avec un décalage dans le temps de 0 à m-1,

la matrice diagonale est une matrice dont la composante diagonale est la valeur propre de la matrice d'autocorrélation,

les valeurs propres de la matrice d'autocorrélation sont dérivées par décomposition en valeurs singulières de la matrice d'autocorrélation,

la matrice orthogonale est une matrice dans laquelle un vecteur propre de la matrice d'autocorrélation est défini comme un vecteur colonne,

la deuxième matrice est une sous-matrice de la matrice diagonale et est une matrice dont la composante diagonale est les s pièces de valeurs propres, et

la troisième matrice est une sous-matrice de la matrice orthogonale et est une matrice dans laquelle des vecteurs propres correspondant aux s pièces de valeurs propres sont définis les vecteurs colonnes.

2. Véhicule ferroviaire selon la revendication 1, dans lequel :

le moyen de détermination détermine si l'élément cible à inspecter est normal ou pas sur la base d'un résultat de comparaison entre la valeur mesurée de la force dans la direction vers l'avant et vers l'arrière $(T_1 - T_4)$ acquise par le moyen d'acquisition (301) et une valeur mesurée de la force dans la direction vers l'avant et vers l'arrière $(T_1 - T_4)$ par rapport au véhicule ferroviaire, qui est normal,

et/ou

le moyen de détermination détermine si l'élément cible à inspecter est normal ou pas sur la base d'une différence entre la valeur mesurée de la force dans la direction vers l'avant et vers l'arrière $(T_1 - T_4)$ acquise par le moyen d'acquisition (301) et la force dans la direction vers l'avant et vers l'arrière $(T_1 - T_4)$ par rapport au véhicule ferroviaire, qui est normale.

3. Véhicule ferroviaire selon l'une quelconque des revendications 1 à 2, dans lequel :

(c) le moyen de détermination détermine si l'élément cible à inspecter est normal ou pas sur la base d'un résultat de comparaison entre les données de séries temporelles de la valeur mesurée de la force dans la direction vers l'avant et vers l'arrière $(T_1 - T_4)$ par rapport au véhicule ferroviaire, qui est normal et les données de séries temporelles de la valeur mesurée de la force dans la direction vers l'avant et vers l'arrière $(T_1 - T_4)$ ayant la composante de fréquence réglée par le moyen de réglage de composante de fréquence, et

les données de séries temporelles de la valeur mesurée de la force dans la direction vers l'avant et vers l'arrière $(T_1 - T_4)$ par rapport au véhicule ferroviaire qui sont normales, sont des données de séries temporelles dont la composante de fréquence est réglée en utilisant le modèle AR corrigé dans le véhicule ferroviaire qui est normal et les données de séries temporelles de la valeur mesurée de la force dans la direction vers l'avant et vers l'arrière $(T_1 - T_4)$ par rapport au véhicule ferroviaire qui sont normales.

4. Véhicule ferroviaire selon l'une quelconque des revendications 1 à 2, dans lequel :

(d) le moyen d'inspection (303) comprend :

un moyen de dérivation de coefficient qui dérive un coefficient dans un modèle AR corrigé en utilisant les données de séries temporelles de la valeur mesurée de la force dans la direction vers l'avant et vers l'arrière $(T_1 - T_4)$ ; et

un moyen de dérivation de caractéristique de fréquence qui dérive une caractéristique de fréquence indiquant une distribution de fréquences du modèle AR corrigé en utilisant le coefficient dérivé par le moyen de dérivation de coefficient,

le modèle AR corrigé est une expression représentant une valeur prédite de la force dans la direction vers l'avant et vers l'arrière $(T_1 - T_4)$ en utilisant une valeur réelle de la force dans la direction vers l'avant et vers l'arrière $(T_1 - T_4)$ et le coefficient sensible à la valeur réelle,

le moyen de dérivation de coefficient dérive le coefficient en utilisant une équation dans laquelle une première matrice est définie comme une matrice de coefficient et un valeur d'autocorrélation est défini comme un vecteur constant,

le vecteur d'autocorrélation est un vecteur dont la composante est l'autocorrélation des données de séries temporelles de la valeur mesurée de la force dans la direction vers l'avant et vers l'arrière ($T_1$ - $T_4$) avec un décalage dans le temps de 1 à m,

m est un nombre de la valeur de la force dans la direction vers l'avant et vers l'arrière ($T_1$ - $T_4$) utilisée dans le modèle AR corrigé,

la première matrice est une matrice $U_s \Sigma_s U_s^T$ dérivée d'une deuxième matrice $\Sigma_s$ et d'une troisième matrice $U_s$, s étant un nombre de 1 ou supérieur et inférieur à m,

la deuxième matrice $\Sigma_s$ est dérivée de s pièces de valeurs propres d'une matrice d'autocorrélation et d'une matrice diagonale $\Sigma$,

la troisième matrice $U_s$ est dérivée de s pièces de valeurs propres et d'une matrice orthogonale U,

la matrice d'autocorrélation est une matrice dont la composante est l'autocorrélation des données de séries temporelles de la valeur mesurée de la force dans la direction vers l'avant et vers l'arrière ($T_1$ - $T_4$) avec un décalage dans le temps de 0 à m-1,

la matrice diagonale est une matrice dont la composante diagonale est la valeur propre de la matrice d'autocorrélation,

les valeurs propres de la matrice d'autocorrélation sont dérivées par décomposition en valeurs singulières de la matrice d'autocorrélation,

la matrice orthogonale est une matrice dans laquelle un vecteur propre de la matrice d'autocorrélation est défini comme un vecteur colonne,

la deuxième matrice est une sous-matrice de la matrice diagonale et est une matrice dont la composante diagonale est les s pièces de valeurs propres, et

la troisième matrice est une sous-matrice de la matrice orthogonale et est une matrice dans laquelle des vecteurs propres correspondant aux s pièces de valeurs propres sont définis comme les vecteurs colonnes, et

le moyen de détermination détermine si l'élément cible à inspecter est normal ou pas en utilisant la caractéristique de fréquence dérivée par le moyen de dérivation de caractéristique de fréquence,

et facultativement, dans le cas (d),

(e) le moyen de détermination détermine si l'élément cible à inspecter est normal ou pas sur la base d'un résultat de comparaison entre la caractéristique de fréquence indiquant la distribution des fréquences du modèle AR corrigé dérivée par le moyen de dérivation de caractéristique de fréquence et une caractéristique de fréquence indiquant une distribution des fréquences du modèle AR corrigé du véhicule ferroviaire, qui est normal.

5.  Véhicule ferroviaire selon l'une quelconque des revendications 1 à 4, les cas (b), (c), (d) ou (e), dans lequel :
    (f) les s pièces de valeurs propres sont des valeurs propres ayant chacune une valeur qui est égale ou supérieure à une valeur moyenne des valeurs propres de la matrice d'autocorrélation, parmi les valeurs propres de la matrice d'autocorrélation.

6.  Véhicule ferroviaire selon l'une quelconque des revendications 1 à 5, dans lequel :
    l'élément cible à inspecter comprend au moins l'un quelconque parmi la boîte d'essieu (17a-17d), un amortisseur de mouvement latéral, un amortisseur de lacet, un ressort pneumatique et la suspension de boîte d'essieu (18a, 18b).

7.  Véhicule ferroviaire selon la revendication 1, dans lequel :

    (g) l'élément cible à inspecter est un amortisseur de lacet,
    le moyen d'inspection (303) comprend :

    un moyen de dérivation de différence qui dérive au moins l'une quelconque parmi une différence de vitesse angulaire et une différence de déplacement angulaire, sur la base de la valeur mesurée de la force dans la direction vers l'avant et vers l'arrière ($T_1$ - $T_4$) acquise par le moyen d'acquisition (301) ; et
    un moyen de détermination qui détermine si l'amortisseur de lacet est normal ou pas sur la base d'un résultat de comparaison entre au moins l'une quelconque parmi la différence de vitesse angulaire et la différence de déplacement angulaire dérivée par le moyen de dérivation de différence et une valeur par rapport au véhicule ferroviaire, qui est normal,
    la différence de vitesse angulaire représente une différence entre une vitesse angulaire de l'amortisseur de lacet dans une direction de lacet et une vitesse angulaire du corps de véhicule (11) dans la direction de lacet,
    la différence de déplacement angulaire représente une différence entre un déplacement angulaire de l'amortisseur de lacet dans la direction de lacet et un déplacement angulaire du bogie (12a, 12b) dans la direction de lacet, et

la direction de lacet est une direction de pivotement avec une direction vers le haut et vers le bas qui est une direction verticale à l'ensemble de voie, en tant qu'axe de pivot,

et, dans le cas (g), facultativement,

(h) les données d'entrée comprennent la valeur mesurée de la force dans la direction vers l'avant et vers l'arrière ($T_1$ - $T_4$), et les valeurs mesurées des accélérations du corps de véhicule (11), du bogie (12a, 12b) et de l'ensemble de roues (13a-13d) dans une direction droite et gauche,

le moyen d'inspection (303) comprend un moyen de décision de variable d'état qui réalise une opération utilisant un filtre réalisant une assimilation de données en utilisant les données d'entrée, une équation d'état et une équation d'observation pour déterminer les variables d'état qui sont les variables à résoudre dans l'équation d'état,

le moyen de dérivation de différence dérive au moins l'une quelconque parmi la différence de vitesse angulaire et la différence de déplacement angulaire en utilisant les variables d'état déterminées par le moyen de décision de variable d'état,

la direction droite et gauche est une direction verticale par rapport à la fois à la direction vers l'avant et vers l'arrière et la direction vers le haut et vers le bas qui est une direction verticale à la voie (20),

la force dans la direction vers l'avant et vers l'arrière ($T_1$ - $T_4$) est une force à déterminer selon une différence entre un déplacement angulaire de l'ensemble de roues (13a-13d) dans la direction de lacet et un déplacement angulaire du bogie (12a, 12b), dans la direction de lacet, sur lequel l'ensemble de roues (13a-13d) est prévu,

la direction de lacet est une direction de pivotement avec la direction vers le haut et vers le bas déterminée en tant qu'axe de pivot,

l'équation d'état est une équation décrite en utilisant les variables d'état, la force dans la direction vers l'avant et vers l'arrière ($T_1$ - $T_4$) et une variable de transformation,

les variables d'état comprennent un déplacement et une vitesse du corps de véhicule (11) dans la direction droite et gauche, un déplacement angulaire et une vitesse angulaire du corps de véhicule (11) dans la direction de lacet, un déplacement angulaire et une vitesse angulaire du corps de véhicule (11) dans une direction de roulement, un déplacement et une vitesse du bogie (12a, 12b) dans la direction droite et gauche, un déplacement angulaire et une vitesse angulaire du bogie (12a, 12b) dans la direction de lacet, un déplacement angulaire et une vitesse angulaire du bogie (12a, 12b) dans la direction de roulement, un déplacement et une vitesse de l'ensemble de roues (13a-13d) dans la direction droite et gauche, un déplacement angulaire d'un ressort pneumatique, dans la direction de roulement, fixé au véhicule ferroviaire, et un déplacement angulaire de l'amortisseur de lacet, dans la direction de lacet, fixé au véhicule ferroviaire, et ne comprennent pas de déplacement angulaire ni de vitesse angulaire de l'ensemble de roues (13a-13d) dans la direction de lacet,

la direction de roulement est une direction de pivotement avec la direction vers l'avant et vers l'arrière déterminée en tant qu'axe de pivot,

la variable de transformation est une variable qui réalise la transformation mutuelle entre le déplacement angulaire de l'ensemble de roues (13a-13d) dans la direction de lacet et le déplacement angulaire du bogie (12a, 12b) dans la direction de lacet,

l'équation d'observation est une équation décrite en utilisant une variable d'observation et la variable de transformation,

la variable de transformation comprend les accélérations du corps de véhicule (11), du bogie (12a, 12b) et l'ensemble de roues (13a-13d) dans la direction droite et gauche,

le moyen d'inspection (303) utilise l'équation d'état dans laquelle une valeur mesurée de la variable d'observation, la valeur mesurée de la force dans la direction vers l'avant et vers l'arrière ($T_1$ - $T_4$) et une valeur réelle de la variable de transformation sont remplacées et l'équation d'observation dans laquelle la valeur réelle de la variable de transformation est remplacée, afin de déterminer les variables d'état lorsqu'une erreur de la variable d'observation entre la valeur mesurée et une valeur calculée ou une valeur attendue de l'erreur devient minime, et

la valeur réelle de la variable de transformation est dérivée en utilisant la valeur mesurée de la force dans la direction vers l'avant et vers l'arrière ($T_1$ - $T_4$).

8. Véhicule ferroviaire selon la revendication 1, dans lequel :

(i) les données d'entrée comprennent les informations du véhicule, les informations du véhicule comprennent la valeur mesurée de la force dans la direction vers l'avant et vers l'arrière ($T_1$ - $T_4$), un déplacement angulaire et une vitesse angulaire du bogie (12a, 12b) dans une direction de lacet, et un déplacement angulaire et une vitesse angulaire de l'ensemble de roues (13a-13d) dans la direction de lacet,

le moyen d'inspection (303) comprend :

un moyen de dérivation de constante de rappel qui dérive une constante de rappel de la suspension de boîte d'essieu (18a, 18b) dans la direction vers l'avant et vers l'arrière sur la base des informations du véhicule acquises par le moyen d'acquisition (301) ; et

un moyen de détermination qui détermine si la rigidité de la suspension de boîte d'essieu (18a, 18b) dans la direction vers l'avant et vers l'arrière est normale ou pas sur la base de la constante de rappel de la suspension de boîte d'essieu (18a, 18b) dans la direction vers l'avant et vers l'arrière dérivée par le moyen de dérivation de constante de rappel, et

la direction de lacet est une direction de pivotement avec une direction vers le haut et vers le bas qui est une direction verticale à l'ensemble de voie en tant qu'axe de pivot,

et, dans le cas (i), facultativement,

(j) les données d'entrée comprennent les informations de voie,

les informations de voie comprennent une courbure d'un rail (20a, 20b) dans une position de l'ensemble de roues (13a-13d), et une dérivée temporelle de la courbure du rail (20a, 20b) dans la position de l'ensemble de roues (13a-13d), et

le moyen de dérivation de constante de rappel dérive la constante de rappel de la suspension de boîte d'essieu (18a, 18b) dans la direction vers l'avant et vers l'arrière sur la base des informations du véhicule acquises par le moyen d'acquisition (301) et les informations de voie acquises par le moyen d'acquisition (301),

et dans le cas (i) ou (j), facultativement,

(k) lorsque la constante de rappel de la suspension de boîte d'essieu (18a, 18b) dans la direction vers l'avant et vers l'arrière est supérieure à une valeur de limite supérieure, le moyen de dérivation de constante de rappel détermine la valeur de la constante de rappel de la suspension de boîte d'essieu (18a, 18b) dans la direction vers l'avant et vers l'arrière par rapport à la valeur de limite supérieure, et lorsque la constante de rappel de la suspension de boîte d'essieu (18a, 18b) dans la direction vers l'avant et vers l'arrière est inférieure à une valeur de limite inférieure, le moyen de dérivation de constante de rappel détermine la valeur de la constante de rappel de la suspension de boîte d'essieu (18a, 18b) dans la direction vers l'avant et vers l'arrière par rapport à la valeur de limite inférieure,

et, dans le cas (k), facultativement,

(l) la valeur de limite supérieure et la valeur de limite inférieure sont déterminées sur la base d'une constante de rappel de la suspension de boîte d'essieu (18a, 18b) dans la direction vers l'avant et vers l'arrière du véhicule ferroviaire, qui est normale,

et, dans l'un quelconque parmi (i), (j), (k) ou (l), facultativement,

(m) le moyen d'inspection (303) comprend un moyen de réglage de composante de fréquence qui règle une composante de fréquence d'un signal de la constante de rappel de la suspension de boîte d'essieu (18a, 18b) dans la direction vers l'avant et vers l'arrière afin de réduire un bruit inclus dans le signal de la constante de rappel de la suspension de boîte d'essieu (18a, 18b) dans la direction vers l'avant et vers l'arrière dérivée par le moyen de dérivation de constante de rappel, et

le moyen de détermination détermine si la rigidité de la suspension de boîte d'essieu (18a, 18b) dans la direction vers l'avant et vers l'arrière est normale ou pas sur la base de la constante de rappel de la suspension de boîte d'essieu (18a, 18b) dans la direction vers l'avant et vers l'arrière ayant la composante de fréquence réglée par le moyen de réglage de composante de fréquence,

et, dans le cas (m), facultativement,

(n) le moyen de réglage de composante de fréquence utilise les données de séries temporelles de la constante de rappel de la suspension de boîte d'essieu (18a, 18b) dans la direction vers l'avant et vers l'arrière dérivée par le moyen de dérivation de constante de rappel pour dériver un coefficient dans un modèle AR corrigé, et utilise le coefficient dérivé pour corriger la constante de rappel de la suspension de boîte d'essieu (18a, 18b) dans la direction vers l'avant et vers l'arrière dérivée par le moyen de dérivation de constante de rappel, réglant ainsi la composante de fréquence du signal de la constante de rappel de la suspension de boîte d'essieu (18a, 18b) dans la direction vers l'avant et vers l'arrière,

le modèle AR corrigé est une expression représentant une valeur prédite de la constante de rappel de la suspension de boîte d'essieu (18a, 18b) dans la direction vers l'avant et vers l'arrière en utilisant une valeur réelle de la constante de rappel de la suspension de boîte d'essieu (18a, 18b) dans la direction vers l'avant et vers l'arrière et le coefficient sensible à la valeur réelle,

le coefficient est déterminé en utilisant une équation dans laquelle une première matrice est définie comme une matrice de coefficient et un vecteur d'autocorrélation est défini comme un vecteur constant,

le vecteur d'autocorrélation est un vecteur dont la composante est l'autocorrélation des données de séries temporelles de la constante de rappel de la suspension de boîte d'essieu (18a, 18b) dans la direction vers l'avant et vers l'arrière avec un décalage dans le temps de 1 à m, m étant un nombre de la constante de rappel de la suspension de boîte d'essieu (18a, 18b) dans la direction vers l'avant et vers l'arrière utilisée dans le modèle AR corrigé,

la première matrice est une matrice $U_s \Sigma_s U_s^T$ dérivée d'une deuxième matrice $\Sigma_s$ et d'une troisième matrice $U_s$, s étant un nombre de 1 ou supérieur et inférieur à m,

la deuxième matrice $\Sigma_s$ est dérivée de s pièces de valeurs propres d'une matrice d'autocorrélation et d'une matrice diagonale $\Sigma$,

la troisième matrice $U_s$ est dérivée de s pièces de valeurs propres et d'une matrice orthogonale U,

la matrice d'autocorrélation est une matrice dont la composante est l'autocorrélation des données de séries temporelles de la constante de rappel de la suspension de boîte d'essieu (18a, 18b) dans la direction vers l'avant et vers l'arrière avec un décalage dans le temps de 0 à m-1,

la matrice diagonale est une matrice dont la composante diagonale est la valeur propre de la matrice d'autocorrélation,

les valeurs propres de la matrice d'autocorrélation sont dérivées par décomposition en valeurs singulières de la matrice d'autocorrélation,

la matrice orthogonale est une matrice dans laquelle un vecteur propre de la matrice d'autocorrélation est déterminé par un vecteur colonne,

la deuxième matrice est une sous-matrice de la matrice diagonale et est une matrice dont la composante diagonale est les s pièces de valeurs propres, et

la troisième matrice est une sous-matrice de la matrice orthogonale et est une matrice dans laquelle des vecteurs propres correspondant aux s pièces de valeurs propres sont définis comme les vecteurs colonnes, et, dans le cas (n), facultativement,

(o) les s pièces de valeurs propres correspondent à une valeur propre ayant la plus grande valeur,

et dans l'un quelconque des cas (i) à (o), facultativement,

(p) le moyen d'acquisition (301) réalise l'analyse numérique basée sur des équations de mouvement décrivant les mouvements du véhicule ferroviaire, pour dériver le déplacement angulaire et la vitesse angulaire du bogie (12a, 12b) dans la direction de lacet, et le déplacement angulaire et la vitesse angulaire de l'ensemble de roues (13a-13d) dans la direction de lacet,

et dans l'un quelconque des cas (i) à (p), facultativement,

(q) le moyen de détermination détermine si la rigidité de la suspension de boîte d'essieu (18a, 18b) dans la direction vers l'avant et vers l'arrière est normale ou pas, sur la base d'un résultat de comparaison entre la constante de rappel de la suspension de boîte d'essieu (18a, 18b) dans la direction vers l'avant et vers l'arrière et une valeur de référence.

**9.** Véhicule ferroviaire selon la revendication 1, dans lequel :

(r) l'élément cible à inspecter est une roue (14a-14f),

et, dans le cas (r), facultativement,

(s) le moyen d'inspection (303) comprend un moyen de dérivation de l'inclinaison de la table de roulement qui dérive l'inclinaison de la table de roulement ($\gamma$) de la roue (14a-14f) en utilisant une expression relationnelle représentant une relation entre l'inclinaison de la table de roulement ($\gamma$) de la roue (14a-14f) et la force dans la direction vers l'avant et vers l'arrière ($T_1 - T_4$), et la valeur mesurée de la force dans la direction vers l'avant et vers l'arrière ($T_1 - T_4$) acquise par le moyen d'acquisition (301),

et, dans le cas (s), facultativement,

(t) l'expression relationnelle est une expression basée sur une équation de mouvement décrivant un mouvement de l'ensemble de roues (13a-13d) dans une direction de lacet, et

la direction de lacet est une direction de pivotement avec une direction vers le haut et vers le bas qui est une direction verticale à l'ensemble de voie en tant qu'axe de pivot,

et, dans le cas (s) ou (t), facultativement,

(u) lorsque l'inclinaison de la table de roulement ($\gamma$) de la roue (14a-14f) dérivée par l'expression relationnelle est supérieure à une valeur de limite supérieure prédéterminée, le moyen de dérivation de l'inclinaison de la table de roulement définit la valeur de l'inclinaison de la table de roulement ($\gamma$) de la roue (14a-14f) comme la valeur de limite supérieure, et lorsque l'inclinaison de la table de roulement ($\gamma$) de la roue (14a-14f) dérivée par l'expression relationnelle est inférieure à une valeur de limite inférieure prédéterminée, le moyen de dérivation de l'inclinaison de la table de roulement définit la valeur de l'inclinaison de la table de roulement ($\gamma$) de la roue (14a-14f) comme la valeur de limite inférieure.

**10.** Véhicule ferroviaire selon la revendication 9, dans lequel, dans lequel (s), (t) ou (u),

(v) le moyen d'inspection (303) comprend en outre un moyen de réglage de composante de fréquence qui règle une composante de fréquence de l'inclinaison de la table de roulement ($\gamma$) de la roue (14a-14f) afin de réduire un bruit inclus dans l'inclinaison de la table de roulement ($\gamma$) de la roue (14a-14f) dérivée par le moyen de dérivation de l'inclinaison de la table de roulement,
et, dans le cas (v), facultativement,
(w) le moyen de réglage de composante de fréquence utilise les données de séries temporelles de l'inclinaison de la table de roulement ($\gamma$) de la roue (14a-14f) dérivée par le moyen de dérivation de l'inclinaison de la table de roulement pour dériver un coefficient dans un modèle AR corrigé, et utilise le coefficient dérivé pour corriger l'inclinaison de la table de roulement ($\gamma$) de la roue (14a-14f) dérivée par le moyen de dérivation de l'inclinaison de la table de roulement, réglant ainsi la composante de fréquence du signal de l'inclinaison de la table de roulement ($\gamma$) de la roue (14a-14f),
le modèle AR corrigé est une expression représentant une valeur prédite de l'inclinaison de la table de roulement ($\gamma$) de la roue (14a-14f) en utilisant une valeur réelle de l'inclinaison de la table de roulement ($\gamma$) de la roue (14a-14f) et le coefficient sensible à la valeur réelle,
le coefficient est dérivé en utilisant une équation dans laquelle une première matrice est définie comme une matrice de coefficient et un vecteur d'autocorrélation est défini comme un vecteur constant,
le vecteur d'autocorrélation est un vecteur dont la composante est l'autocorrélation des données de séries temporelles de l'inclinaison de la table de roulement ($\gamma$) de la roue (14a-14f) avec un décalage dans le temps de 1 à m,
m est un nombre de l'inclinaison de la table de roulement ($\gamma$) de la roue (14a-14f) utilisé dans le modèle AR corrigé,
la première matrice est une matrice $U_s \Sigma_s U_s^T$ dérivée d'une deuxième matrice $\Sigma_s$ qui est dérivée de s pièces de valeurs propres d'une matrice d'autocorrélation, s étant un nombre de 1 ou supérieur et inférieur à m, et d'une matrice diagonale $\Sigma$ et une troisième matrice $U_s$ qui est dérivée des s pièces de valeurs propres et d'une matrice orthogonale U,
la matrice d'autocorrélation est une matrice dont la composante est l'autocorrélation des données de séries temporelles de l'inclinaison de la table de roulement ($\gamma$) de la roue (14a-14f) avec un décalage dans le temps de 0 à m - 1,
la matrice diagonale est une matrice dont la composante diagonale est les valeurs propres de la matrice d'autocorrélation qui sont dérivées par décomposition en valeurs singulières de la matrice d'autocorrélation,
la matrice orthogonale est une matrice dans laquelle un vecteur propre de la matrice d'autocorrélation est défini comme un vecteur colonne,
la deuxième matrice est une sous-matrice de la matrice diagonale et est une matrice dont la composante diagonale est les s pièces de valeurs propres, et
la troisième matrice est une sous-matrice de la matrice orthogonale et est une matrice dans laquelle les vecteurs propres correspondant aux s pièces de valeurs propres sont définis comme les vecteurs colonnes,
et, dans le cas (w), facultativement,
(x) les s pièces de valeurs propres correspondent à une valeur propre ayant la plus grande valeur,
et, dans l'un quelconque parmi (v), (w) ou (x), facultativement,
(y) le moyen d'inspection (303) comprend un moyen de correction de l'inclinaison de la table de roulement qui corrige l'inclinaison de la table de roulement ($\gamma$) de la roue (14a-14f) ayant la composante de fréquence réglée par le moyen de réglage de composante de fréquence, en utilisant l'information de correction de l'inclinaison de la table de roulement préalablement mémorisée, et
l'information de correction de l'inclinaison de la table de roulement est l'information indiquant une relation entre une valeur mesurée réelle de l'inclinaison de la table de roulement ($\gamma$) de la roue (14a-14f) et une valeur calculée de l'inclinaison de la table de roulement ($\gamma$) de la roue (14a-14f).

**11.** Véhicule ferroviaire selon l'une quelconque des revendications 9 à 10, dans lequel :

le moyen d'inspection inspecte au moins la normalité ou l'anormalité de l'inclinaison de la table de roulement ($\gamma$) de la roue (14a-14f), en tant qu'inspection de l'inclinaison de la table de roulement de la roue, et
le moyen d'inspection (303) comprend un moyen de détermination qui détermine si l'inclinaison de la table de roulement ($\gamma$) de la roue (14a-14f) est normale ou pas sur la base d'une valeur de l'inclinaison de la table de

roulement ($\gamma$) de la roue (14a-14f).

**12.** Véhicule ferroviaire selon la revendication 9, cas (r), dans lequel :

(z) le moyen d'inspection inspecte au moins la normalité ou l'anormalité de l'inclinaison de la table de roulement ($\gamma$) de la roue (14a-14f) en tant qu'une inspection de l'inclinaison de la table de roulement de la roue, le moyen d'inspection (303) comprend en outre :

un moyen de dérivation de coefficient qui dérive un coefficient dans un modèle AR corrigé en utilisant des données de séries temporelles de la valeur mesurée de la force dans la direction vers l'avant et vers l'arrière ($T_1$ - $T_4$) ;
un moyen de dérivation de caractéristique de fréquence qui dérive une caractéristique de fréquence indiquant une distribution de fréquences du modèle AR corrigé en utilisant le coefficient dérivé par le moyen de dérivation de coefficient ; et
un moyen de détermination qui détermine si l'inclinaison de la table de roulement ($\gamma$) de la roue (14a-14f) est normale ou pas en utilisant la caractéristique de fréquence dérivée par le moyen de dérivation de caractéristique de fréquence,
le modèle AR corrigé est une expression représentant une valeur prédite de la force dans la direction vers l'avant et vers l'arrière ($T_1$ - $T_4$) en utilisant une valeur réelle de la force dans la direction vers l'avant et vers l'arrière ($T_1$ - $T_4$) et le coefficient sensible à la valeur réelle,
le moyen de dérivation de coefficient dérive le coefficient en utilisant une équation dans laquelle une première matrice est définie comme une matrice de coefficient et un vecteur d'autocorrélation est défini comme un vecteur constant,
le vecteur de corrélation est un vecteur dont la composante est l'autocorrélation des données de séries temporelles de la valeur mesurée de la force dans la direction vers l'avant et vers l'arrière ($T_1$ - $T_4$) avec un décalage dans le temps de 1 à m ;
m est un nombre de la valeur de la force dans la direction vers l'avant et vers l'arrière ($T_1$ - $T_4$) utilisé pour le modèle AR corrigé,
la première matrice est une matrice $U_s \Sigma_s U_s^T$ dérivée d'une deuxième matrice $\Sigma_s$ et d'une troisième matrice $U_s$, s étant un nombre de 1 ou supérieur et inférieur à m,
la deuxième matrice $\Sigma_s$ est dérivée de s pièces de valeurs propres d'une matrice d'autocorrélation et d'une matrice diagonale $\Sigma$,
la troisième matrice $U_s$ est dérivée de s pièces de valeurs propres et d'une matrice orthogonale U,
la matrice d'autocorrélation est une matrice dont la composante est l'autocorrélation des données de séries temporelles de la valeur mesurée de la force dans la direction vers l'avant et vers l'arrière ($T_1$ - $T_4$) avec un décalage dans le temps de 0 à m-1,
la matrice diagonale est une matrice dont la composante diagonale est la valeur propre de la matrice d'autocorrélation,
les valeurs propres de la matrice d'autocorrélation sont dérivées par décomposition en valeurs singulières de la matrice d'autocorrélation,
la matrice orthogonale est une matrice dans laquelle un vecteur propre de la matrice d'autocorrélation est défini comme un vecteur colonne,
la deuxième matrice est une sous-matrice de la matrice diagonale et est une matrice dont la composante diagonale est les s pièces de valeurs propres, et
la troisième matrice est une sous-matrice de la matrice orthogonale et est une matrice dans laquelle des vecteurs propres correspondant aux s pièces de valeurs propres sont définis comme les vecteurs colonnes, et dans le cas (z), facultativement,
le moyen de détermination détermine si l'inclinaison de la table de roulement ($\gamma$) de la roue (14a-14f) est normale ou pas sur la base d'un résultat de comparaison entre la caractéristique de fréquence indiquant la distribution de fréquences du modèle AR corrigé dérivée par le moyen de dérivation de caractéristique de fréquence et une caractéristique de fréquence indiquant une distribution de fréquences du modèle AR corrigé du véhicule ferroviaire qui est normale.

**13.** Procédé d'inspection pour inspecter un élément cible à inspecter d'un véhicule ferroviaire comprenant un corps de véhicule (11), un bogie (12a, 12b), un ensemble de roues (13a-13d), une boîte d'essieu (17a-17d) et une suspension de boîte d'essieu (18a, 18b), le procédé d'inspection comprenant :

une étape d'acquisition pour acquérir des données d'entrée comprenant une valeur mesurée d'une force dans la direction vers l'avant et vers l'arrière ($T_1$ - $T_4$) à mesurer en faisant circuler le véhicule ferroviaire sur une voie (20) ; et

une étape d'inspection pour inspecter l'élément cible à inspecter en utilisant la valeur mesurée de la force dans la direction vers l'avant et vers l'arrière ($T_1$ - $T_4$) acquise à l'étape d'acquisition, dans lequel :

la force dans la direction vers l'avant et vers l'arrière ($T_1$ - $T_4$) est une force dans une direction vers l'avant et vers l'arrière qui se produit dans un élément configurant la suspension de boîte d'essieu (18a, 18b),

l'élément est un élément pour supporter la boîte d'essieu (17a-17d),

la direction vers l'avant et vers l'arrière est une direction le long d'une direction de déplacement du véhicule ferroviaire, et

l'élément cible à inspecter est au moins l'un parmi :

un élément disposé entre un châssis de bogie (16) du bogie (12a, 12b) et l'ensemble de roues (13a-13d) ;

un élément disposé entre le châssis de bogie (16) du bogie (12a, 12b) et le corps de véhicule (11) ; et

une roue (14a-14f), et dans le cas dans lequel l'élément cible à inspecter est une roue (14a-14f), l'étape d'inspection inspecte au moins une inclinaison de la table de roulement (γ) de la roue (14a-14f) ; et dans lequel :

à l'étape d'inspection, un moyen de détermination détermine si l'élément cible à inspecter est normal ou pas en utilisant la valeur mesurée de la force dans la direction vers l'avant et vers l'arrière ($T_1$ - $T_4$) acquise à l'étape d'acquisition, et

(a) à l'étape d'inspection, un moyen de réglage de composante de fréquence règle une composante de fréquence d'un signal de la valeur mesurée de la force dans la direction vers l'avant et vers l'arrière ($T_1$ - $T_4$) afin de réduire un bruit inclus dans le signal de la valeur mesurée de la force dans la direction vers l'avant et vers l'arrière ($T_1$ - $T_4$), et

le moyen de détermination détermine si l'élément cible à inspecter est normal sur la base de la valeur mesurée de la force dans la direction vers l'avant et vers l'arrière ($T_1$ - $T_4$) ayant la composante de fréquence réglée par le moyen de réglage de composante de fréquence, et

(b) le moyen de réglage de composante de fréquence utilise des données de séries temporelles de la valeur mesurée de la force dans la direction vers l'avant et vers l'arrière ($T_1$ - $T_4$) pour dériver un coefficient dans le modèle autorégressif corrigé (AR), et utilise le coefficient pour corriger la valeur mesurée de la force dans la direction vers l'avant et vers l'arrière ($T_1$ - $T_4$), réglant ainsi la composante de fréquence du signal de la valeur mesurée de la force dans la direction vers l'avant et vers l'arrière ($T_1$ - $T_4$),

le modèle AR corrigé est une expression représentant une valeur prédite de la force dans la direction vers l'avant et vers l'arrière ($T_1$ - $T_4$) en utilisant une valeur réelle de la force dans la direction vers l'avant et vers l'arrière ($T_1$ - $T_4$) et le coefficient sensible à la valeur réelle,

le coefficient est déterminé en utilisant une équation dans laquelle une première matrice est définie comme une matrice de coefficient et un vecteur d'autocorrélation est défini comme un vecteur constant,

le vecteur d'autocorrélation est un vecteur dont la composante est l'autocorrélation des données de séries temporelles de la valeur mesurée de la force dans la direction vers l'avant et vers l'arrière ($T_1$ - $T_4$) avec un décalage dans le temps de 1 à m,

m est un nombre de la valeur de la force dans la direction vers l'avant et vers l'arrière ($T_1$ - $T_4$) utilisée dans le modèle AR corrigé,

la première matrice est une matrice $U_s \Sigma_s U_s^T$ dérivée d'une deuxième matrice $\Sigma_s$ et d'une troisième matrice $U_s$, s étant un nombre de 1 ou supérieur et inférieur à m,

la deuxième matrice $\Sigma_s$ est dérivée de s pièces de valeurs propres d'une matrice d'autocorrélation et d'une matrice diagonale $\Sigma$,

la troisième matrice $U_s$ est dérivée de s pièces de valeurs propres et d'une matrice orthogonale U,

la matrice d'autocorrélation est une matrice dont la composante est l'autocorrélation des données de séries temporelles de la valeur mesurée de la force dans la direction vers l'avant et vers l'arrière ($T_1$ - $T_4$) avec un décalage dans le temps de 0 à m-1,

la matrice diagonale est une matrice dont la composante diagonale est la valeur propre de la matrice d'autocorrélation,

les valeurs propres de la matrice d'autocorrélation sont dérivées par décomposition en valeurs singulières de la matrice d'autocorrélation,

la matrice orthogonale est une matrice dans laquelle un vecteur propre de la matrice d'autocorrélation est défini comme un vecteur colonne,

la deuxième matrice est une sous-matrice de la matrice diagonale et est une matrice dont la composante diagonale est les s pièces de valeurs propres, et

la troisième matrice est une sous-matrice de la matrice orthogonale et est une matrice dans laquelle des vecteurs propres correspondant aux s pièces de valeurs propres sont définis comme les vecteurs colonnes.

**14.** Utilisation d'un programme pour amener un ordinateur à exécuter l'inspection d'un élément cible à inspecter d'un véhicule ferroviaire comprenant un corps de véhicule (11), un bogie (12a, 12b), un ensemble de roues (13a-13d), une boîte d'essieu (17a-17d), et une suspension de boîte d'essieu (18a, 18b), le programme amenant l'ordinateur à exécuter :

une étape d'acquisition pour acquérir des données d'entrée comprenant une valeur mesurée d'une force dans la direction vers l'avant et vers l'arrière ($T_1$ - $T_4$) à mesurer en faisant circuler le véhicule ferroviaire sur une voie (20) ; et

une étape d'inspection pour inspecter l'élément cible à inspecter en utilisant la valeur mesurée de la force dans la direction vers l'avant et vers l'arrière ($T_1$ - $T_4$) acquise à l'étape d'acquisition, dans lequel :

la force dans la direction vers l'avant et vers l'arrière ($T_1$ - $T_4$) est une force dans une direction vers l'avant et vers l'arrière qui se produit dans un élément configurant la suspension de boîte d'essieu (18a, 18b),

l'élément est un élément pour supporter la boîte d'essieu (17a-17d),

la direction vers l'avant et vers l'arrière est une direction le long d'une direction de déplacement du véhicule ferroviaire, et

l'élément cible à inspecter est au moins l'un parmi :

un élément disposé entre un châssis de bogie (16) du bogie (12a, 12b) et l'ensemble de roues (13a-13d) ;

un élément disposé entre le châssis de bogie (16) du bogie (12a, 12b) et le corps de véhicule (11) ; et

une roue (14a-14f), et dans le cas dans lequel l'élément cible à inspecter est une roue (14a-14f), l'étape d'inspection inspecte au moins une inclinaison de la table de roulement (γ) de la roue (14a-14f) ; et dans lequel :

à l'étape d'inspection, un moyen de détermination détermine si l'élément cible à inspecter est normal ou pas en utilisant la valeur mesurée de la force dans la direction vers l'avant et vers l'arrière ($T_1$ - $T_4$) acquise à l'étape d'acquisition, et

(a) à l'étape d'inspection, un moyen de réglage de composante de fréquence règle une composante de fréquence d'un signal de la valeur mesurée de la force dans la direction vers l'avant et vers l'arrière ($T_1$ - $T_4$) afin de réduire un bruit inclus dans le signal de la valeur mesurée de la force dans la direction vers l'avant et vers l'arrière ($T_1$ - $T_4$), et

le moyen de détermination détermine si l'élément cible à inspecter est normal ou pas sur la base de la valeur mesurée de la force dans la direction vers l'avant et vers l'arrière ($T_1$ - $T_4$) ayant la composante de fréquence réglée par le moyen de réglage de composante de fréquence, et

(b) le moyen de réglage de composante de fréquence utilise des données de séries temporelles de la valeur mesurée de la force dans la direction vers l'avant et vers l'arrière ($T_1$ - $T_4$) pour dériver un coefficient dans le modèle autorégressif corrigé (AR), et utilise le coefficient pour corriger la valeur mesurée de la force dans la direction vers l'avant et vers l'arrière ($T_1$ - $T_4$), réglant ainsi la composante de fréquence du signal de la valeur mesurée de la force dans la direction vers l'avant et vers l'arrière ($T_1$ - $T_4$),

le modèle autorégressif corrigé (AR) est une expression représentant une valeur prédite de la force dans la direction vers l'avant et vers l'arrière ($T_1$ - $T_4$) en utilisant une valeur réelle de la force dans la direction vers l'avant et vers l'arrière ($T_1$ - $T_4$) et le coefficient sensible à la valeur réelle,

le coefficient est déterminé en utilisant une équation dans laquelle une première matrice est définie comme une matrice de coefficient et un vecteur d'autocorrélation est défini comme un vecteur constant,

le vecteur d'autocorrélation est un vecteur dont la composante est l'autocorrélation des données de séries temporelles de la valeur mesurée de la force dans la direction vers l'avant et vers l'arrière ($T_1$ - $T_4$) avec un décalage dans le temps de 1 à m,

m est un nombre de la valeur de la force dans la direction vers l'avant et vers l'arrière ($T_1$ - $T_4$) utilisée dans le modèle AR corrigé,

la première matrice est une matrice $U_s \Sigma_s U_s^T$ dérivée d'une deuxième matrice $\Sigma_s$ et d'une troisième matrice $U_s$, s étant un nombre de 1 ou supérieur et inférieur à m,

la deuxième matrice $\Sigma_s$ est dérivée de s pièces de valeurs propres d'une matrice d'autocorrélation et d'une matrice diagonale $\Sigma$,

la troisième matrice $U_s$ est dérivée de s pièces de valeurs propres et d'une matrice orthogonale U,

la matrice d'autocorrélation est une matrice dont la composante est l'autocorrélation des données de séries temporelles de la valeur mesurée de la force dans la direction vers l'avant et vers l'arrière ($T_1$ - $T_4$) avec un décalage dans le temps de 0 à m-1,

la matrice diagonale est une matrice dont la composante diagonale est la valeur propre de la matrice d'autocorrélation,

les valeurs propres de la matrice d'autocorrélation sont dérivées par décomposition en valeurs singulières de la matrice d'autocorrélation,

la matrice orthogonale est une matrice dans laquelle un vecteur propre de la matrice d'autocorrélation est défini comme un vecteur colonne,

la deuxième matrice est une sous-matrice de la matrice diagonale et est une matrice dont la composante diagonale est les s pièces de valeurs propres, et

la troisième matrice est une sous-matrice de la matrice orthogonale et est une matrice dans laquelle des vecteurs propres correspondant aux s pièces de valeurs propres sont définis les vecteurs colonnes.

# FIG. 1A

300

INSPECTION APPARATUS

11

12b 13c 13b 12a
14d 13d 14c 14b 13a 14a
15d 15c 15b 15a
20

# FIG. 1B

12a

183b 16 183a
17b 17a
14b 14a
182b 181b 181a 182a
18b 18a

## FIG. 1C

FIG. 2

# FIG. 3

301 — DATA ACQUISITION UNIT

302

303a — DETERMINATION PART

STORAGE UNIT

303 — INSPECTION UNIT

304 — OUTPUT UNIT

INSPECTION APPARATUS

300

# FIG. 4

INSPECTION APPARATUS

300

EP 3 832 284 B1

FIG. 5

FIG. 6

EP 3 832 284 B1

FIG. 7

FIG. 8

FIG. 9

EP 3 832 284 B1

## FIG. 10

FIG. 11

EP 3 832 284 B1

# FIG. 12

EP 3 832 284 B1

# FIG. 13

START

S1301

DID RAILWAY
VEHICLE ENTER INSPECTION
ZONE?

NO

YES

SEARCH REFERENCE MEASURED VALUE — S1302

S1303

WAS IT
POSSIBLE TO PERFORM
SEARCHING?

NO

S1304

OUTPUT
INSPECTION
IMPOSSIBLE
INFORMATION

YES

ACQUIRE INSPECTION MEASURED VALUE — S1305

READ REFERENCE MEASURED VALUE — S1306

CALCULATE ABSOLUTE VALUE OF
DIFFERENCE BETWEEN INSPECTION
MEASURED VALUE AND REFERENCE
MEASURED VALUE — S1307

S1308

ABSOLUTE
VALUE OF DIFFERENCE>
THRESHOLD VALUE?

NO

YES

OUTPUT ABNORMAL INFORMATION — S1309

S1310

DID RAILWAY
VEHICLE LEAVE INSPECTION
ZONE?

NO

YES

END

# FIG. 14

INSPECTION APPARATUS

FIG. 15

START

S1501

DID RAILWAY VEHICLE ENTER INSPECTION ZONE? → NO

YES

SEARCH CORRECTED REFERENCE MEASURED VALUE ~ S1502

S1503

WAS IT POSSIBLE TO PERFORM SEARCHING? → NO → S1504

S1504
OUTPUT INSPECTION IMPOSSIBLE INFORMATION

YES

S1505

DID SAMPLING PERIOD ARRIVE? → NO

YES

ACQUIRE INSPECTION MEASURED VALUE ~ S1506

S1507

ARE THERE m PIECES OF DATA? → NO

YES

DERIVE CORRECTED INSPECTION MEASURED VALUE ~ S1508

READ CORRECTED REFERENCE MEASURED VALUE ~ S1509

CALCULATE ABSOLUTE VALUE OF DIFFERENCE BETWEEN CORRECTED INSPECTION MEASURED VALUE AND CORRECTED REFERENCE MEASURED VALUE ~ S1510

S1511

ABSOLUTE VALUE OF DIFFERENCE > THRESHOLD VALUE? → NO

YES

OUTPUT ABNORMAL INFORMATION ~ S1512

S1513

NO ← DID RAILWAY VEHICLE LEAVE INSPECTION ZONE?

YES

END

# FIG. 16

301 —〜 DATA ACQUISITION UNIT

1601 —〜 COEFFICIENT DERIVATION PART

1602 —〜 FREQUENCY CHARACTERISTIC DERIVATION PART

1603 —〜 DETERMINATION PART

302

STORAGE UNIT

INSPECTION UNIT

303

304 —〜 OUTPUT UNIT

INSPECTION APPARATUS

300

FIG. 17A

FIG. 17B

# FIG. 18

FIG. 19

## FIG. 20

# FIG. 21

START

S2101
DID RAILWAY VEHICLE
ENTER INSPECTION ZONE? — NO

YES

SEARCH REFERENCE FREQUENCY CHARACTERISTIC — S2102

S2103
WAS IT POSSIBLE TO
PERFORM SEARCHING? — NO — S2104

OUTPUT
INSPECTION
IMPOSSIBLE
INFORMATION

YES

S2105
DID SAMPLING PERIOD ARRIVE? — NO

YES

ACQUIRE INSPECTION MEASURED VALUE — S2106

S2107
ARE THERE m PIECES OF DATA? — NO

YES

DERIVE COEFFICIENT — S2108

DERIVE INSPECTION FREQUENCY CHARACTERISTIC — S2109

READ REFERENCE FREQUENCY CHARACTERISTIC — S2110

S2111
IS SIMILARITY GREATER
THAN THRESHOLD VALUE? — NO

YES

OUTPUT ABNORMAL INFORMATION — S2112

S2113
NO — DID RAILWAY VEHICLE
LEAVE INSPECTION ZONE?

YES

END

# FIG. 22

301 — DATA ACQUISITION UNIT

2201 — STATE VARIABLE DECISION PART

2202 — DIFFERENCE DERIVATION PART

2203 — DETERMINATION PART

302 — STORAGE UNIT

INSPECTION UNIT

303

304 — OUTPUT UNIT

INSPECTION APPARATUS

300

FIG. 23

EP 3 832 284 B1

FIG. 24

EP 3 832 284 B1

FIG. 25

FIG. 26

EP 3 832 284 B1

## FIG. 27

START

S2701

DID RAILWAY VEHICLE
ENTER INSPECTION ZONE? — NO

YES

SEARCH REFERENCE ANGULAR VELOCITY
DIFFERENCE AND REFERENCE
ANGULAR DISPLACEMENT DIFFERENCE — S2702

S2703

WAS IT POSSIBLE TO
PERFORM SEARCHING? — NO

S2704

OUTPUT
INSPECTION
IMPOSSIBLE
INFORMATION

YES

ACQUIRE INPUT DATA — S2205

DECIDE STATE VARIABLE — S2206

CALCULATE INSPECTION ANGULAR VELOCITY
DIFFERENCE AND INSPECTION
ANGULAR DISPLACEMENT DIFFERENCE — S2707

READ REFERENCE ANGULAR VELOCITY
DIFFERENCE AND REFERENCE
ANGULAR DISPLACEMENT DIFFERENCE — S2708

CALCULATE ABSOLUTE VALUE — S2709

S2710

ABSOLUTE VALUE OF
DIFFERENCE>THRESHOLD VALUE? — NO

YES

OUTPUT ABNORMAL INFORMATION — S2711

S2712

NO — DID RAILWAY VEHICLE
LEAVE INSPECTION ZONE?

YES

END

FIG. 28

FIG. 29

EP 3 832 284 B1

# FIG. 30

# FIG. 31

EP 3 832 284 B1

FIG. 32

## FIG. 33

DISTANCE (m)

FIG. 34

EP 3 832 284 B1

FIG. 35

FIG. 36

EP 3 832 284 B1

# FIG. 37A

## LINEAR RAIL

|  | FIRST SET | SECOND SET | THIRD SET | FOURTH SET |
|---|---|---|---|---|
| NORMAL | 0.9060 | 0.9484 | 0.9460 | 0.9600 |
| STIFFNESS OF FIRST SET DETERIORATES | 0.7445 | 0.8686 | 0.8985 | 0.9307 |
| STIFFNESS OF SECOND SET DETERIORATES | 0.8999 | 0.7979 | 0.9432 | 0.9592 |
| STIFFNESS OF THIRD SET DETERIORATES | 0.8964 | 0.9390 | 0.8025 | 0.9018 |
| STIFFNESS OF FOURTH SET DETERIORATES | 0.8984 | 0.9414 | 0.9529 | 0.8269 |

# FIG. 37B

## CURVED RAIL

|  | FIRST SET | SECOND SET | THIRD SET | FOURTH SET |
|---|---|---|---|---|
| NORMAL | 1.0140 | 0.7741 | 1.0018 | 0.7841 |
| STIFFNESS OF FIRST SET DETERIORATES | 0.6720 | 0.6751 | 1.0021 | 0.7833 |
| STIFFNESS OF SECOND SET DETERIORATES | 1.1199 | 0.7395 | 1.0007 | 0.7835 |
| STIFFNESS OF THIRD SET DETERIORATES | 1.0155 | 0.7743 | 0.6635 | 0.6669 |
| STIFFNESS OF FOURTH SET DETERIORATES | 1.0133 | 0.7731 | 1.0848 | 0.7492 |

## FIG. 38

START

S3801

DID SAMPLING
PERIOD ARRIVE? — NO

YES

ACQUIRE TRACK INFORMATION — S3802

ACQUIRE VEHICLE INFORMATION — S3803

DERIVE SPRING CONSTANT — S3804

S3805

ARE THERE
m PIECES OF DATA? — NO

YES

DERIVE CORRECTED SPRING CONSTANT — S3806

S3807

IS THERE AXLE BOX
SUSPENSION WHOSE STIFFNESS
IS NOT NORMAL? — NO

YES

OUTPUT INFORMATION INDICATING
DETECTION OF ABNORMALITY — S3808

S3809

IS INSPECTION
TERMINATED? — NO

YES

END

# FIG. 39

EP 3 832 284 B1

## FIG. 40A

## FIG. 40B

FIG. 41

FIG. 42

FIG. 43

## FIG. 44

## FIG. 45

1.1,1.4,0.8,1.7,4.7

1.1,1.4,6.7,7.4,7.1

4.7,6.6,1.4,1.1,5.7

6.6,4.7,7.7,5.7,8.5

FREQUENCY (Hz)

# FIG. 46

301 — DATA ACQUISITION UNIT

4601 — COEFFICIENT DERIVATION PART

4602 — FREQUENCY CHARACTERISTIC DERIVATION PART

302

4603 — DETERMINATION PART ← STORAGE UNIT

INSPECTION UNIT

303

304 — OUTPUT UNIT

INSPECTION APPARATUS

300

FIG. 47

START FIG. 48

S4801

DID RAILWAY VEHICLE
ENTER INSPECTION ZONE? — NO

YES

SEARCH REFERENCE FREQUENCY CHARACTERISTIC — S4802

S4803

WAS IT POSSIBLE TO
PERFORM SEARCHING? — NO → S4804

YES

OUTPUT
INSPECTION
IMPOSSIBLE
INFORMATION

S4805

DID SAMPLING
PERIOD ARRIVE? — NO

YES

ACQUIRE INSPECTION MEASURED VALUE — S4806

S4807

ARE THERE
m PIECES OF DATA? — NO

YES

DERIVE COEFFICIENT — S4808

DERIVE INSPECTION FREQUENCY
CHARACTERISTIC — S4809

S4810

IS THERE TREAD SLOPE
WHICH IS NOT NORMAL? — NO

YES

OUTPUT ABNORMAL INFORMATION — S4811

S4812

DID RAILWAY VEHICLE
LEAVE INSPECTION ZONE? — NO

YES

END

157

# FIG. 49

301 — DATA ACQUISITION UNIT

4901 — FILTER OPERATION PART

4902 — TREAD SLOPE DERIVATION PART

4903 — FREQUENCY COMPONENT ADJUSTMENT PART

4904 — TREAD SLOPE CORRECTION PART

4905 — DETERMINATION PART

302 — STORAGE UNIT

INSPECTION UNIT

303

304 — OUTPUT UNIT

INSPECTION APPARATUS

300

# FIG. 50A

FIG. 50B

FIG. 51

EP 3 832 284 B1

FIG. 52A

EP 3 832 284 B1

EP 3 832 284 B1

FIG. 52B

FIG. 53

## FIG. 54

```
                    ( START )
                        |
                        |              S5401
                        ▼               /
              DID RAILWAY VEHICLE
              ENTER INSPECTION ZONE?  ────── NO ──┐
                        |                          |
                       YES                         |
                        |              S5402        |
                        ▼               /           |
                  DID SAMPLING                      |
                  PERIOD ARRIVE?  ────── NO ──────→ |
                        |                          |
                       YES                          |
                        ▼                           |
          ┌─────────────────────────┐               |
          │  ACQUIRE INPUT DATA      │─ S5403        |
          └─────────────────────────┘               |
                        ▼                           |
          ┌─────────────────────────┐               |
          │  DECIDE STATE VARIABLE   │─ S5404        |
          └─────────────────────────┘               |
                        ▼                           |
          ┌─────────────────────────┐               |
          │ DERIVE TREAD SLOPE BEFORE│─ S5405        |
          │      CORRECTION          │               |
          └─────────────────────────┘               |
                        |          S5406             |
                        ▼           /                |
                  ARE THERE                          |
                  m PIECES OF DATA?  ──── NO ──────→ |
                        |                          |
                       YES                          |
                        ▼                           |
          ┌─────────────────────────┐               |
          │ DERIVE CORRECTED TREAD SLOPE │─ S5407    |
          └─────────────────────────┘               |
                        ▼                           |
          ┌─────────────────────────┐               |
          │      DECIDE RATIO        │─ S5408        |
          └─────────────────────────┘               |
                        |          S5409             |
                        ▼           /                |
               IS THERE TREAD SLOPE                  |
               WHICH IS NOT NORMAL?  ──── NO ──┐     |
                        |                      |     |
                       YES                     |     |
                        ▼                      |     |
          ┌─────────────────────────┐          |     |
          │ OUTPUT ABNORMAL INFORMATION │─ S5410 |   |
          └─────────────────────────┘          |     |
                        |◄────────────────────┘     |
                        |          S5411             |
                        ▼           /                |
              DID RAILWAY VEHICLE                    |
              LEAVE INSPECTION ZONE?  ──── NO ──────→ |
                        |
                       YES
                        ▼
                    ( END )
```

FIG. 55

EP 3 832 284 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018143841 A
- JP 2018161488 A
- JP 2018200742 A
- JP 2012058207 A
- JP 2012058208 A
- JP 2001227924 A
- JP 2008051571 A
- WO 2017164133 A
- WO 2006062056 A1